(19) Europäisches Patentamt
European Patent Office
Office européen des brevets

(11) Publication number: **0 037 861 A1**

(12) **EUROPEAN PATENT APPLICATION**

(21) Application number: 80300906.7

(22) Date of filing: 24.03.80

(51) Int. Cl.³: C 07 C 155/06, A 01 N 47/14

(43) Date of publication of application: 21.10.81 Bulletin 81/42

(84) Designated Contracting States: AT BE CH DE FR GB IT LU NL SE

(71) Applicant: TOKYO ORGANIC CHEMICAL INDUSTRIES, LTD., 2-1, Toshima 5-chome Kita-ku, Tokyo (JP)

(72) Inventor: Kuchikata, Masuo, Kita-Urawa Mansion A-925 904-10, Kami Ohkubo, Urawa, Saitama 338 (JP)
Inventor: Tsuyuki, Hiroshi, 764-1, Shirakuwa, Urawa City Saitama Prefecture (JP)
Inventor: Furukawa, Toshio, 7-20, Nishikata 2-chome Bunkyo-ku, Tokyo (JP)
Inventor: Nitta, Yoshihiro, 1300-25, Izumi, Komae City Tokyo (JP)
Inventor: Kuyama, Hiroshi, 973, Komanomae Nakao, Urawa City Saitama Prefecture (JP)

(74) Representative: Wood, Peter Worsley Spencer et al, Rohm and Haas Company Patent Department Chesterfield House Barter Street, London, WC1A 2TP (GB)

(54) **Salts of alkylenebisdithiocarbamic acid derivatives, processes for their preparation, fungicidal compositions containing them and methods of combating fungi.**

(57) Salts of alkylenebisdithiocarbamic acid derivatives, processes for their preparation, fungicidal compositions containing tham and methods of combating fungi.

Novel compounds are provided which exhibit activity as fungicides. The novel compounds are salts of an alkylenebisdithiocarbomic acid of the formula:

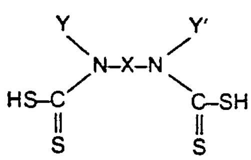
(I)

wherein

X is alkylene group having 2 to 6 carbon atoms;

Y and Y', which may be the same or different each represents

(1) hydrogen except that both Y and Y' cannot be hydrogen;

(2) $(C_6-C_{20})$alkyl;

(3) a group of the formula $-(\overset{R}{C}H)_m-\overset{OH}{C}HCH_2OR_1$ in which R is hydrogen or $(C_1-C_6)$alkyl, $R_1$ is hydrogen, $(C_1-C_{18})$alkyl, $(C_2-C_8)$alkenyl, $(C_3-C_6)$alkynyl, phenyl or phenyl substituted with up to three of the same or different substituents selected from $(C_1-C_4)$alkyl and halo, and m is 0, 1 or 2;

(4) a group of the formula

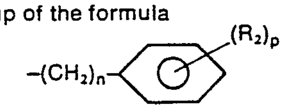

where $R_2$ is hydrogen, halo or $(C_1-C_{18})$alkyl, n is 1 or 2, and p is 0, 1, 2 or 3;

(5) a group of the formula $-(\overset{R}{C}H)_q-\overset{R_3}{C}H\cdot COOR_4$ where R is as above defined, $R_3$ is hydrogen, hydroxy or $(C_1-C_6)$-alkyl and $R_4$ is $(C_1-C_{18})$alkyl, $(C_1-C_6)$alkylamino$(C_1-C_6)$-alkyl, di$(C_1-C_6)$alkylamino$(C_1-C_6)$alkyl, $(C_2-C_8)$alkenyl, $(C_3-C_6)$alkynyl, hydroxy$(C_1-C_6)$alkyl or a saltforming group or atom, and q is 0 or 1;

(6) a group of the formula $-(\overset{R}{C}H)_q-\overset{R_3}{C}H-C\equiv N$ where R, $R_3$ and q are as above defined;

(7) a group of the formula $-(CHR)_q-CHR_3CONH_2$ where R, $R_3$ and q are as above defined;

(8) a salt of a thio acid group of the formula

$$-(CHR)_m-CHR_1-O-\underset{\underset{S}{\|}}{C}-S-H$$

where R, $R_3$ and m are as above defined;

(Continuation next page)

EP 0 037 861 A1

(9) a group of the formula $-CHR-CHR_2SH-$, or a metal salt thereof, where R and $R_2$ are as above defined, or a $-(CH_2)_2-NH_2$ or $-(CH_2)_2-NH-(CH_2)_2-NH_2$ group with the proviso that only one of Y and Y' can be such an amino group, the other being a different organic substituent;

(10) a group of the formula

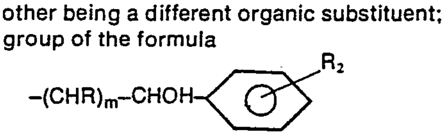

where R, $R_2$ and m are as above defined; or

(11) a group of the formula $-(CHR)_m-CH(OH)CCl_3$ where R and m are as above defined.

# Salts of alkylenebisdithiocarbamic acid derivatives, processes for their preparation, fungicidal compositions containing them and methods of combating fungi

This invention concerns novel salts of N-substituted alkylenebisdithiocarbamic acids, processes for their preparation, fungicidal compositions containing them and methods of combating fungi.

Metal salts of alkylenebisdithiocarbamic acids, such as maneb, zineb, mancozeb and propineb are well known as fungicides. The novel salts provided by this invention are of utility by reason of one or more of the following attributes, namely fungicidal efficacy, an acceptable lack of phytotoxicity on plants yielding an agronomic crop and reduced mammalian toxicity.

The novel salts (which are preferably salts of metal(s) having a valency greater than 1, particularly 2 or 3) are salts of an alkylenebisdithiocarbamic acid of the formula:

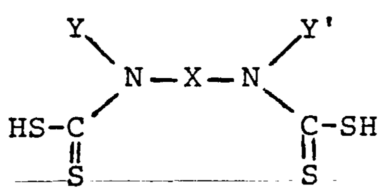

(I)

wherein X is alkylene group (straight or branched chain) having 2 to 6 carbon atoms, preferably $(C_2-C_4)$ alkylene such as ethylene or 1,2-propylene;

Y and Y', which may be the same or different, each represents

(1) hydrogen except that both Y and Y' cannot be

hydrogen;

(2) $(C_6-C_{20})$alkyl, preferably $(C_8-C_{18})$alkyl;

(3) a group of the formula $-(\overset{R}{\overset{|}{C}H})_m-\overset{OH}{\overset{|}{C}H}CH_2OR_1$ in which R is hydrogen or $(C_1-C_6)$alkyl, preferably $(C_1-C_3)$alkyl, $R_1$ is hydrogen, $(C_1-C_{18})$alkyl (preferably $(C_1-C_9)$alkyl, $(C_2-C_8)$alkenyl (preferably $(C_3-C_6)$alkenyl), $(C_3-C_6)$alkynyl, phenyl or phenyl substituted with up to three of the same or different substituents selected from $(C_1-C_4)$-alkyl (preferably methyl) and halo (preferably chloro), and m is 0, 1 or 2 (preferably 1);

(4) a group of the formula 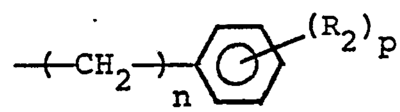

where $R_2$ is hydrogen, halo (preferably chloro) or $(C_1-C_{18})$alkyl (preferably methyl), n is 1 or 2, and p is 0, 1, 2 or 3;

(5) a group of the formula $-(\overset{R}{\overset{|}{C}H})_q-\overset{R_3}{\overset{|}{C}H}\cdot COOR_4$ where R is as above defined, $R_3$ is hydrogen, hydroxy or $(C_1-C_6)$alkyl (preferably $(C_1-C_3)$alkyl) and $R_4$ is $(C_1-C_{18})$alkyl (preferably $(C_1-C_{12})$alkyl), $(C_1-C_6)$-alkylamino$(C_1-C_6)$alkyl (preferably $(C_1-C_3)$alkyl-amino$(C_1-C_3)$alkyl, di$(C_1-C_6)$alkylamino$(C_1-C_6)$alkyl (preferably di$(C_1-C_3)$alkylamino$(C_1-C_3)$alkyl), $(C_2-C_8)$alkenyl (preferably $(C_3-C_6)$alkenyl), $(C_3-C_6)$-alkynyl, hydroxy$(C_1-C_6)$alkyl (preferably hydroxy-$(C_1-C_3)$alkyl) or a salt-forming group or atom (such as ammonium, substituted ammonium, quaternary ammonium, alkali metal or a group containing, as the salt-forming element, a metal having a valency greater than one, for example, Zn, Cu, Fe, Ni, Co, Sn, Ca or Mg), and q is 0 or 1;

(6) a group of the formula $-(\overset{R}{\overset{|}{C}H})_q-\overset{R_3}{\overset{|}{C}H}-C\equiv N$ where R, $R_3$ and q are as above defined;

(7) a group of the formula $-(CHR)_q-CHR_3CONH_2$ where R, $R_3$ and q are as above defined;

(8) a salt (preferably a salt of a metal having a valency greater than 1, more preferably 2 or 3) of a thio acid group of the formula $-(CHR)_m-CHR_3-O-\underset{\overset{\|}{S}}{C}-S-H$ where R, $R_3$ and m are as above defined;

(9) a group of the formula $-CHR-CHR_2SH-$, or a metal salt thereof, where R and $R_2$ are as above defined (preferably a $(C_1-C_8)$mercaptoalkyl, more preferably $C_2-C_4$, group or salt), or a $-(CH_2)_2-NH_2$ or $-(CH_2)_2-NH-(CH_2)_2-NH_2$ group with the proviso that only one of Y and Y' can be such an amino group, the other being a different organic substituent;

(10) a group of the formula $-(CHR)_m-CHOH-$ 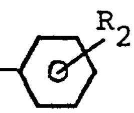
where R, $R_2$ and m are as above defined; or

(11) a group of the formula $-(CHR)_m-CH(OH)CCl_3$ where R and m are as above defined.

The novel salts may be represented by the formula:

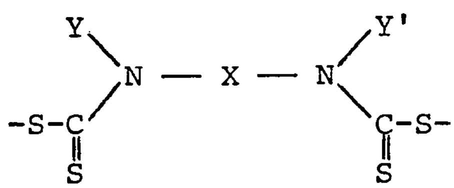
(II)

wherein (1) X, Y and Y' are as defined in Formula I and
(2) the two $-\underset{\overset{\|}{S}}{C}-S-$ groups are attached to salt-forming atoms or groups which may be of the same or different nature.

The novel salts can alternatively be represented by the simplified formula:

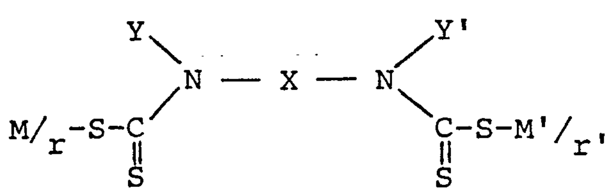
(III)

wherein X, Y and Y' are as defined for Formula I, M and M'

are the same or different salt-forming atoms or groups and r and r' denote valencies.

The preferred metal salts may also be defined as those obtainable by the reaction, in an aqueous medium at a temperature from $0^{o}C$ to $70^{o}C$ (preferably $20^{o}C$), of an alkylenebisdithiocarbamic acid of Formula I (or water-soluble salt thereof) and a water-soluble salt of a metal having a valency greater than one, preferably 2 or 3.

The N-substituted alkylenebisdithiocarbamic acids of Formula I can be produced by the ordinary method which involves the reaction of a diamine with carbon disulfide. Examples of suitable diamine precursors are as follows.

N-octylethylenediamine, N-nonylethylenediamine, N-(2-ethylhexyl)ethylenediamine, N-decylethylenediamine, N-undecylethylenediamine, N-dodecylethylenediamine, N-tetradecylethylenediamine, N-cetylethylenediamine, N-octadecylethylenediamine, N,N'-dioctyldiethylenediamine, N-octyl-1,2-propylenediamine, N-dodecyl-1,2-propylenediamine, N-octylisopropylenediamine, N-dodecylisopropylenediamine, N-dodecyl-1,1-dimethylethylenediamine, N'-dodecyl-1,1-dimethylethylenediamine, N-dodecyl-1,2-dimethylethylenediamine, N-dodecyl-1,2-diethylethylenediamine, N-(2-mercaptoethyl)-ethylenediamine, N-(2-mercaptoethyl)-1,2-propylenediamine, N-(2-mercaptoethyl)-isopropylenediamine, N-(2-mercaptoethyl)-1,2-dimethylethylenediamine, N-(2-mercaptoethyl)-1,1-dimethylethylenediamine, N'-(2-mercaptoethyl)-1,1-dimethylethylenediamine, N-(2-mercaptopropyl)-ethylenediamine, N-(2-mercaptopropyl)-1,2-propylenediamine, N-(2-mercaptopropyl)-isopropylenediamine, N-(2-mercaptopropyl)-1,1-dimethylethylenediamine, N'-(2-mercaptopropyl)-1,1-dimethylethylenediamine, N-(3-mercaptopropyl)-ethylenediamine, N-(2-mercaptobutyl)-ethylenediamine, N-(3-mercaptopropyl)-ethylenediamine, N-(3-mercaptopropyl)-isopropylenediamine, N-(o-methylbenzyl)-ethylenediamine, N-(m-methylbenzyl)-ethylenediamine, N-(p-methylbenzyl)-ethylenediamine, N-(2,3-dimethylbenzyl)-ethylenediamine, N-(2,4-dimethylbenzyl)-ethylenediamine, N-(2,5-dimethylbenzyl)-ethylenediamine, N-(3,4-dimethylbenzyl)-ethylenediamine, N-(2,4,5-trimethylbenzyl)-ethylenediamine, N-(2,4,6-trimethylbenzyl)-ethylenediamine, N-(2,3,4-trimethylbenzyl)-ethylenediamine, N-(2,3,5-trimethylbenzyl)-ethylenediamine, N-(o-chlorobenzyl)-ethylenediamine, N-(m-chlorobenzyl)-ethylenediamine, N-(p-chlorobenzyl)-ethylenediamine, N-(2,3-dichlorobenzyl)-ethylenediamine, N-(2,4-dichlorobenzyl)-ethylenediamine, N-(2,5-dichlorobenzyl)-ethylenediamine, N-(3,4-dichlorobenzyl)-ethylenediamine, N-(3,5-dichlorobenzyl)-ethylenediamine, N-(2,4,6-trichlorobenzyl)-ethylenediamine, N-(2,4,5-trichlorobenzyl)-ethylenediamine, N-(o-bromobenzyl)-ethylenediamine, N-(m-bromobenzyl)-ethylenediamine, N-(p-bromobenzyl)-ethylenediamine, N-(o-iodobenzyl)-ethylenediamine, N-(m-iodobenzyl)-ethylenediamine, N-(p-iodobenzyl)-ethylenediamine, N-(p-methylbenzyl)-isopropylenediamine, N'-(p-methylbenzyl)-isopropylenediamine, N-2,4-dimethylphenethyl)-ethylenediamine, N-(2,4,5-trimethylphenethyl)-ethylenediamine, N-(methoxycarbonylmethyl)-ethylenediamine, N-(ethoxycarbonylmethyl)-ethylenediamine, N-(propoxycarbonylmethyl)-ethylenediamine, N-(isopropoxycarbonylmethyl)-ethylenediamine, N-(butoxycarbonylmethyl)-ethylenediamine, N-(hexyloxycarbonylmethyl)-ethylenediamine, N-(octyloxycarbonylmethyl)-ethylenediamine, N-(dodecyloxycarbonylmethyl)-ethylenediamine, N-(methoxycarbonylmethyl)-1,2-propylenediamine, N-(methoxycarbonylmethyl)-isopropylenediamine, N-(ethoxycarbonylmethyl)-isopropylenediamine, N-(ethoxycarbonylmethyl)-ethylenediamine, N-(isopropoxycarbonylmethyl)-isopropylenediamine, N-(propoxycarbonylmethyl)-isopropylenediamine, N-(butoxycarbonylmethyl)-isopropylenediamine, N-(isopropoxycarbonylmethyl)-1,2-dimethylethylenediamine, N-(isopropoxydicarbonylmethyl)-1,1-dimethylethylenediamine, N'-(isopropoxycarbonylmethyl)-1,1-dimethylethylenediamine, N-(2-methoxycarbonylethyl)-ethylenediamine, N-(2-(ethoxycarbonylethyl)-ethylenediamine, N-(2-isopropoxycarbonylethyl)-ethylenediamine, N-(2-propoxycarbonylethyl)-ethylenediamine, N-(2-butoxycarbonylethyl)-ethylenediamine, N-(2-hexyloxycarbonylethyl)-ethylenediamine, N-(2-octyloxycarbonylethyl)-ethylenediamine, N-(2-dodecyloxycarbonylethyl)-ethylenediamine, N-(2-dodecyloxycarbonylethyl)-ethylenediamine, N-(2-tetradecyloxycarbonylethyl)-ethylenediamine, N-(2-cetyloxycarbonylethyl)-ethylenediamine, N-(2-octadecylcarbonylethyl)-ethylenediamine, N-(2-methoxycarbonylethyl)-1,2-propylenediamine, N-(2-ethoxycarbonylethyl)-1,2-propylenediamine, N-(2-isopropoxycarbonylethyl)-1,2-propylenediamine, N-(2-isopropoxycarbonylethyl)-isopropylenediamine, N'-(2-isopropoxycarbonylethyl)-isopropylenediamine, N-(2-propoxycarbonylethyl)-isopropylenediamine, N'-(2-propoxycarbonylethyl)-isopropylenediamine, N-(2-ethoxycarbonylethyl)-isopropylenediamine, N-(2-methoxycarbonylethyl)-isopropylenediamine, N-(2-methoxycarbonylpropyl)-ethylenediamine, N-(2-ethoxycarbonylpropyl)-ethylenediamine, N-(2-propoxycarbonylpropyl)-ethylenediamine, N-(2-isopropoxycarbonylpropyl)-ethylenediamine, N-(2-butoxycarbonylpropyl)-ethylenediamine, N-(2-pentoxycarbonylpropyl)-ethylenediamine, N-(2-hexyloxylcarbonylpropyl)-ethylenediamine, N-(2-octyloxycarbonylpropyl)-ethylenediamine, N-(2-decyloxycarbonylpropyl)-ethylenediamine, N-(2-dodecyloxycarbonylpropyl)-ethylenediamine, N-(2-tetradecyloxycarbonylpropyl)-ethylenediamine, N-(2-cetyloxycarbonylpropyl)-ethylenediamine, N-(2-octadecyloxycarbonylpropyl)ethylenediamine, N-(2-methoxycarbonylpropyl)-propylenediamine, N-(2-ethoxycarbonylpropyl)-1,2-propylenediamine, N-(2-propoxycarbonylpropyl)-1,2-propylenediamine, N-(2-isopropoxycarbonylpropyl)-1,2-propylenediamine, N-(2-methoxycarbonylpropyl)-isopropylenediamine, N-(2-ethoxycarbonylpropyl)-isopropylenediamine, N-(2-propoxycarbonylpropyl)-isopropylenediamine, N-(2-isopropoxycarbonylpropyl)-isopropylenediamine, N-(2-butoxycarbonylpropyl)-isopropylenediamine, N-(2-isopropoxycarbonylpropyl)-1,2-dimethylethylenediamine, N-(2-isopropoxycarbonylpropyl)-1,1-dimethylethylene,

N'-(2-isopropoxycarbonylpropyl)-1,1-dimethylethylenediamine, N-(2,3-dihydroxypropyl)-ethylenediamine, N-(2,3-dihydroxypropyl)-1,2-propylenediamine, N'-(2,3-dihydroxypropyl)-isopropylenediamine, N-(2,3-dihydroxypropyl)-1,2-dimethylethylenediamine, N-(2-hydroxy-3-methoxypropyl)-ethylenediamine, N-(2-hydroxy-3-methoxypropyl)-1,2-propylenediamine, N-(2-hydroxy-3-methoxypropyl)-isopropylenediamine, N'-(2-hydroxy-3-methoxypropyl)-isopropylenediamine, N-(2-hydroxy-3-methoxypropyl)-1,2-dimethylethylenediamine, N-(2-hydroxy-3-ethoxypropyl)-ethylenediamine, N-(2-hydroxy-3-ethoxypropyl)-propylenediamine, N-(2-hydroxy-3-ethoxypropyl)-isopropylenediamine, N-(2-hydroxy-3-ethoxypropyl)-1,2-dimethylethylenediamine, N-(2-hydroxy-3-propoxypropyl)-ethylenediamine, N-(2-hydroxy-2-propoxypropyl)-1,2-propylenediamine, N-(2-hydroxy-3-propoxypropyl)-isopropylenediamine, N-(2-hydroxy-3-isopropoxypropyl)-ethylenediamine, N-(2-hydroxy-3-isopropoxypropyl)-1,2-propylenediamine, N-(2-hydroxy-3-isopropoxypropyl)isopropylene diamine,N-(2-hydroxy-3-isopropoxypropyl)-1,2-dimethylethylene diamine, N'-(2-hydroxy-3-isopropoxypropyl)-1,1-dimethylethylenediamine, N-(2-hydroxy-3-butoxypropyl)-ethylenediamine, N-(2-hydroxy-3-butoxypropyl)-1,2-propylene diamine, N-(2-hydroxy-3-butoxypropyl)-isopropylene diamine, N-(2,hydroxy-3-pentoxypropyl)-ethylenediamine, N-(2-hydroxy-3-pentoxypropyl)-1,2-propylenediamine, N-(2,3-dihydroxy-1-hexylpropyl)-ethylenediamine, N-(2-hydroxy-3-octyloxypropyl)-ethylenediamine, N-(2-hydroxy-3-decyloxypropyl)-ethylenediamine, N-(2-hydroxy-3-dodecyloxypropyl)-ethylenediamine, N-(2-hydroxy-3-dodecyloxypropyl)-isopropylene diamine, N-(2-hydroxy-3-tetradecyloxypropyl)-ethylenediamine, N-(2-hydroxy-3-hexadecyloxypropyl)-ethylenediamine, N-(2-hydroxy-3-octadecyloxypropyl)-ethylenediamine, N-(2-hydroxy-3-phenoxypropyl)-ethylenediamine, N-(2-hydroxy-3-phenoxypropyl)-1,2-propylenediamine, N-(2-hydroxy-3-phenoxypropyl)-isopropylenediamine, N-(2-hydroxy-3-phenoxypropyl)-1,2-dimethylethylenediamine, N-(2-hydroxy-3-parachlorophenoxypropyl)-ethylenediamine, N-(2-hydroxy-3-para-

chlorophenoxypropyl)-1,2-dimethylethylenediamine, N-(2-hydroxy-2-phenylethyl)-ethylenediamine, N-(2-hydroxy-2-phenylethyl)-isopropylenediamine, N-(2-hydroxy-3-phenoxypropyl)-ethylenediamine, N-(2-hydroxy-3-phenoxypropyl)-isopropylene diamine, N-(1-methyl-2-hydroxy-2-ethoxycarbonylethyl)-ethylenediamine, N-(1-methyl-2-hydroxy-2-ethoxycarbonylethyl)-isopropylenediamine, N-(2-cyanoethyl)-ethylenediamine, N-(2-cyanoethyl)-propylenediamine, N-(2-cyanoethyl)-isopropylenediamine, N-(2-cyanopropyl)-ethylenediamine, N-(2-cyanopropyl)-1,2-propylenediamine, N-(2-cyanoethyl)-isopropylene diamine, N-(2-aminocarbonylethyl)-ethylenediamine, N-(2-aminocarbonylethyl)-1,2-propylenediamine, N-(2-aminocarbonylethyl)-isopropylene diamine, N-{2-(2-hydroxyethoxy)-carbonylethyl}-ethylenediamine and N-{2-(2-dimethylaminoethoxy)-carbonyl}-ethylenediamine.

While it is preferred that the salts provided by the invention are derived from alkylenediamines, N-substituted polyethylenepolyamines may be used when one of Y or Y' is organoamino. Examples of such polyamines are N-octyldiethylenetriamine, N-decyldiethylenetriamine, N-dodecyldiethylenetriamine, N-dodecyltriethylenetetramine, N-(2-mercaptoethyl)-diethylenetriamine, N-(2-mercaptoethyl)triethylenetetramine, N-(2-mercaptopropyl)-diethylenetriamine, N-(2-methoxycarbonylethyl)-diethylenetriamine, N-(2-ethoxycarbonylethyl)-diethylenetriamine, N-(2-propoxycarbonylethyl)-diethylenetriamine, N-(2-isopropoxycarbonylethyl)-diethylenetriamine, N-(2-isopropoxycarbonylethyl)-triethylenetetramine, N-(2-methoxycarbonylpropyl)-diethylenetriamine, N-(2-ethoxycarbonylpropyl)-diethylenetriamine, N-(2-propoxycarbonylpropyl)-diethylenetriamine, N-(2-isopropoxycarbonylpropyl)-diethylenetriamine, N-(2-isopropoxycarbonylpropyl)-triethylenetetramine, N-(2,3-dihydroxypropyl)-diethylenetriamine, N-(2,3-dihydroxypropyl)-triethylenetetramine, N-(2-hydroxy-3-ethoxypropyl)-diethylenetriamine, N-(2-hydroxy-3-ethoxypropyl)-triethylenetetramine, N-(2-hydroxy-2-phenylethyl)-diethylenetriamine, N-(2-hydroxy-3-phenoxypropyl)-diethylenetriamine, N-(1-methyl-2-hydroxy-2-ethoxycarbonylethyl)-diethylenetriamine, N-(2-cyanoethyl)-diethylenetriamine and N-(aminocarbonylethyl)-diethylenetriamine.

Typical metal salts provided by the invention are $Zn^{++}$, $Mn^{++}$, $Cu^{++}$, $Fe^{++}$, $Fe^{+++}$, $Ni^{++}$, $Sn^{++}$, $Co^{++}$, $Co^{+++}$, $Ca^{++}$ and $Mg^{++}$ salts, (or metal salts in which two or more of the above listed metals are present to form salts) of each of the N-substituted alkylenebisdithiocarbamic acids for which the above listed N-substituted diamines and polyethylenepolyamines are precursors.

Although the above polyamines may be manufactured by any method described in the literature, they may in particular be prepared by subjecting polyamines (i.e. alkylenediamines and polyethylenepolyamines) to an addition reaction with acrylic acid derivatives, methacrylic acid derivatives, alkylene sulfides or alkylene oxides. This addition reaction is accomplished by introducing one of such latter compounds dropwise to the polyamine or a solution of the polyamine in water or in an inert organic solvent at temperatures within the range of from 0°C to 100°C, preferably from 20°C to 60°C. Generally, the reaction is exothermic. The evolution of heat in this reaction can easily be controlled by adjusting the speed of dropwise addition of the reactant or by cooling the reaction solution. The polyamine produced can easily be purified by distillation under a vacuum, for example. Where the reaction produces two or more polyamines, they can be separated by purificat-tion. Optionally, the two or more polyamines produced

simultaneously can be used in their unseparated form as the raw material. Desired polyamines can otherwise be easily produced by subjecting corresponding polyamines to a substitution reaction using halogenated benzyl derivatives and halogenated alkyl derivatives. This last reaction is readily carried out by introducing the halogenated alkyl derivative dropwise into the given polyamine at temperatures within the range of from $0^o$ to $100^oC$, preferably from $20^o$ to $60^oC$. From the reaction solution, the polyamine desired is produced by treating the solution with an equivalent weight of an alkali to neutralize the by-product hydrogen halide and subjecting the solution to a treatment for purification. This reaction is generally carried out in the presence of an excess of the polyamine, A polyamine having two or more identical substituents introduced therein can be produced by adjusting the amount of the polyamine used in the reaction.

Then, the product obtained by the reaction in solution (preferably in water and less preferably in another solvent such as an alcohol or dimethylformamide) of $CS_2$ and the N-substituted polyamine is subjected to reaction with a base to form the desired salt. The $CS_2$ reaction product is usually a free alkylenebisdithiocarbamic acid but it could be an amine salt if an excess of polyamine is used. The above two reactions are usually carried out at temperatures within the range of 0 to $80^oC$.

The preferred metal salts, i.e. those of metal(s) having a valency greater than one, can be produced by subjecting a water-soluble salt of an appropriate N-substituted alkylenebisdithiocarbamate to double decomposition with an appropriate water-soluble metal salt. For example, the preparation may be effected by preparing a solution of a water-soluble salt of an alkylenebisdithiocarbamate of Formula I and adding a water-soluble metal salt capable of

inducing double decomposition and allowing the reaction to proceed to its completion thereby causing formation of the desired precipitate. It may otherwise be effected by adding the two compounds at the same time into a reaction tank or even reversing the sequence of addition of the two compounds. As concerns the solvent, although the reactants are generally used in the form of aqueous solutions, any solvent may be effectively used insofar as solubility of the solutes involved is offered. Examples of the solvents advantageously used for the reaction include water, pyridine, methanol, ethanol, isopropyl alcohol, N-methyl-2-pyrrolidone, dimethyl formamide, dimethylacetamide, dimethyl sulfoxide, dioxane, acetone and tetrahydrofuran. These solvents may be used in the form of mixtures. The reaction is carried out at temperatures within the range of from 0 to 70°C or even higher such as 80°C. The metal salt produced by this reaction is isolated generally in the form of a solid. This fact holds good even when the reaction solution contains water of crystallization and/or a solvent. The by-product inorganic salts can easily be removed by washing the precipitate with water. Where the presence of such by-product inorganic salts is not deleterious, the washing treatment may be omitted. Examples of the soluble metal salt used for the double decomposition reaction include those of zinc, manganese, iron, copper, nickel, tin, cobalt, calcium and magnesium. These metal salts are quite effective when they are used in the form of a mixture of two or more members. Specifically, there may be used zinc chloride, zinc sulfate, zinc nitrate, zinc acetate, manganese chloride, manganese sulfate, manganese nitrate, manganese acetate, copper chloride, copper sulfate, copper nitrate, copper acetate, iron chloride, iron sulfate, iron nitrate, nickel chloride, nickel sulfate, tin chloride, tin

sulfate, tin nitrate, cobalt chloride, cobalt sulfate, cobalt nitrate, calcium chloride, calcium nitrate, magnesium chloride and magnesium nitrate. Other soluble metal salts may also be used.

The N-substituted alkylenebisdithiocarbamates provided by the present invention are generally stable at room temperature. They nevertheless tend to undergo gradual decomposition when exposed to high temperatures or stored for a long time. Incorporation of a stabilizer imparts enhanced stability to these products. The stabilizer may be added either in the course of manufacture of the salts or during the formulation of fungicidal compositions. Examples of stabilizers are para-formaldehyde and hexamethylenetetramine.

The following Examples 1-3 illustrate the preparation of the metal salts provided by the invention. After these examples, there follows in Table I the identification of the metal salts of Examples 1-3 as well as the identification of many other additional metal salts within the scope of the invention.

Example 1:

In 200 ml of water, 47 g of an aqueous 40% by weight sodium N-(2-hydroxy-3-isopropoxypropyl)-ethylenebis-dithiocarbamate solution (containing 0.05% mole of the sodium salt) was stirred at room temperature. To the resultant aqueous solution, 13.6 g of an aqueous 50% zinc chloride solution (containing 0.05 mole $ZnCl_2$) was gradually added dropwise. After the dropwise addition, the reaction solution was stirred continuously for three hours at room temperature and there were formed crystals which were separated by filtration and washed with water to remove impurities. The washed crystals were

dried at 50° to 60°C under a vacuum. Thus was obtained a zinc salt of N-(2-hydroxy-3-isopropoxypropyl)-ethylenebisdithiocarbamic acid (Compound 6, Table I). Compounds 1-5 and 7-60 in Table I were prepared in a similar manner using the appropriate starting materials.

Example 2:

In 50 ml of water, 13 g of an aqueous 48% by weight sodium N-(2-mercaptoethyl)-ethylenebisdithiocarbamate solution (containing 0.02 mole of the sodium salt) was stirred at 45° to 50°C. The remaining part of the procedure was performed under a current of nitrogen gas. To the resultant sodium salt solution, 9.5 g of an aqueous 26.5% manganous chloride solution (containing 0.02 mole $MnCl_2$) was gradually added dropwise at temperatures of 40° to 50°C. After the dropwise introduction, the resultant mixture was stirred at 45°C for one hour and there were formed crystals which were separated by filtration and washed with water to remove impurities. The washed crystals were dried under a vacuum to produce a manganese salt of N-(2-mercaptoethyl)-ethylenebisdithiocarbamic acid (compound 61, Table I).

Example 3:

There was prepared an aqueous solution of the compound

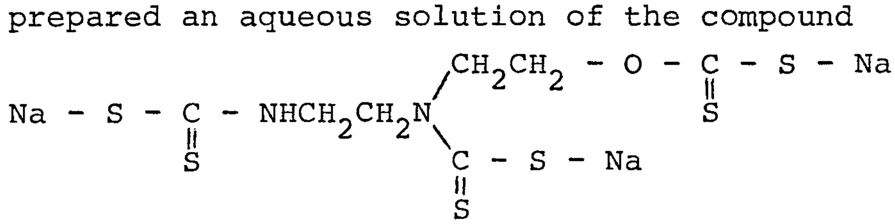

This solution was formed by adding to 300 ml of water, with stirring and at room temperature, 24 g of an aqueous 50% by weight solution of the sodium salt (0.03 mole). To the solution thus prepared, 13 g of an aqueous 50% zinc chloride solution (containing 0.045 mole $ZnCl_2$)

was gradually added dropwise at room temperature. After the dropwise addition, the resultant mixture was stirred at 45°C for one hour and there were formed crystals which were separated by filtration and washed with water to remove impurities. The washed crystals were dried at 50° to 60°C under vacuum. Thus was obtained the zinc salt identified as Compound 63 in Table I. Compounds 62 and 64-67 in Table I were prepared in a similar manner using the appropriate starting materials.

TABLE I

Metal salts of N-substituted alkylenebisdithiocarbamic acids in which all the 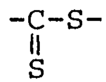 groups are attached to the indicated metal.

| Compound No. | N-substituted alkylene bisdithiocarbamic acid | Appearance | Metal |
|---|---|---|---|
| 1 | 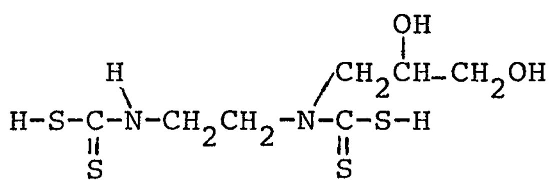 | Yellow powdery solid | $Zn^{++}$ |
| 2 | 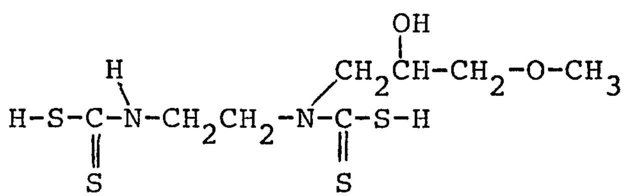 | White powdery solid | $Zn^{++}$ |
| 3 | 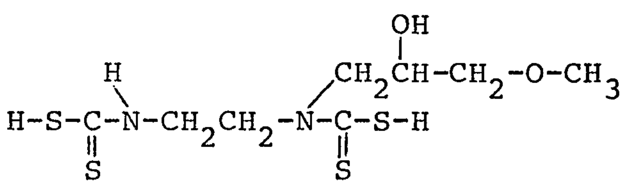 | Black powdery solid | $Cu^{++}$ |

TABLE I (continued)

| Compound No. | N-substituted alkylene bisdithiocarbamic acid | Appearance | Metal |
|---|---|---|---|
| 4 | 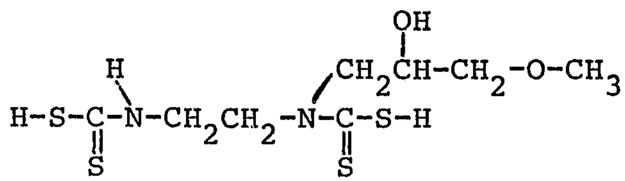 | Blackish brown powdery solid | $Fe^{+++}$ |
| 5 | 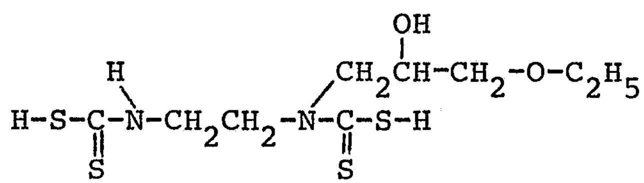 | Light yellow powdery solid | $Zn^{++}$ |
| 6 | 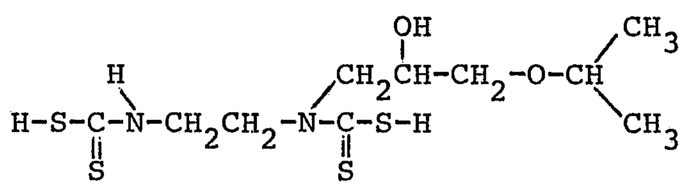 | White powdery solid | $Zn^{++}$ |
| 7 | 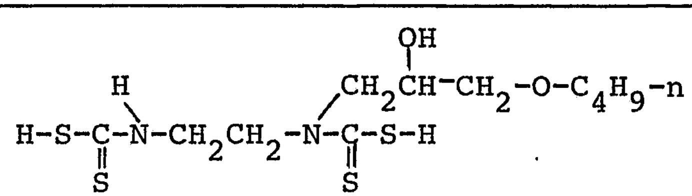 | White powdery solid | $Zn^{++}$ |

TABLE I (continued)

| Compound No. | N-substituted alkylene bisdithiocarbamic acid | Appearance | Metal |
|---|---|---|---|
| 8 | 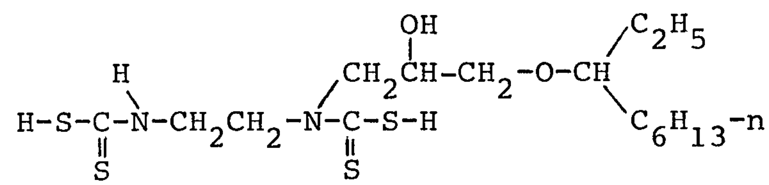 | White powdery solid | $Zn^{++}$ |
| 9 | 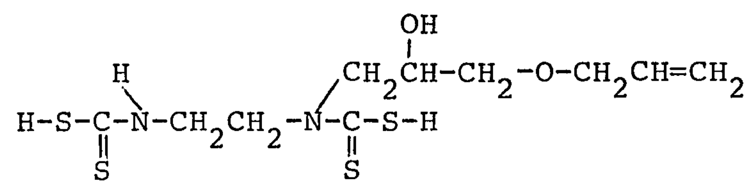 | White powdery solid | $Zn^{++}$ |
| 10 | 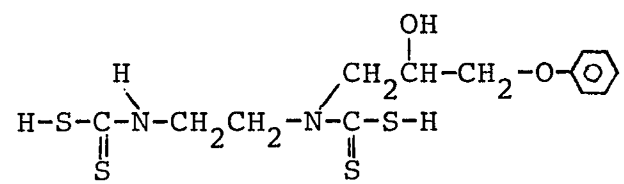 | White powdery solid | $Zn^{++}$ |
| 11 | 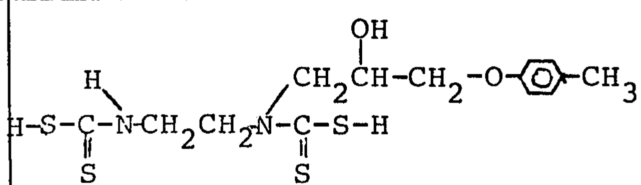 | White powdery solid | $Zn^{++}$ |
| 12 | 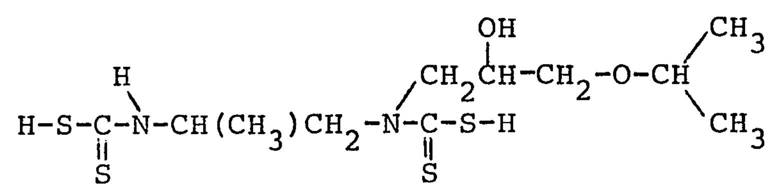 | Yellow powdery solid | $Zn^{++}$ |

<u>TABLE I</u> (continued)

| Compound No. | N-substituted alkylene bisdithiocarbamic acid | Appearance | Metal |
|---|---|---|---|
| 13 | 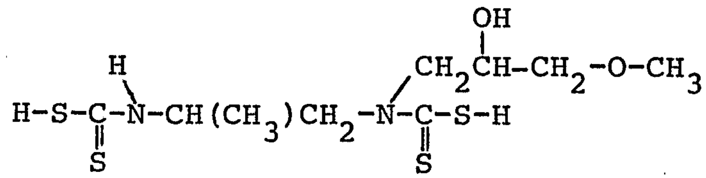 | Light yellow powdery solid | $Zn^{++}$ |
| 14 | 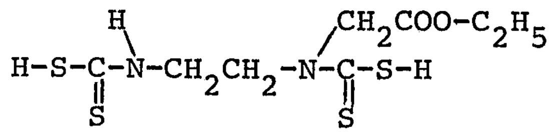 | Yellow powdery solid | $Zn^{++}$ |
| 15 | 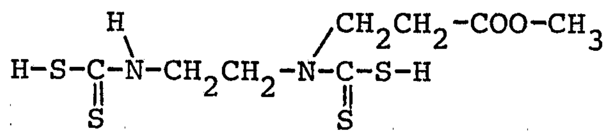 | White powdery solid | $Zn^{++}$ |
| 16 | 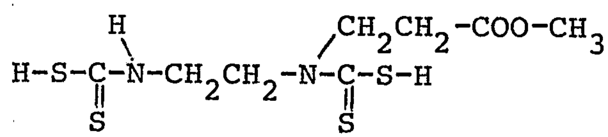 | Brown powdery solid | $Cu^{++}$ |
| 17 | 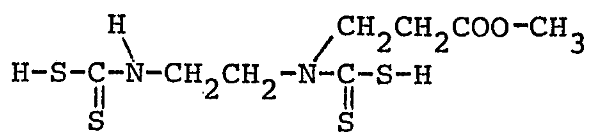 | Blackish brown powdery solid | $Fe^{+++}$ |
| 18 | 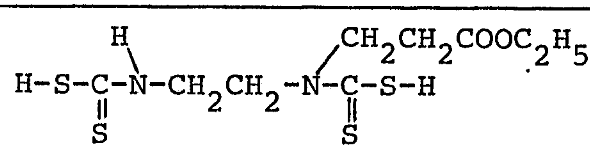 | White powdery solid | Zn++ |

TABLE I (continued)

| Compound No. | N-substituted alkylene bisdithiocarbamic acid | Appearance | Metal |
|---|---|---|---|
| 19 | 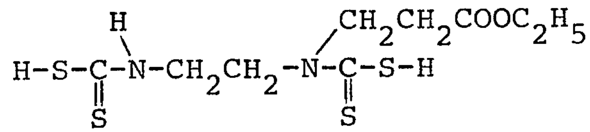 | Brown powdery solid | $Cu^{++}$ |
| 20 | 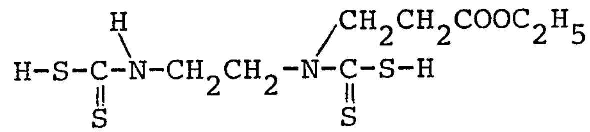 | Black powdery solid | $Fe^{+++}$ |
| 21 | 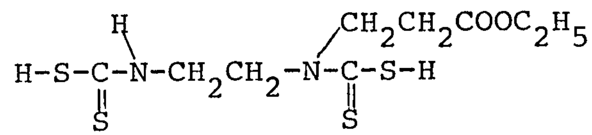 | Blackish brown powdery solid | $Ni^{++}$ |
| 22 | 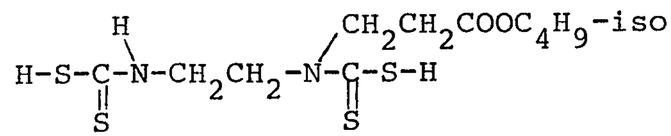 | White powdery solid | $Zn^{++}$ |
| 23 | 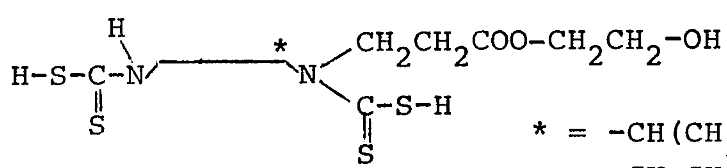 * = $-CH(CH_3)CH_2-$ or $-CH_2CH(CH_3)-$ | Light yellow powdery solid | $Zn^{++}$ |
| 24 | 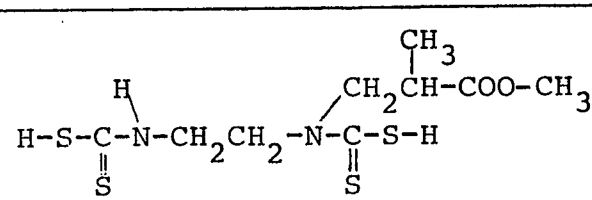 | Light yellow powdery solid | $Zn^{++}$ |

TABLE I (continued)

| Compound No. | N-substituted alkylene bisdithiocarbamic acid | Appearance | Metal |
|---|---|---|---|
| 25 | 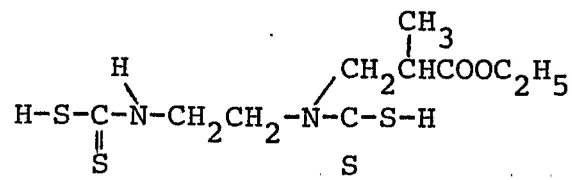 | Light yellow powdery solid | $Zn^{++}$ |
| 26 | 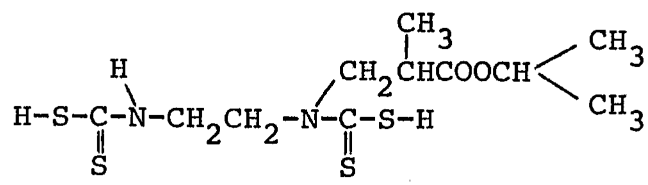 | Light yellow powdery solid | $Zn^{++}$ |
| 27 | 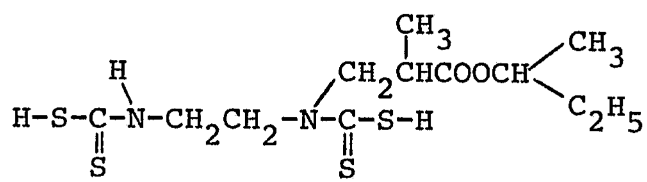 | White powdery solid | $Zn^{++}$ |
| 28 | 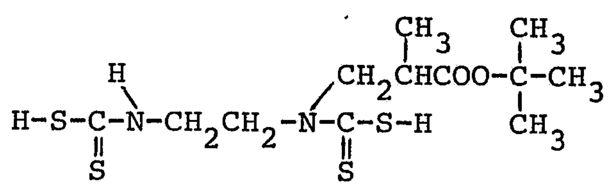 | Light yellow powdery solid | $Zn^{++}$ |
| 29 | 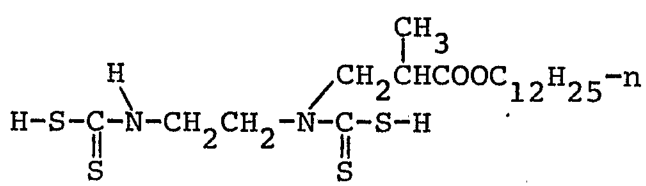 | Light yellow powdery solid | $Zn^{++}$ |

TABLE I (continued)

| Compound No. | N-substituted alkylene bisdithiocarbamic acid | Appearance | Metal |
|---|---|---|---|
| 30 | 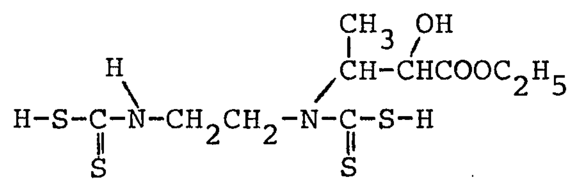 | Light yellow powdery solid | $Zn^{++}$ |
| 31 | 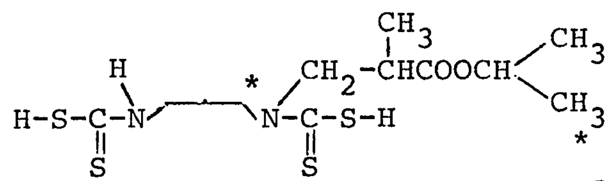 * = $-CH(CH_3)CH_2-$ or $-CH_2CH(CH_3)-$ | Light yellow powdery solid | $Zn^{++}$ |
| 32 | 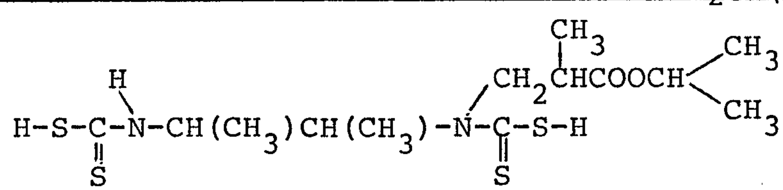 | Light yellow powdery solid | $Zn^{++}$ |
| 33 | 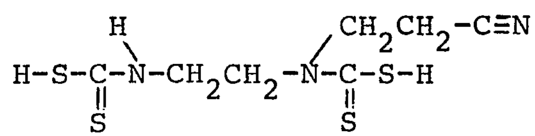 | White powdery solid | $Zn^{++}$ |
| 34 | 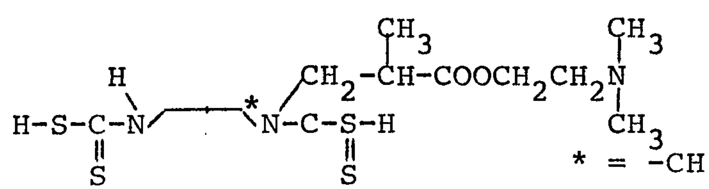 * = $-CH(CH_3)CH_2-$ or $-CH_2CH(CH_3)-$ | White powdery solid | $Zn^{++}$ |

TABLE I (continued)

| Compound No. | N-substituted alkylene bisdithiocarbamic acid | Appearance | Metal |
|---|---|---|---|
| 35 | 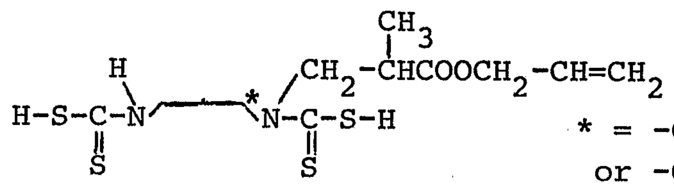 * = $-CH(CH_3)CH_2-$ or $-CH_2CH(CH_3)-$ | Yellow powdery solid | $Zn^{++}$ |
| 36 | 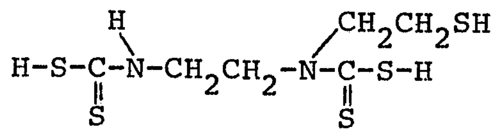 | Light yellow powdery solid | $Zn^{++}$ |
| 37 | 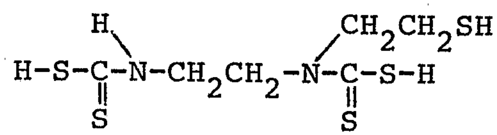 | Blackish brown powdery solid | $Cu^{++}$ |
| 38 | 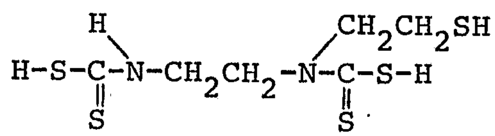 | Black powdery solid | $Fe^{+++}$ |
| 39 | 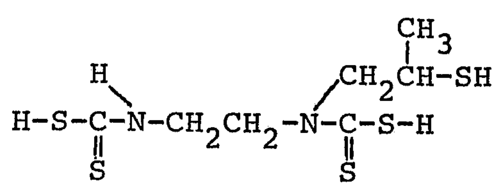 | Yellow powdery solid | $Zn^{++}$ |
| 40 | 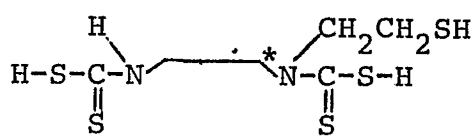 * = $-CH(CH_3)CH_2-$ or $-CH_2CH(CH_3)-$ | Yellow powdery solid | $Zn^{++}$ |

TABLE I (continued)

| Compound No. | N-substituted alkylene bisdithiocarbamic acid | Appearance | Metal |
|---|---|---|---|
| 41 | 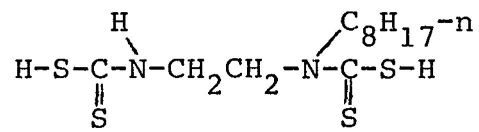 | Yellow powdery solid | $Zn^{++}$ |
| 42 | 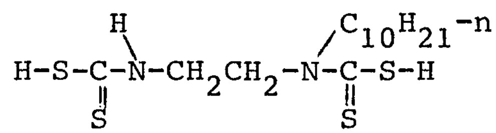 | Yellow powdery solid | $Zn^{++}$ |
| 43 | 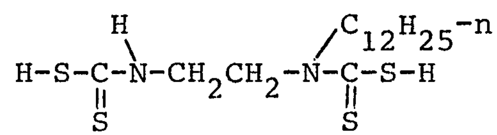 | Yellow powdery solid | $Zn^{++}$ |
| 44 | 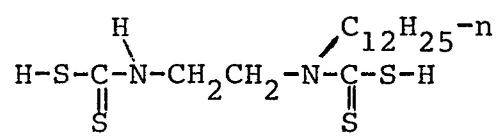 | Black powdery solid | $Cu^{++}$ |
| 45 | 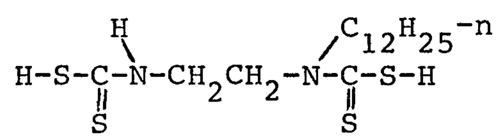 | Yellow powdery solid | $Ca^{++}$ |
| 46 | 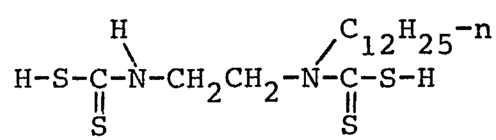 | Light yellow powdery solid | $Mg^{++}$ |

TABLE I (continued)

| Compound No. | N-sbustituted alkylene bisdithiocarbamic acid | Appearance | Metal |
|---|---|---|---|
| 47 | 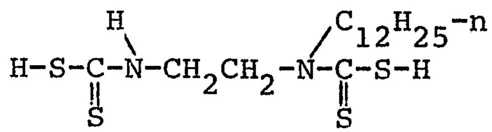 | Black powdery solid | $Fe^{+++}$ |
| 48 | 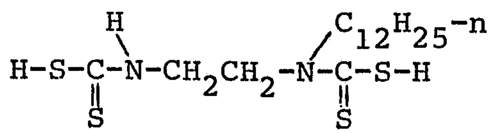 | Black powdery solid | $Ni^{++}$ |
| 49 | 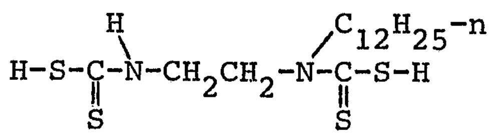 | Black powdery solid | $Co^{+++}$ |
| 50 | 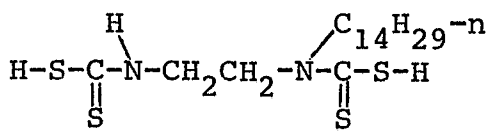 | Yellow powdery solid | $Zn^{++}$ |
| 51 | 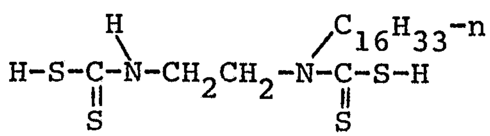 | Yellowish orange powdery solid | $Zn^{++}$ |
| 52 | 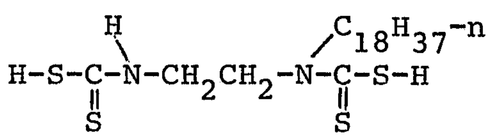 | Light yellow powdery solid | $Zn^{++}$ |

TABLE I (continued)

| Compound No. | N-substituted alkylene bisdithiocabamic acid | Appearance | Metal |
|---|---|---|---|
| 53 | 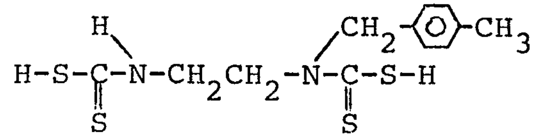 | Light yellow powdery solid | $Zn^{++}$ |
| 54 | 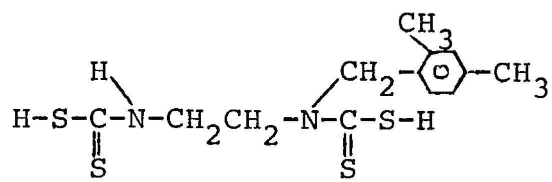 | Yellow powdery solid | $Zn^{++}$ |
| 55 | 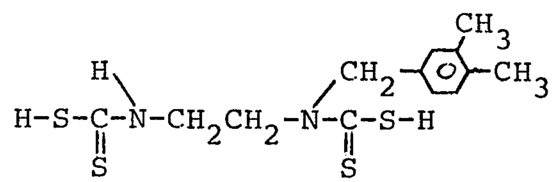 | Light yellow powdery solid | $Zn^{++}$ |
| 56 | 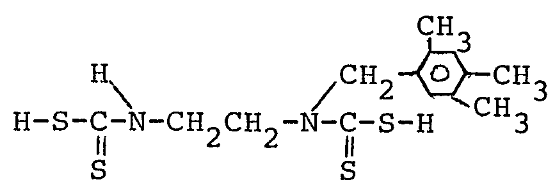 | Yellow powdery solid | $Zn^{++}$ |
| 57 | 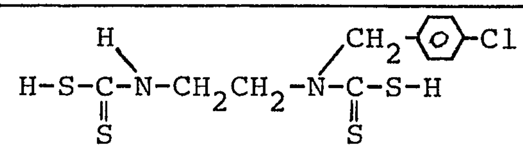 | Yellow powdery solid | $Zn^{++}$ |

TABLE I (continued)

| Compound No. | N-substituted alkylenebisdithiocarbamic acid | Appearance | Metal |
|---|---|---|---|
| 58 | 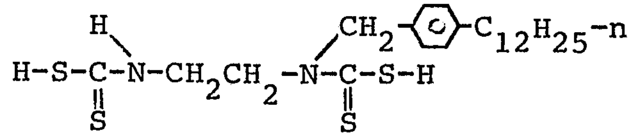 | Yellowish orange powdery solid | $Zn^{++}$ |
| 59 | 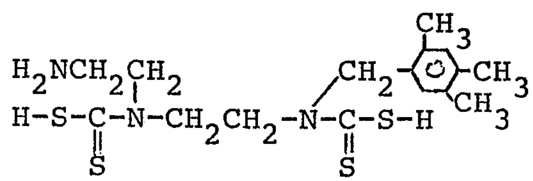 | Yellow powdery solid | $Zn^{++}$ |
| 60 | 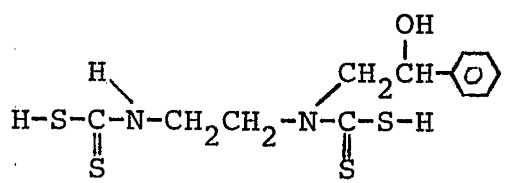 | White powdery solid | $Zn^{++}$ |
| 61 | 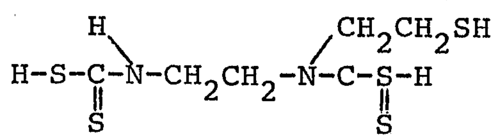 | Yellow powdery solid | $Mn^{++}$ |
| 62 | 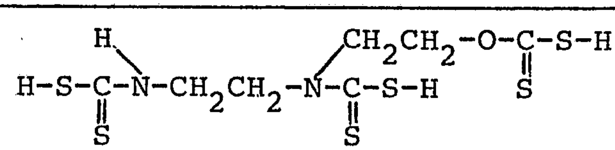 | Yellowish orange powdery solid | $Mn^{++}$ |
| 63 | 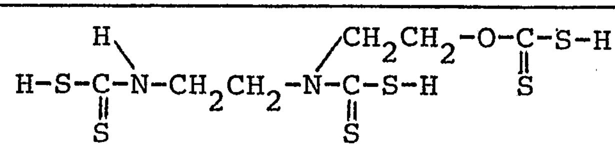 | Yellow powdery solid | $Zn^{++}$ |

TABLE I (continued)

| Compound No. | N-substitued alkylenebisdithiocarbamic acid | Appearance | Metal |
|---|---|---|---|
| 64 | 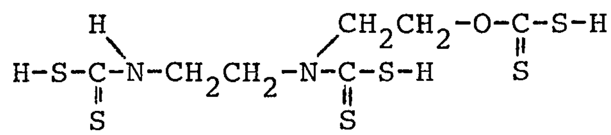 | Black powdery solid | $Fe^{+++}$ |
| 65 | 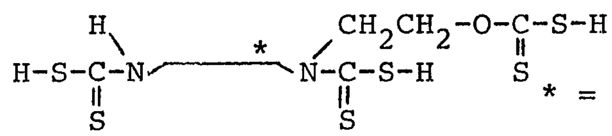 * = $-CH(CH_3)CH_2-$ or $-CH_2CH(CH_3)-$ | Yellow powdery solid | $Zn^{++}$ |
| 66 | 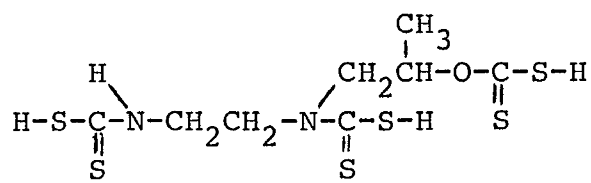 | Yellow powdery solid | $Zn^{++}$ |
| 67 | 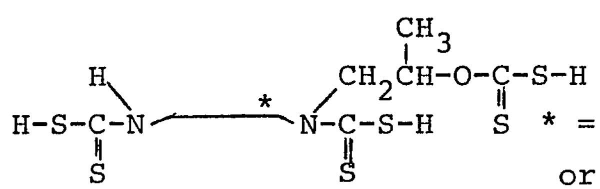 * = $-CH(CH_3)CH_2-$ or $-CH_2CH(CH_3)-$ | Yellowish orange powdery solid | $Zn^{++}$ |

There should also be singled out for mention each of Compounds 1 - 67 in Table I wherein the indicated metal is replaced by a different metal which is selected from each and every single member of the group consisting of $Zn^{++}$, $Cu^{++}$, $Fe^{+++}$, $Ni^{++}$, $Ca^{++}$, $Mg^{++}$, $Co^{++}$ and $Mn^{++}$ ($Mn^{++}$ being the preferred replacement metal), thus providing a total number of 7 x 67 = 469 additional specific compounds within the scope of the present invention.

The compounds listed in Table I above could also be represented by formulae corresponding to that of Formula III so that, for example, Compound No. 1 could be represented as:

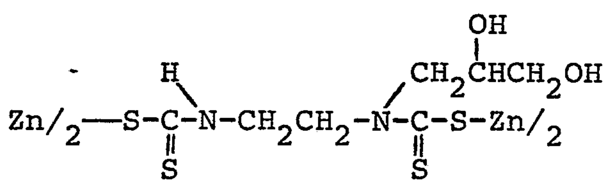 ,

Compound 36 could be represented as:

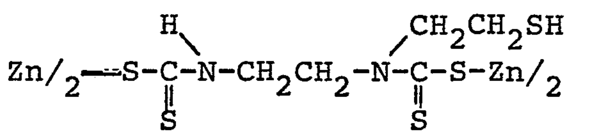 ,

Compound 62 could be represented as:

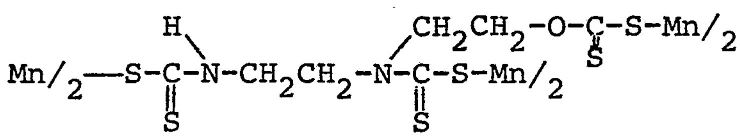

and so on for the rest of the compounds in Table I.

Infrared absorption data for each of Compounds 1-31, 33-39, 41-44 and 47-67 of Table I are set out on the accompanying drawings in which Figures 1-31 show, respectively, infrared absorption spectra for Compounds 1-31; Figures 32-38 show, respectively, the data for Compounds 33-39; Figures 39-42 show, respectively, the data for Compounds 41-44 and Figures 43-63 show, respectively, the data for Compounds 47-67. The infrared data were obtained using the KBr disc method.

Although attempts have been made to assign precise and accurate chemical formulae to the above-described metal salts in accordance with the invention (i.e. salts of metals having a valency greater than 1), this has not proved entirely feasible because these salts have a complex structure and they may even be polymeric as is thought to be the case with maneb, mancozeb and zineb (vide, for example, The Pesticide Manual, The British Crop Protection Council, 6th Edition 1979). In general these complex metal salts are not water-soluble.

Some or all of Compounds 1-67 were evaluated as fungicides as described in the following two tests.

Test 1:

To cucumbers (species: Tokiwa-hikari Sango) grown in a greenhouse to the three-leaf stage, there were applied aqueous suspensions each containing 1500 ppm of active ingredient, of Compounds 1-67 identified in Table I which were used in the form of 75 wt % wettable powders. The suspensions were applied with the aid of a small glass spray. On the second day after this spraying, a suspension of spores of scab (Cladosporium cucumerinum) was sprayed on the treated cucumbers. The cucumbers were kept in a hot house with humidity of not less than 90% to promote the infection of cucumbers by the fungal spores. On the 10th day after this infection with the spores, the two uppermost of the leaves which were open at the time of the spraying were examined and rated for degree of disease (on the 0-4 scale) to calculate the control index. In the "0-4 scale", 0 = no disease, 1 = 5 per cent or less of leaf area diseased, 2 = 5-20 per cent of leaf area diseased, 3 = 20-50 percent of leaf area diseased and 4 = more than 50 percent of leaf area diseased. The results obtained are set forth in Table II below.

TABLE II

Test for control of scab disease on cucumbers

| Compound No. | Control Index |
|---|---|
| 1 | 74 |
| 2 | 72 |
| 3 | 70 |
| 4 | 76 |
| 5 | 68 |
| 6 | 89 |
| 7 | 65 |
| 8 | 81 |
| 9 | 73 |
| 10 | 80 |
| 11 | 72 |
| 12 | 88 |
| 13 | 86 |
| 14 | 78 |
| 15 | 65 |
| 16 | 82 |
| 17 | 79 |
| 18 | 70 |
| 19 | 61 |
| 20 | 76 |
| 21 | 78 |
| 22 | 64 |
| 23 | 78 |
| 24 | 65 |
| 25 | 77 |
| 26 | 82 |
| 27 | 66 |
| 28 | 82 |
| 29 | 78 |
| 30 | 72 |

TABLE II (continued)

| Compound No. | Control Index |
|---|---|
| 31 | 83 |
| 32 | 79 |
| 33 | 70 |
| 34 | 74 |
| 35 | 68 |
| 36 | 82 |
| 37 | 72 |
| 38 | 80 |
| 39 | 75 |
| 40 | 86 |
| 41 | 70 |
| 42 | 69 |
| 43 | 75 |
| 44 | 64 |
| 45 | 77 |
| 46 | 78 |
| 47 | 79 |
| 48 | 73 |
| 49 | 70 |
| 50 | 60 |
| 51 | 73 |
| 52 | 72 |
| 53 | 65 |
| 54 | 81 |
| 55 | 75 |
| 56 | 58 |
| 57 | 75 |
| 58 | 71 |
| 59 | 66 |
| 60 | 82 |

TABLE II (continued)

| Compound No. | Control Index |
|---|---|
| 61 | 76 |
| 62 | 73 |
| 63 | 70 |
| 64 | 79 |
| 65 | 79 |
| 66 | 69 |
| 67 | 80 |
| No treatment | 0 |

Test 2:

To tomatoes (species: Sarashina-Fukuju) grown in a greenhouse to the seven-leaf stage, there were applied aqueous suspensions, each containing 1500 ppm of active ingredients of nine of the compounds listed in Table I, the compounds being used in the form of 75 wt % wettable powders. The suspensions were applied with the aid of a small powdered spray. On the second day after this spraying, a suspension of spores of Phytopthora infestans were sprayed uniformly on the treated tomatoes to infect them. On the 10th day after this infection, five main leaves per stock and seven small leaves per main leaf were examined to take count of disease spots (on the scale of 0, 1 and 2) to calculate the control index. In the 0, 1 and 2 scale, 0 = no disease, 1 = less than 20 percent of leaf area diseased and 2 = 20 percent or more of leaf area diseased.

TABLE III

Test for control of disease on tomatoes

| Compound No. | Control Index | Phytotoxicity |
|---|---|---|
| 1 | 74 | Nil |
| 2 | 81 | Nil |
| 6 | 86 | Nil |
| 12 | 73 | Nil |
| 20 | 69 | Nil |
| 21 | 75 | Nil |
| 26 | 84 | Nil |
| 30 | 77 | Nil |
| 33 | 79 | Nil |
| 36 | 80 | Nil |
| 39 | 68 | Nil |
| 44 | 77 | Nil |
| 46 | 76 | Nil |
| 53 | 83 | Nil |
| 59 | 79 | Nil |
| 61 | 75 | Nil |
| 62 | 85 | Nil |
| 67 | 86 | Nil |
| No treatment | 0 | - |

Although the description of the invention thus far has laid emphasis on the preferred salts, ie salts of metal(s) having a valency greater than one, also of importance is a subclass of salts of the formula:

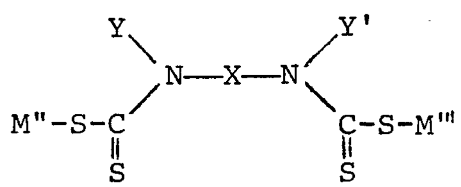

(IV)

where X, Y and Y' are as defined for Formula I and M" and M"' , which may be the same or different, represent an alkali metal (particularly sodium, potassium or lithium) or a nitrogenous group such as ammonium, substituted ammonium or a nitrogen-containing heterocycle.

When M" and/or M"' is or are substituted ammonium, the number of substituents may be up to 4 and the substituents may be selected from $(C_1-C_4)$alkyl (preferably methyl or ethyl) and phenyl$(C_1-C_2)$alkyl. Examples of substituted ammonium groups are methylammonium, dimethylammonium, benzyltrimethylammonium and dibenzyldiethylammonium.

Typical salts of Formula IV are alkali metal, ammonium and substituted ammonium salts of each of the N-substituted alkylenebisdithiocarbamic acid for which the N-substituted diamines and polyethylenepolyamines listed earlier in this specification are precursors.

Salts of Formula IV may be prepared by the reaction of an acid of Formula I with an appropriate base or by a metathesis reaction involving a salt of an acid of Formula I. An example of such a metathesis reaction would be when $CS_2$ is reacted with an excess of a diamine, eg an N-substituted ethylenediamine, thereby producing an amine salt of an acid of Formula I, the amine salt being then reacted with an alkali metal hydroxide to form the corresponding alkali metal salt. These reactions are preferably carried out in solution in a solvent such as water and alcohol, dimethylformamide or other inert solvent. The reaction temperature used may, in general, be from $0^oC$ to $100^oC$, preferably $20^oC$ to $50^oC$, $70^oC$ or $80^oC$ and more preferably $30^oC$ to $40^oC$. The acid of Formula I may be produced _in situ_ by the reaction of carbon disulfide and an appropriate diamine or other polyamine in the presence of a base which then reacts with the acid formed to produce the desired salt of Formula IV.

The reaction between $CS_2$ and the diamine or other polyamine is exothermic to some extent and generally proceeds readily at temperatures of $30^{\circ}$ to $40^{\circ}C$. The reaction temperature can be adjusted by controlling the speed of the dropwise addition of $CS_2$ or by cooling the reaction system externally. For example, the reaction may be carried out by adding $CS_2$ dropwise to a solution containing diamine or other polyamine and a base which give rises to the desired salt.

For salts wherein Y and/or Y' is a $-(CHR)_m-CHR_3-O-\underset{\substack{\| \\ S}}{C}-M''(M''')$, group there can be used a diamine or other polyamine reactant containing one or two N-substituents of the formula $-(CHR)_m-CHR_3-OH$ which also react with $CS_2$ to give the aforementioned salt group. Desirably this reaction is carried out in a solvent such as water, dimethylformamide, dimethylsulfoxide, alcohols such as ethanol or N-methyl pyrrolidone and at a temperature of $35^{\circ}$ to $45^{\circ}C$.

Examples of bases advantageously used for the production of the water-soluble salts of Formula IV are alkalis such as lithium hydroxide, sodium hydroxide, potassium hydroxide, lithium carbonate, sodium carbonate, potassium carbonate, sodium bicarbonate and potassium bicarbonate; ammonia and aqua ammonia; alkylamines such as methylamine, dimethyl amine, ethylamine, diethylamine, triethylamine, propylamine, dipropylamine, butylamine, ethylenediamine, diethylenetriamine, triethylenetetramine, propylenediamine, monethanolamine, diethanolamine, triethanolamine, N-(2-hydroxyethyl)-ethylenediamine, N-(2-hydroxyethyl)-hydrazine and hydrazine; aryl amines and aralkyl amines such as aniline, phenylenediamine, xylylenediamine and benzylamine; and heterocyclic amines such as morpholine, piperazine, pyridine and quinoline.

The following Examples 4 - 9 illustrate the preparation of salts of Formula IV. After these examples, there follows in Table IV the identification of the metal salts of Examples

4 - 9 as well as the identification of many other additional salts of Formula IV.

Example 4

While 20 g (0.114 mol) of N-(3-isopropoxy-2-hydroxy-propyl)-ethylenediamine and 30 g of water were stirred at room temperature (20°C), 17 g (0.228 mol) of carbon disulfide was gradually added dropwise thereto. The reaction temperature was kept just below 38°C. After the dropwise addition of $CS_2$, the resultant mixture was stirred at 35° to 38°C for one hour. Then, 19 g of an aqueous 48% by weight caustic soda solution (0.228 mole NaOH) was gradually added dropwise to neutralize the solution. The reaction temperature was again kept just below 38°C. After the dropwise addition of NaOH, the mixture was again stirred at 38° to 42°C for two hours and there resulted a light yellow, transparent aqueous solution of sodium N-(3-isopropoxy-2-hydroxypropyl)-ethylenebisdithiocarbamate (Compound 72, Table IV). Compounds 68 - 71 and 73 - 79 in Table IV were prepared in a similar manner using the appropriate polyamine precursor and caustic soda, aqua ammonia or dimethylamine. Each of Compounds 68 - 79 was freed of water by evaporation of water from the solution followed by drying under vacuum.

Example 5

While 42 g (0.55 mol) of carbon disulfide and 50 g of water were stirred at room temperature (20°C), 44 g (0.275 mol) of N-(2-ethoxycarbonylethyl)-ethylenediamine was gradually added dropwise. With the reaction temperature being kept just below 38°C, the mixture was stirred for one hour. To the solution, 46 g of an aqueous 48% caustic soda solution (0.55 mol NaOH) was added dropwise with the temperature again being kept below 38°C. After the dropwise addition of the NaOH solution, the stirring was continued for three hours at 38°C and there resulted a yellow, transparent aqueous solution of sodium N-(2-ethoxycarbonylethyl)-ethylenebis-

dithiocarbamate (Compound 81, Table IV). Compounds 80 and 82 - 99 in Table IV were prepared in a similar manner using the appropriate polyamine precursor and caustic soda, caustic potash or aqua ammonia. Each of Compounds 80 - 99 was freed of water by evaporation of water from the solution followed by drying under vacuum.

Example 6

While 30 g (0.156 mol) of N-(2,4,5-trimethylbenzyl)-ethylenediamine, 40 g of water and 26 g of an aqueous 48% caustic soda solution (0.132 mole NaOH) were stirred at room temperature (20°C), 24 g (0.312 mol) of carbon disulfide was added dropwise with the temperature being kept just below 35°C. After the dropwise addition of $CS_2$, the mixture was stirred at 35° to 38°C for three hours and there resulted a uniform, clear aqueous solution of sodium N-(2,4,5-trimethylbenzyl)-ethylenebisdithiocarbamate (Compound 104, Table IV). Compounds 100 - 103 and 105 - 110 in Table IV were prepared in a similar manner using the appropriate polyamine precursor and caustic soda. Each of Compounds 100 - 110 was freed of water by evaporation of water from the solution followed by drying under vacuum.

Example 7

While 31 g (0.4 mol) of carbon disulfide and 40 g of water were stirred, 24 g (0.2 mol) of N-(-2-mercaptoethyl)-ethylenediamine was gradually added dropwise with the temperature being kept just below 38°C. After the dropwise addition of the diamine, the mixture was stirred at 35° to 38°C for one hour. Thereafter, 34 g of an aqueous 48% caustic soda solution (0.4 mole NaOH) was gradually added dropwise to achieve neturalization, the reaction temperature again being kept below 38°C. After the dropwise addition of the caustic soda solution, the mixture was stirred at 38°C for two hours and, thereafter, cooled to room temperature. There resulted a uniform clear aqueous solution of sodium N-(-2-mercaptoethyl)ethylenebisdithiocarbamate (Compound 111, Table IV). Compounds 112 - 116 were prepared in a similar fashion using the appropriate polyamine precursor and caustic soda, aqua ammonia or methylamine. Each of Compounds 112 - 116 was freed of water by evaporation of water from the solution followed by drying under vacuum.

Example 8

In 55 g of water, 60 g (0.25 mol) of N-dodecylethylenediamine and 85 ml of ethanol were stirred at room temperature (20°C) until the diamine was dissolved. To the solution thus obtained, 40 g (0.5 mol) of carbon disulfide was added dropwise with the temperature being kept just below 35°C. After the dropwise addition of $CS_2$, the mixture was stirred at room temperature for two hours. Then, 42 g of an aqueous 48% caustic soda solution (0.5 mol NaOH) was gradually added dropwise, with the temperature again being kept just below 38°C; thereafter stirring was carried out at 42°C for one hour and there resulted a uniform clear aqueous solution of sodium N-dodecylethylenebisdithiocarbamate (Compound 119, Table IV). Compounds 117, 118 and 120 - 124 were prepared in a similar manner using the appropriate polyamine precursor and caustic soda, caustic potash or aqua ammonia. Each of Compounds 117 - 124 was freed of liquid by evaporation thereof from the solution followed by drying under vacuum.

Example 9

While 55 g (0.72 mol) of carbon disulfide and 100 ml of dimethylformamide were stirred at room temperature, 25 g (0.24 mol) of N-(2-hydroxyethyl)-ethylenediamine was gradually added dropwise with the temperature kept below the level of 35°C. The mixture was stirred at 35°C for one hour. Thereafter, 31 g of solid 93% caustic soda (0.72 mole NaOH) was added with the temperature kept below the level of 45°C. After the addition of the caustic soda, the mixture was stirred at a temperature between 42° and 45°C for one hour

and there resulted a uniform clear aqueous solution of a compound (Compound 125, Table IV) which was the starting compound of the foregoing Example 3 in which the formula of the compound in question is given. Compounds 126 - 131 were prepared in a similar manner using the appropriate polyamine precursor and caustic soda or potash. Each of Compounds 125 - 131 was freed of liquid by evaporation thereof from the solution followed by drying under vacuum.

Table IV follows and, by way of further explanation of the column 3 heading it is pointed out that, for example, Compound 111 has the structural formula:

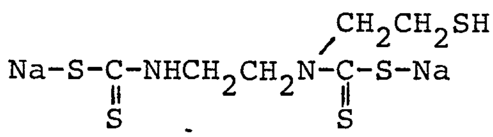

wherein $Na^+$ (A in column 3) replaces $Zn^{++}$ in Compound No.36 (B in column 3) and similarly Compound 125 has the structural formula:

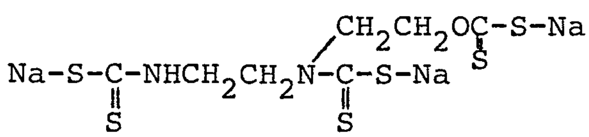

wherein $Na^+$ replaces $Mn^{++}$ in Compound 62.

TABLE IV

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 68 | | Na | 1 | Orange solid |
| 69 | | Na | 2 | Light yellow, gel-like solid |
| 70 | | Na | 5 | Light yellow solid |
| 71 | | $(CH_3)_2NH_2$ | 6 | Yellow greasy solid |
| 72 | | Na | 6 | Yellow solid |
| 73 | | Na | 7 | Light yellow solid |
| 74 | | Na | 8 | Light yellow solid |
| 75 | | Na | 9 | Yellow solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 76 | | Na | 10 | Yellow solid |
| 77 | | Na | 11 | White solid |
| 78 | | $NH_4$ | 12 | Yellow greasy solid |
| 79 | | Na | 13 | Yellow solid |
| 80 | | Na | 14 | Yellow gel-like solid |
| 81 | | Na | 15 | Yellow solid |
| 82 | | Na | 18 | Yellow solid |
| 83 | | K | 18 | Yellow gel-like solid |
| 84 | 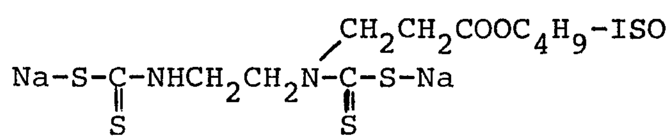 | - | - | Light yellow solid |
| 85 | | Na | 24 | Light yellow solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 86 | | Na | 25 | Yellow solid |
| 87 | | Na | 26 | Light yellow solid |
| 88 | | K | 26 | Yellow gel-like solid |
| 89 | | Na | 27 | Light yellow solid |
| 90 | | Na | 28 | Light yellow solid |
| 91 | | Na | 29 | Light yellow solid |
| 92 | 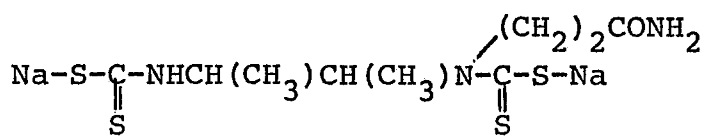 | - | - | Yellow solid |
| 93 | | Na | 33 | Light yellow solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 94 | | Na | 31 | Yellow gel-like solid |
| 95 | | $NH_4$ | 31 | Yellow gel-like solid |
| 96 | | Na | 30 | Light yellow solid |
| 97 | | Na | 34 | Yellow gel-like solid |
| 98 | | Na | 23 | Yellow gel-like solid |
| 99 | | Na | 35 | Yellow gel-like solid |
| 100 | | Na | 53 | Yellow orange solid |
| 101 | | Na | 54 | Light yellow solid |
| 102 | | Na | 55 | Light yellow solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 103 | 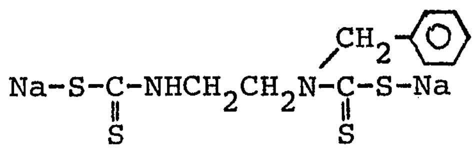 | - | - | Yellow gel-like solid |
| 104 | | Na | 56 | Yellow solid |
| 105 | | Na | 58 | Yellow orange solid |
| 106 | 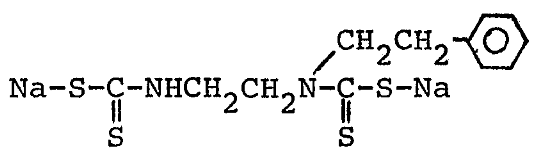 | - | - | Light gel-like solid |
| 107 | | Na | 57 | Yellow solid |
| 108 | | Na | 59 | Light yellow solid |
| 109 | | Na | 60 | Light yellow solid |

TABLE IV (continued)

| Col. 1<br>Compound No. | Col. 2<br>Structural formula - if no entry under column 3 | Col. 3<br>Salt-forming group (A) or metal (A) replacing the indicated metal in Compound No. (B) in Table I | | Col. 4<br>Appearance |
|---|---|---|---|---|
| | | A | B | |
| 110 | 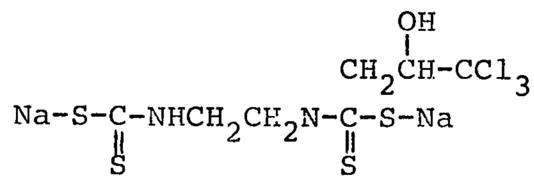 | - | - | Light yellow solid |
| 111 | | Na | 61 | Yellow brown solid |
| 112 | | $NH_4$ | 61 | Light yellow gel-like solid |
| 113 | | $CH_3NH_3$ | 61 | Yellow gel-like solid |
| 114 | | Na | 39 | Yellow solid |
| 115 | | Li | 39 | Yellow orange solid |
| 116 | | Na | 40 | Yellow greasy solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 117 | | Na | 41 | Yellow solid |
| 118 | | Na | 42 | Yellow solid |
| 119 | | Na | 43 | Yellow solid |
| 120 | | K | 43 | Yellow orange solid |
| 121 | | $NH_4$ | 43 | Light gel-like solid |
| 122 | | Na | 50 | Yellow solid |
| 123 | | Na | 51 | Yellow solid |
| 124 | | Na | 52 | Yellow solid |
| 125 | | Na | 62 | Yellow orange solid |

TABLE IV (continued)

| Col. 1 | Col. 2 | Col. 3 | | Col. 4 |
|---|---|---|---|---|
| Compound No. | Structural formula - if no entry under column 3 | Salt-forming group (A) or metal (A) replacing the indicated metal in Compound No. (B) in Table I | | Appearance |
| | | A | B | |
| 126 | | K | 62 | Yellow orange solid |
| 127 | | Na | 66 | Yellow orange solid |
| 128 | | Na | 65 | Orange solid |
| 129 | | K | 65 | Orange solid |
| 130 | | Na | 67 | Yellow orange solid |
| 131 | | K | 67 | Yellow orange solid |

Except for Compounds 84, 92, 103, 106 and 110, the compounds of Table IV are precursors, utilizing a metathesis reaction, for one or more of the compounds of Table I. However, Compounds 84, 92, 103, 106 and 110 are also suitable precursors of the preferred metal salts of the invention. Thus each of these five compounds is suitable subjected to a metathesis reaction with a metal salt wherein the metal is selected from each and every member of the group consisting of $Zn^{++}$, $Cu^{++}$, $Fe^{+++}$, $Ni^{++}$, $Ca^{++}$, $Mg^{++}$, $Co^{++}$ and $Mn^{++}$, the last metal being preferred.

From the preceding description, it may be seen that the salts of acids of Formula I may be prepared by a process which may be generally defined as a process wherein an acid of Formula I or salt thereof is subjected, in solution, preferably an aqueous solution, to a metathesis reaction with an appropriate salt or base or to an addition reaction with ammonia or an amine including heterocyclic amines such as pyridine, the above reactions preferably being carried out at a temperature of 0°C to 100°C, preferably 20°C to 50°C, 70°C or 80°C and more preferably 30°C to 40°C.

Some or all of Compounds 68 - 131 were evaluated as fungicides as described in the following two tests.

Test 3 :

To cucumbers (species: Tokiwa-hirari Sango) grown in a greenhouse to the three-leaf stage, an aqueous solution each of the Compounds 68 - 131 was applied with the aid of a small glass spray. On the second day after the spraying, a suspension of spores of scab (Cladosporium cucumerium) was sprayed on the treated cucumbers. The cucumbers were kept in a hot house with humidity of not less than 90% to promote the infection of the cucumbers by the fungal spores. On the 10th day after this infection with the spores, the two uppermost of the leaves which were open at the time of the

spraying were examined and rated for degree of disease (on the O-4 scale) to calculate the control index. The "O-4 scale" is defined in Test 1 above. Each of Compounds 68 - 131 was applied in the form of an aqueous 30 wt % solution which was diluted 2000 times with water. The results are set forth in Table V below.

TABLE V

Test for control of scab disease on cucumbers

| Compound No. | Control Index |
|---|---|
| 68 | 77 |
| 69 | 79 |
| 70 | 74 |
| 71 | 81 |
| 72 | 83 |
| 73 | 62 |
| 74 | 71 |
| 75 | 64 |
| 76 | 68 |
| 77 | 73 |
| 78 | 87 |
| 79 | 83 |
| 80 | 71 |
| 81 | 67 |
| 82 | 70 |
| 83 | 66 |
| 84 | 75 |
| 85 | 75 |
| 86 | 72 |
| 87 | 84 |
| 88 | 83 |
| 89 | 77 |
| 90 | 69 |
| 91 | 77 |

TABLE V (continued)

| Compound No. | Control Index |
|---|---|
| 92 | 72 |
| 93 | 63 |
| 94 | 80 |
| 95 | 81 |
| 96 | 73 |
| 97 | 73 |
| 98 | 72 |
| 99 | 68 |
| 100 | 72 |
| 101 | 73 |
| 102 | 65 |
| 103 | 79 |
| 104 | 63 |
| 105 | 71 |
| 106 | 74 |
| 107 | 66 |
| 108 | 58 |
| 109 | 71 |
| 110 | 62 |
| 111 | 86 |
| 112 | 83 |
| 113 | 82 |
| 114 | 85 |
| 115 | 80 |
| 116 | 82 |
| 117 | 72 |
| 118 | 67 |
| 119 | 65 |
| 120 | 59 |
| 121 | 70 |
| 122 | 63 |
| 123 | 74 |
| 124 | 63 |

TABLE V (continued)

| Compound No. | Control Index |
|---|---|
| 125 | 72 |
| 126 | 68 |
| 127 | 69 |
| 128 | 76 |
| 129 | 73 |
| 130 | 74 |
| 131 | 67 |
| No treatment | 0 |

Test 4:

To tomatoes (species: Sarashina-Fukuju) grown in a greenhouse to the seven-leaf stage, there was applied an aqueous solution of each of 18 compounds listed in Table V with the aid of a small powered spray. On the second day after this spraying, a suspension of spores of Phytophthoro infestans was sprayed uniformly on the treated tomatoes to infect them. On the 10th day after this inoculation, five main leaves per stock and seven small leaves per main leaf were examined to take count of disease spots (on the scale of 0, 1 and 2) to calculate the control index. The "0, 1 and 2 scale" is defined in Test 2 appearing earlier in this specification. Each of the 18 compounds was applied in the form of an aqueous 30 wt % solution which was diluted 1000 times with water. The results are set forth in Table VI below.

TABLE VI

Test for control of disease on tomatoes

| Compound No. | Control Index |
|---|---|
| 68 | 82 |
| 69 | 76 |
| 72 | 82 |
| 78 | 81 |
| 82 | 77 |
| 85 | 70 |
| 87 | 84 |
| 93 | 74 |
| 94 | 80 |
| 97 | 73 |
| 100 | 77 |
| 108 | 76 |
| 111 | 83 |
| 114 | 72 |
| 119 | 75 |
| 123 | 72 |
| 125 | 69 |
| 128 | 76 |
| No treatment | 0 |

In general, in their application as fungicides, the salts provided by the invention may be used to combat fungi on plants; usually plants (including seeds) yielding or capable of yielding an agronomic crop, in manner generally similar to the application of analogous known alkylenebisdithiocarbamates containing no N-organo substituent. Such known analogous compounds are, for example, nabam, zineb, maneb, mancozeb and propineb. The salts provided by the invention may find applications to combat mildew, eg in paint coatings, or microorganisms such as algae or those which produce slime.

The term "combat" as used herein includes any means which adversely affects the existence or growth of the living organism in question.

The salts may, of course, be used in conjunction with other beneficial biologically active materials such as insecticides, acaricides, herbicides, plant growth regulators and other fungicides such as carbendazim and benoaryl. In general there may be used as the other biologically active materials those listed in the Pesticide Manual cited above provided, of course, that these other materials are compatible with the salts of the invention.

The salts of the invention will usually be used as compositions containing from 1 - 99%, preferably 5 - 95%, by weight of one or more of the salts, as the main active ingredient, the balance of the composition containing or consisting of (1) a liquid or solid carrier or diluent each being agronomically acceptable (2) surfactants such as dispersing or emulsifying agents (3) stabilizers, ie agents improving the chemical stability of the alkylenebisdithiocarbamates (4) thickening agents and (5) sticking agents and propellants for aerosol application.

Typical liquid carriers or diluents are water, organic liquids such as alcohols such as ethanol, ethers, esters, ketones such as aceton or methyl ethyl ketone or methyl isobutyl ketone, hydrocarbon liquids such as mineral oils (eg paraffins or kerosene) benzene, xylene, toluene or cyclohexane.

Typical solid diluents or carriers are by-products inorganic salts such as sodium sulfate or chloride resulting from the preparation of the alkylenebisdithiocarbamates, clays, talc, kaolin, bentonite, diatomaceous earth, calcium carbonate, silica and alumina.

Typical surfactants are soaps, salts of long chain alkyl sulfates or sulfonates such as sodium lauryl sulfonate, alkylbenzenesulfonates such as sodium dodecylbenzenesulfonate, alkylphenoxypoly(ethyleneoxy)ethanols, quaternary ammonium salts such as lauryltrimethylammonium chloride and lignosulfonates such as sodium and/or calcium lignosulfonates.

Typical stabilizers are para-formaldehyde, urea, hexamethylenetetramine, o-tolyl biguanidine, diphenyl guanidine, diaminotoluene, 1,8-3,6-diendomethylene-1,3,6,8-tetraazacyclodecane, N,N'-dimethylol urea, N-methyl urea, N,N'-dimethylurea and 1,3,5-tris(cyanomethyl)-hexahydrotriazine.

Typical thickening agents are methyl cellulose, starch, polyvinyl alcohol, polyvinyl acetate and gum such as gum arabic.

By the term "agronomically acceptable carrier or diluent" as used above is meant a substance which can be utilized to dissolve, disperse, diffuse or otherwise dilute the active ingredient without impairing the effectiveness of the active ingredient and which does no permanent damage to such loci as soil, equipment and agronomic crops.

These fungicidal compositions may be in the form of ready-for-use dusts, aerosols, solutions, emulsions, suspensions; alternatively they may be in the form of concentrated solutions, wettable powders, emulsifiable concentrates, flowable emulsion concentrates, dust concentrates, pastes or flowable liquid suspensions each for dilution with, as the case may be, additional liquid (usually water) or finely divided solids to give diluted solutions, suspensions, emulsions or dusts which are then directly usable as pesticidal compositions. Further details on such formulations follow.

Dust Concentrates

Such concentrates usually contain from 10% to 95% by weight, more usually 60 - 95%, of one or more of the salts of the invention. They may be made by taking at least one purified and dried salt of the invention and milling, with the addition of a stabilizer, to give dust particles typically having an average particle size below about 4 microns. Drying may be achieved by the use of a vacuum drier and milling can be performed by any conventional dry milling device such as a ball mill or hammer mill or by a wet milling device such as a sand mill otherwise sometimes termed a pearl mill. A typical dust concentrate formulation is as follows:

| | % by weight |
|---|---|
| Compound 6, Table I | 93 |
| Hexamethylenetetramine | 3 |
| Precipated silica | 3 |

The average particle size of the above formulation is 2.0 - 3.5 microns, 95% by weight of the particles having a size from 1 - 10 microns.

Ready-For-Use Dusts

These formulations may be made as above described and usually have an active ingredient concentration from 1 to 20% by weight. A typical formulation is a dry blend of:

| | % by weight |
|---|---|
| Compound 5, Table I containing 5% by weight of hexamethylenetetramine | 5.5 |
| Kaolin | 80 |
| Talc | 14.5 |

The average particle size of the composition is from 2 - 5 microns.

Solutions

A typical concentrated solution is an aqueous solution containing 5 - 20% by weight of active ingredient and usually also contains a surfactant. Typical 5 - 20% solutions are:

| | % by weight | |
|---|---|---|
| Water | 94.7 | 79 |
| Compound 72, Table IV | 5 | 20 |
| Sodium laurylsulfate | 0.3 | 1.0 |

Ready-for-use solutions are made by diluting the above two solutions with water to give an active ingredient concentration of 1500 ppm.

Emulsifiable Concentrates

These usually contain 10 - 60% by weight of at least one water-insoluble of the invention in an organic solvent also containing an emulsifying agent. A typical formulation is:

| | % by weight |
|---|---|
| Xylene | 69 |
| Compound 54, Table IV containing 5% weight of hexamethylenetetramine | 25 |
| Octylphenoxypoly(ethyleneoxy)ethanol containing 20 ethyleneoxy groups | 6 |

Emulsion

The above emulsifiable concentrate is diluted with water to give an emulsion containing 1500 ppm of Compound 54.

Wettable Powders

These formulations usually contain a dispersing agent and about 40 - 90% by weight of active ingredient. Typical formulations are:

| | % by weight | |
|---|---|---|
| Compound 12, Table I | 90 | 40 |
| Hexamethylenetetramine | 4 | 2 |
| Calcium lignosulfonate | 5 | 6 |
| Sodium octyl sulfosuccinate | 1 | 0.4 |
| Clay | - | 51.6 |

The average particle size of the above formulations is from 2.0 to 3.5 microns with 90% by weight of the particles having a size from 1 to 10 microns.

Dilute Ready-For-Use Suspensions

The above wettable powder is formed into a paste and then dispersed in water to give a suspension containing 1500 ppm of Compound 12.

Water-Dispersible Paste

These usually contain water, a dispersant and 35 to 40% by weight of active ingredient. A typical formulation is:

| | % by weight |
|---|---|
| Water | 38 |
| Compound 12, Table I | 42 |
| Sodium lignosulfonate | 12 |
| Sodium nonylnaphthalenesulfonate | 1 |
| Sodium chloride | 5 |
| Hexamethylenetetramine | 2 |

The ingredients in the above formulation are wet milled in a sand mill until the average particle size is about 3 microns, with 95% by weight of the particles having a size below 15 microns. The paste can be dispersed with water to give a ready-for-use suspension containing 1500 ppm of Compound 12.

Water-Dispersible Granules

These contain a dispersing agent and, usually, from 50 - 85% by weight of active ingredient. A typical granular formulation is one made by moulding the paste composition just described into tablets 0.5 - 1 mm thick and 5 mm in diameter. The granules are then dried in an oven until the water content is below 3% by weight. The granules thus prepared are readily water-dispersible to give a suspension containing 1500 ppm of Compound 12.

Flowable Concentrated Liquid Suspensions

These are liquid, usually aqueous, suspensions containing, for example, from 30 - 40% by weight of active ingredient. A typical formulation is:

| | % by weight |
|---|---|
| Water | 47 |
| Compound 12, Table I | 35 |
| Propylene glycol | 10 |
| Calcium lignosulfonate | 3 |
| Sodium chloride | 3 |
| Xanthangum (long chain polysaccharide obtained by the fermentation of molasses) | 0.5 |
| Hexamethylenetetramine | 1.5 |

A slurry of the above ingredients is sand milled until its average particle size is between 1.5 and 2.5 microns, not less than 99% by weight of the particles being below 10 microns. The concentrated suspension thus obtained can be diluted with water to provide a dilute aqueous suspension containing 1500 ppm of Compound 12.

<u>Dry Mixes</u>

These are mixtures of water-soluble salts provided by the invention and metal salts which in aqueous solution undergo a metathesis reaction to form the preferred water-insoluble metal salts of the invention. A typical dry mix is one made by dry mixing in a blender (a) 100 grams of a mixture containing 93 g of Compound 72, Table IV, 4 g hexamethylenetetramine and 3 g sodium lignosulfonate and (b) an amount of zinc sulfate which is 10% by weight in excess of the stoichiometric amount required to form, in aqueous solution, Compound 6 of Table I. A similar dry mix is made by substituting an equivalent amount of manganous sulfate for the zinc sulfate.

The above dry mixes may be utilized by the end-user by adding them with stirring to a tank containing water thereby producing a dilute (eg 1500 ppm active ingredient) suspension of the zinc or manganese N-substituted ethylenebis-dithiocarbamate as the case may be.

Concentrated Mineral Oil Suspensions

These are suspensions in a mineral oil usually containing 30 - 40% by weight active ingredient. A typical formulation is:

| | % by weight |
|---|---|
| White oil | 57 |
| Compound 12, Table I | 35 |
| Octylphenoxypoly(ethyleneoxy)ethanol containing 5 ethyleneoxy groups | 8 |

The above oil suspension may be mixed with water to form a ready-for-use emulsion containing 1500 ppm active ingredient.

Fungicidal Mixtures

The above described 90% wettable powder formulation of Compound 12 is blended with an equal weight of the fungicide known under the common name benomyl. Another mixture is prepared by replacing the benomyl with an equal amount of the fungicide carbendazim.

Although not necessary for the characterization of the compounds listed in Table IV there are shown in Figures 64 - 121 of the attached drawing, infrared absorbtion spectra for Compounds 68 - 87 (Figures 64 - 83 respectively), 89 - 91 (Figures 84 - 86 respectively), 93 - 102 (Figures 87 - 96 respectively), 104 - 105 (Figures 97 and 98 respectively), 107 - 115 (Figures 99 - 107 respectively), 117 - 120 (Figures 108 - 111 respectively) and 122 - 131 (Figures 112 - 121 respectively). The infrared data were obtained using the KBr disc method.

Claims:

1. Salts of an alkylenebisdithiocarbamic acid of the formula:

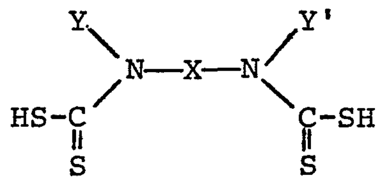

(I)

wherein X is alkylene group having 2 to 6 carbon atoms;

Y and Y', which may be the same or different, each represents

(1) hydrogen except that both Y and Y' cannot be hydrogen;

(2) $(C_6-C_{20})$alkyl;

(3) a group of the formula $-(\overset{R}{CH})_m-\overset{OH}{CH}CH_2OR_1$ in which R is hydrogen or $(C_1-C_6)$alkyl, $R_1$ is hydrogen, $(C_1-C_{18})$alkyl, $(C_2-C_8)$alkenyl, $(C_3-C_6)$alkynyl, phenyl or phenyl substituted with up to three of the same or different substituents selected from $(C_1-C_4)$alkyl and halo, and m is 0, 1 or 2;

(4) a group of the formula 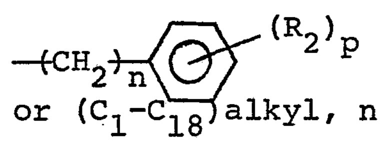 where $R_2$ is hydrogen, halo or $(C_1-C_{18})$alkyl, n is 1 or 2, and p is 0, 1, 2 or 3;

(5) a group of the formula $-(\overset{R}{CH})_q-\overset{R_3}{CH}\cdot COOR_4$ where R is as above defined, $R_3$ is hydrogen, hydroxy or $(C_1-C_6)$alkyl and $R_4$ is $(C_1-C_{18})$alkyl, $(C_1-C_6)$-alkylamino$(C_1-C_6)$alkyl, di$(C_1-C_6)$alkylamino$(C_1-C_6)$-alkyl, $(C_2-C_8)$alkenyl, $(C_3-C_6)$alkynyl, hydroxy-$(C_1-C_6)$alkyl or a salt-forming group or atom and q is 0 or 1;

(6) a group of the formula $-(\overset{R}{CH})_q-\overset{R_3}{CH}-C\equiv N$ where R, $R_3$ and q are as above defined;

(7) a group of the formula $-(CHR)_q-CHR_3CONH_2$ where R, $R_3$ and q are as above defined;

(8) a salt of a thio acid group of the formula $-(CHR)_m-CHR_3-O-\underset{\underset{S}{\|}}{C}-S-H$ where R, $R_3$ and m are as above defined;

(9) a group of the formula $-CHR-CHR_2SH-$, or a metal salt thereof, where R and $R_2$ are as above defined, or a $-(CH_2)_2-NH_2$ or $-(CH_2)_2-NH-(CH_2)_2-NH_2$ group with the proviso that only one of Y and Y' can be such an amino group, the other being a different organic substituent;

(10) a group of the formula $-(CHR)_m-CHOH-$ 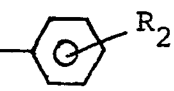 where R, $R_2$ and m are as above defined; or

(11) a group of the formula $-(CHR)_m-CH(OH)CCl_3$ where R and m are as above defined.

2. A compound as claimed in Claim 1, wherein X is $(C_2-C_6)$alkylene, preferably ethylene or 1,2-propylene,

Y is hydrogen,

Y' represents

(1) $(C_8-C_{18})$alkyl;

(2) $-(\overset{R}{C}H)_m-\overset{OH}{C}HCH_2OR_1$ in which R is hydrogen or $(C_1-C_3)$alkyl, $R_1$ is hydrogen, $(C_1-C_9)$alkyl, $(C_3-C_6)$alkenyl, phenyl or phenyl substituted with up to three of the same or different substituents selected from methyl and chloro;

(3) $-(CH_2)_n-$ 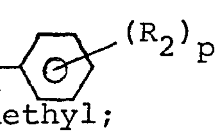 where $R_2$ is hydrogen, chloro or methyl;

(4) 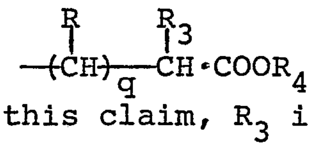 where R is as above defined in this claim, $R_3$ is hydrogen, hydroxy or $(C_1-C_3)$-alkyl and $R_4$ is $(C_1-C_{12})$alkyl, di$(C_1-C_3)$alkylamino-$(C_1-C_3)$alkyl, $(C_3-C_6)$alkenyl, hydroxy$(C_1-C_3)$alkyl or a salt-forming group or atom;

(5) 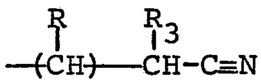 where R and $R_3$ are as above defined in this claim;

(6) a $(C_1-C_8)$mercaptoalkyl group;

(7) a salt of a thio acid group 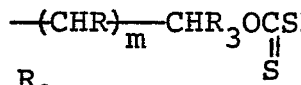 or

(8) the group 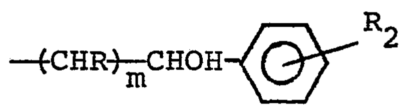

3. A compound as claimed in Claim 1 or 2 which is a salt of a metal having a valency greater than 1.

4. A compound as claimed in Claim 3 which is a salt of $Zn^{++}$, $Mn^{++}$, $Cu^{++}$, $Fe^{+++}$, $Ni^{++}$, $Sn^{++}$, $Co^{+++}$, $Ca^{++}$ or $Mg^{++}$.

5. Salts of the formula:

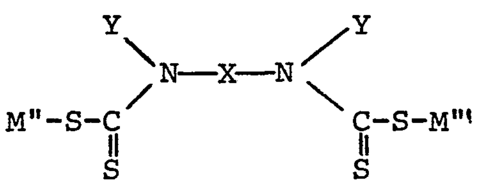

wherein X, Y and Y' are defined in Claim 1 or 2 and M" and M"' represent an alkali metal, ammonium, mono-or di-$(C_1-C_4)$alkyl-ammonium group.

6. A salt as claimed in any one of Claims 1 - 4, wherein Y is hydrogen and Y' is $-CH_2CH(OH)CH_2OR_1$ where $R_1$ is hydrogen, $CH_3$, $C_2H_5$, $C_3H_7$, $C_9H_{19}$, propenyl, phenyl or tolyl.

7. A salt as claimed in any one of Claims 1 - 4, wherein Y is hydrogen and Y' is 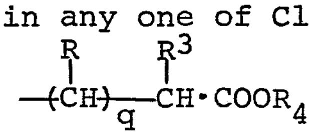 where R is hydrogen

or methyl, $R^3$ is hydrogen, methyl or hydroxy and $R^4$ is $CH_3$, $C_2H_5$, $C_3H_7$, $C_4H_9$, $C_{12}H_{25}$, dimethylaminoethyl, hydroxyethyl or propenyl.

8. A salt as claimed in any one of Claims 1 - 4 wherein Y is hydrogen and Y' is $C_2H_4SH$, $C_3H_6SH$, $C_2H_4CN$, $C_8H_{17}$, $C_{10}H_{21}$, $C_{12}H_{25}$, $C_{14}H_{29}$, $C_{16}H_{33}$, $C_{18}H_{37}$ or benzyl in which the phenyl group is substituted with chloro, $C_{12}H_{25}$ or up to three methyl groups.

9. A salt as claimed in any one of Claims 1 - 4, wherein Y is hydrogen and Y' is phenylhydroxyethyl or a $Mn^{++}$, $Zn^{++}$, $Fe^{+++}$ salt of a thio acid group of the formula $-CH_2CHR_3O-\underset{\underset{S}{\|}}{C}-SH$ where $R_3$ is hydrogen or methyl.

10. A fungicidal composition characterized as containing, as the or an active ingredient, 1 - 99% by weight of at least one salt as claimed in any one of Claims 1 - 9.

11. A method of combating fungal attack on plants by means of a chemical fungicide, wherein the fungicide employed comprises at least one salt as claimed in any one of Claims 1 - 9.

12. A process for the preparation of a salt as claimed in any of Claims 1 - 9 wherein an appropriate acid of Formula I as defined in Claim 1 is subjected in solution to a metathesis reaction with an appropriate salt or base or to an addition reaction with ammonia or a primary, secondary or tertiary amine (including heterocyclic amines).

1/121

0037861

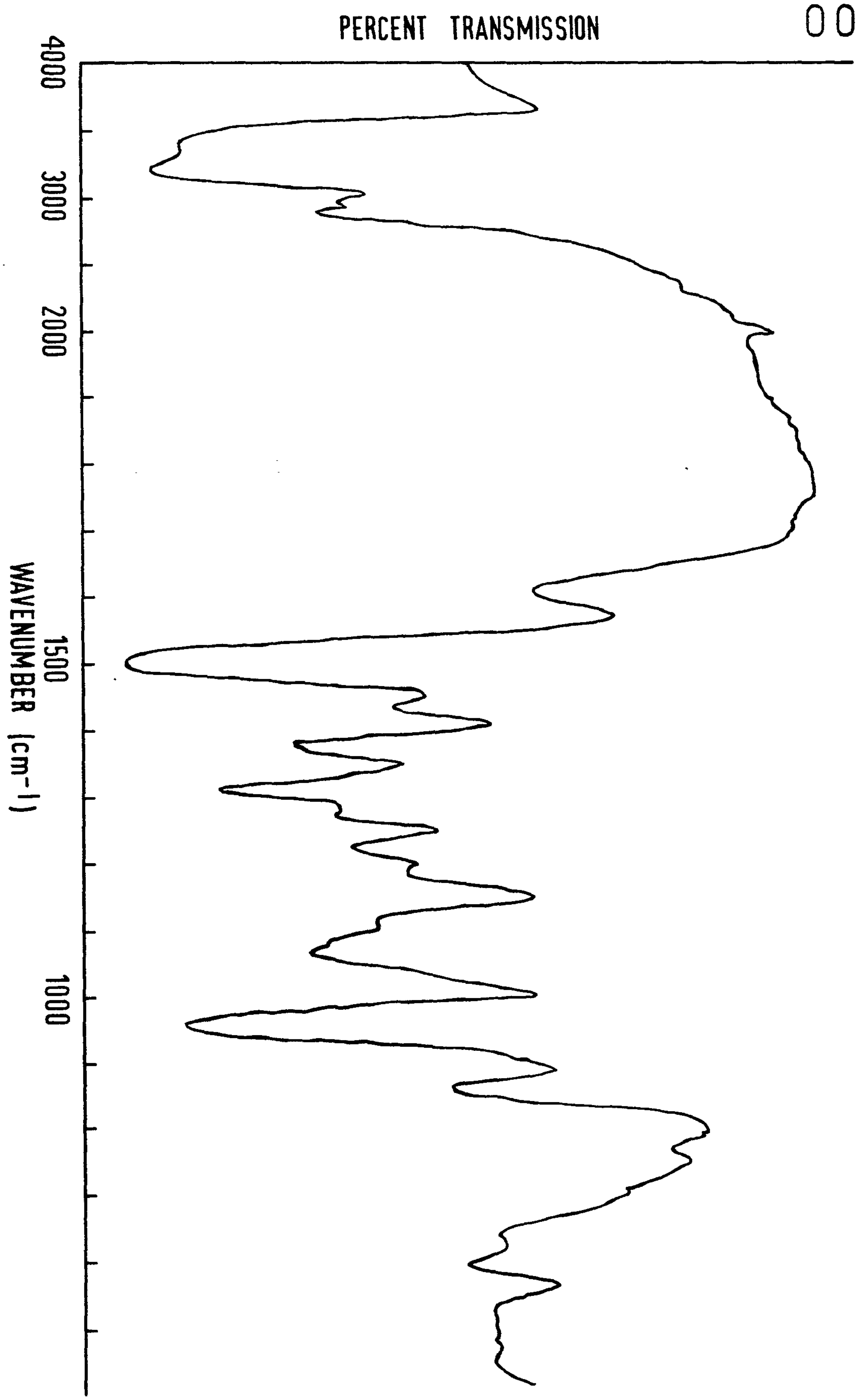


FIG.1.

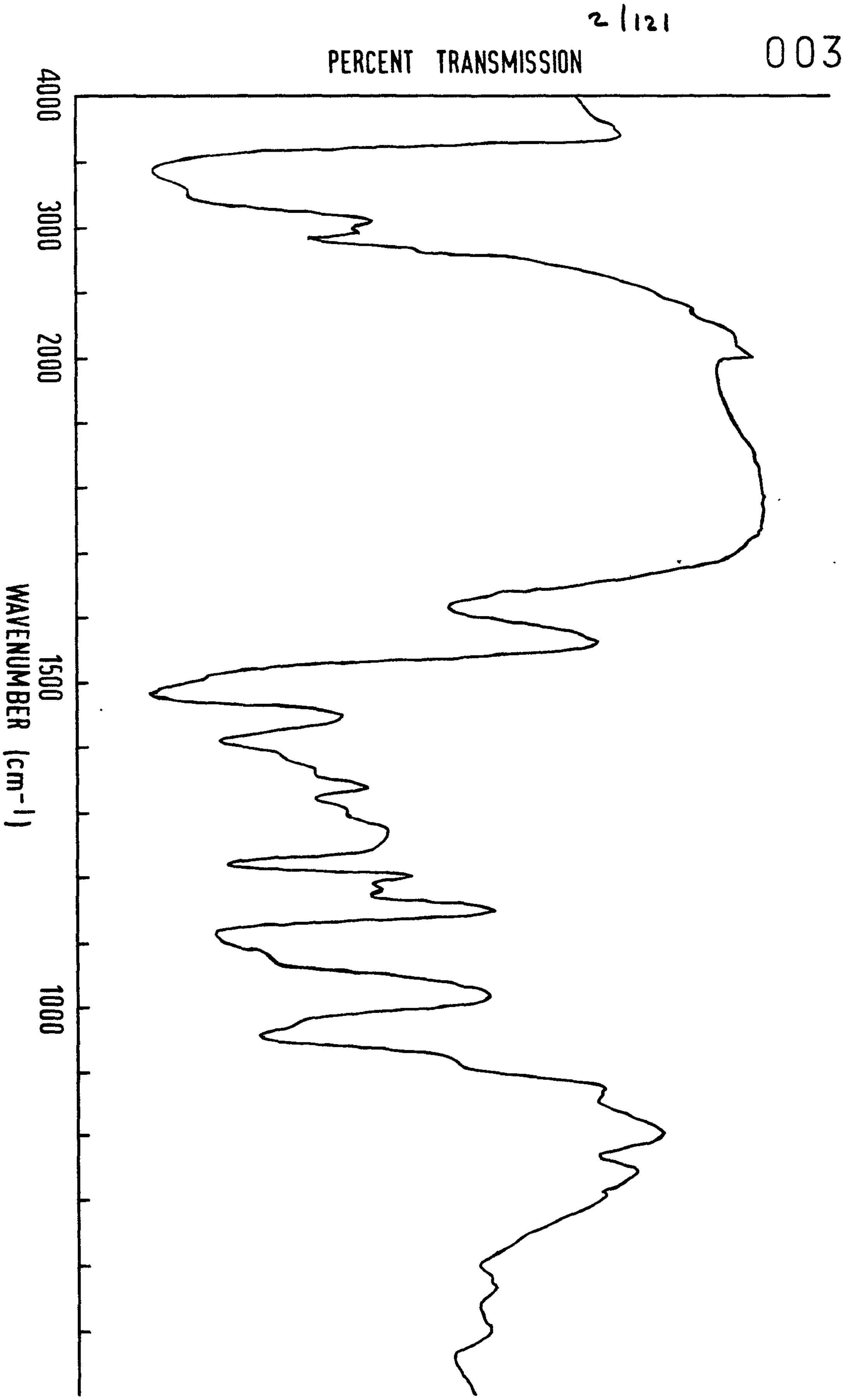
PERCENT TRANSMISSION
4000
3000
2000
1500
1000
WAVENUMBER (cm$^{-1}$)

FIG.2.

FIG.3.

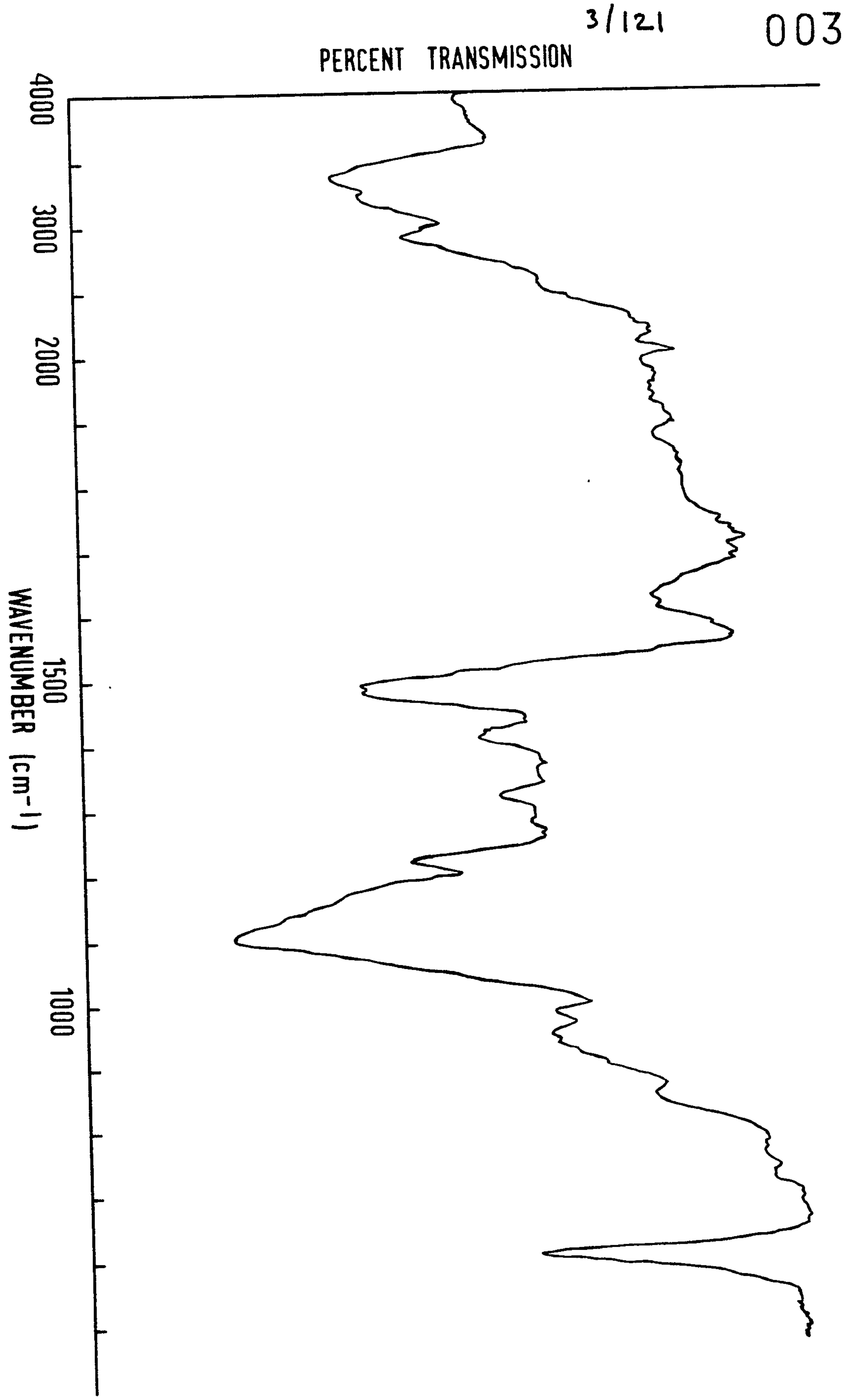
PERCENT TRANSMISSION
4000
3000
2000
1500
1000
WAVENUMBER (cm-1)

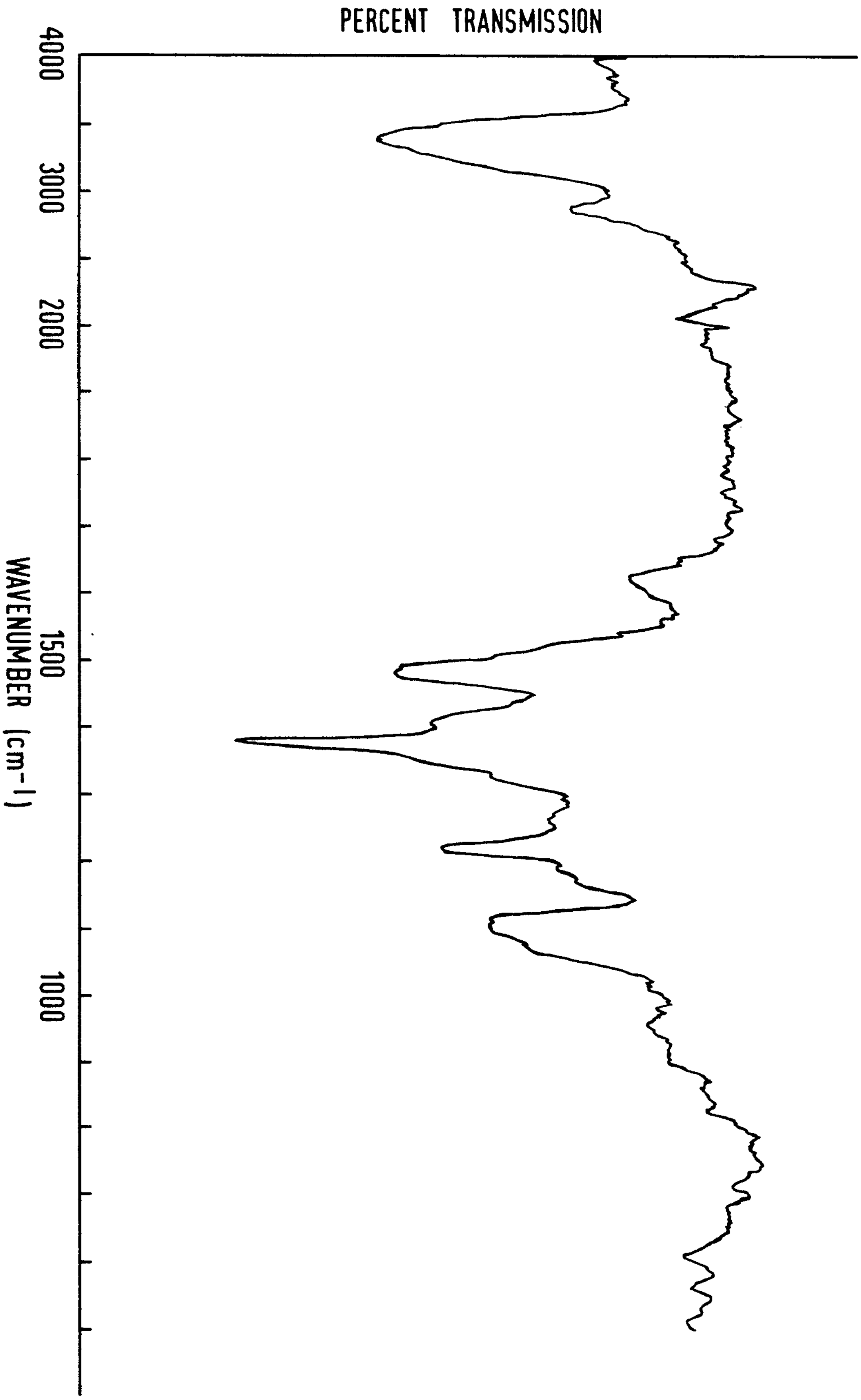
PERCENT TRANSMISSION
4000
3000
2000
1500
1000
WAVENUMBER (cm-1)

FIG.4.

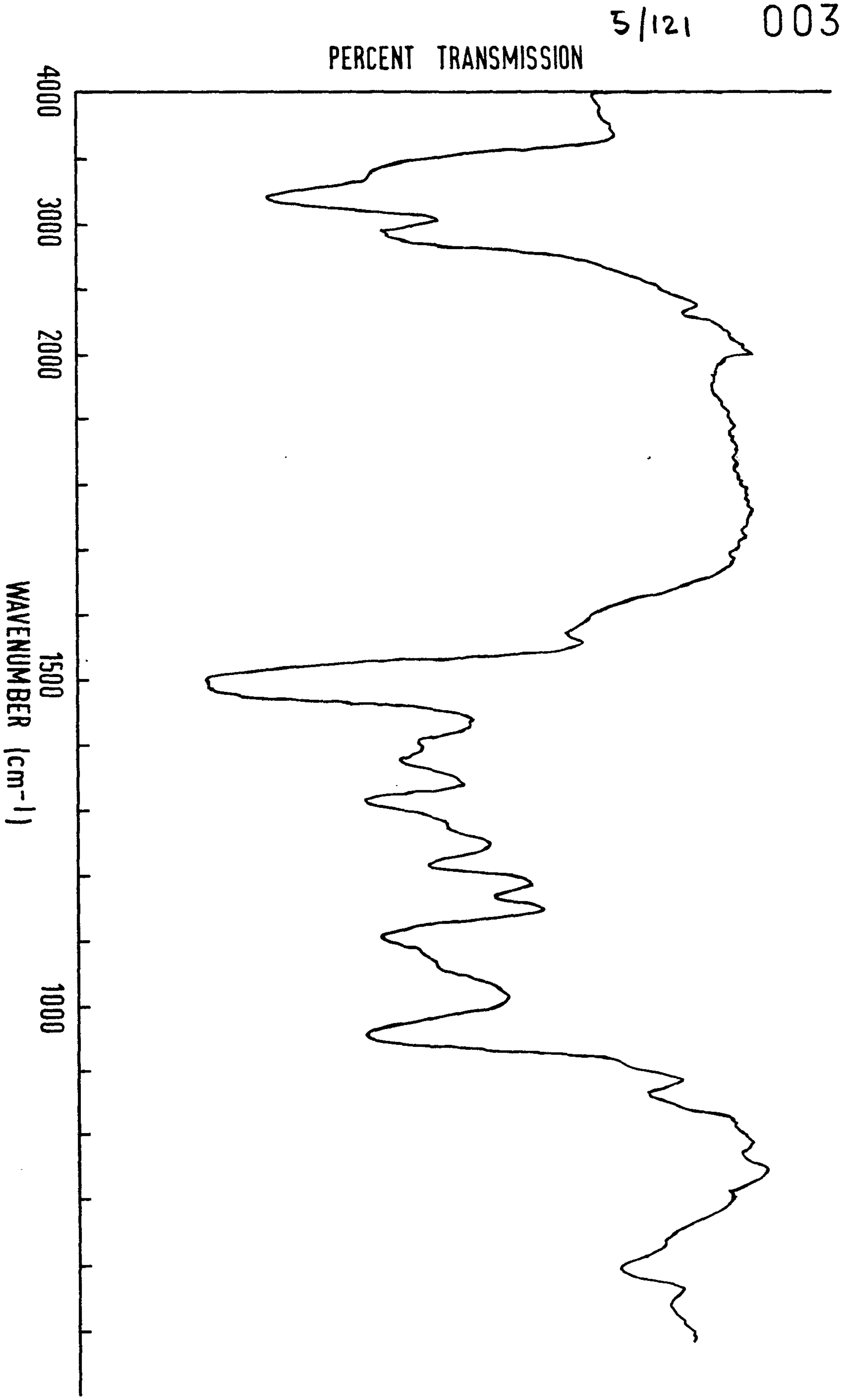
PERCENT TRANSMISSION
4000
3000
2000
1500
1000
WAVENUMBER (cm-1)

FIG.5.

6/121

0037861

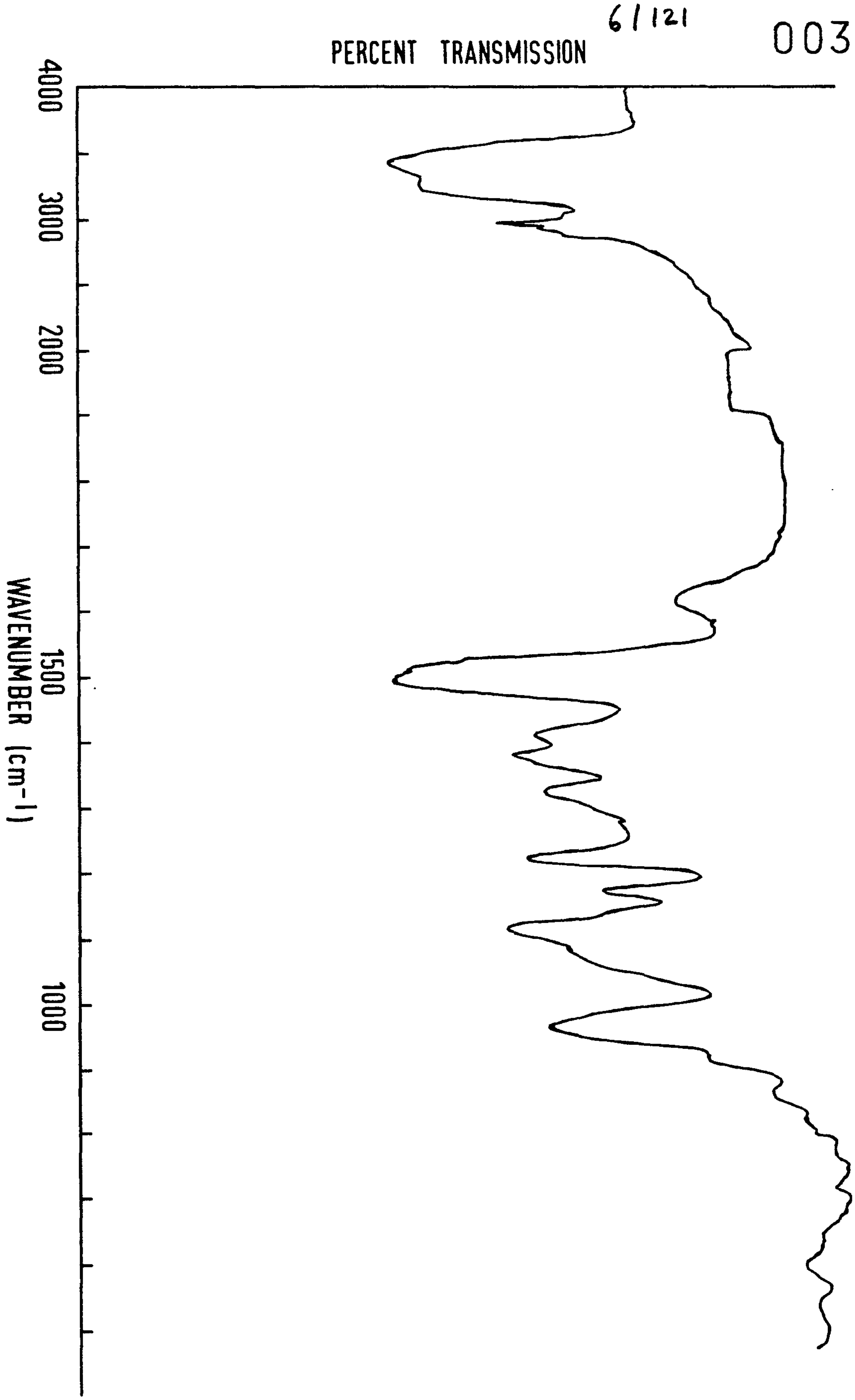


FIG.6.

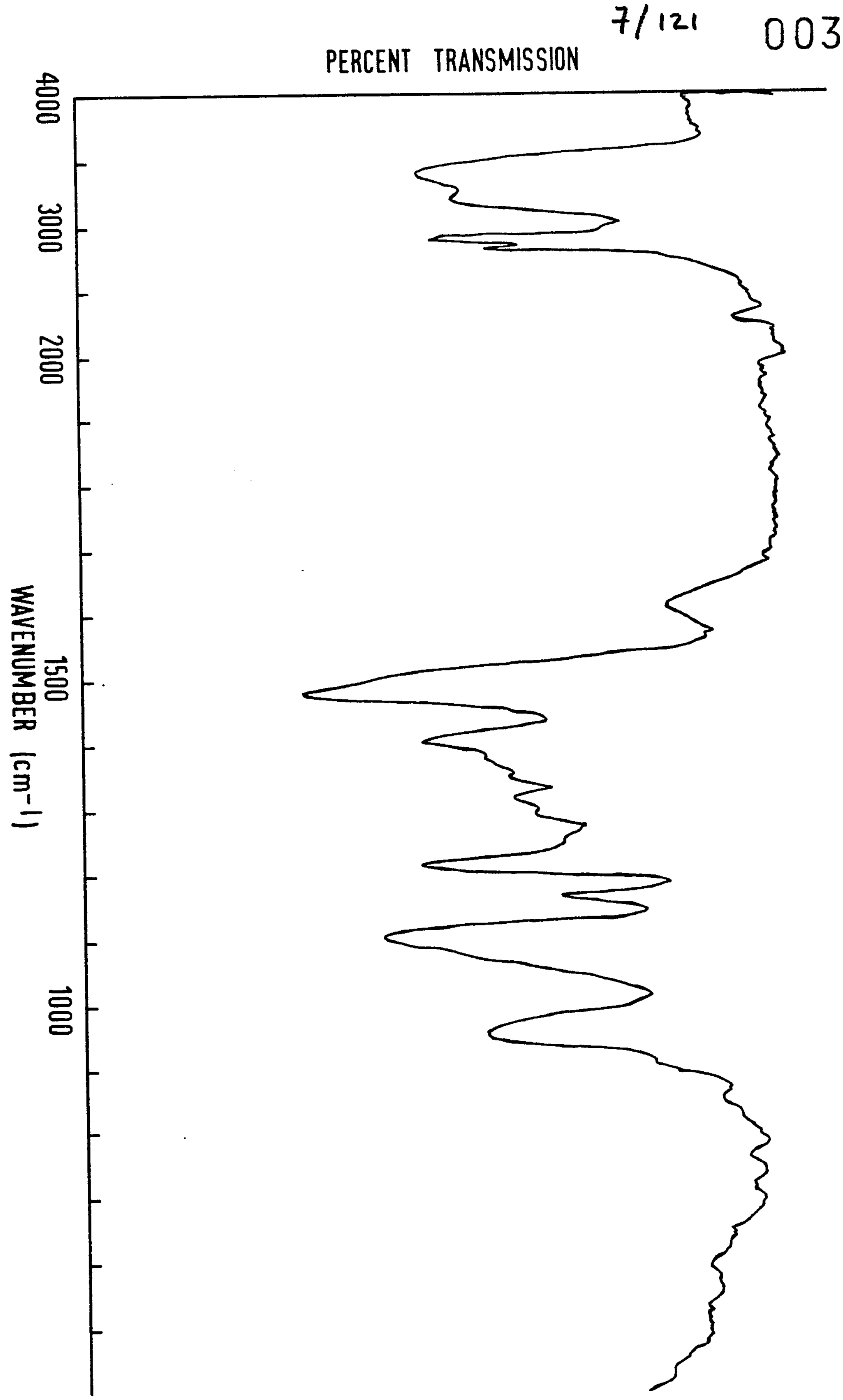
PERCENT TRANSMISSION
4000
3000
2000
1500
1000
WAVENUMBER (cm⁻¹)

FIG.7.

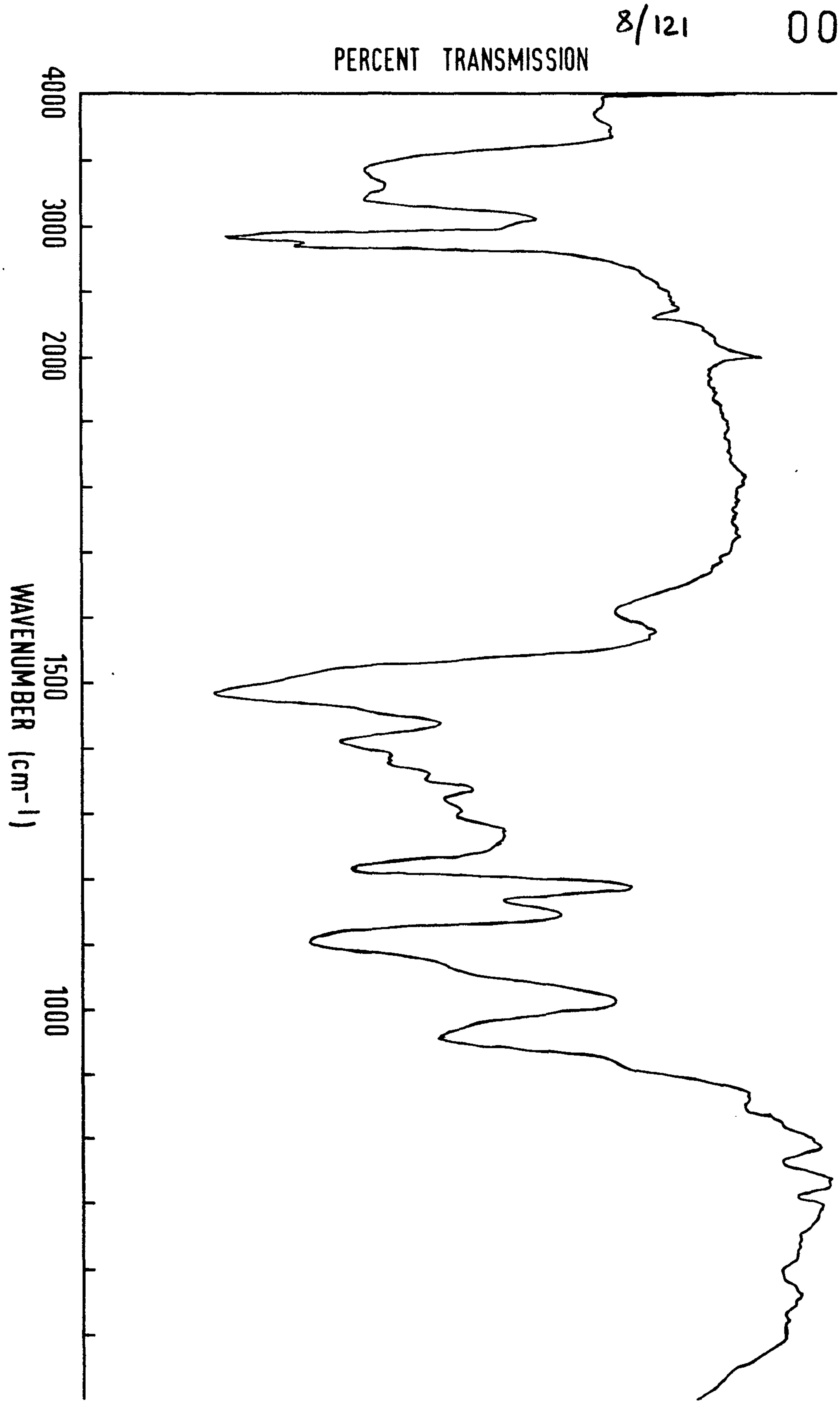
PERCENT TRANSMISSION
4000
3000
2000
1500
1000
WAVENUMBER (cm-1)

FIG.8.

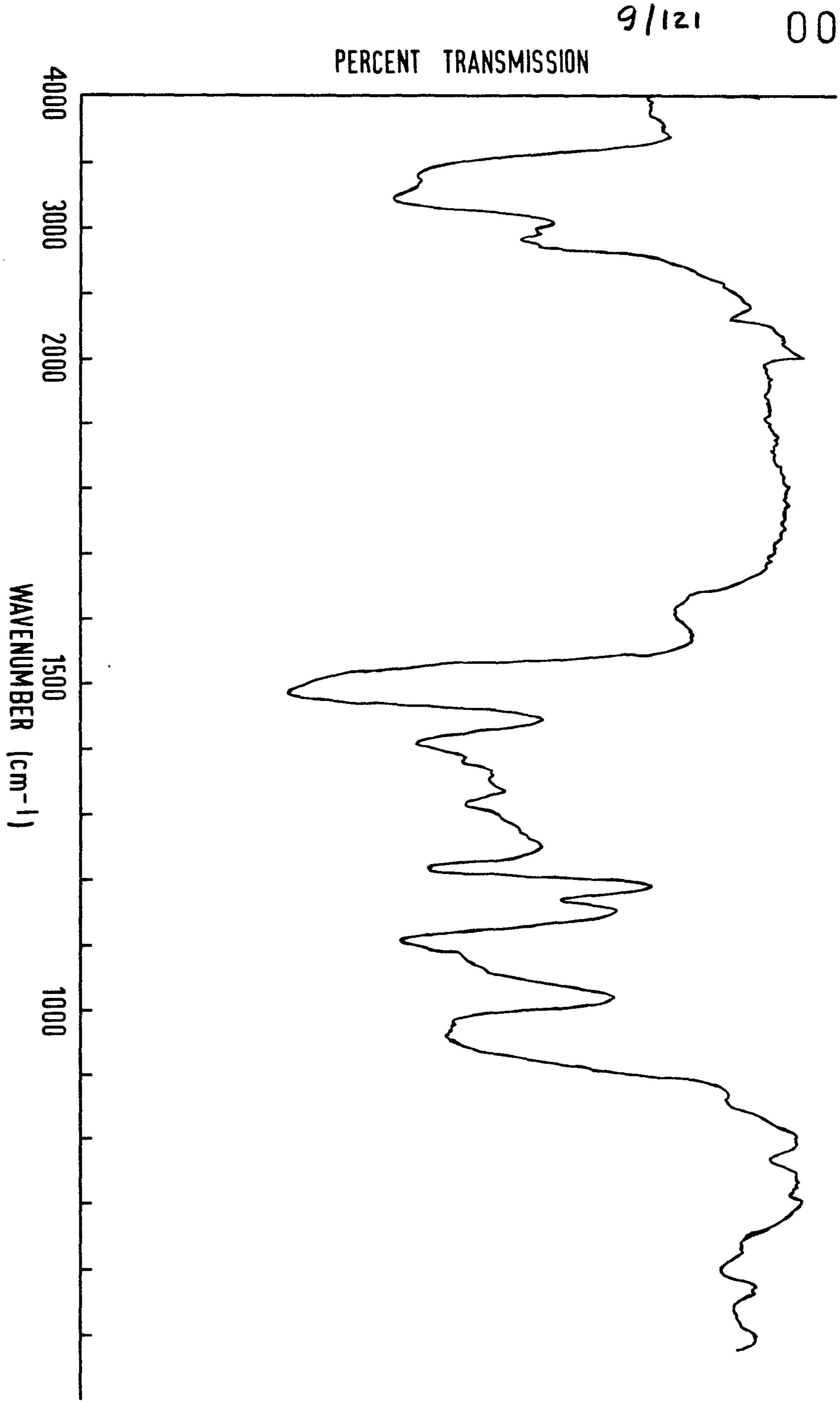
PERCENT TRANSMISSION
4000
3000
2000
1500
1000
WAVENUMBER (cm$^{-1}$)

FIG.9.

0037861

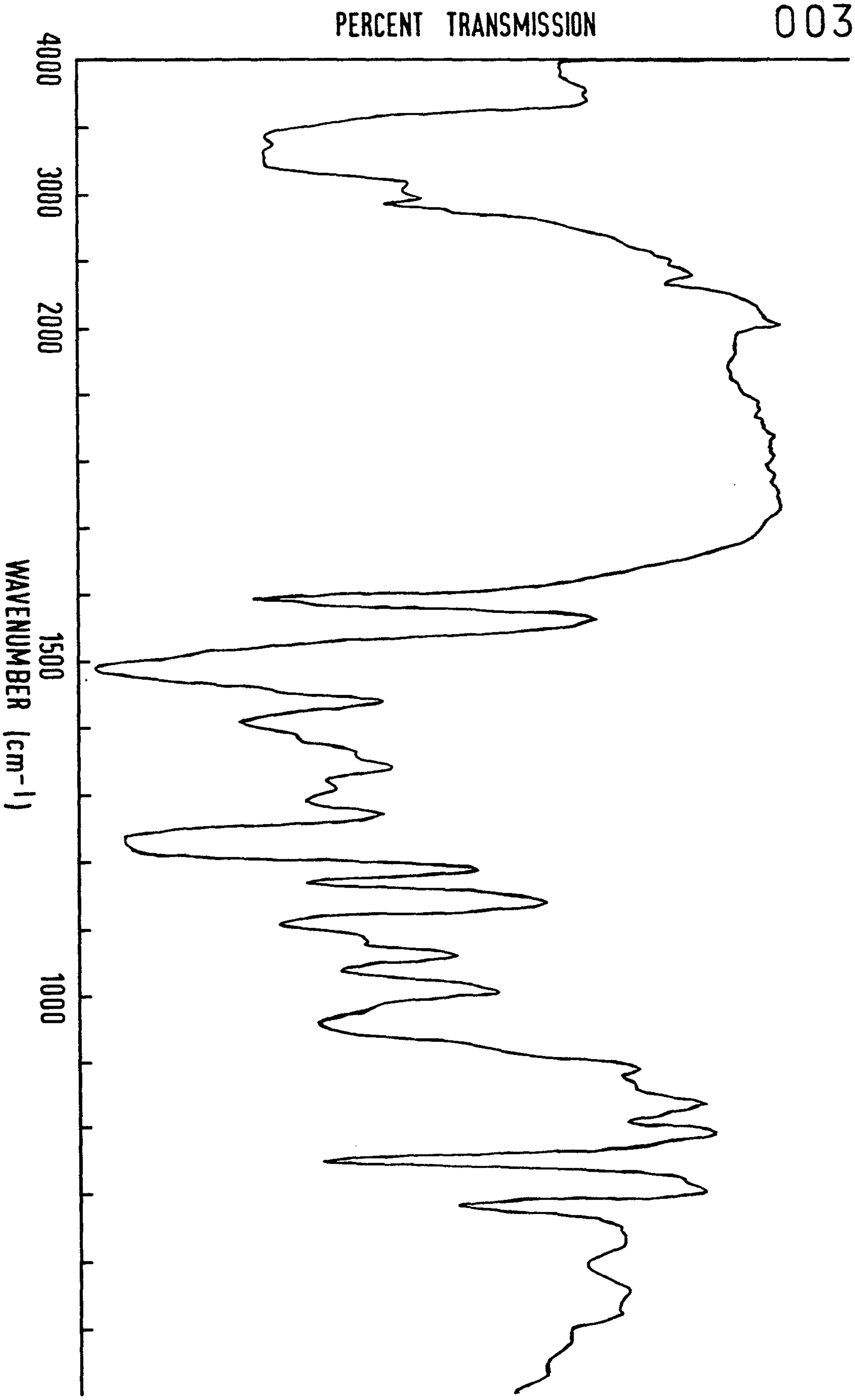


FIG.10.

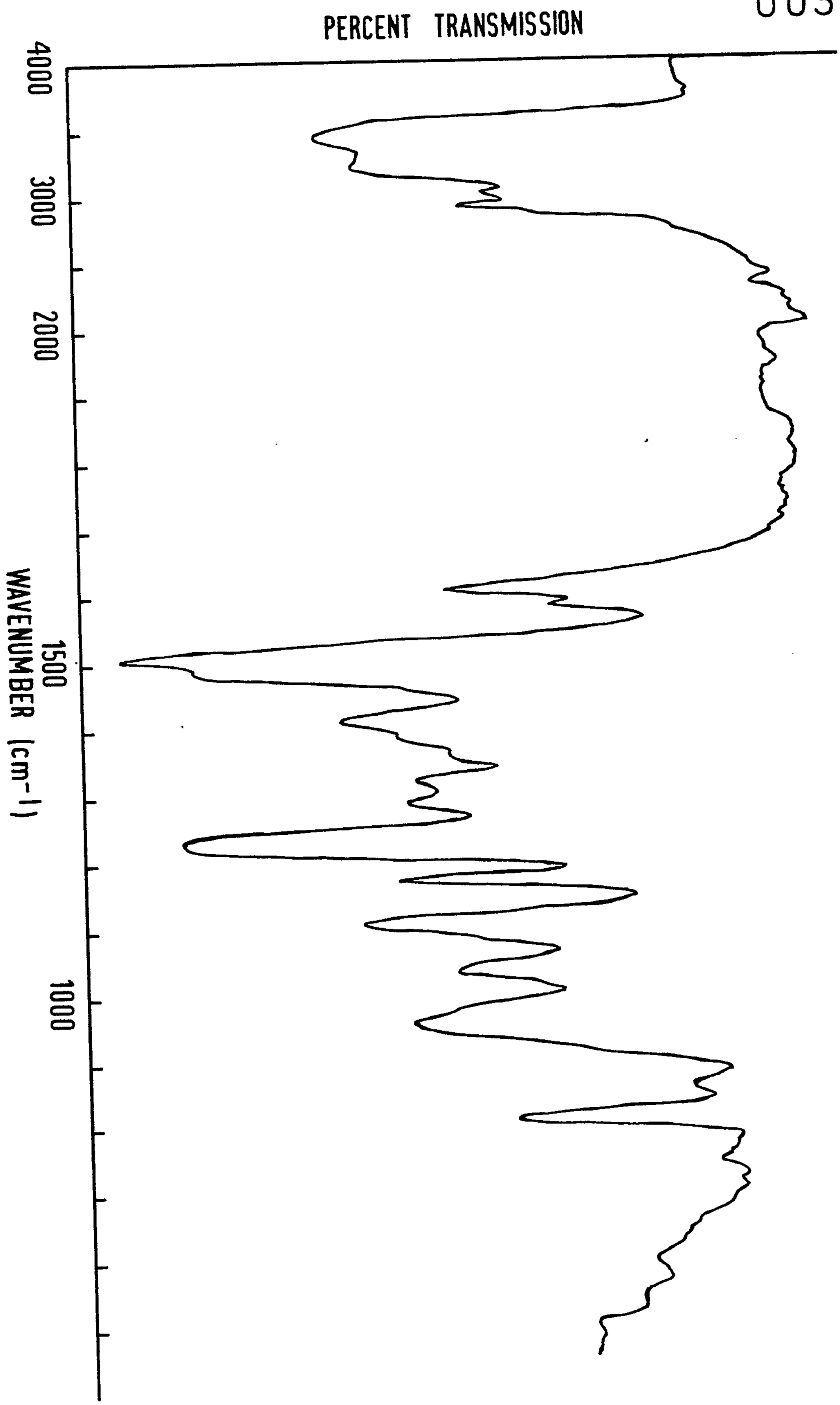
PERCENT TRANSMISSION
4000
3000
2000
1500
1000
WAVENUMBER (cm-1)

FIG.11.

12/121

0037861

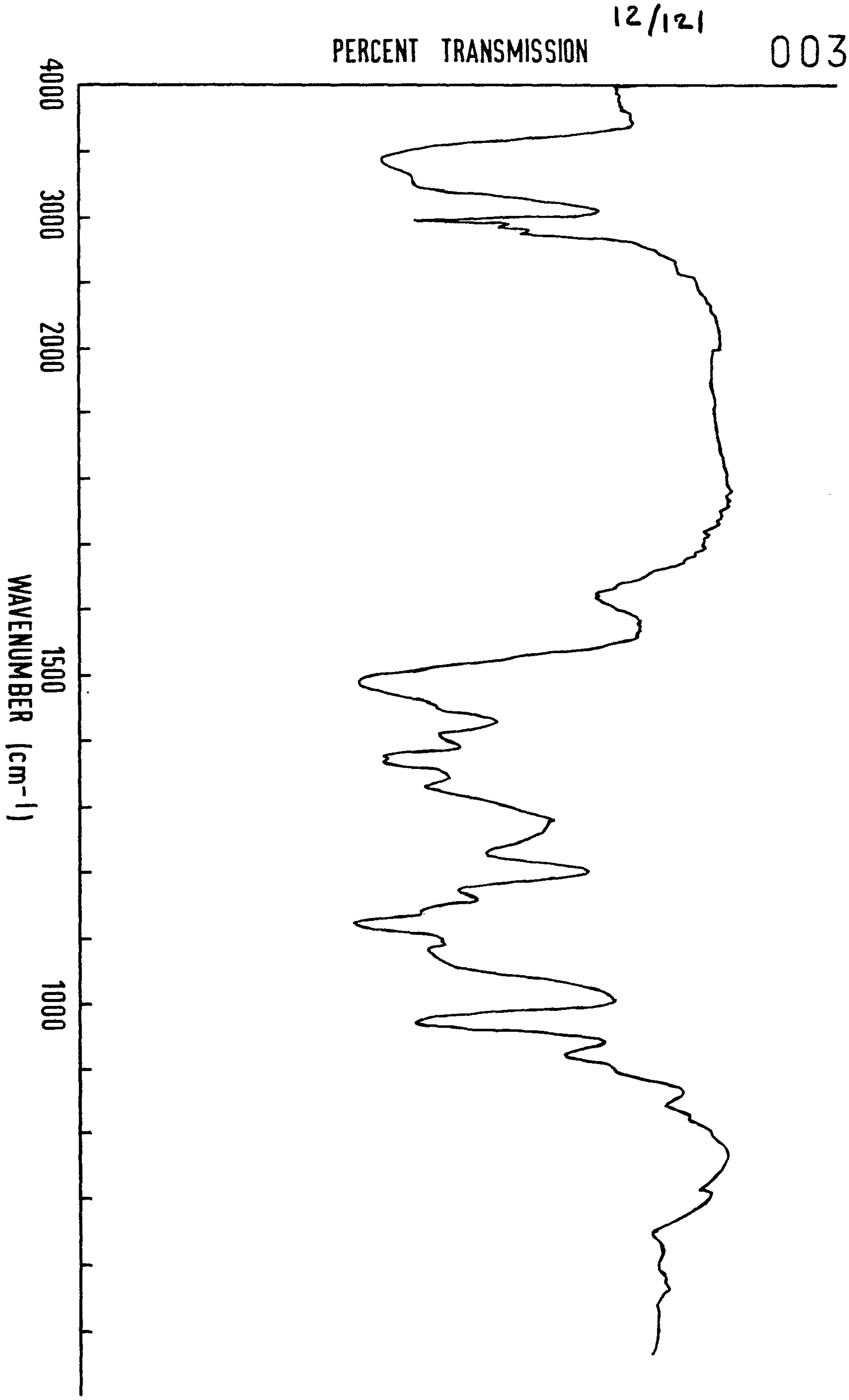


FIG.12.

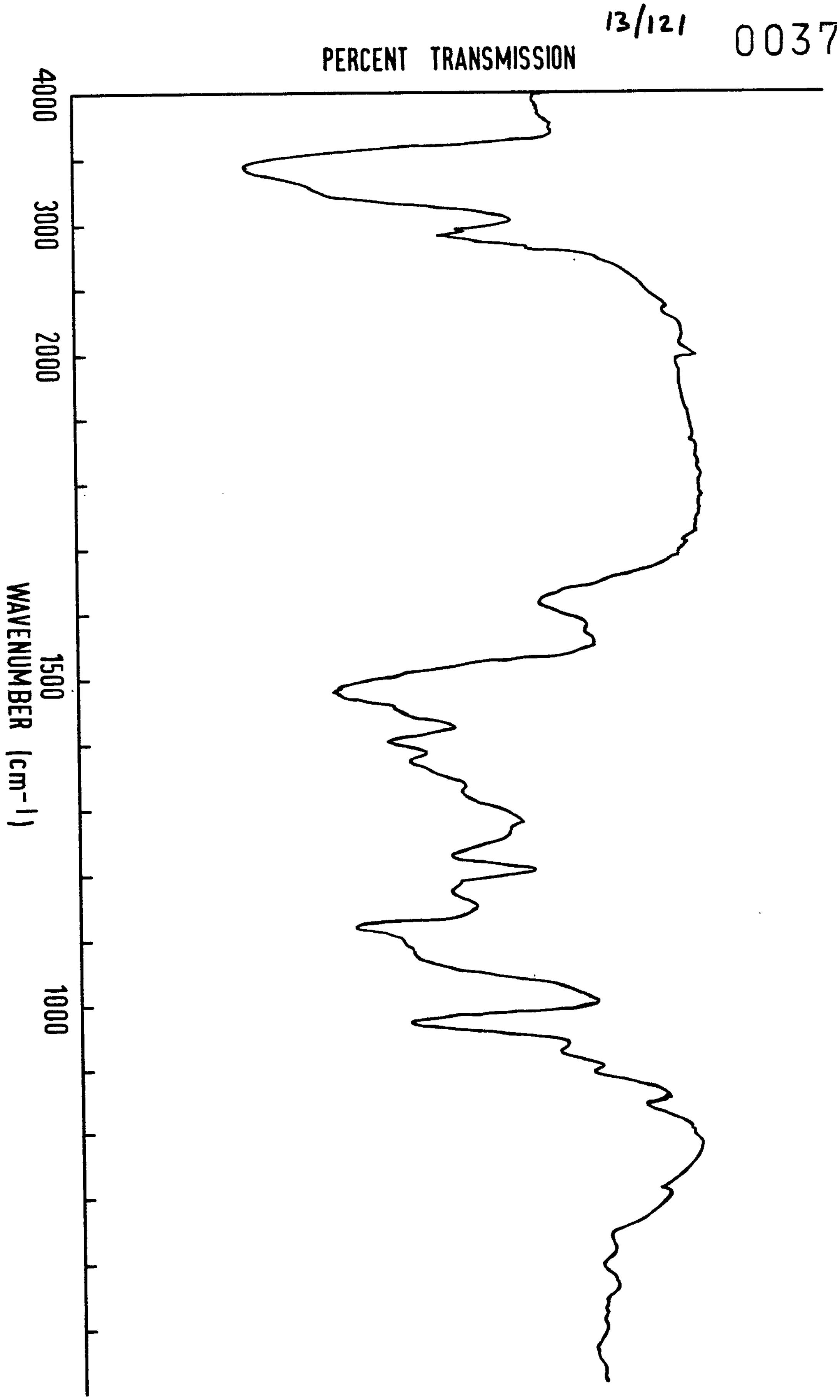
PERCENT TRANSMISSION
4000
3000
2000
1500
1000
WAVENUMBER (cm-1)

FIG. 13.

14/121

0037861

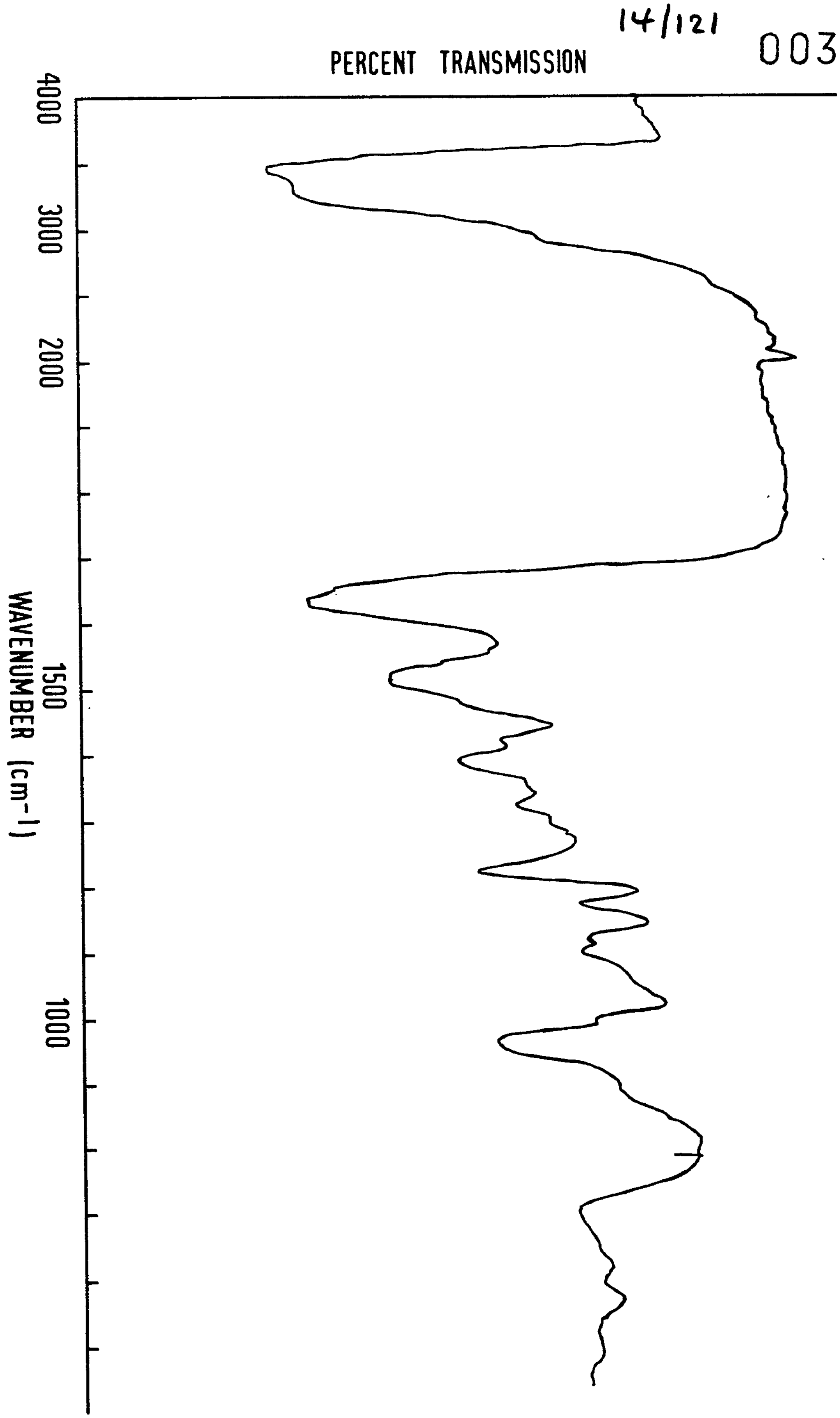


FIG.14

15/121

0037861

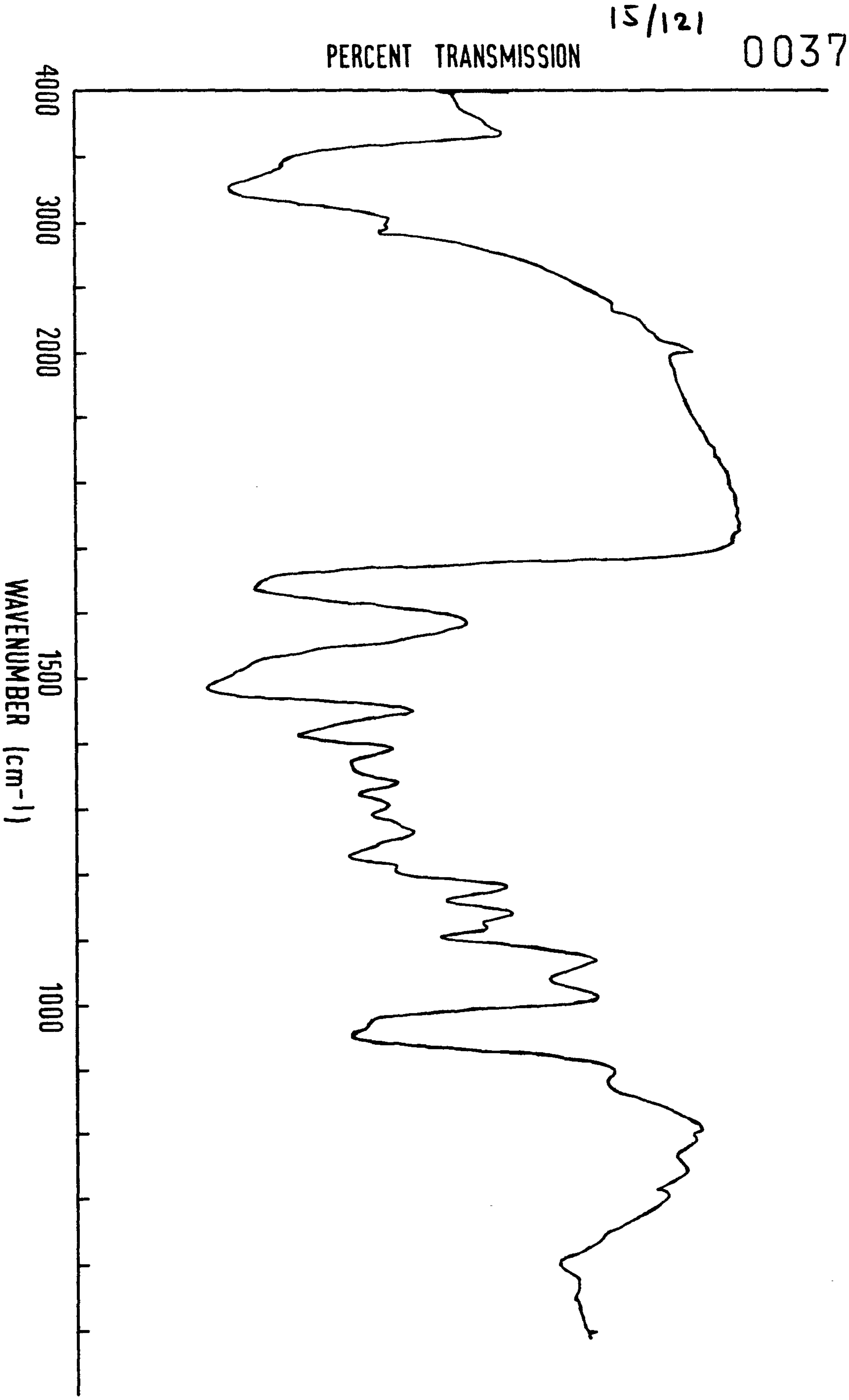


FIG.15.

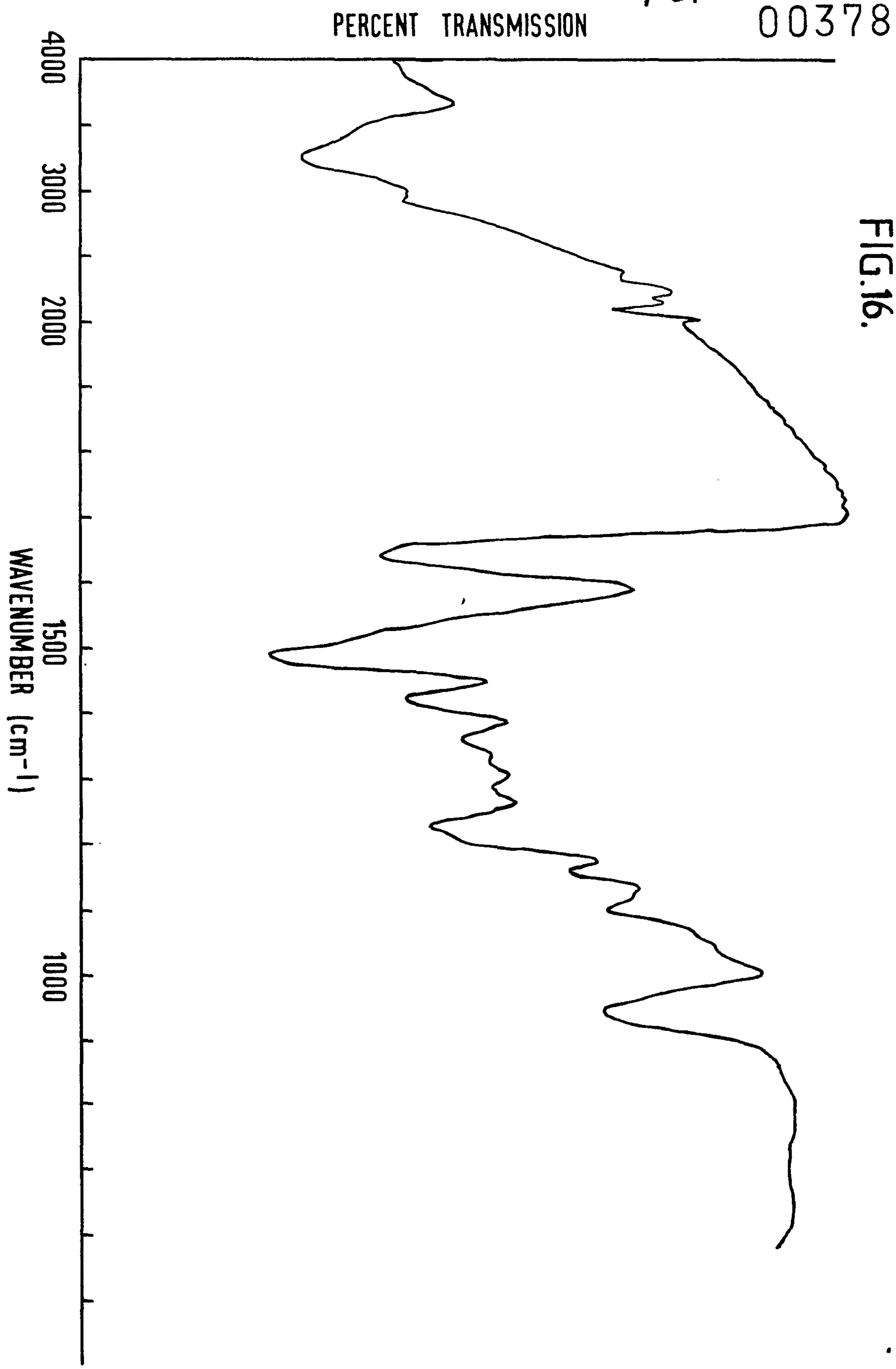
PERCENT TRANSMISSION
4000
3000
2000
1500
1000
WAVENUMBER (cm-1)

FIG.16.

17/121

0037861

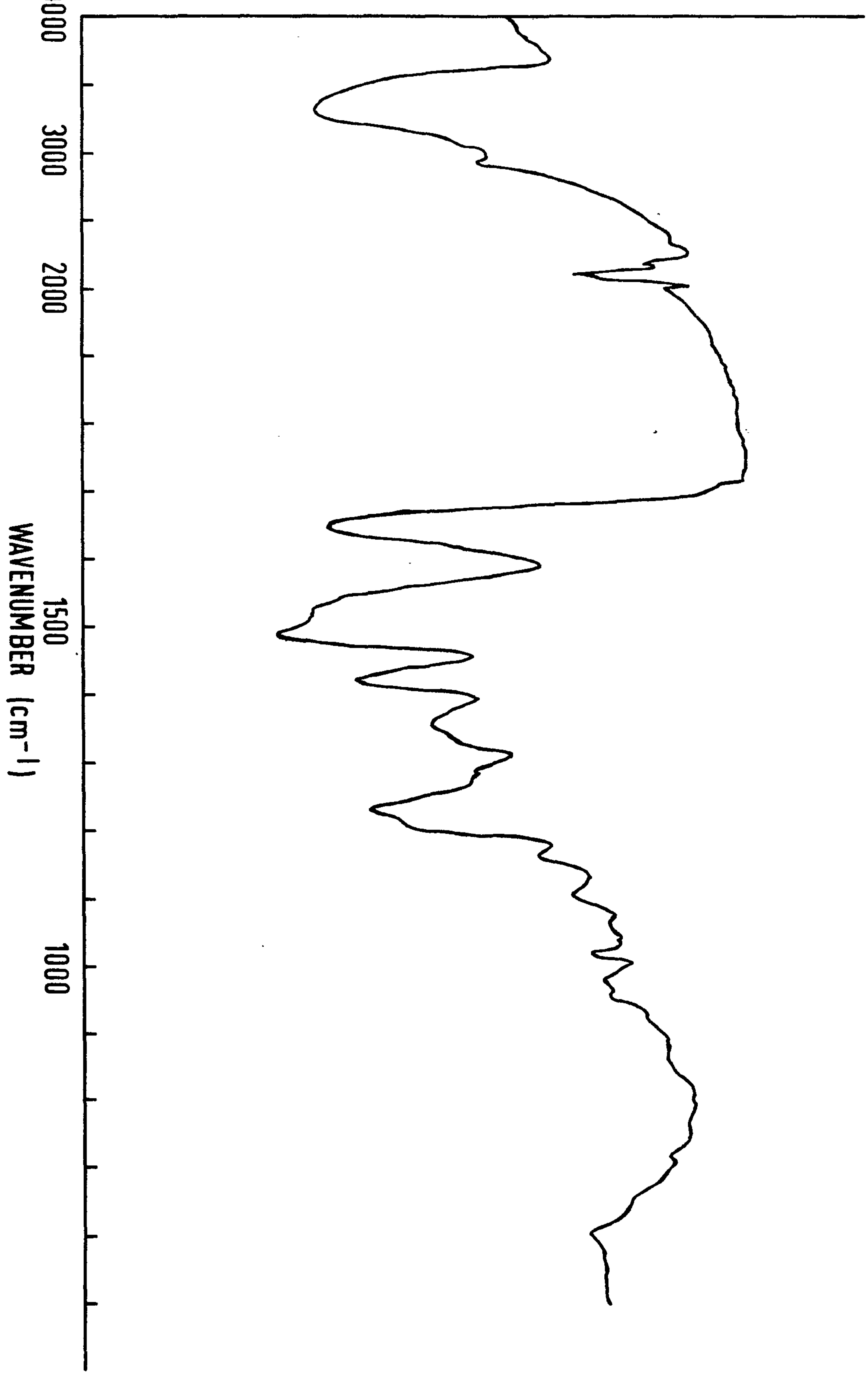


FIG.17.

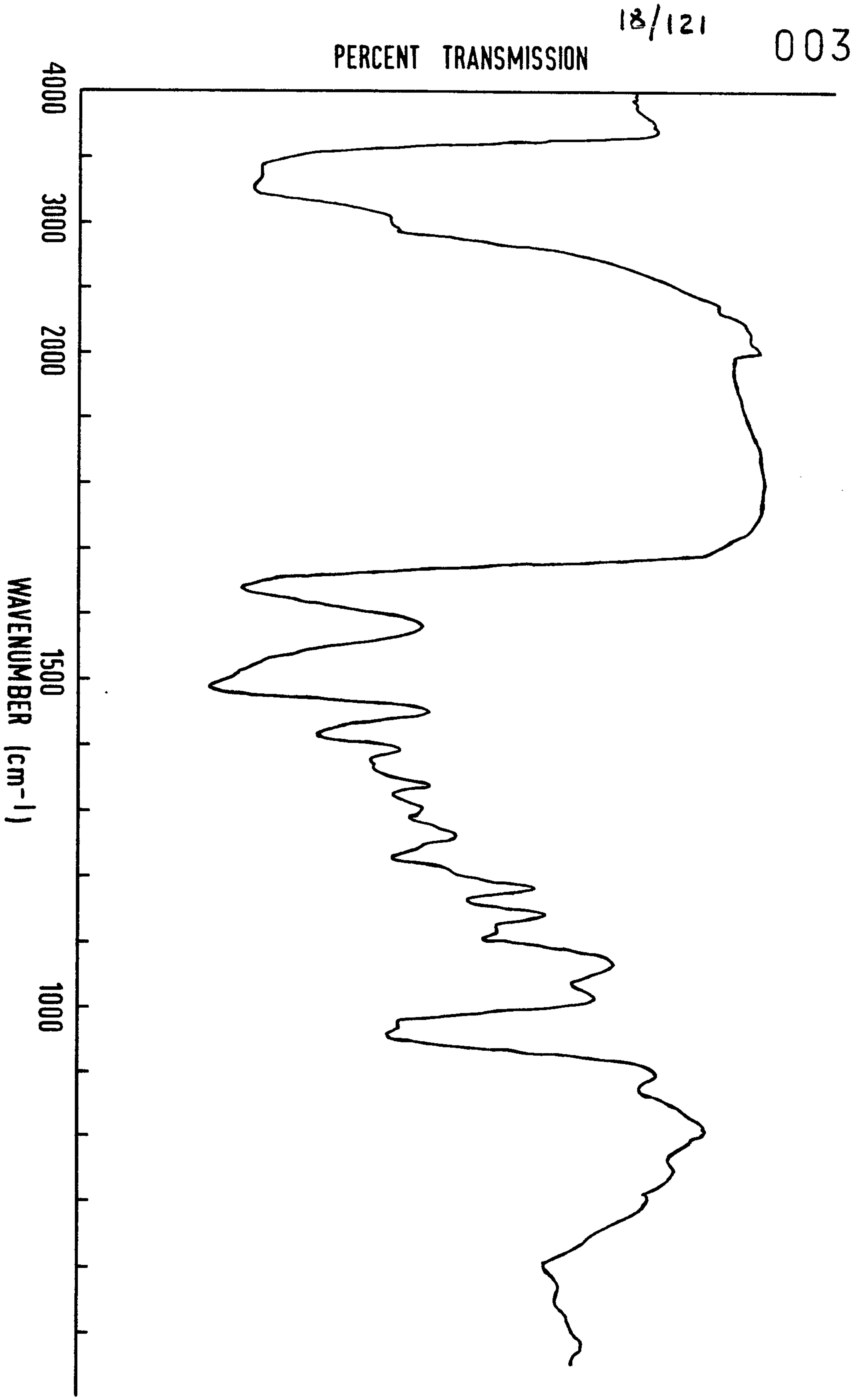
PERCENT TRANSMISSION
4000
3000
2000
1500
1000
WAVENUMBER (cm-1)

FIG.18.

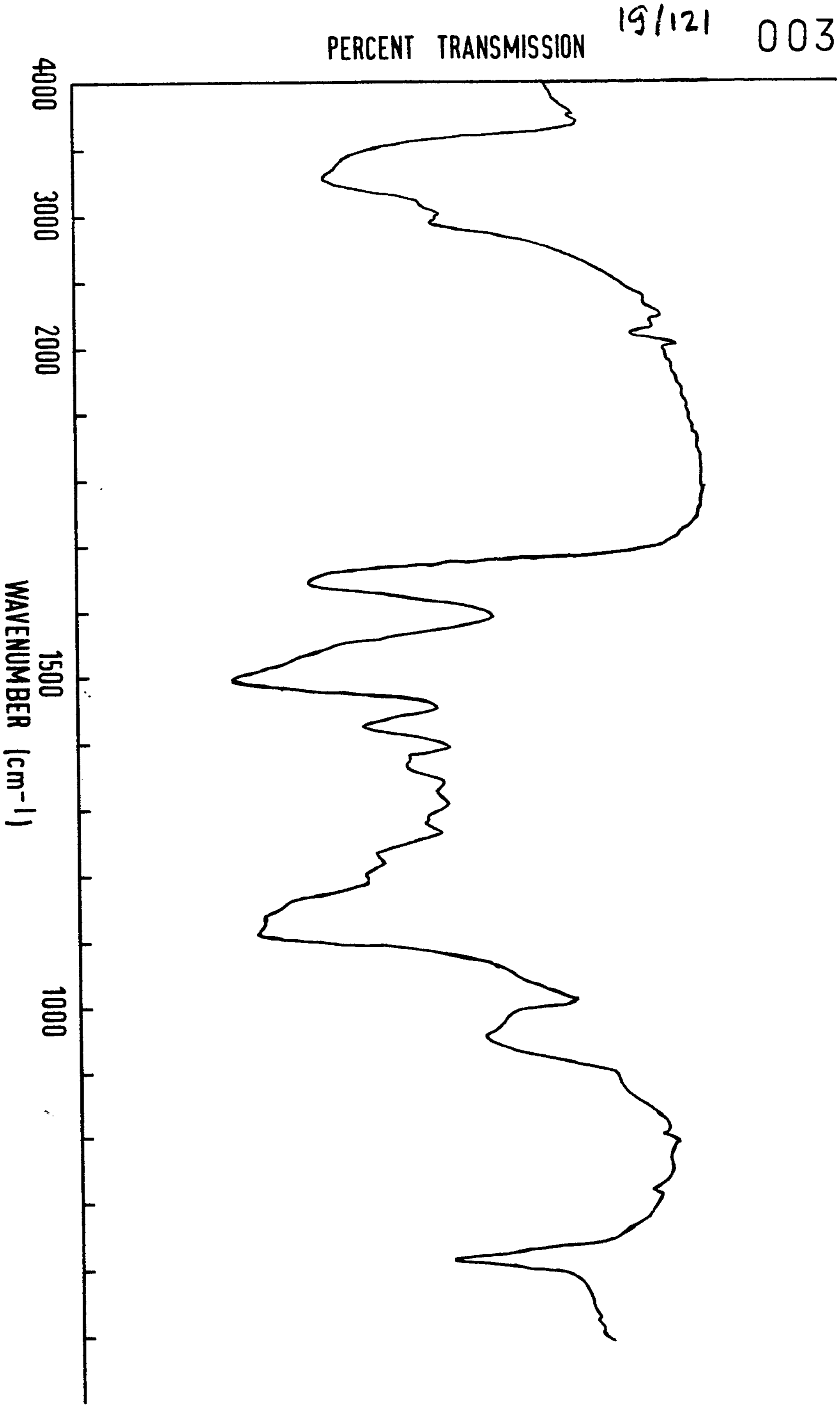
PERCENT TRANSMISSION
4000
3000
2000
1500
1000
WAVENUMBER (cm-1)

FIG.19.

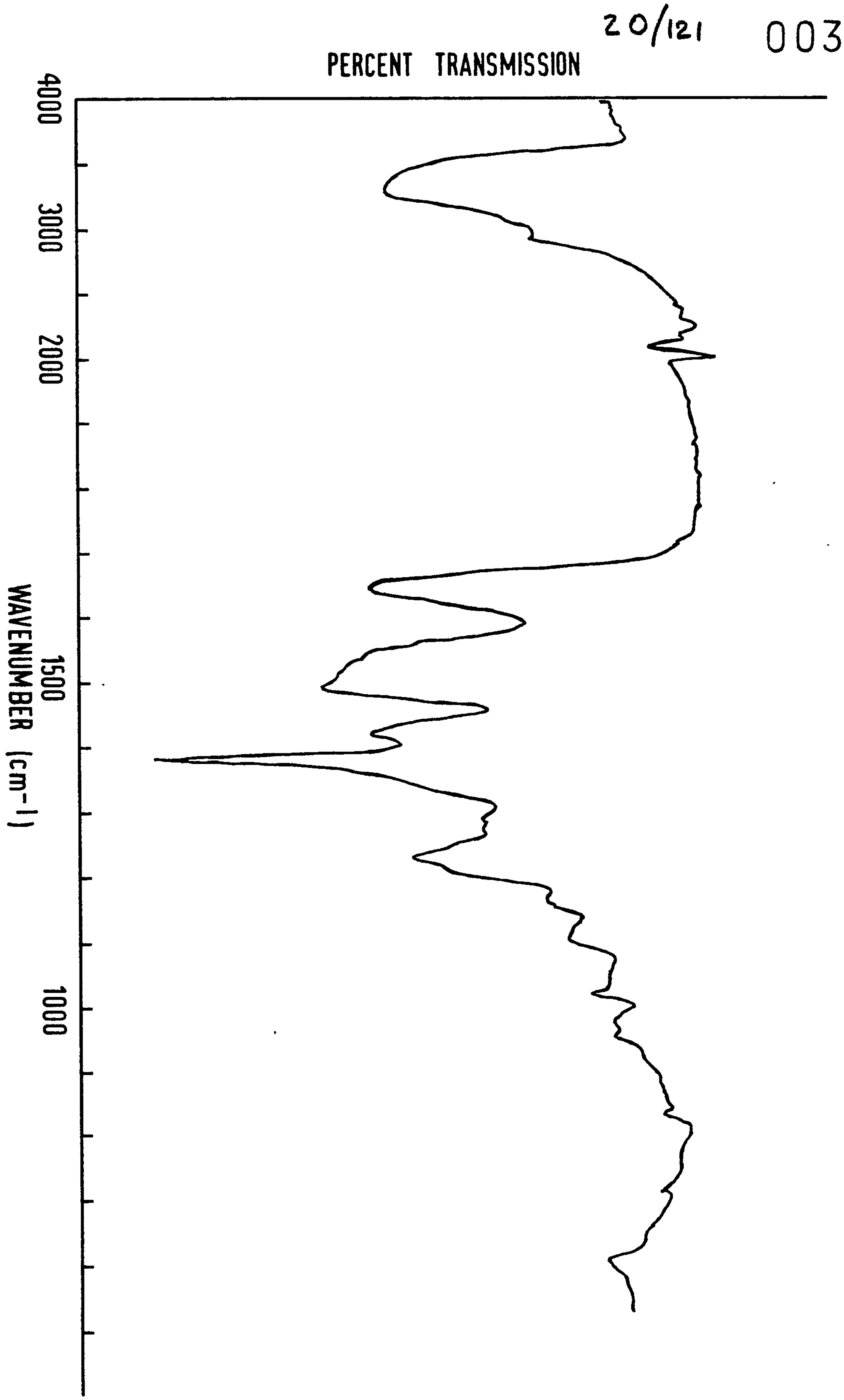
PERCENT TRANSMISSION
4000
3000
2000
1500
1000
WAVENUMBER (cm-1)

FIG.20.

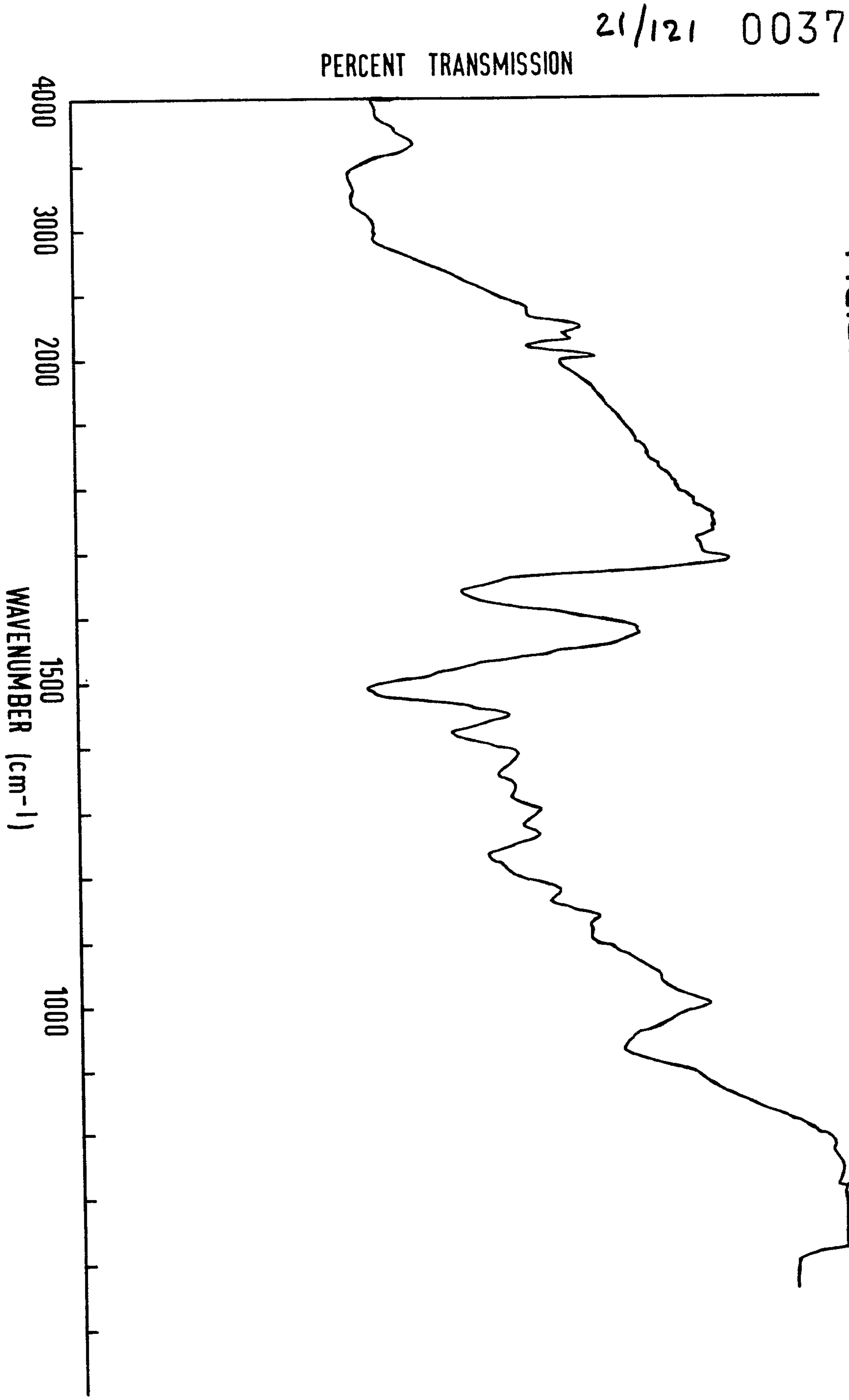
PERCENT TRANSMISSION
4000
3000
2000
1500
1000
WAVENUMBER (cm-1)

FIG.21

22/121 0037861

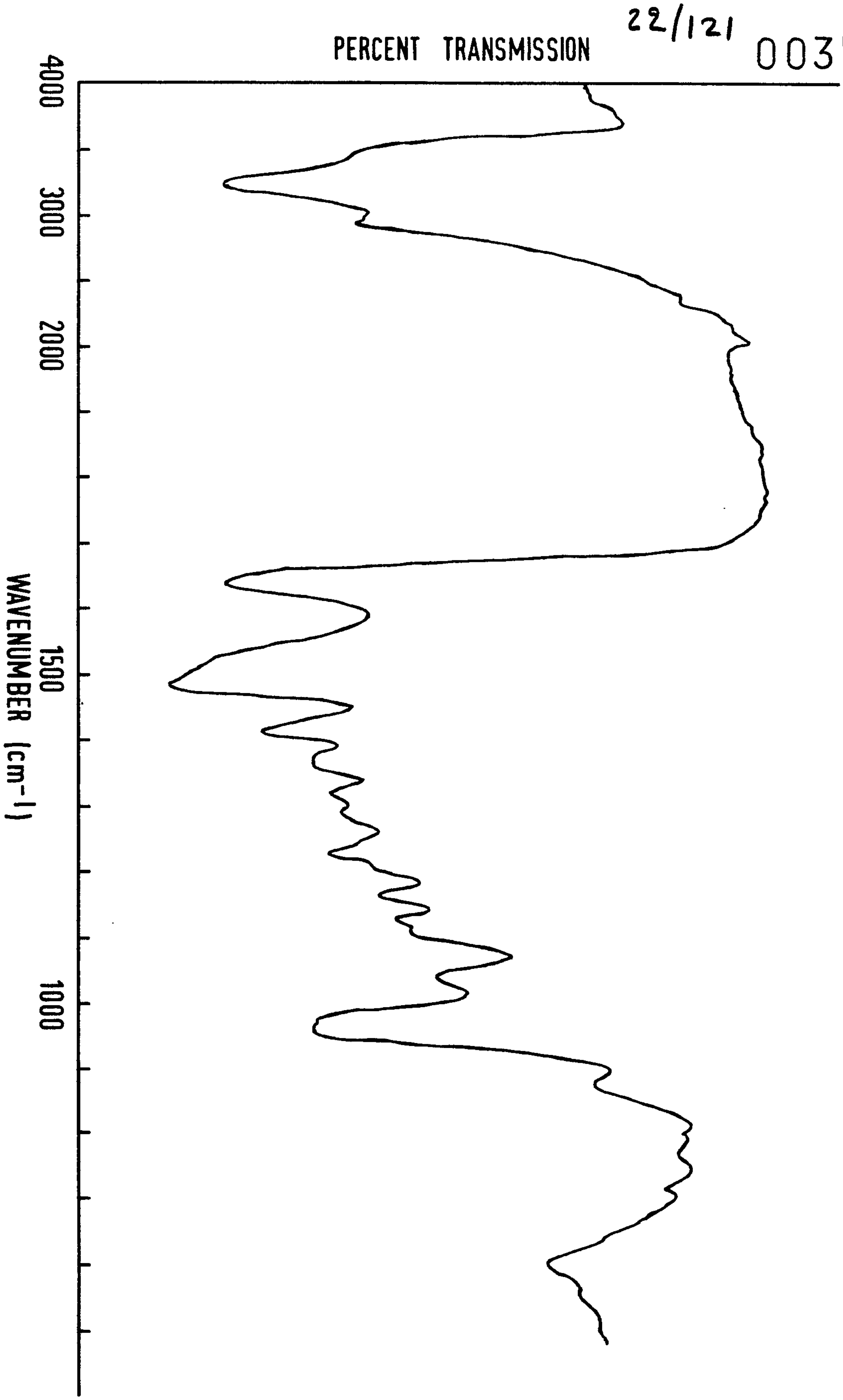


FIG.22.

0037861

PERCENT TRANSMISSION

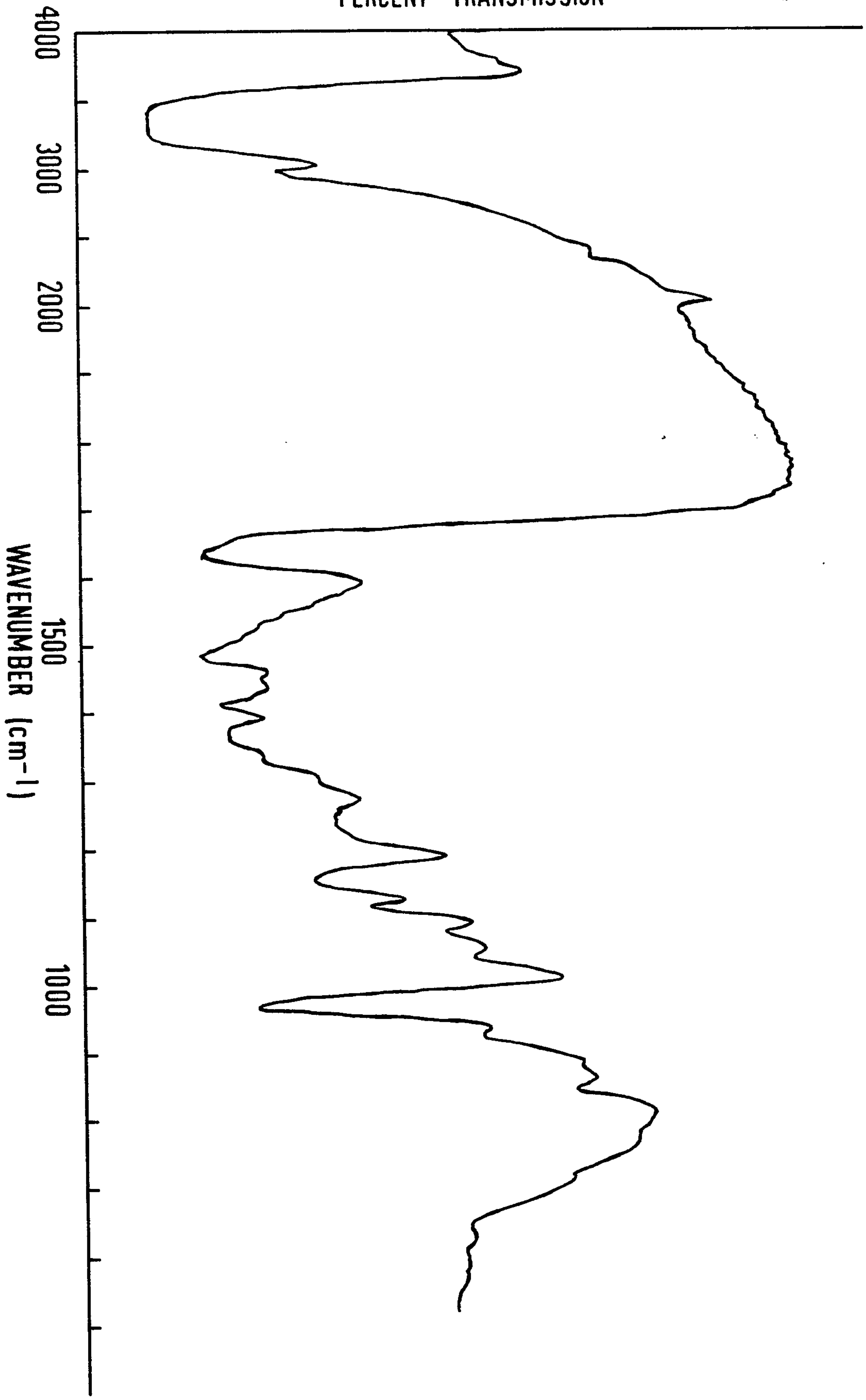


FIG.23.

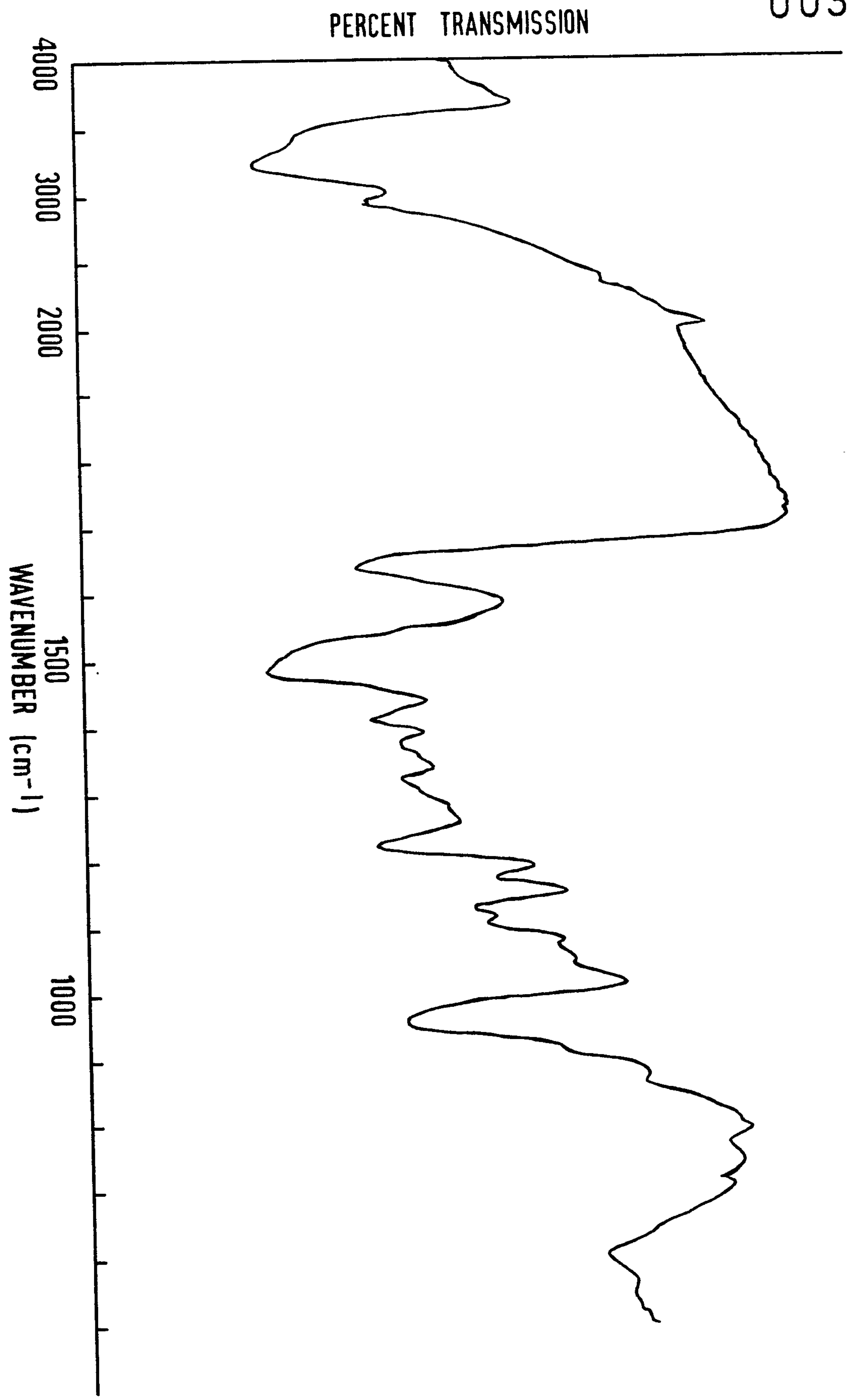
PERCENT TRANSMISSION
4000
3000
2000
1500
1000
WAVENUMBER (cm⁻¹)

FIG.24.

25/121

0037861

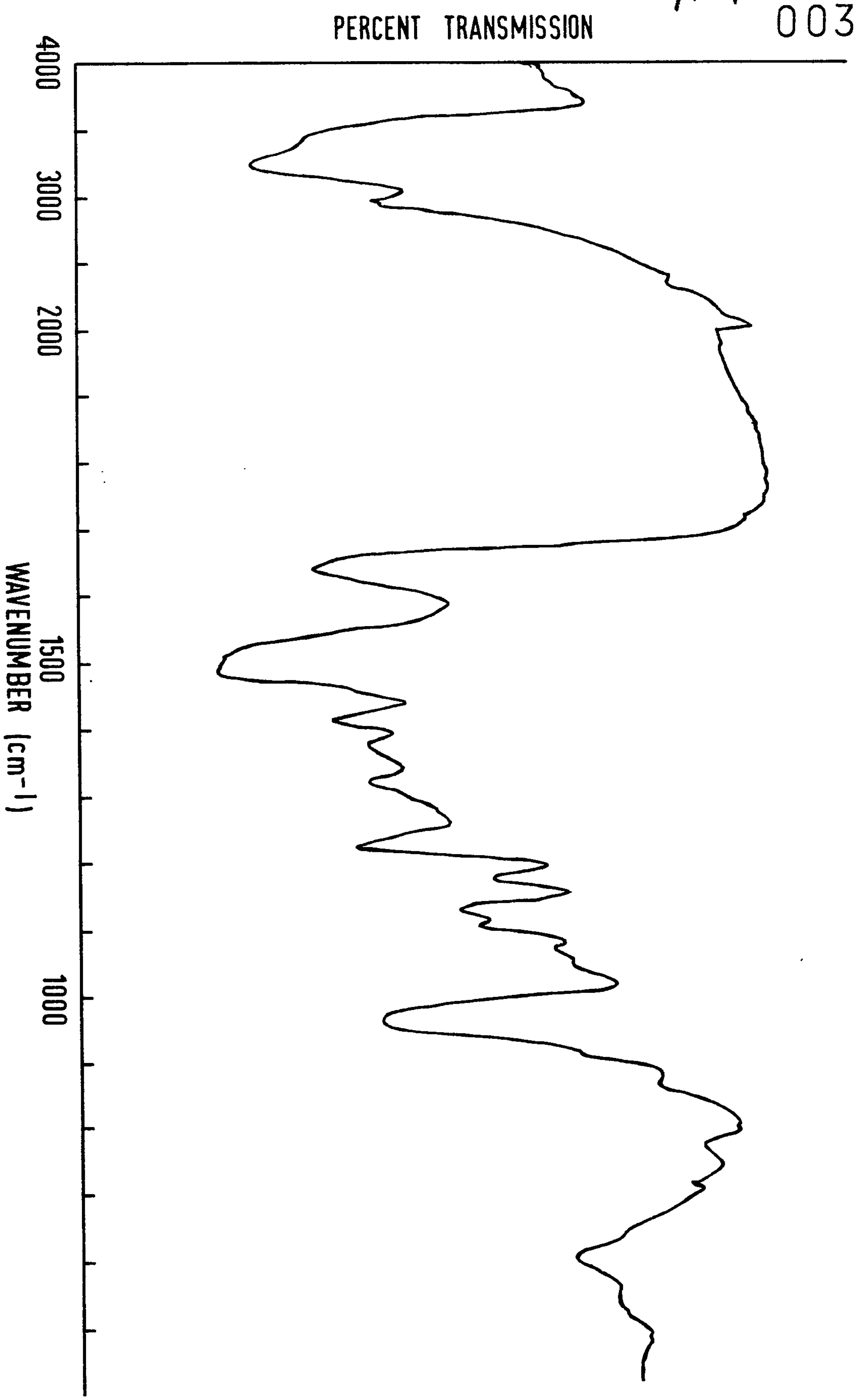


FIG.25.

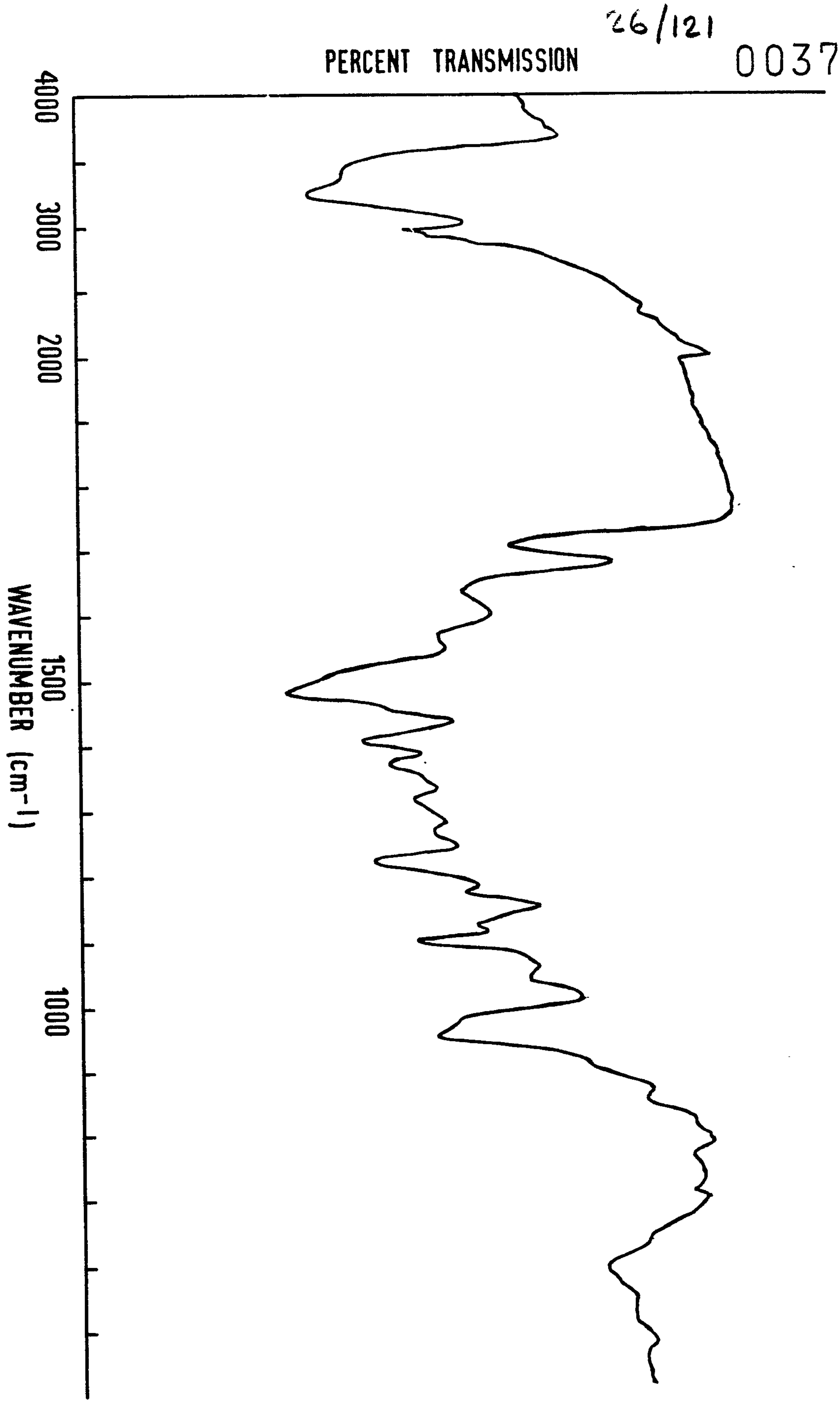
PERCENT TRANSMISSION
4000
3000
2000
1500
1000
WAVENUMBER (cm-1)

FIG.26.

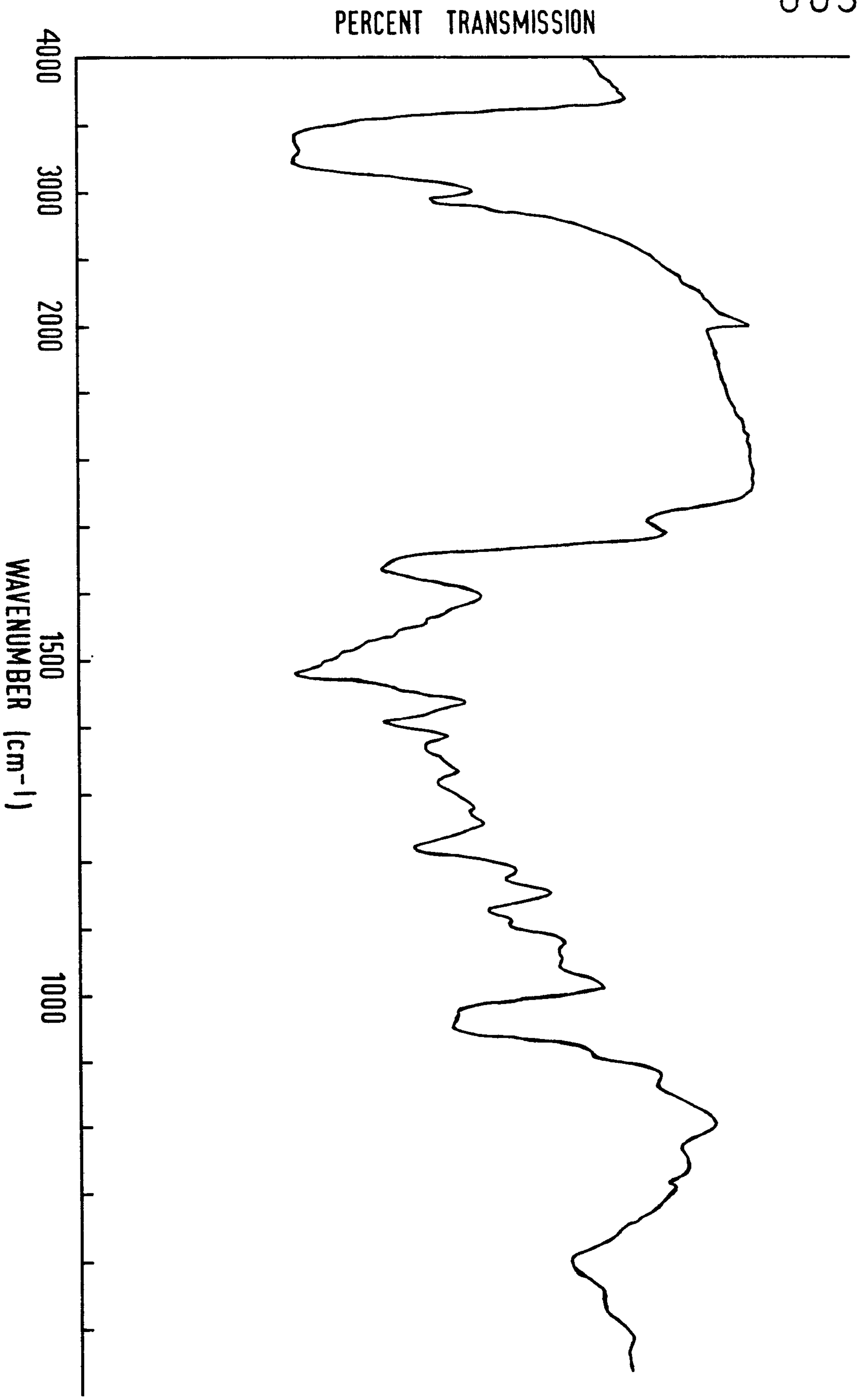
PERCENT TRANSMISSION
4000
3000
2000
1500
1000
WAVENUMBER (cm-1)

FIG.27.

28/121

0037861

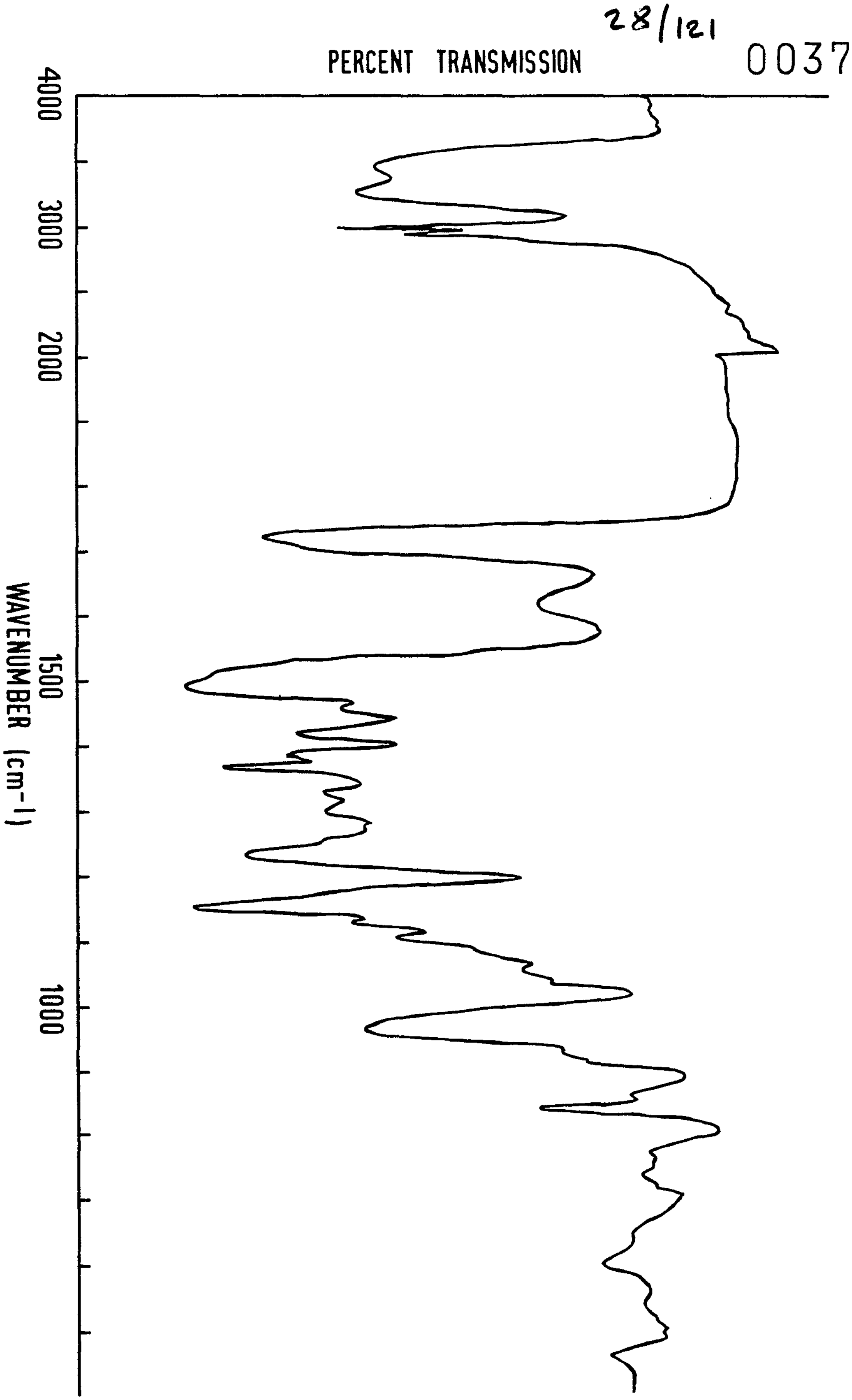


FIG.28.

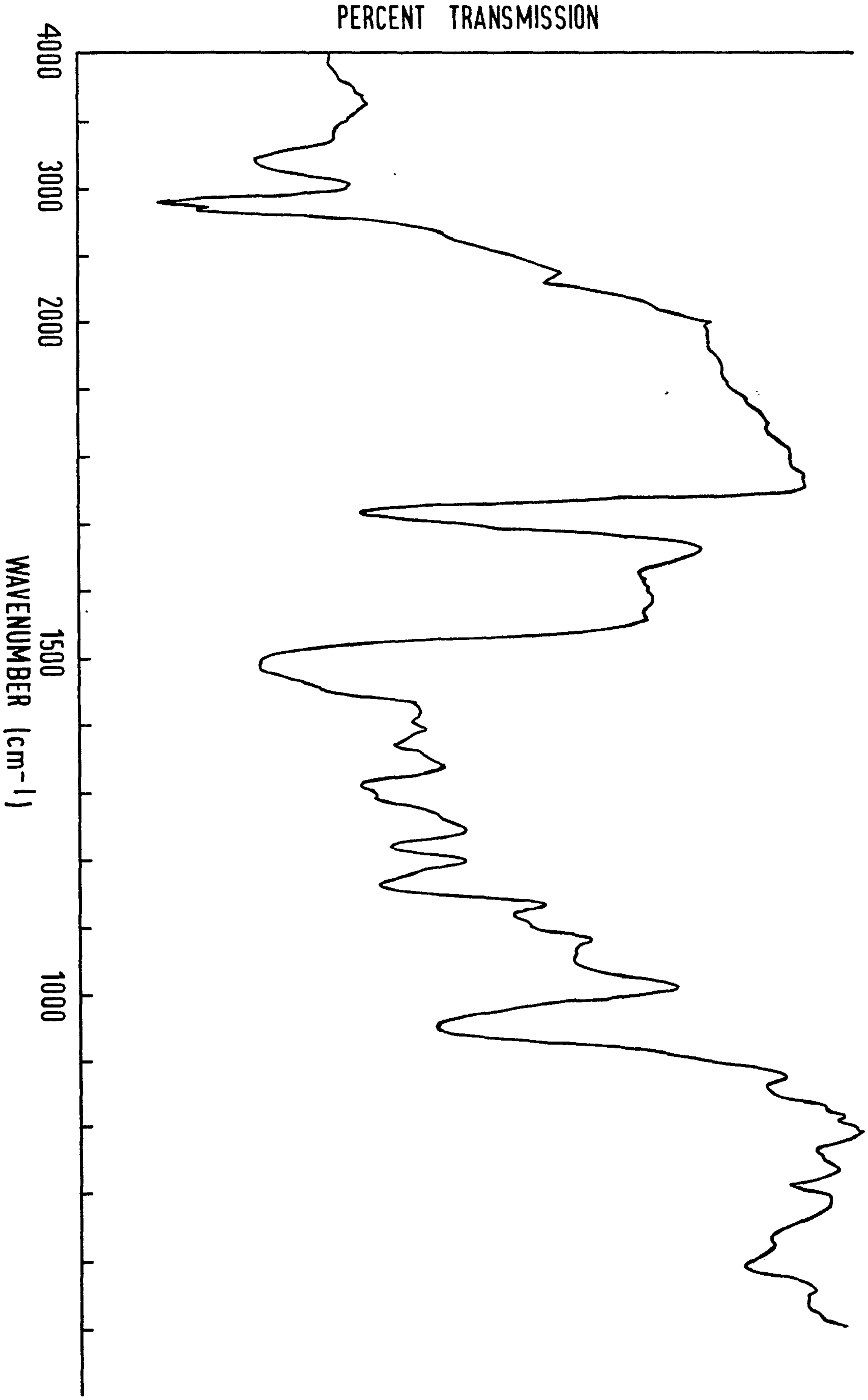
PERCENT TRANSMISSION
4000
3000
2000
1500
1000
WAVENUMBER (cm-1)

FIG.29.

0037861

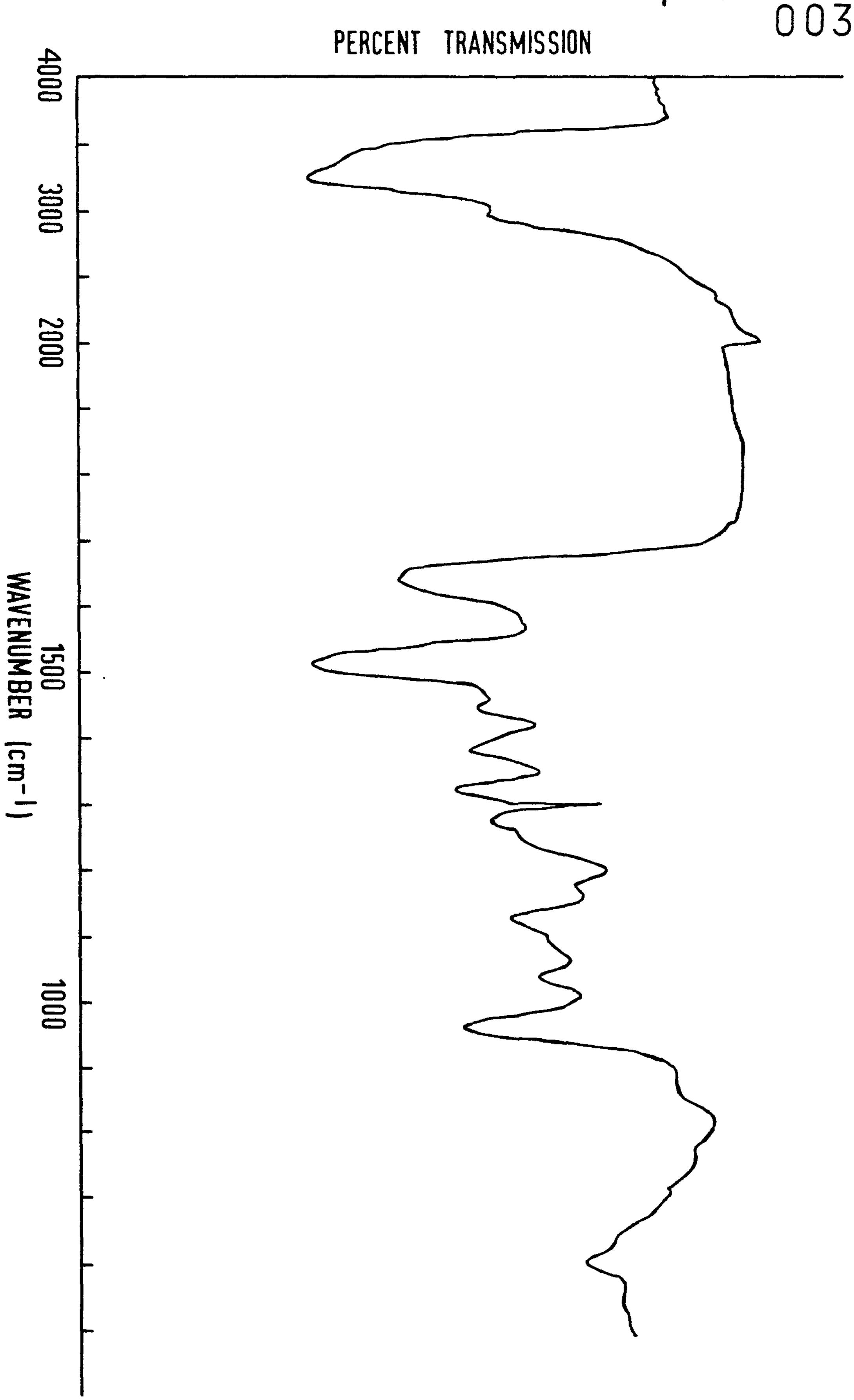


FIG.30.

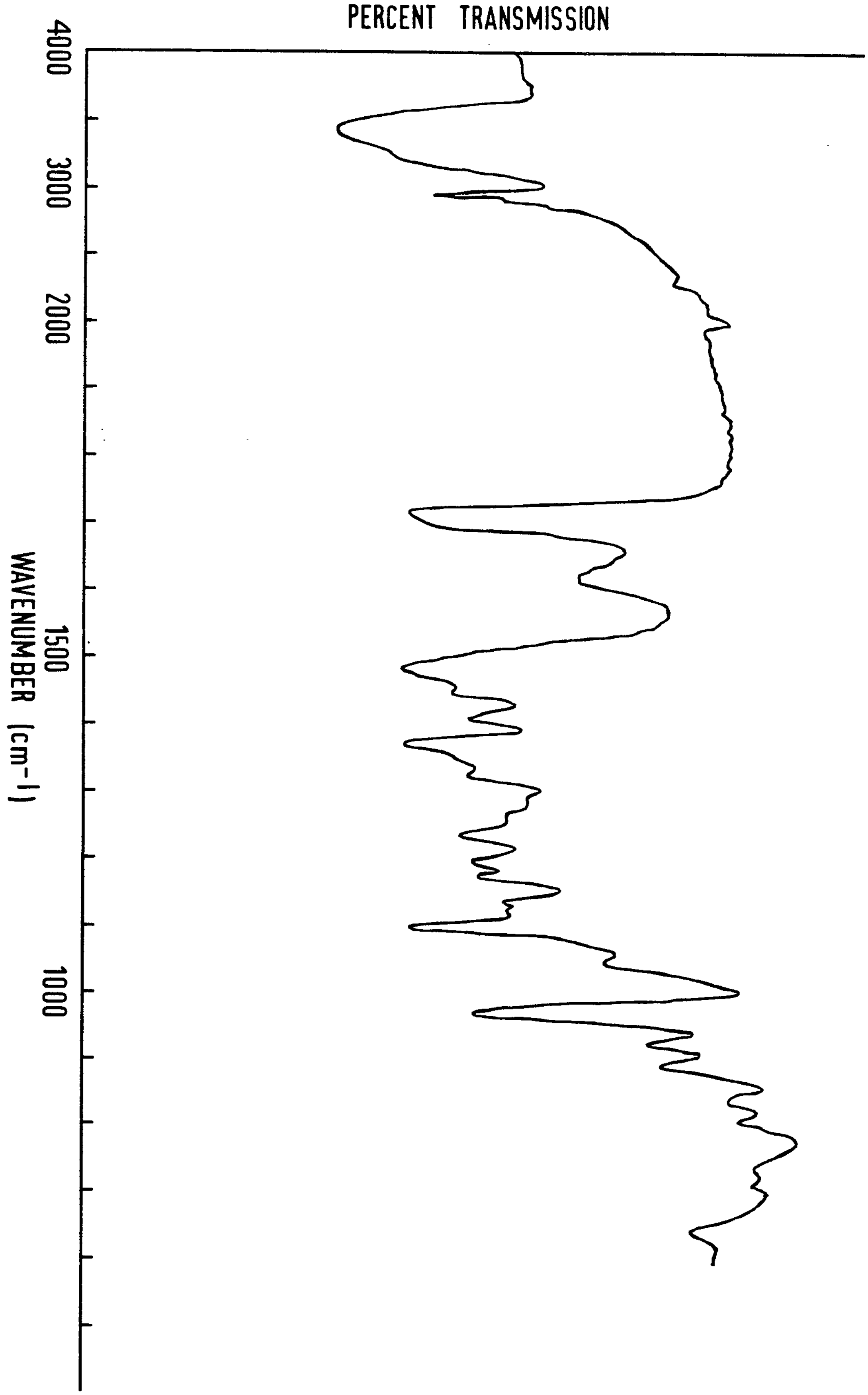
PERCENT TRANSMISSION
4000
3000
2000
1500
1000
WAVENUMBER (cm-1)

FIG.31.

32/121 0037861

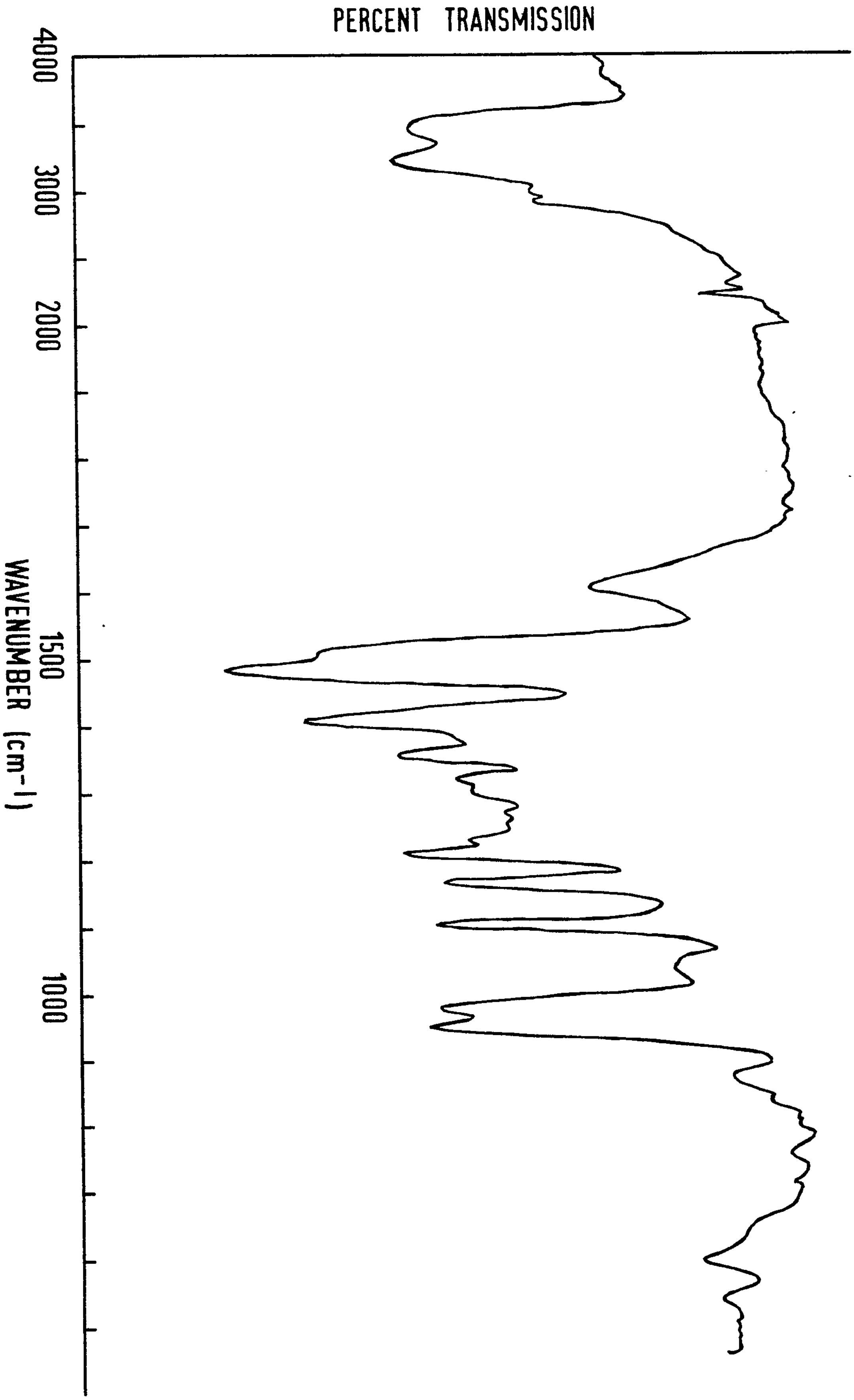


FIG.32.

33/121

0037861

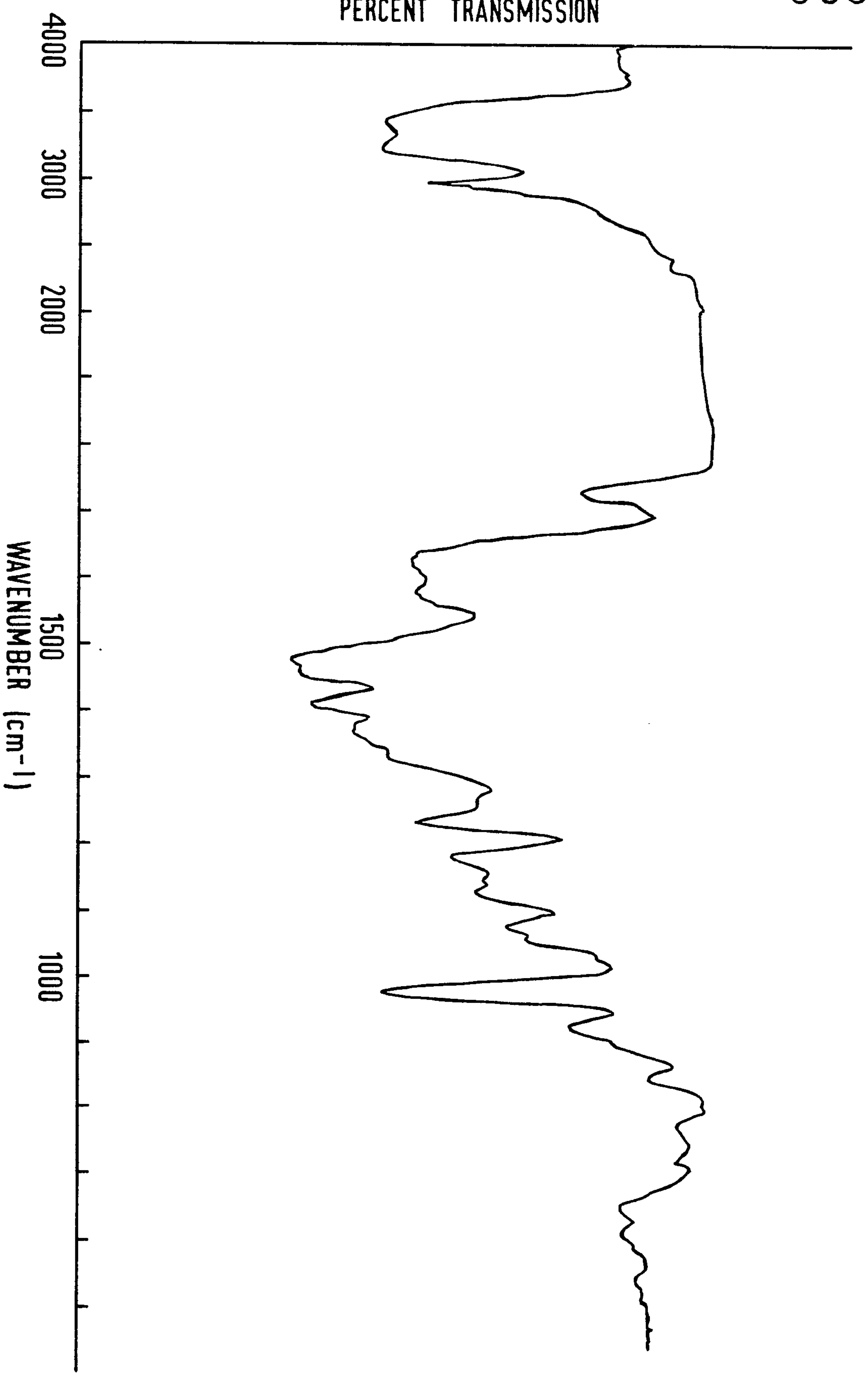


FIG.33.

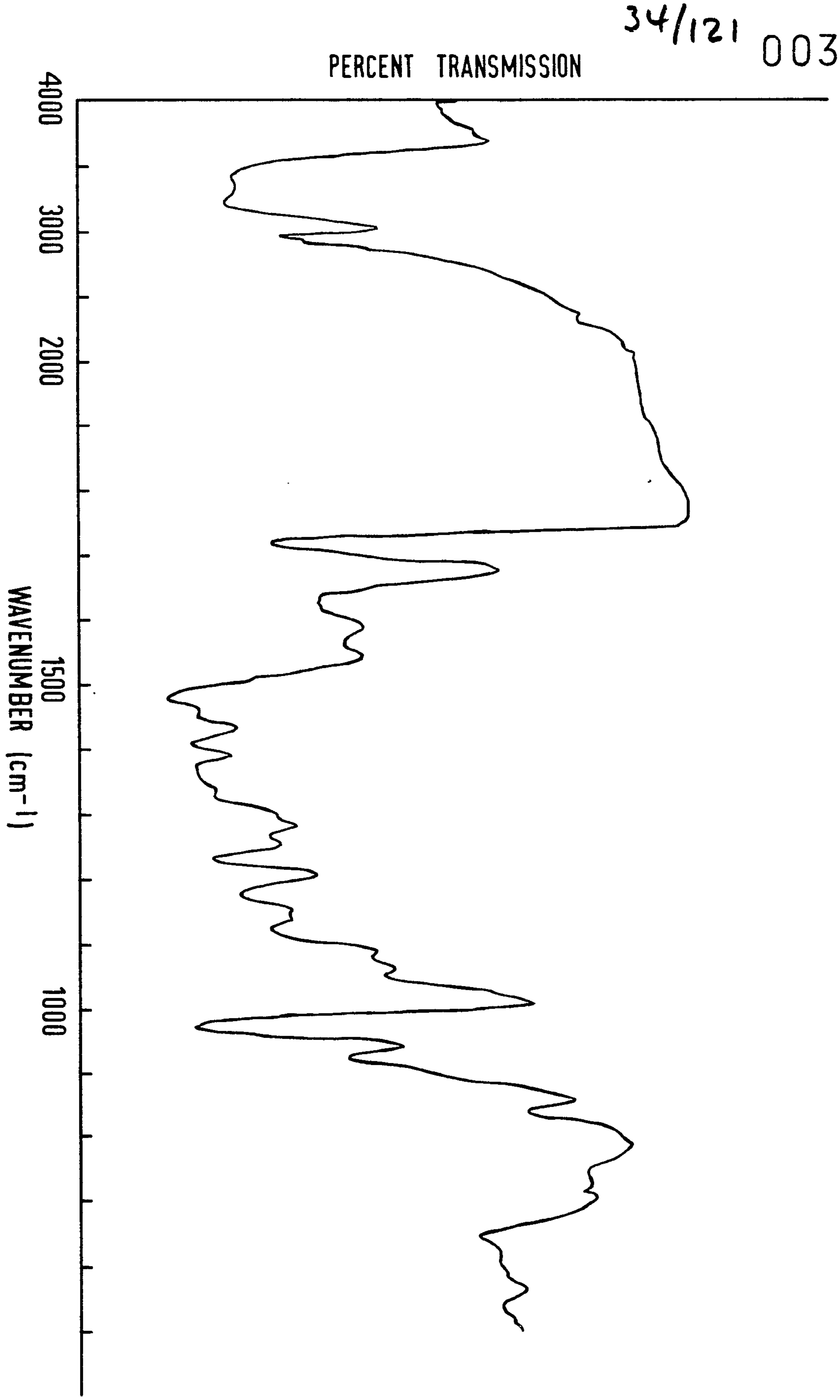
PERCENT TRANSMISSION
4000
3000
2000
1500
1000
WAVENUMBER (cm-1)

FIG.34.

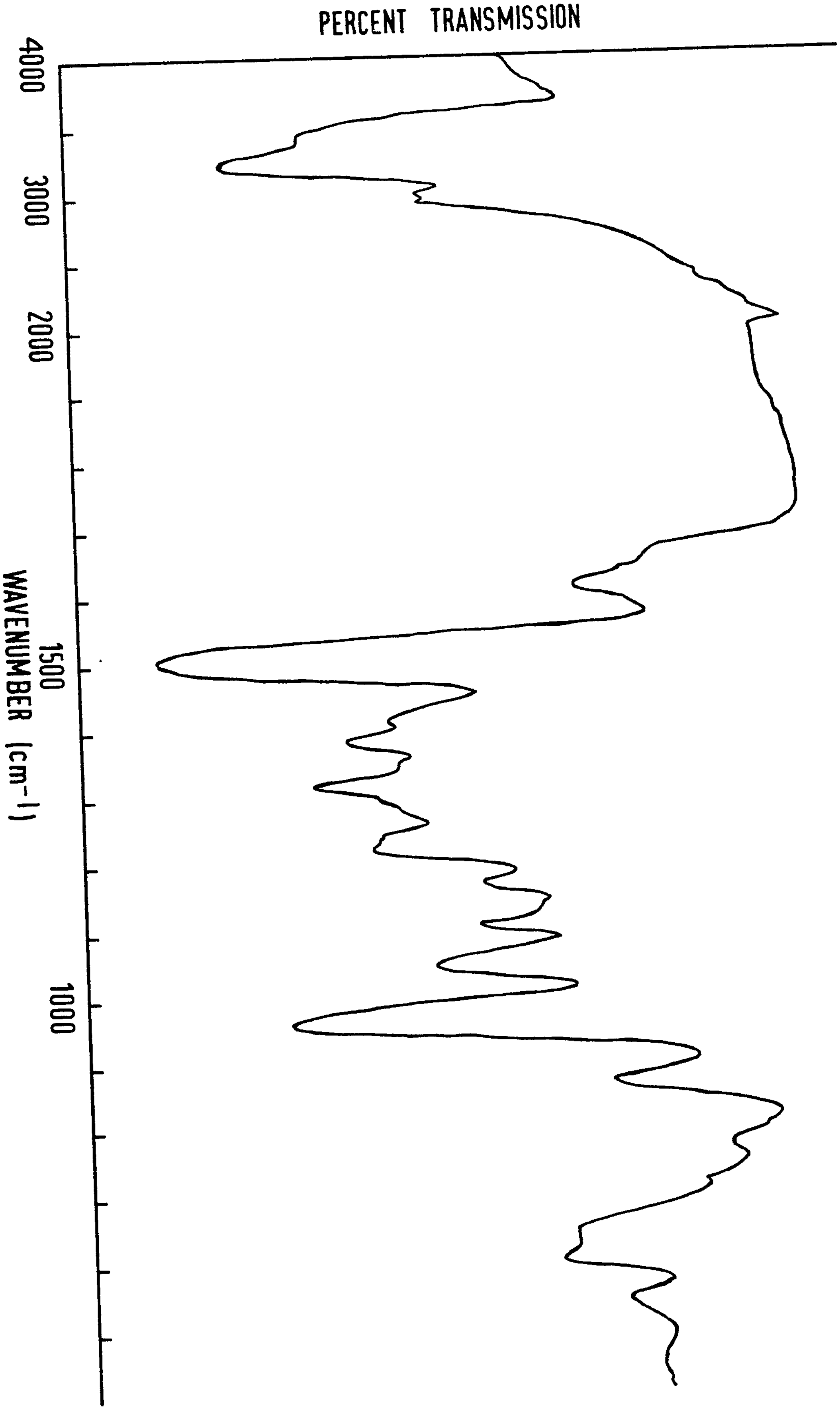
PERCENT TRANSMISSION
4000
3000
2000
1500
1000
WAVENUMBER (cm-1)

FIG.35.

FIG.36.

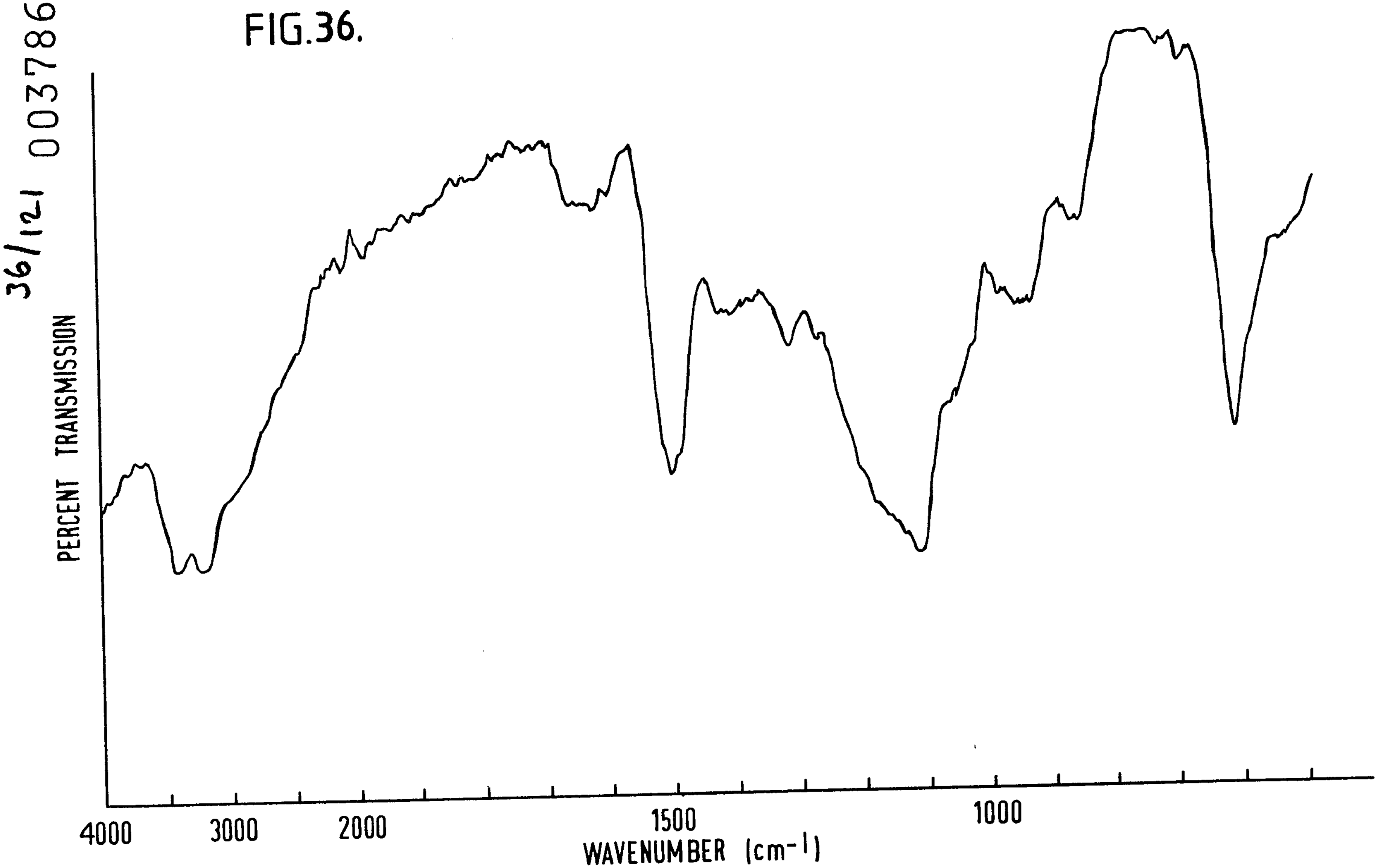
PERCENT TRANSMISSION
4000
3000
2000
1500
1000
WAVENUMBER (cm-1)

37/121 0037861

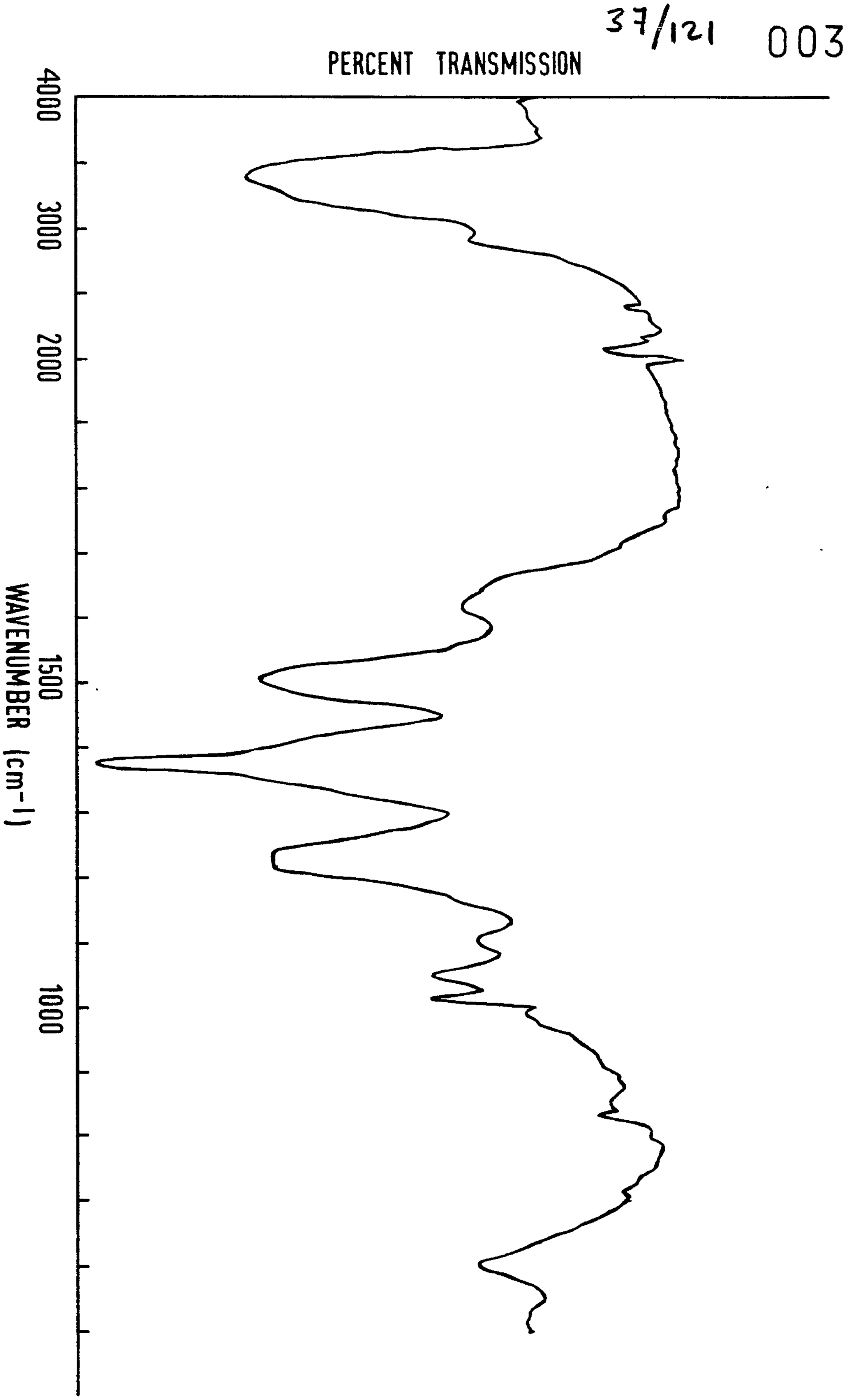


FIG.37.

0037861

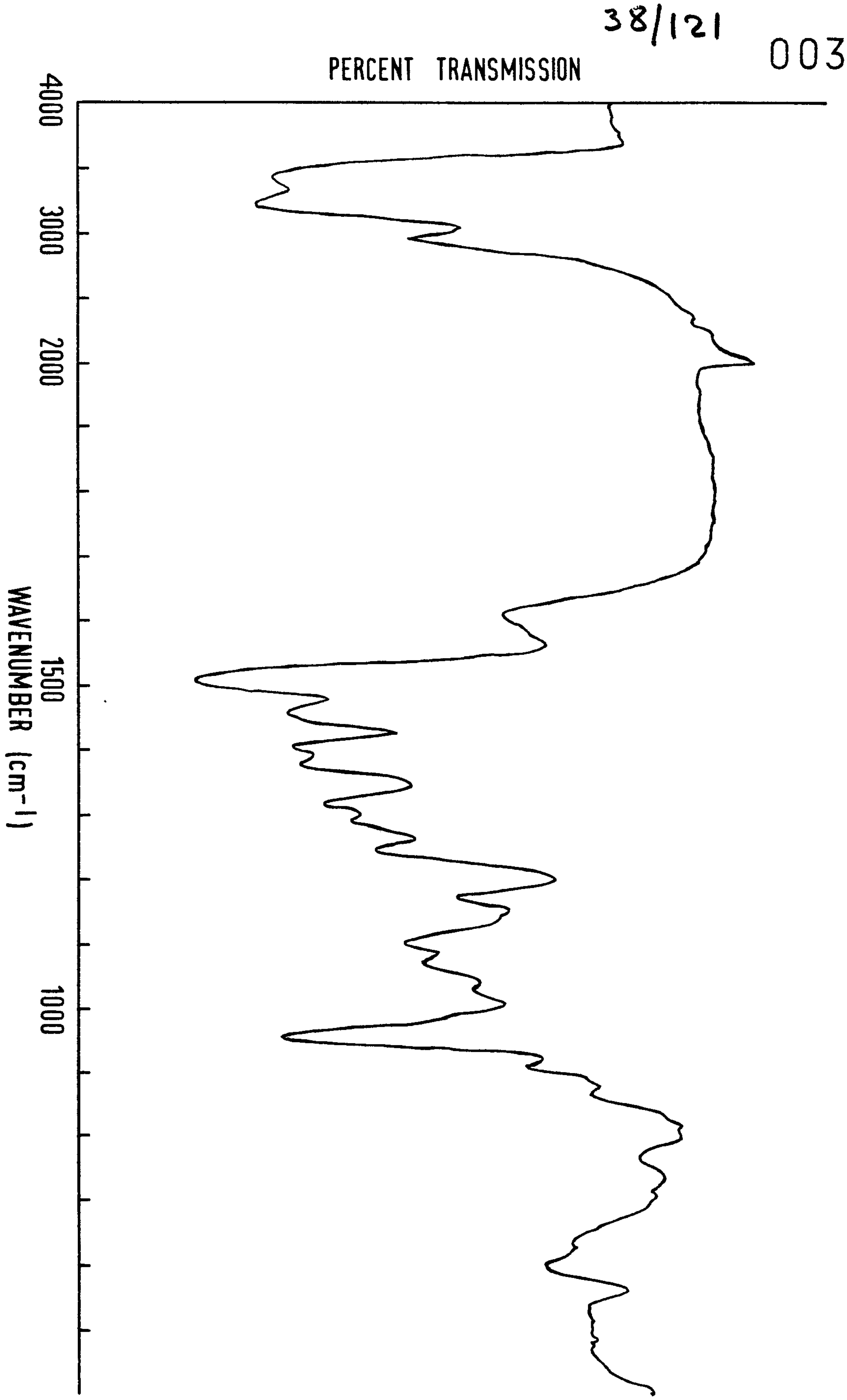


FIG.38.

39/121 0037861

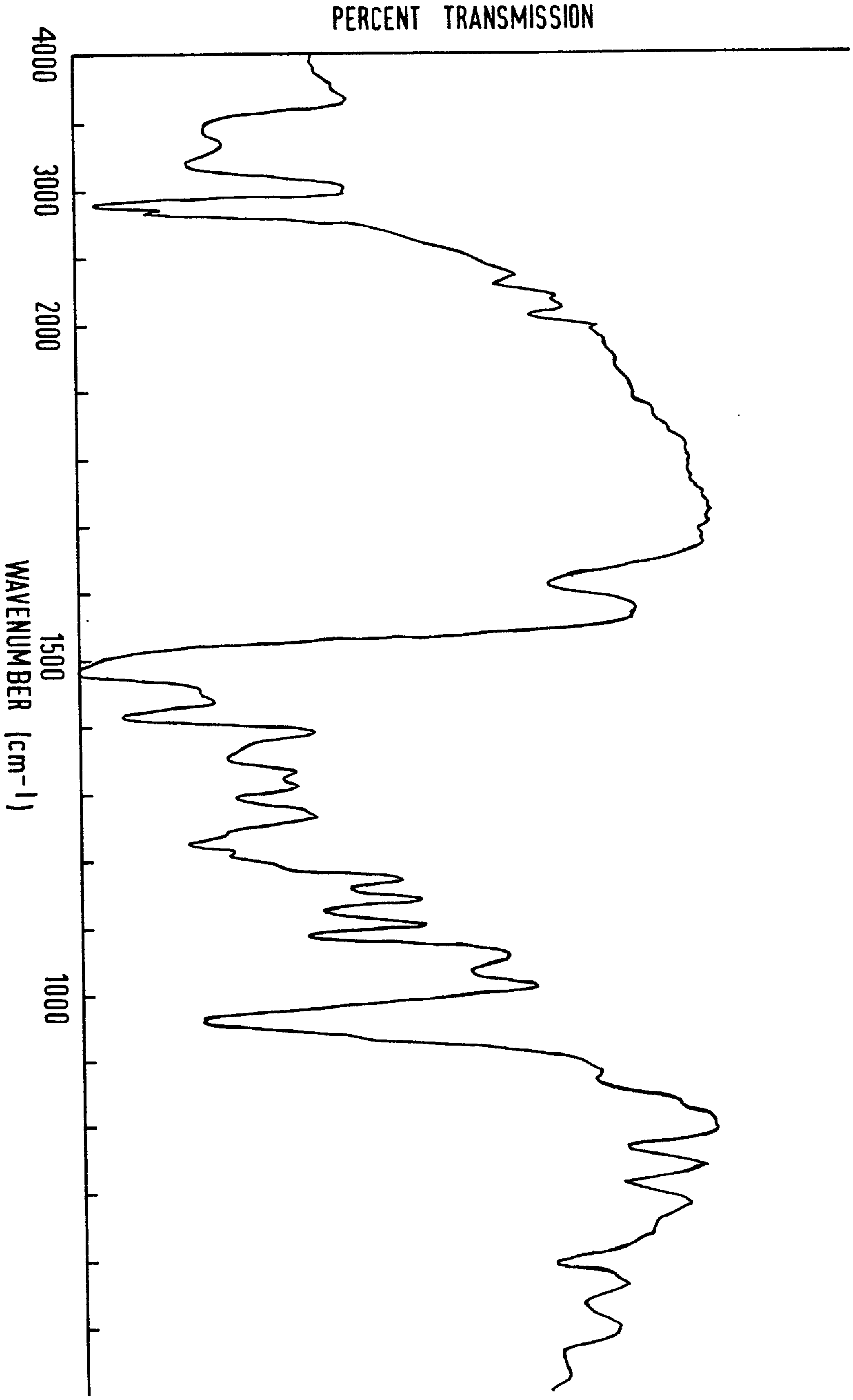


FIG.39.

40/121

0037861

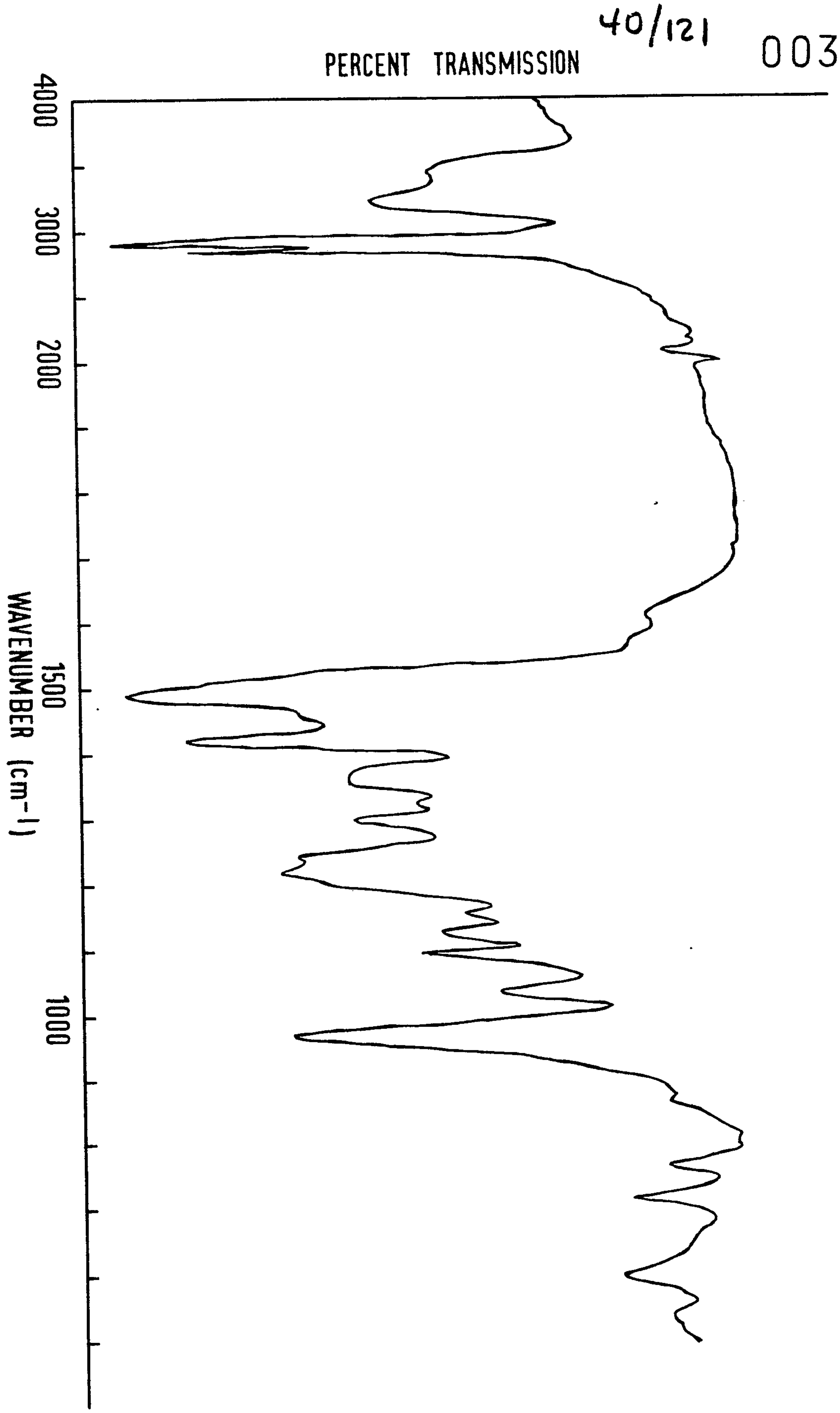


FIG.40.

FIG.41.

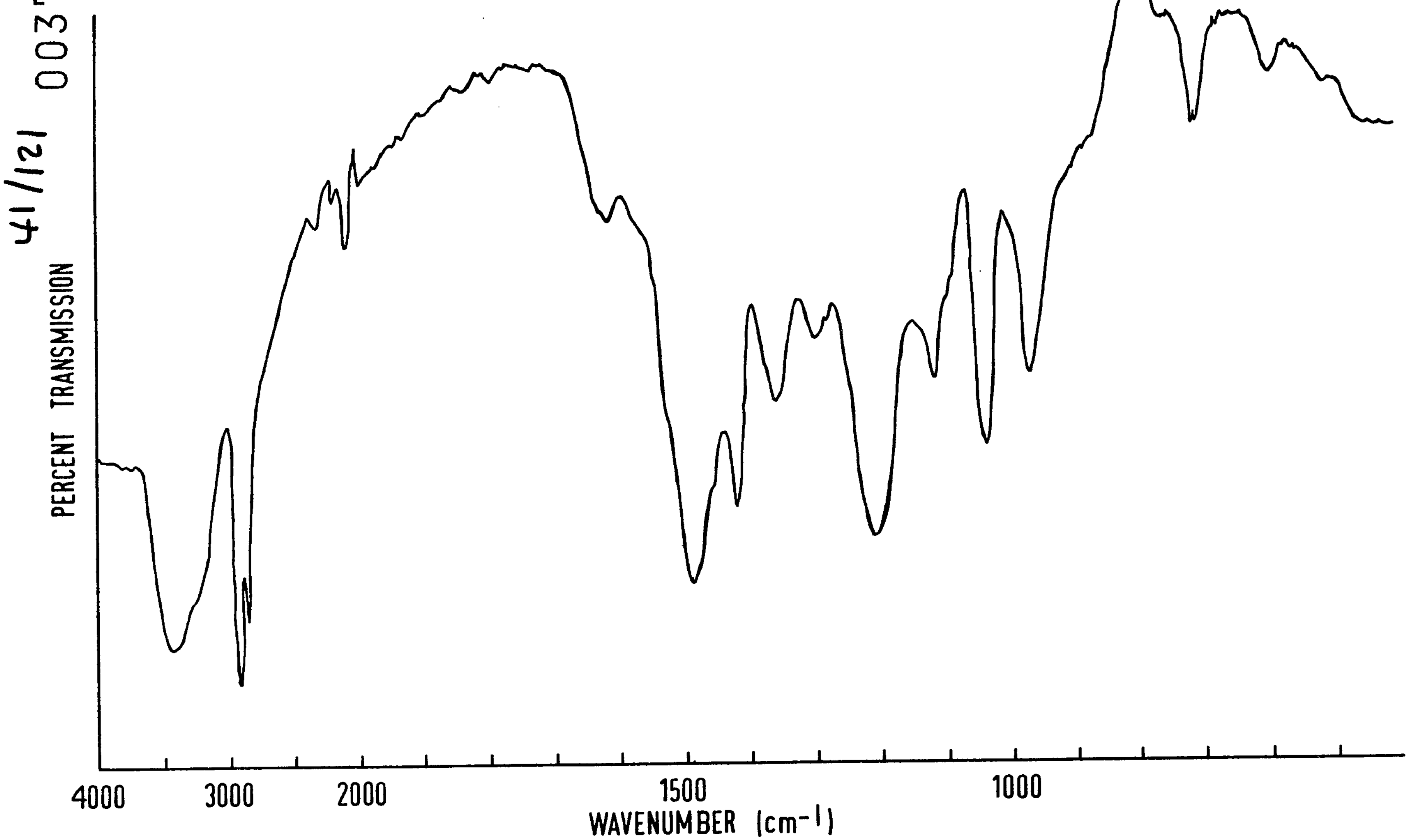
PERCENT TRANSMISSION
4000
3000
2000
1500
1000
WAVENUMBER (cm$^{-1}$)

42/121 0037861

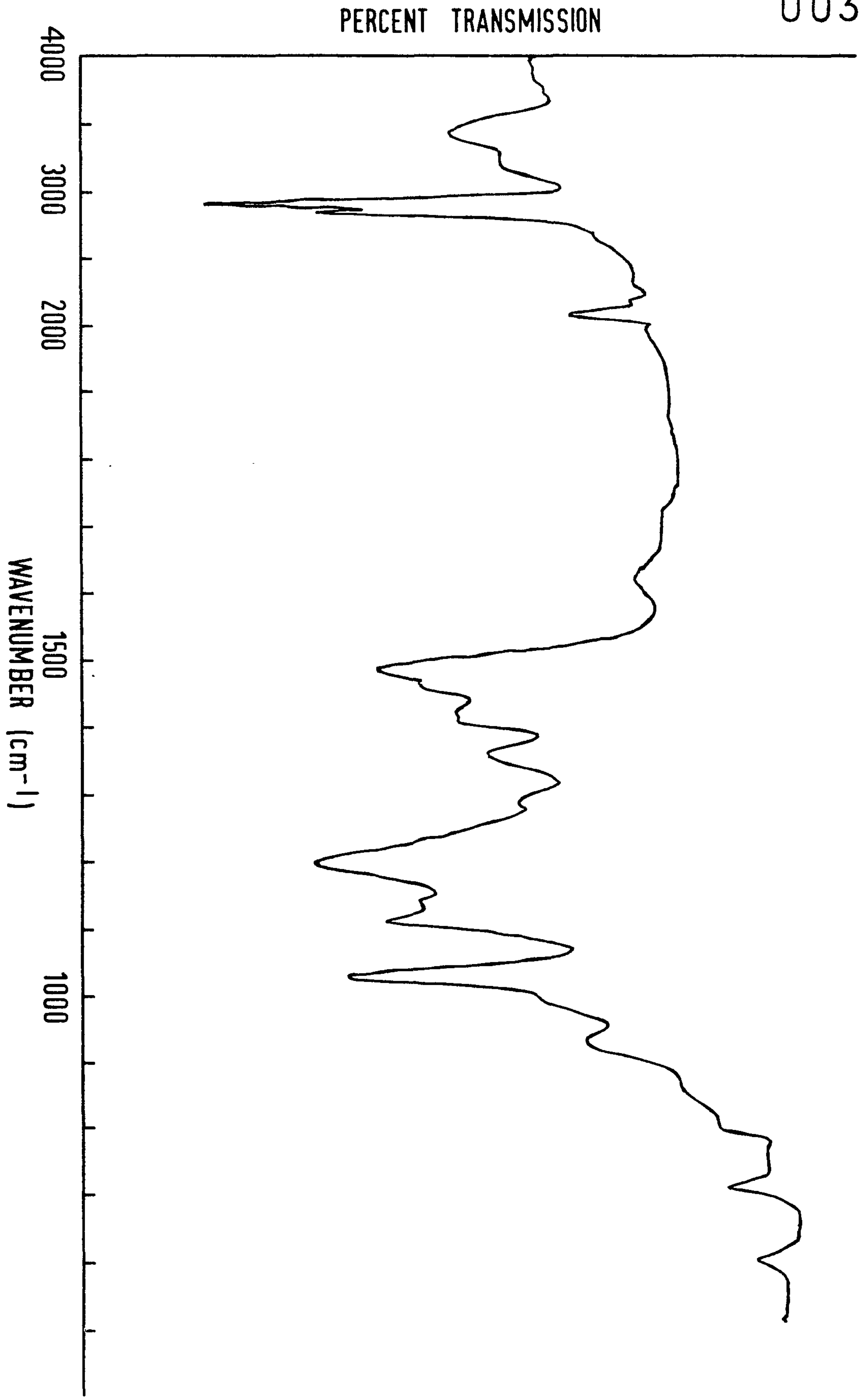


FIG.42.

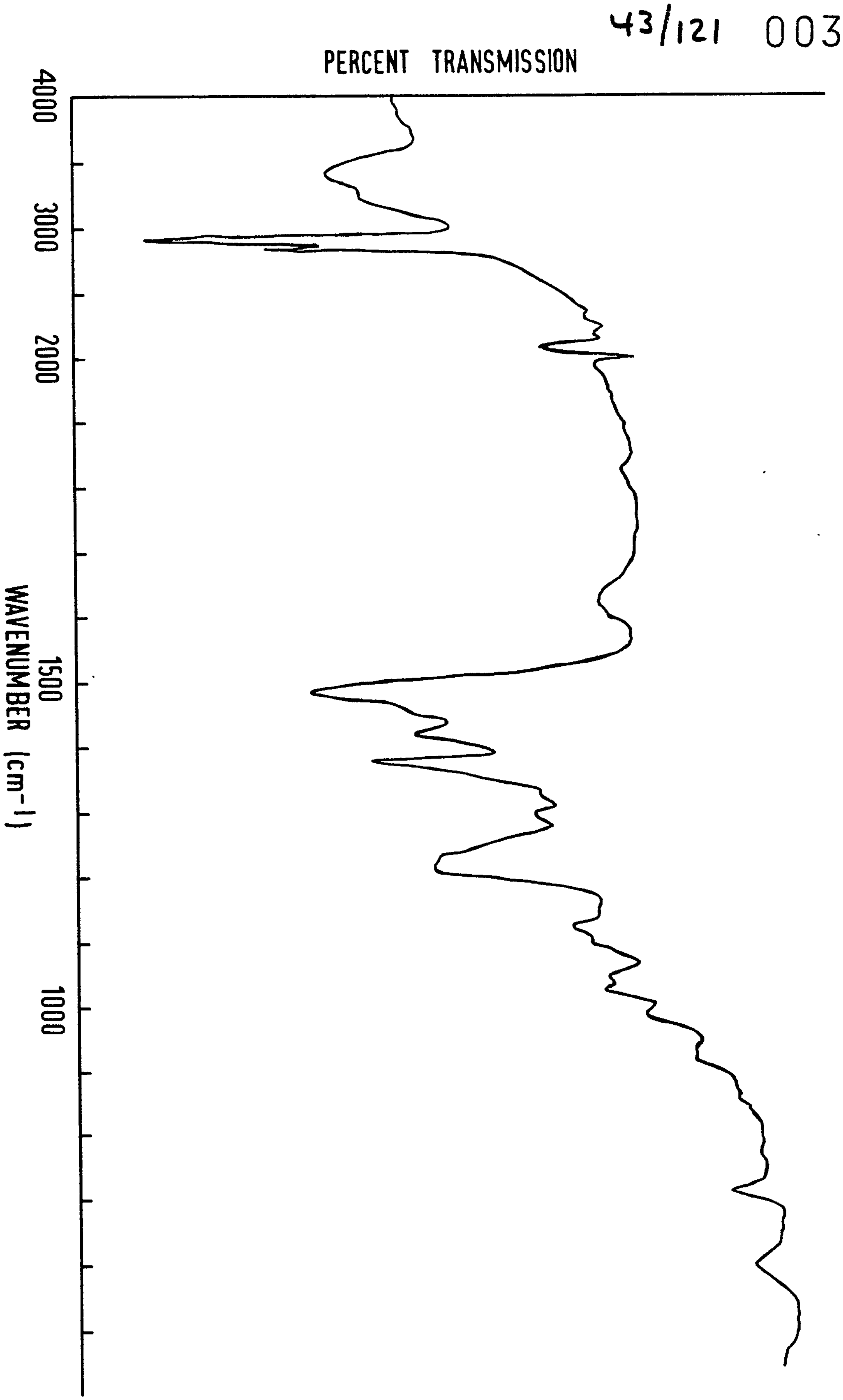

PERCENT TRANSMISSION
4000
3000
2000
1500
1000
WAVENUMBER (cm-1)


FIG.43.

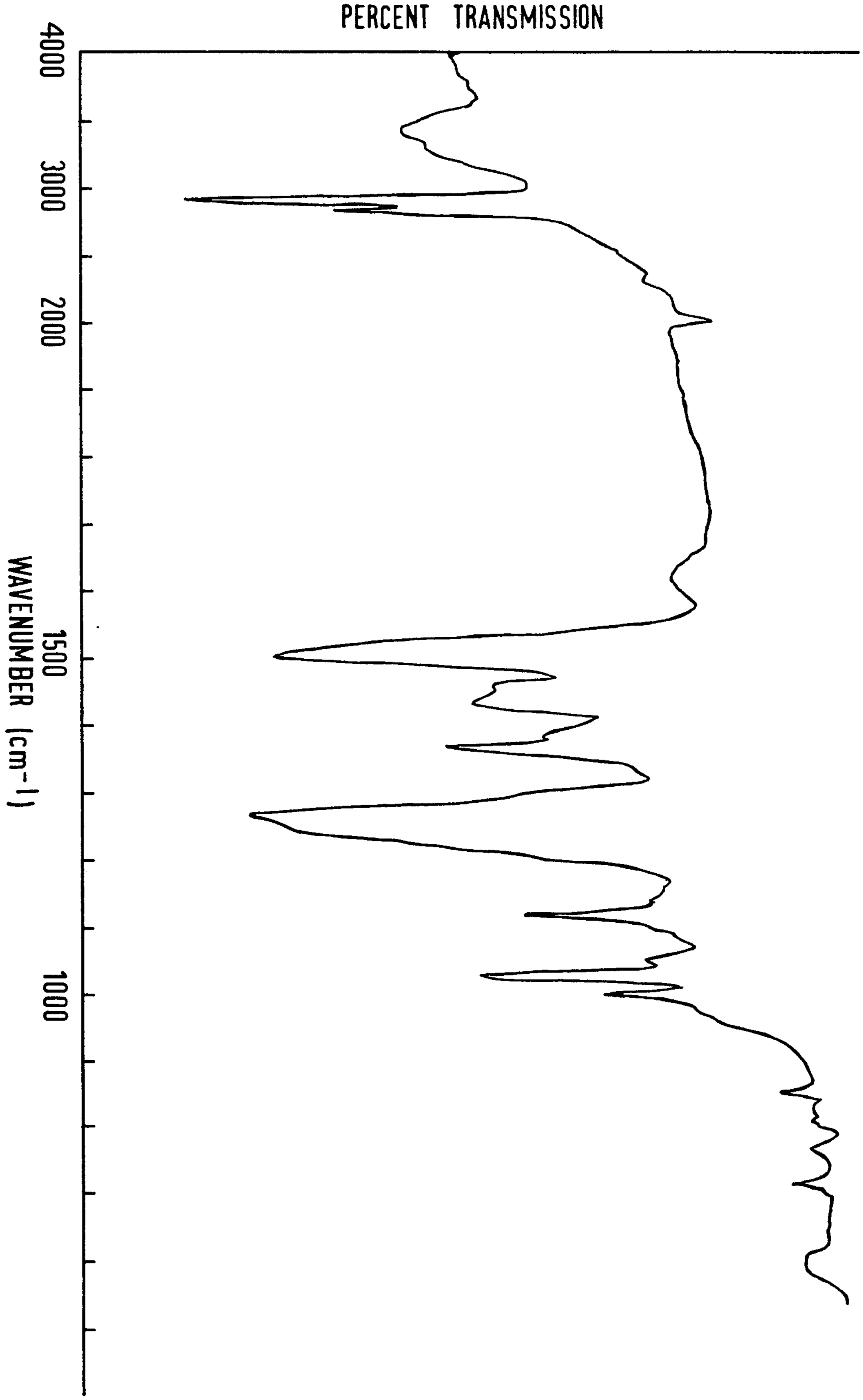
PERCENT TRANSMISSION
4000
3000
2000
1500
1000
WAVENUMBER (cm-1)

FIG.44

0037861

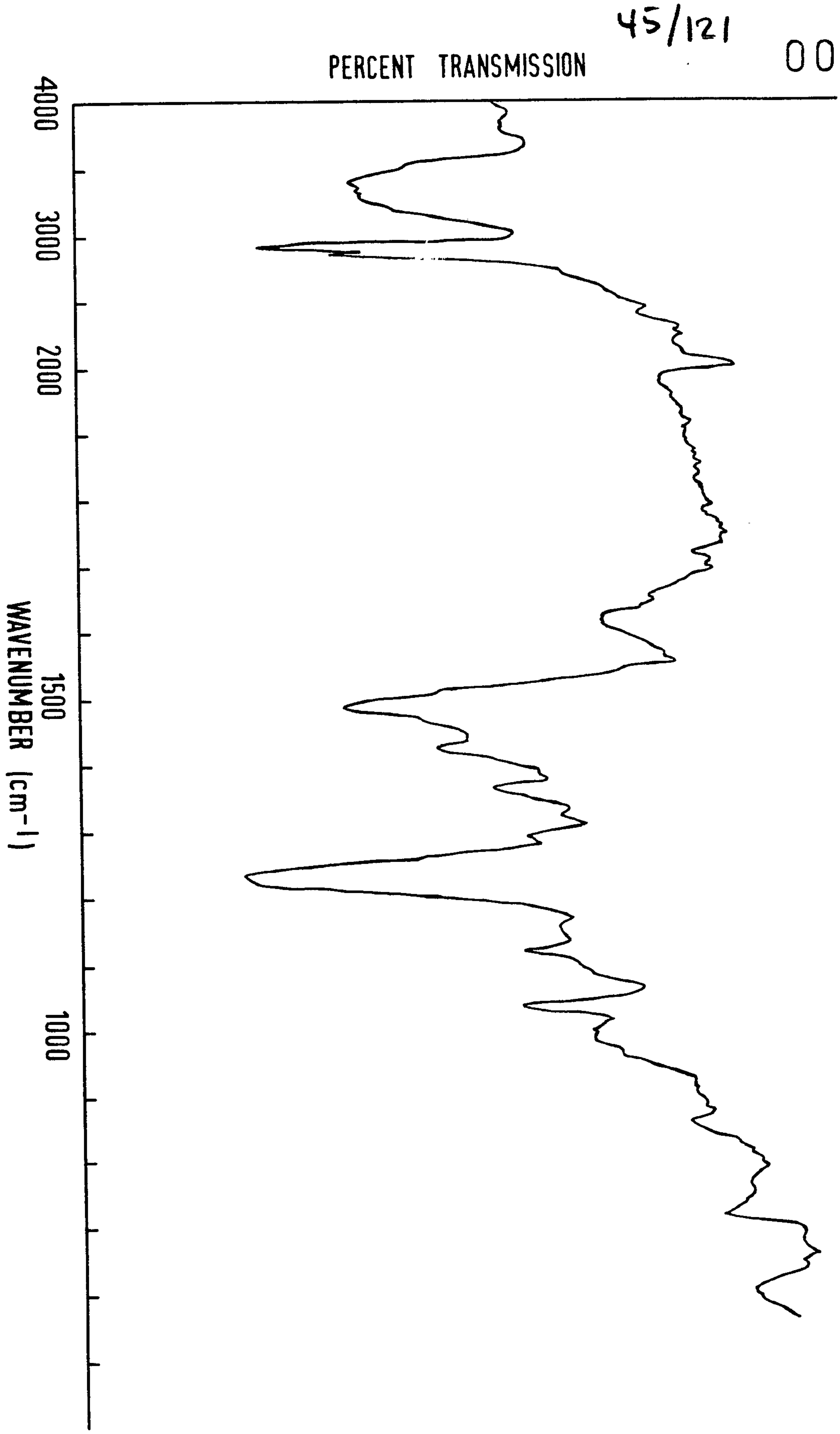


FIG.45

FIG.46.

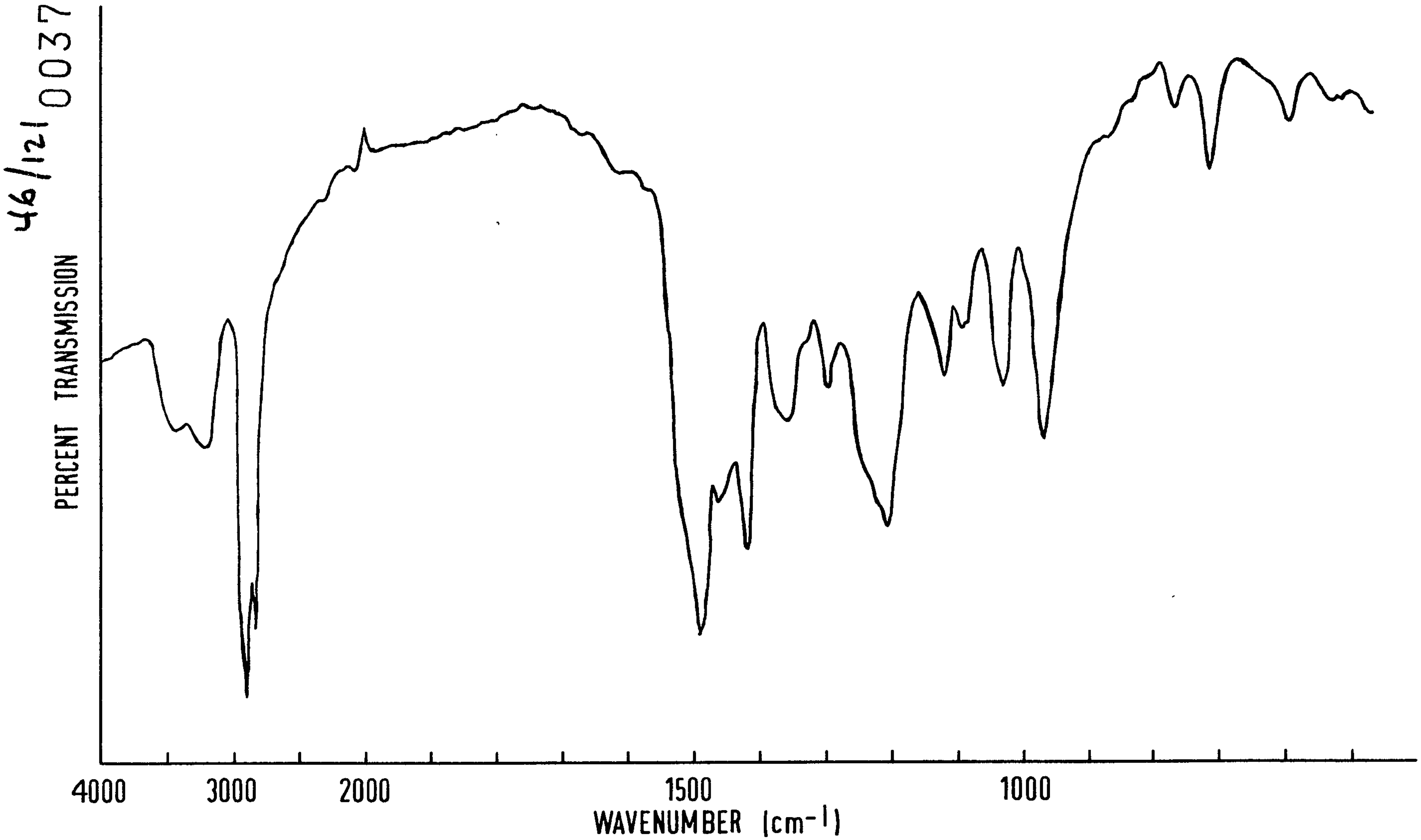
PERCENT TRANSMISSION
4000
3000
2000
1500
1000
WAVENUMBER (cm-1)

FIG.47.

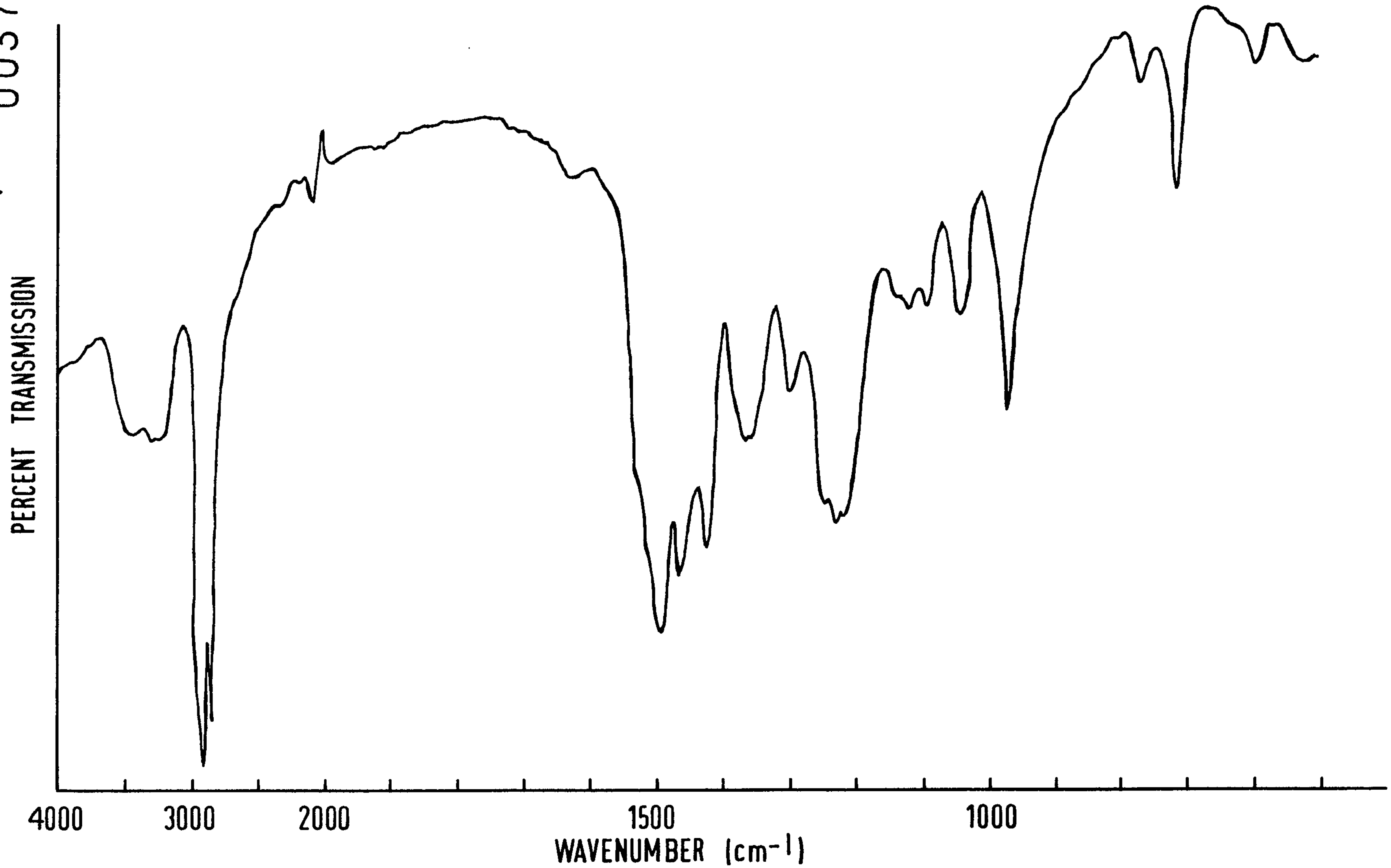
PERCENT TRANSMISSION
4000
3000
2000
1500
1000
WAVENUMBER (cm-1)

FIG.48.

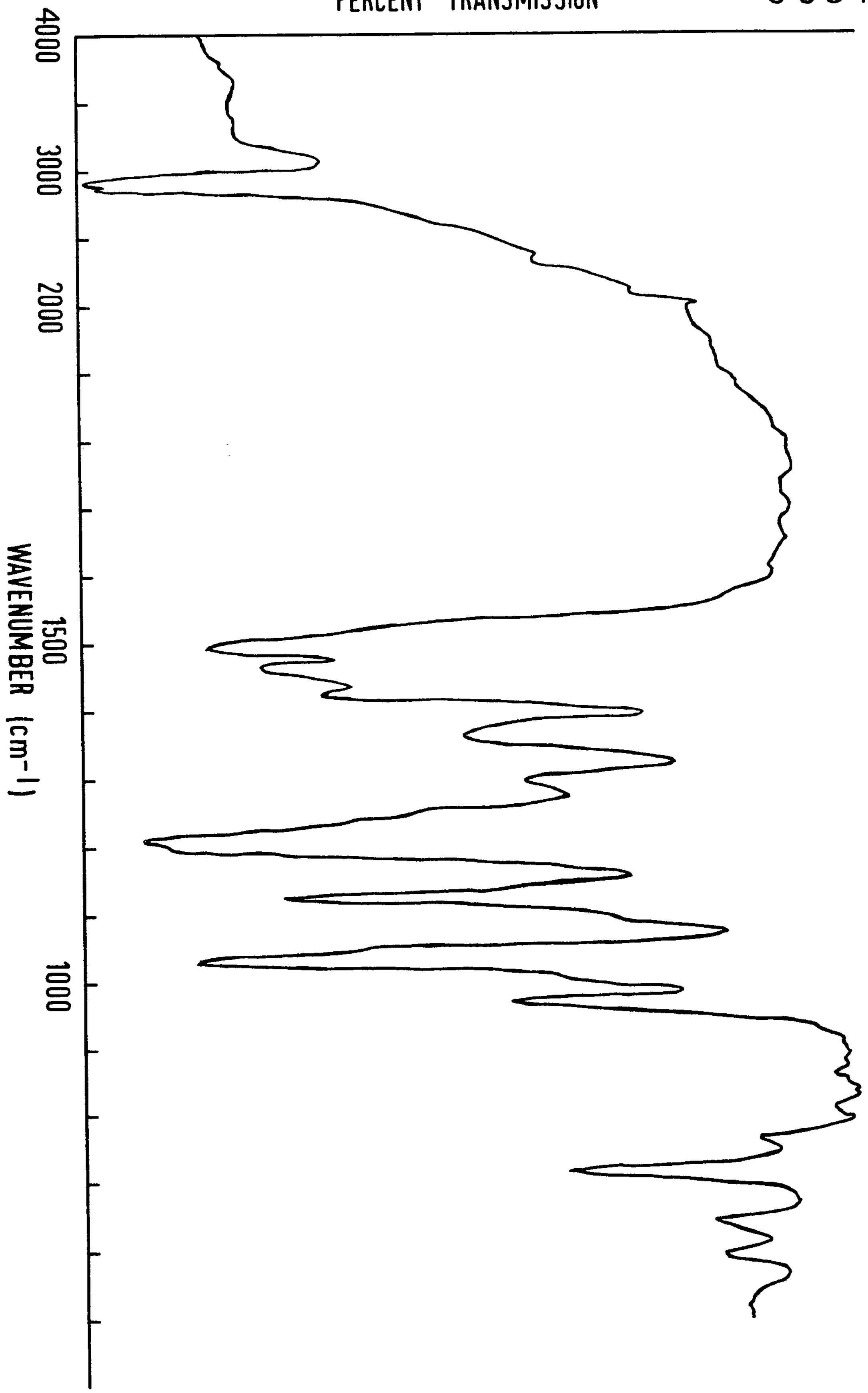

PERCENT TRANSMISSION
4000
3000
2000
1500
1000
WAVENUMBER (cm-1)

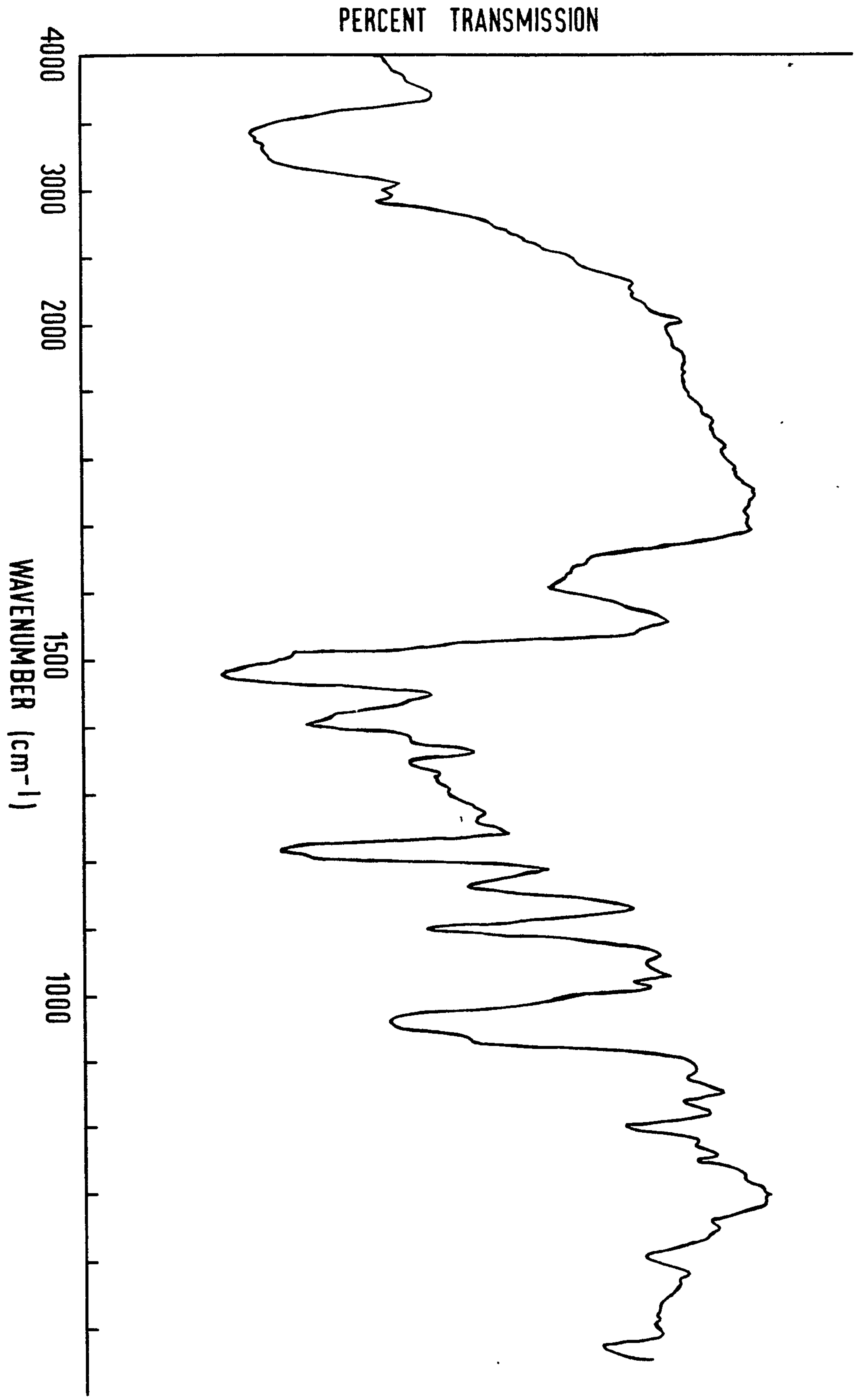
PERCENT TRANSMISSION
4000
3000
2000
1500
1000
WAVENUMBER (cm-1)

FIG.49.

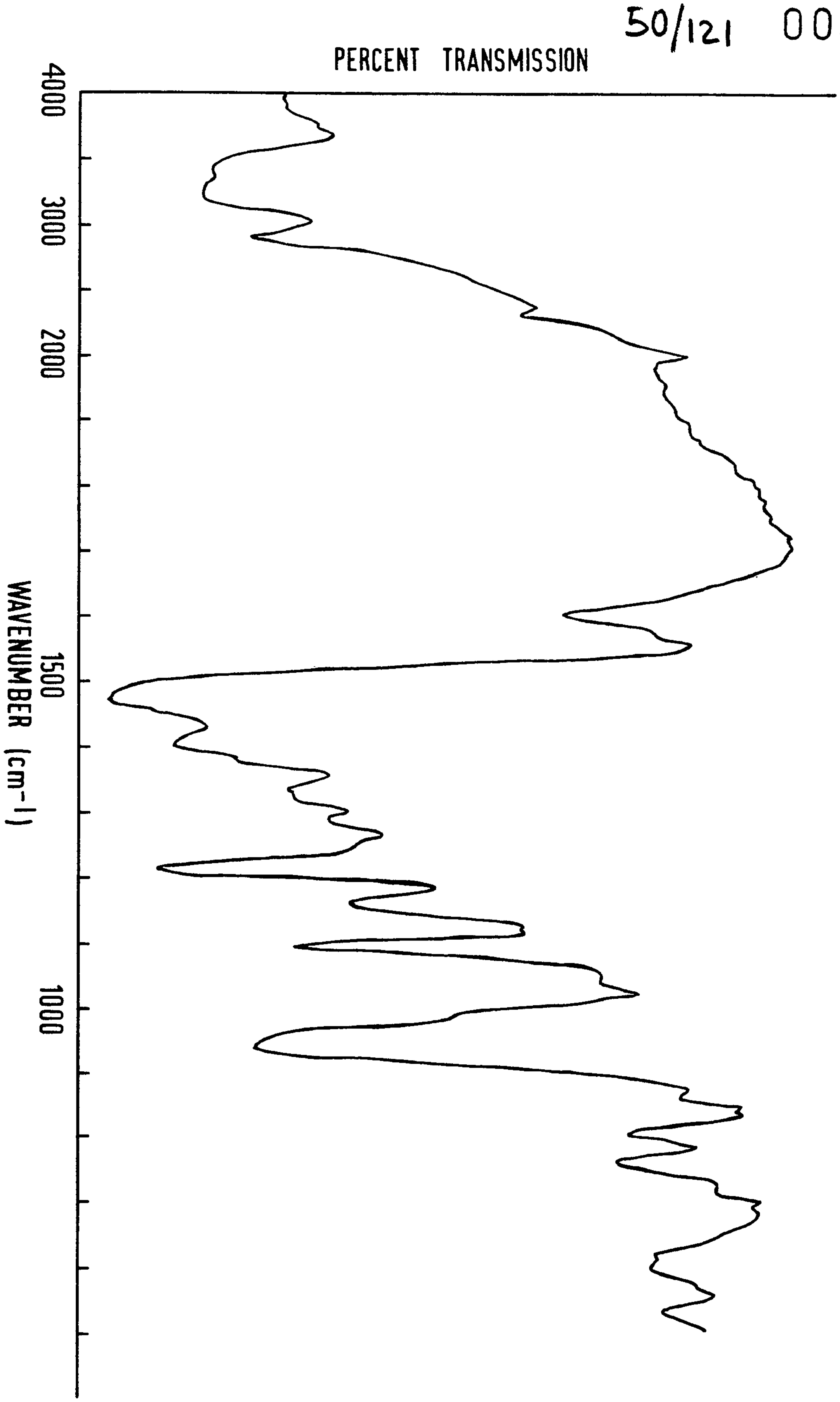
PERCENT TRANSMISSION
4000
3000
2000
1500
1000
WAVENUMBER (cm-1)

FIG.50.

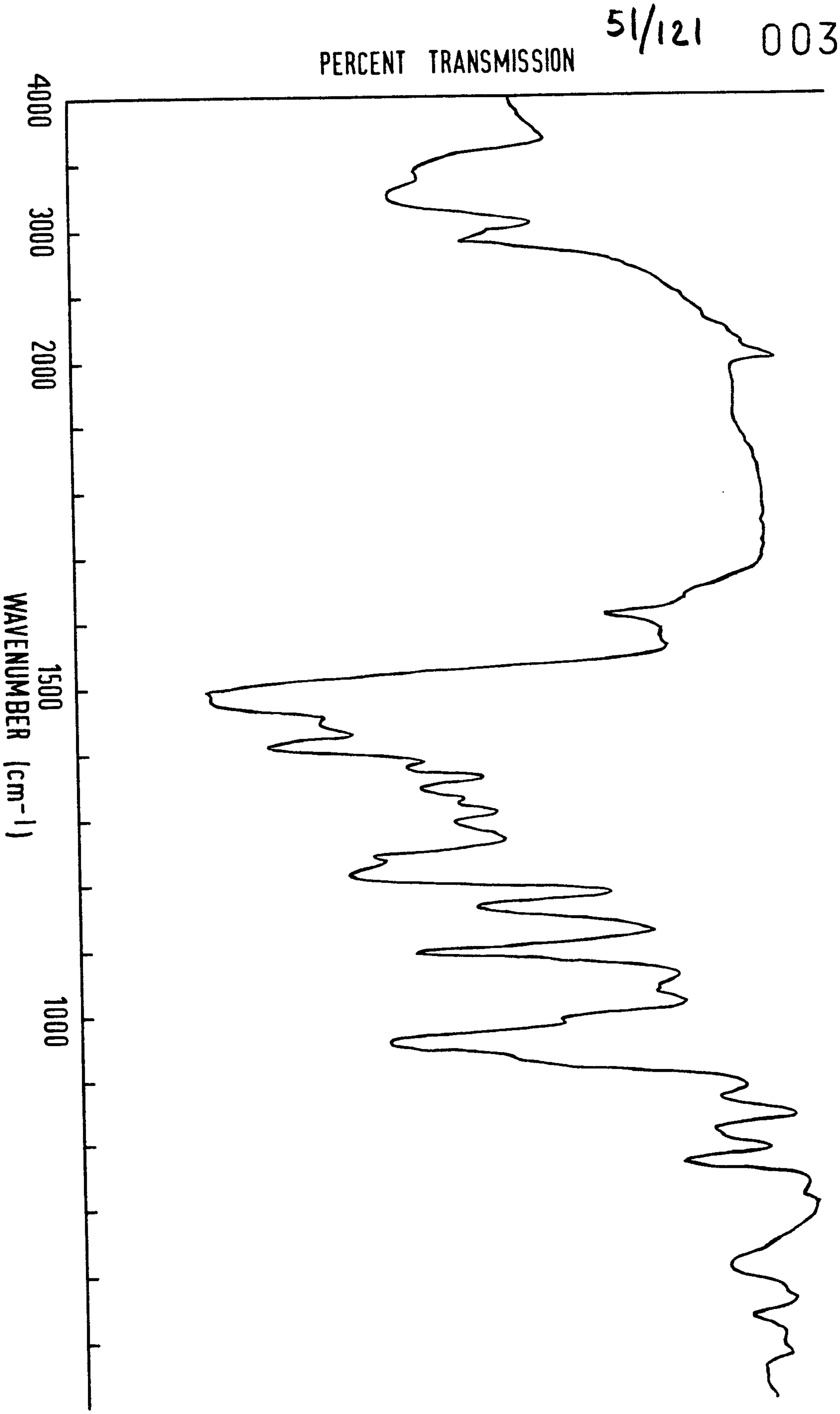
PERCENT TRANSMISSION
4000
3000
2000
1500
1000
WAVENUMBER (cm-1)

FIG.51.

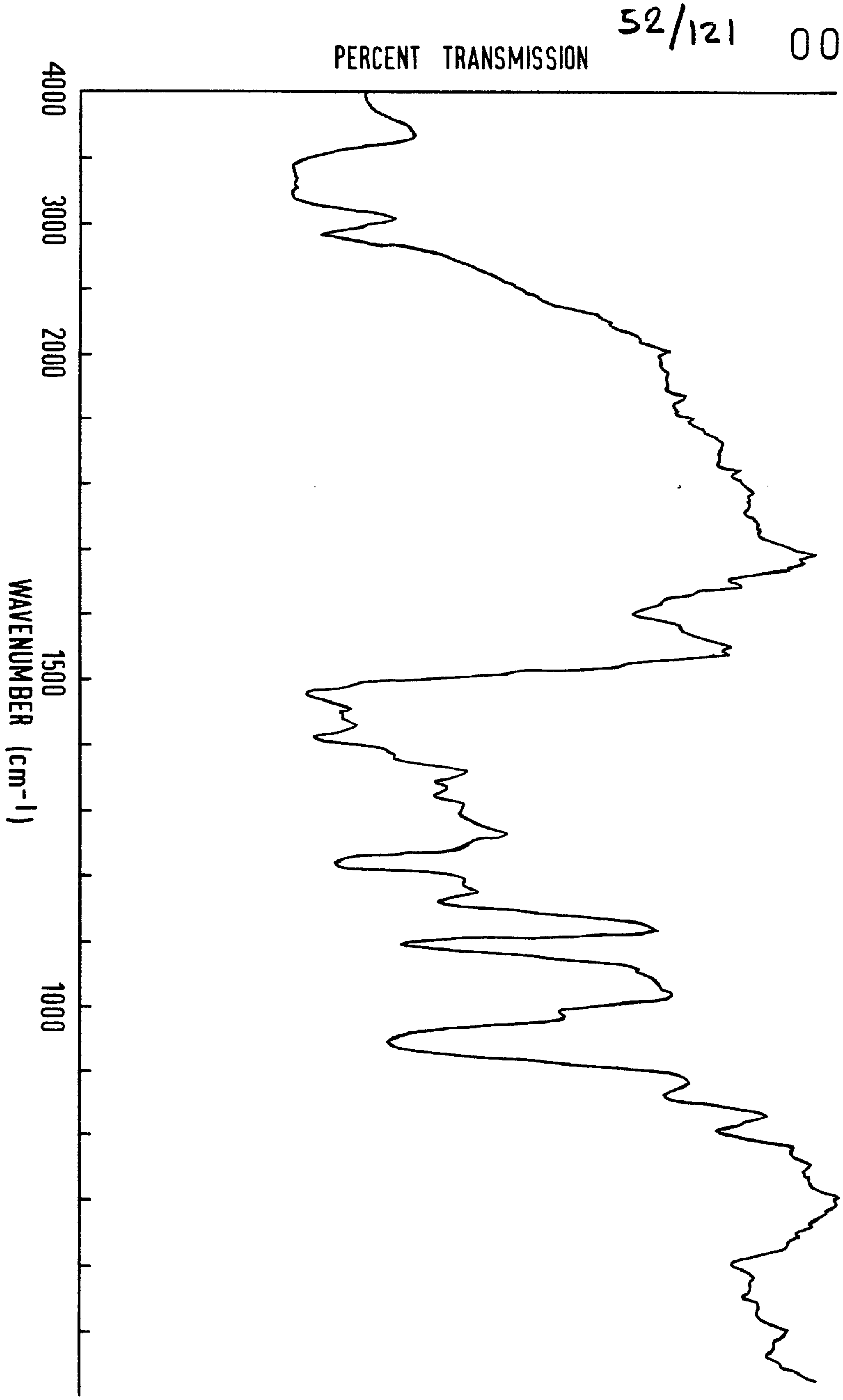
PERCENT TRANSMISSION
4000
3000
2000
1500
1000
WAVENUMBER (cm-1)

FIG.52.

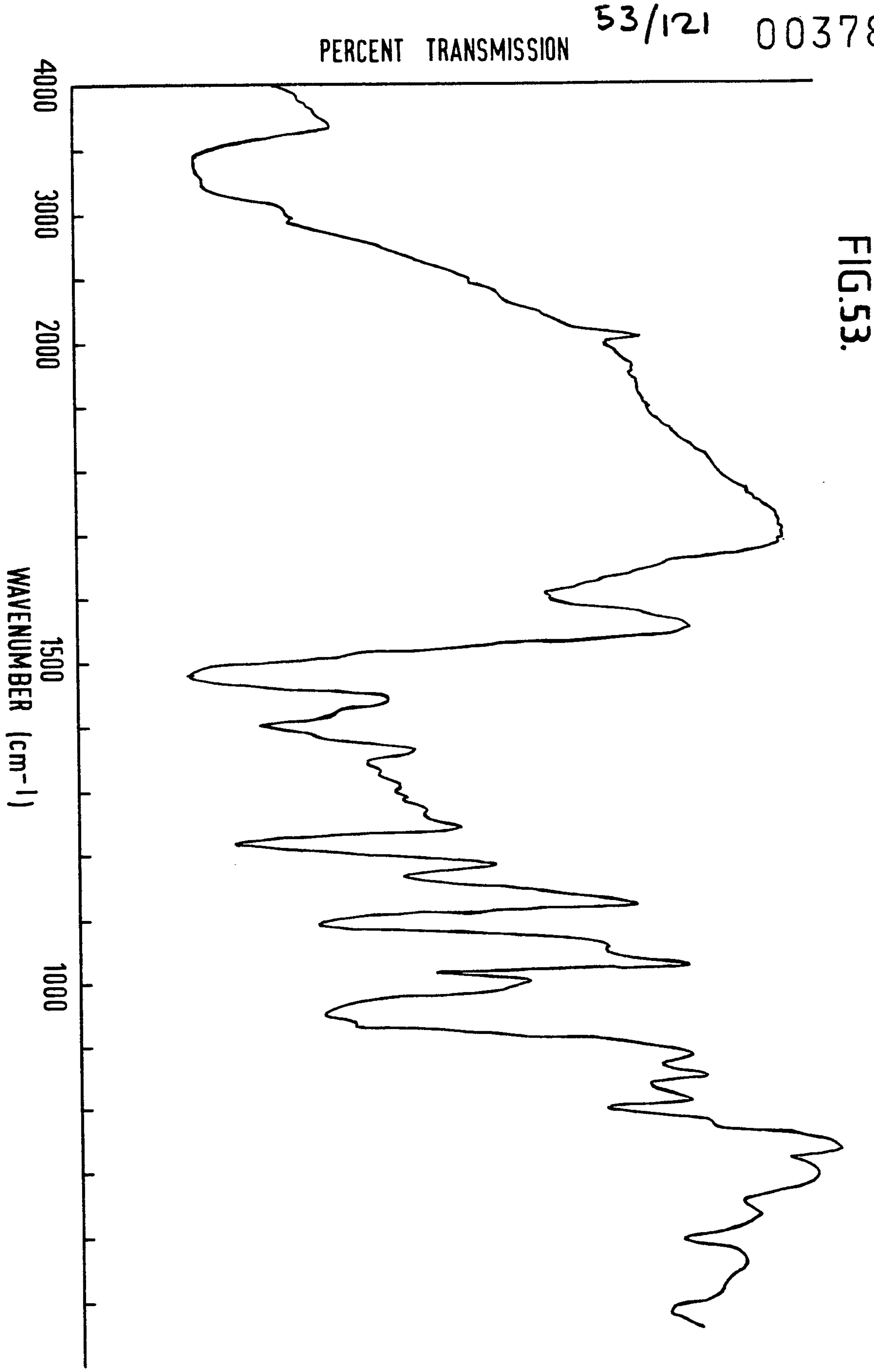
PERCENT TRANSMISSION
4000
3000
2000
1500
1000
WAVENUMBER (cm⁻¹)

FIG.53.

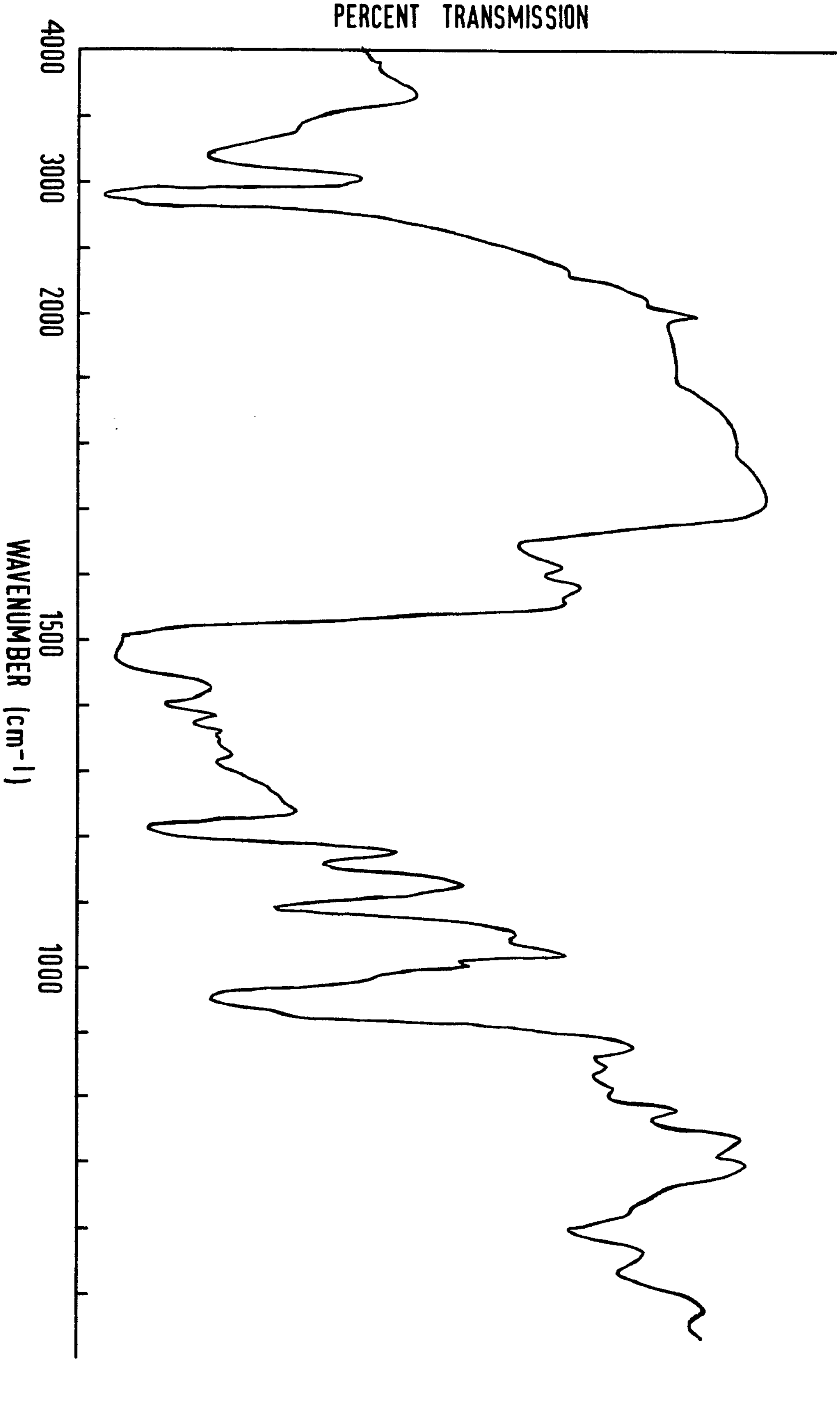
PERCENT TRANSMISSION
4000
3000
2000
1500
1000
WAVENUMBER (cm-1)

FIG.54.

55/121 0037861

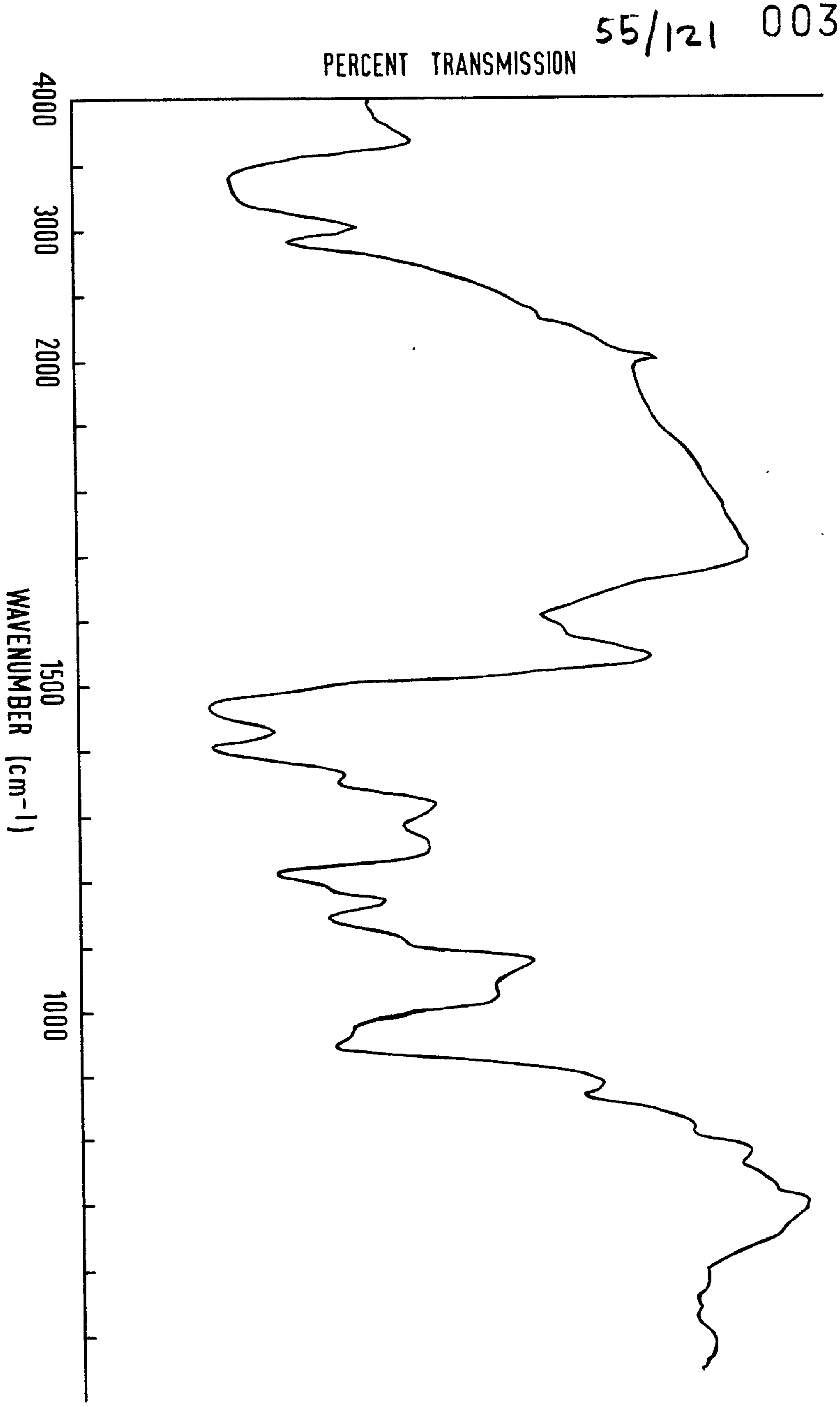


FIG.55.

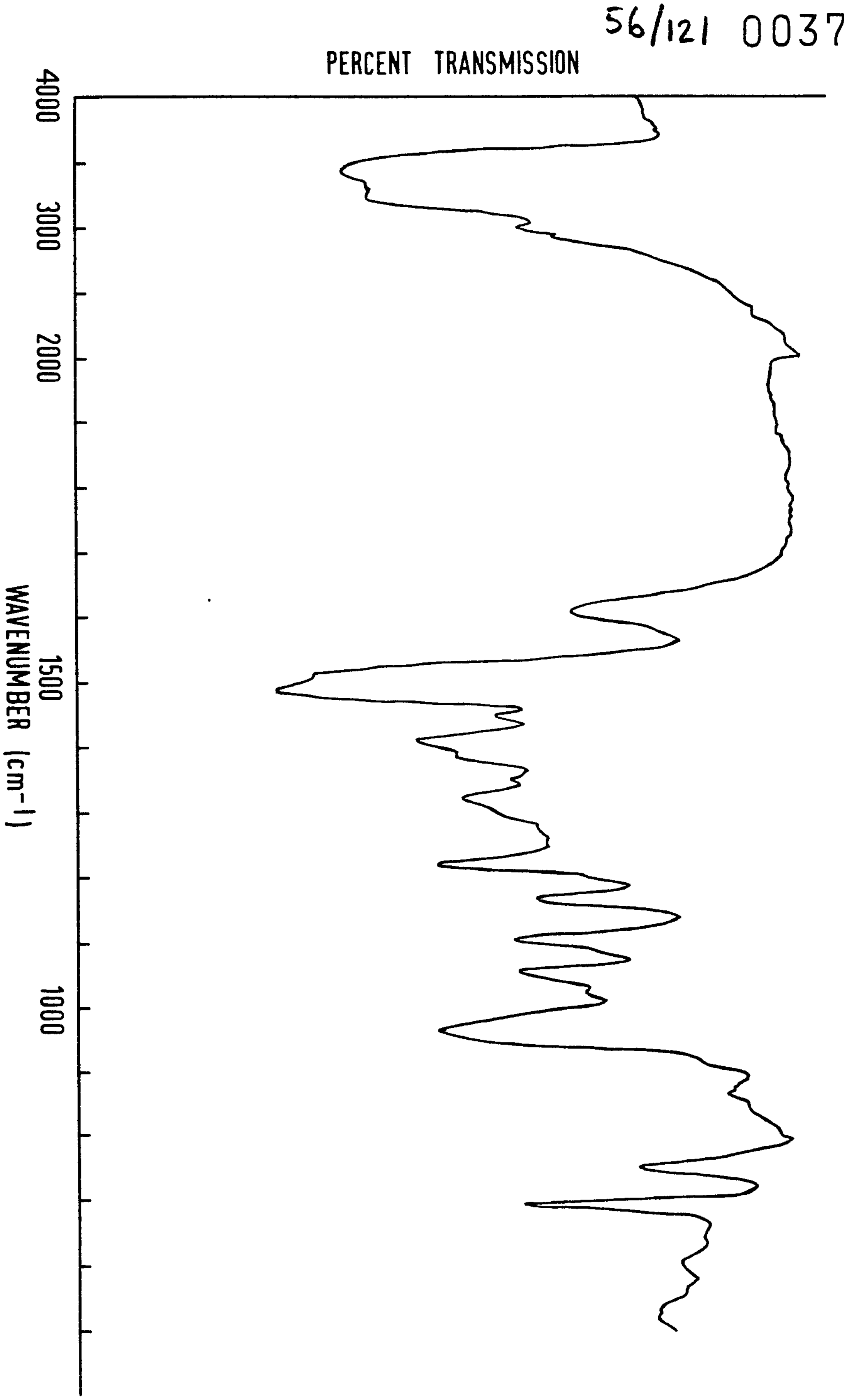
PERCENT TRANSMISSION
4000
3000
2000
1500
1000
WAVENUMBER (cm-1)

FIG.56.

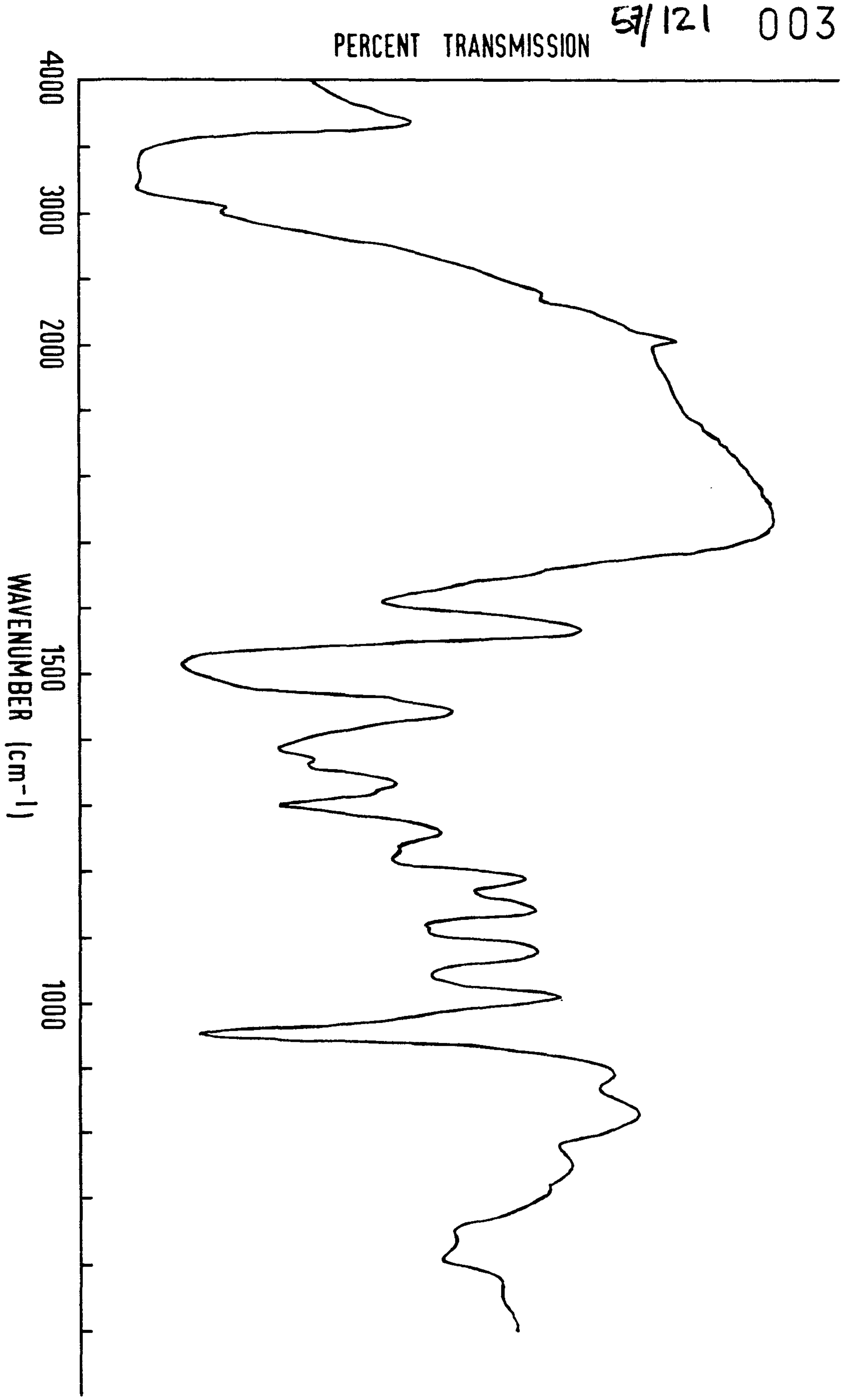
PERCENT TRANSMISSION
4000
3000
2000
1500
1000
WAVENUMBER (cm-1)

FIG.57.

FIG.58.

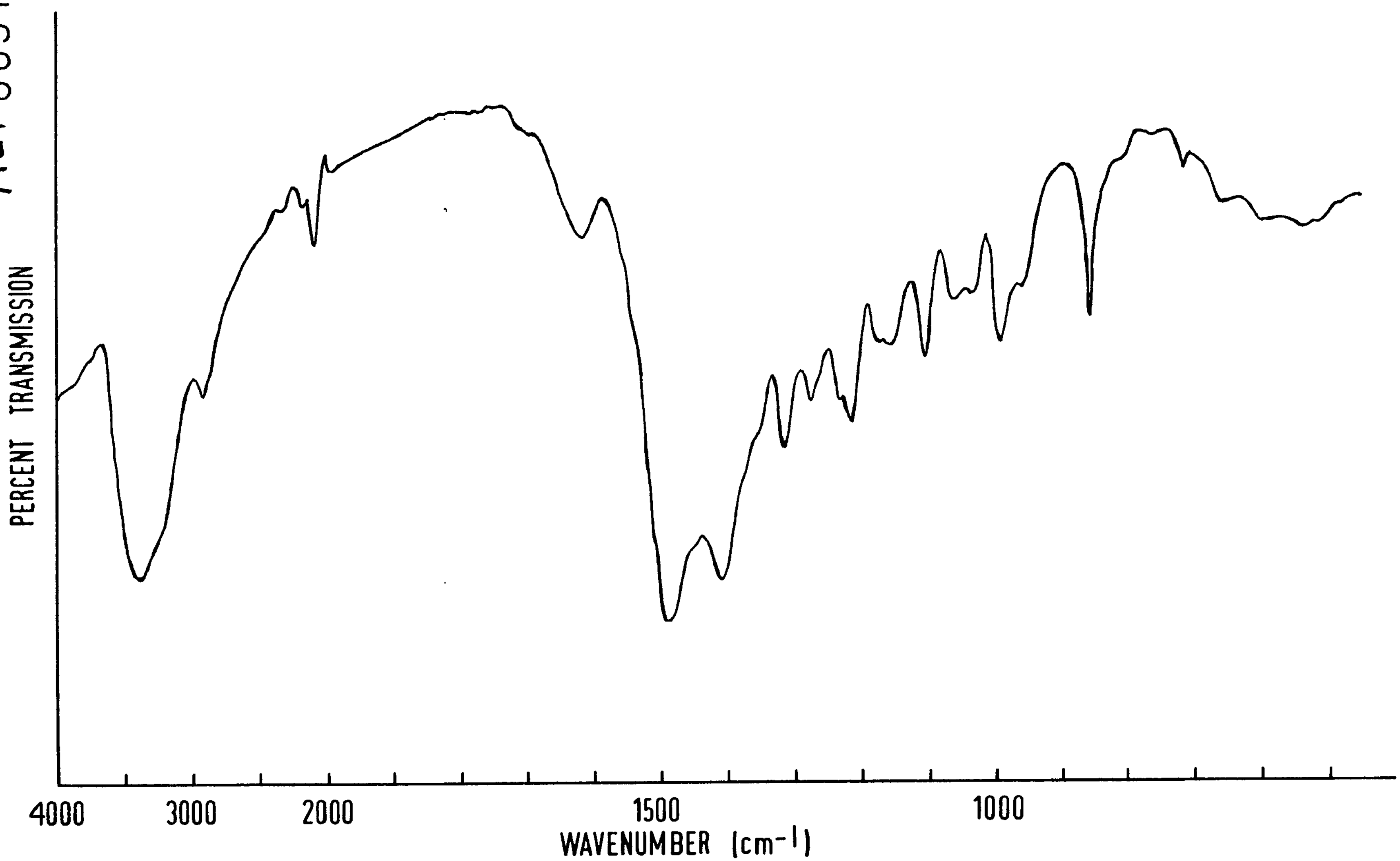
PERCENT TRANSMISSION
4000
3000
2000
1500
1000
WAVENUMBER (cm-1)

59/121 0037861

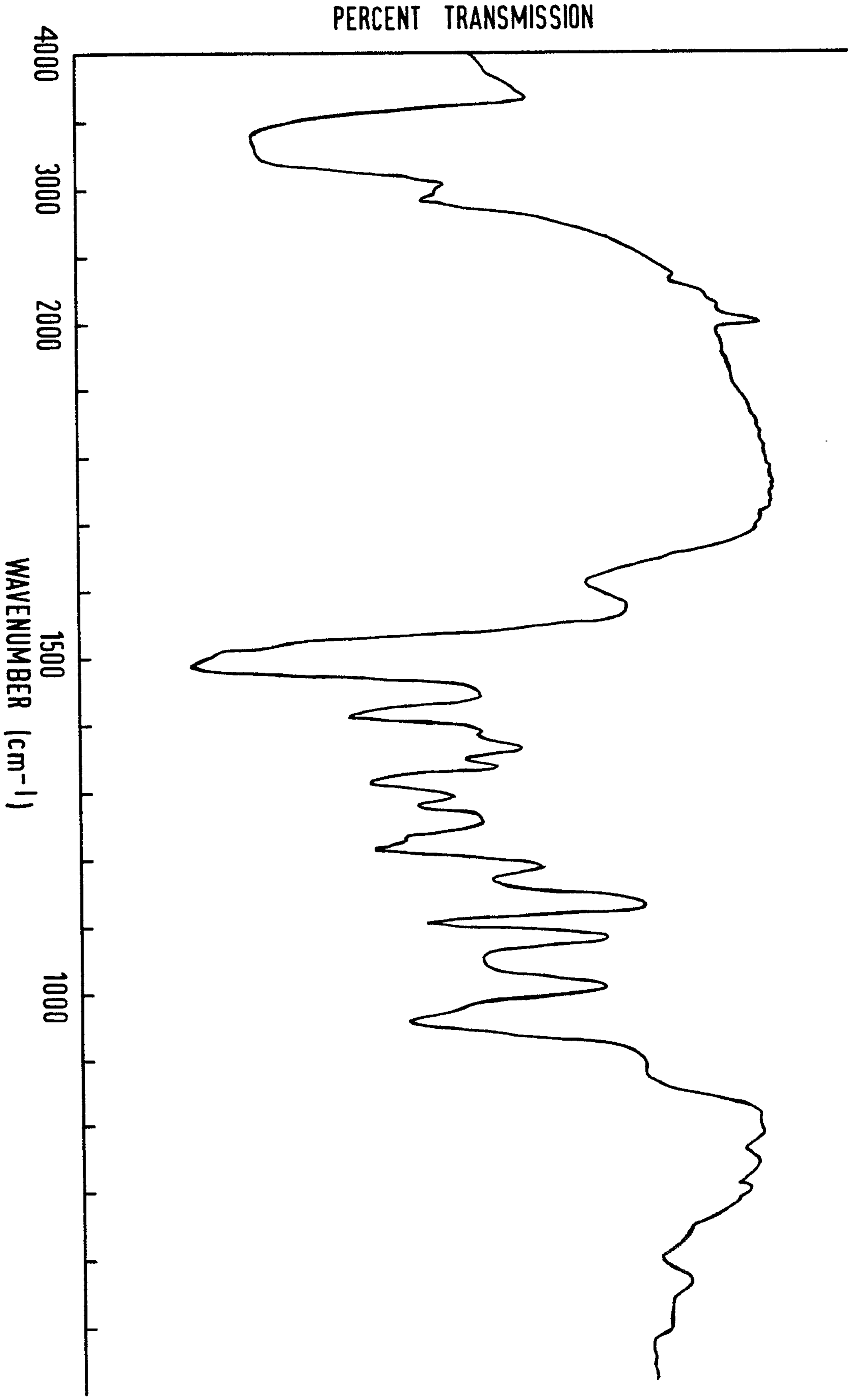


FIG.59.

FIG.60.

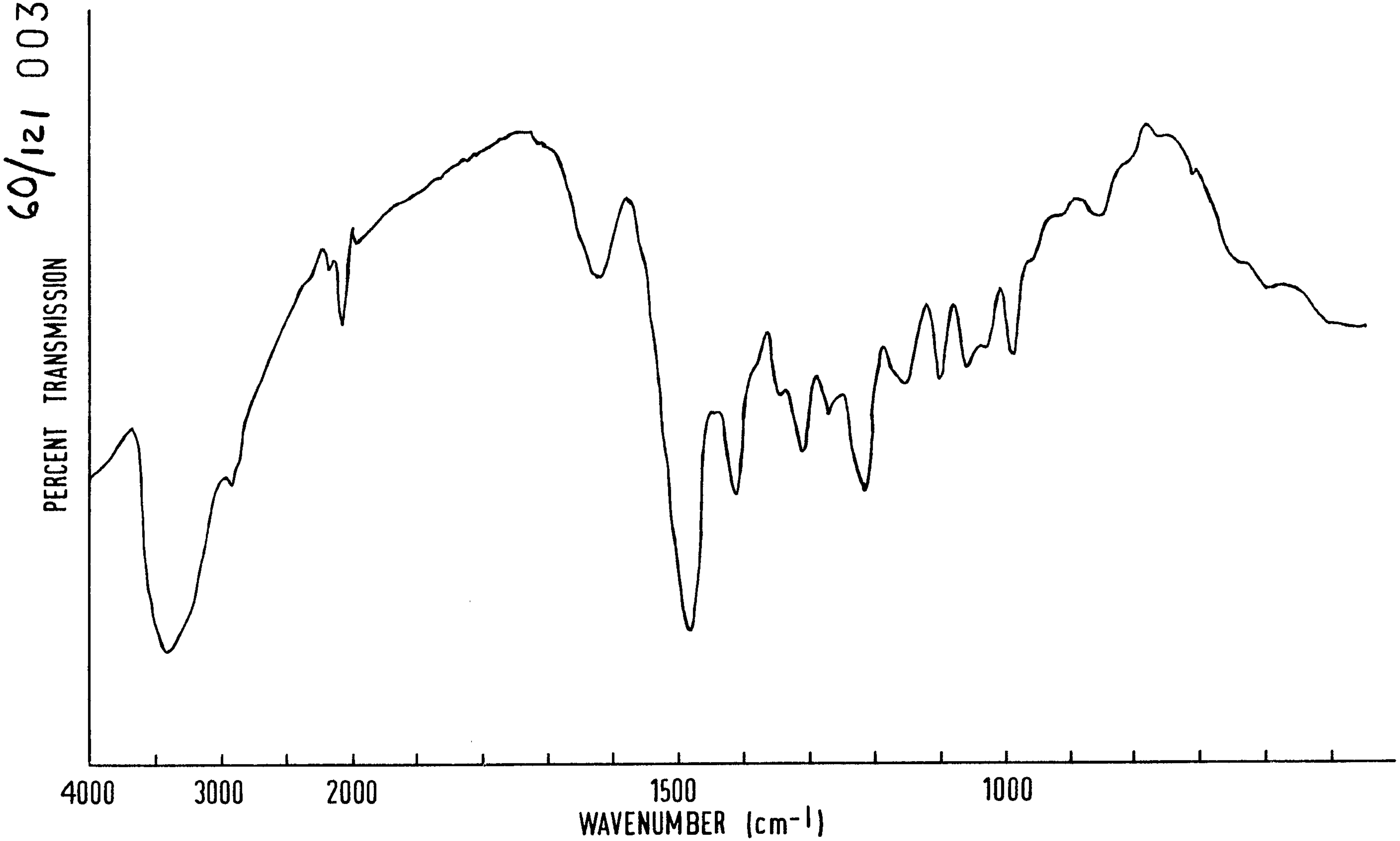

PERCENT TRANSMISSION
4000
3000
2000
1500
1000
WAVENUMBER (cm-1)

FIG.61.

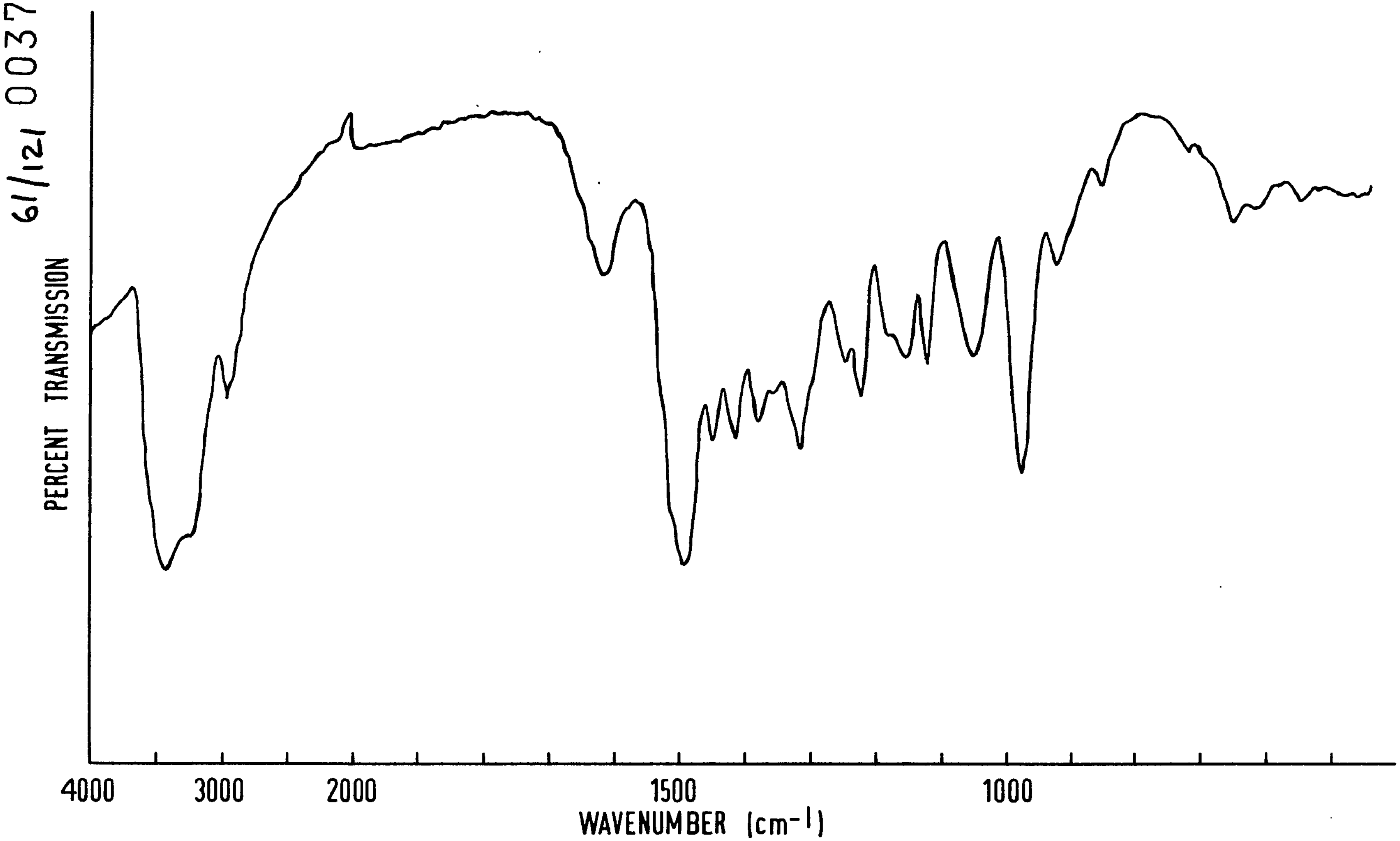
PERCENT TRANSMISSION
4000
3000
2000
1500
1000
WAVENUMBER (cm-1)

FIG.62

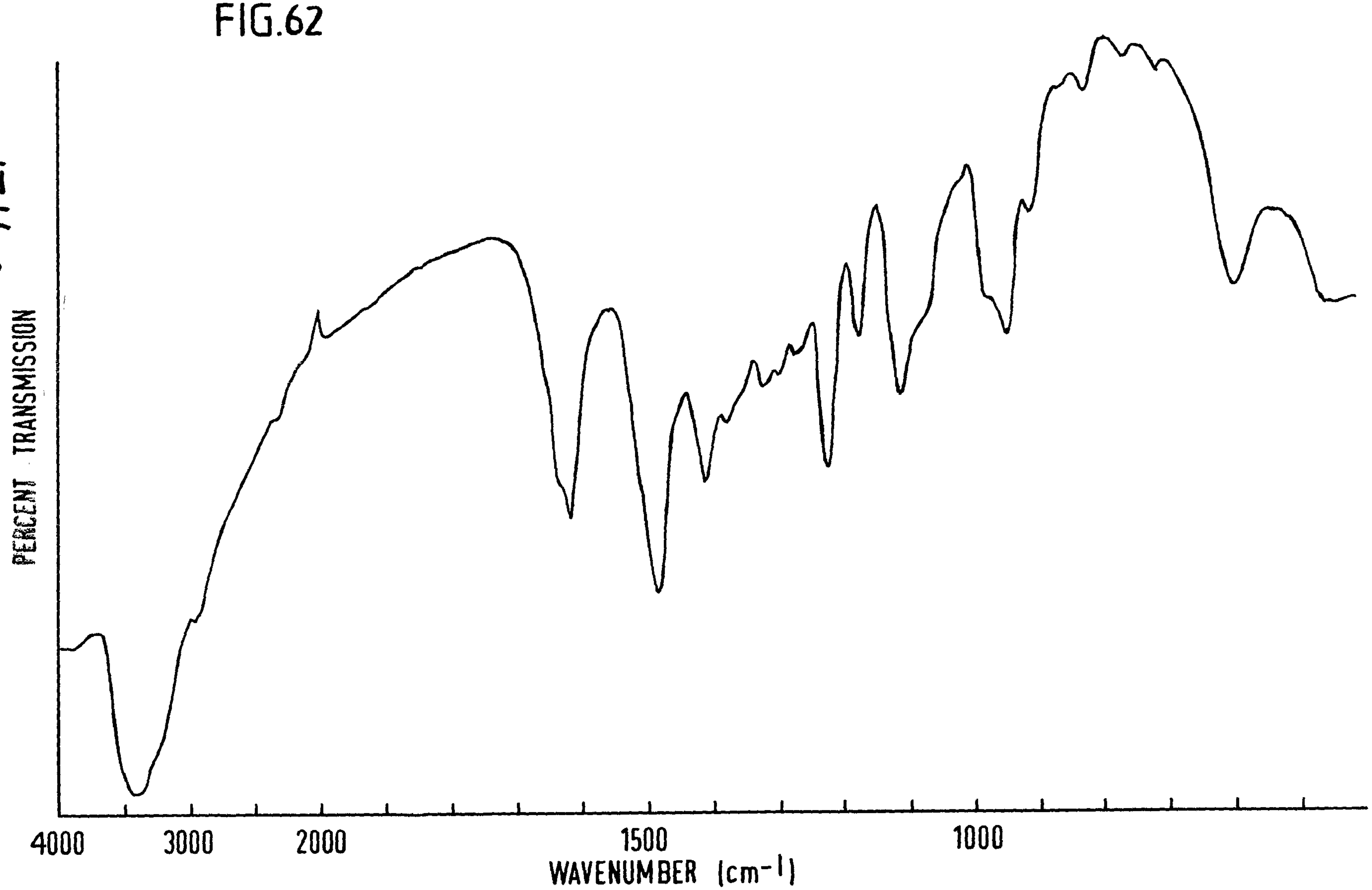
PERCENT TRANSMISSION
4000
3000
2000
1500
1000
WAVENUMBER (cm-1)

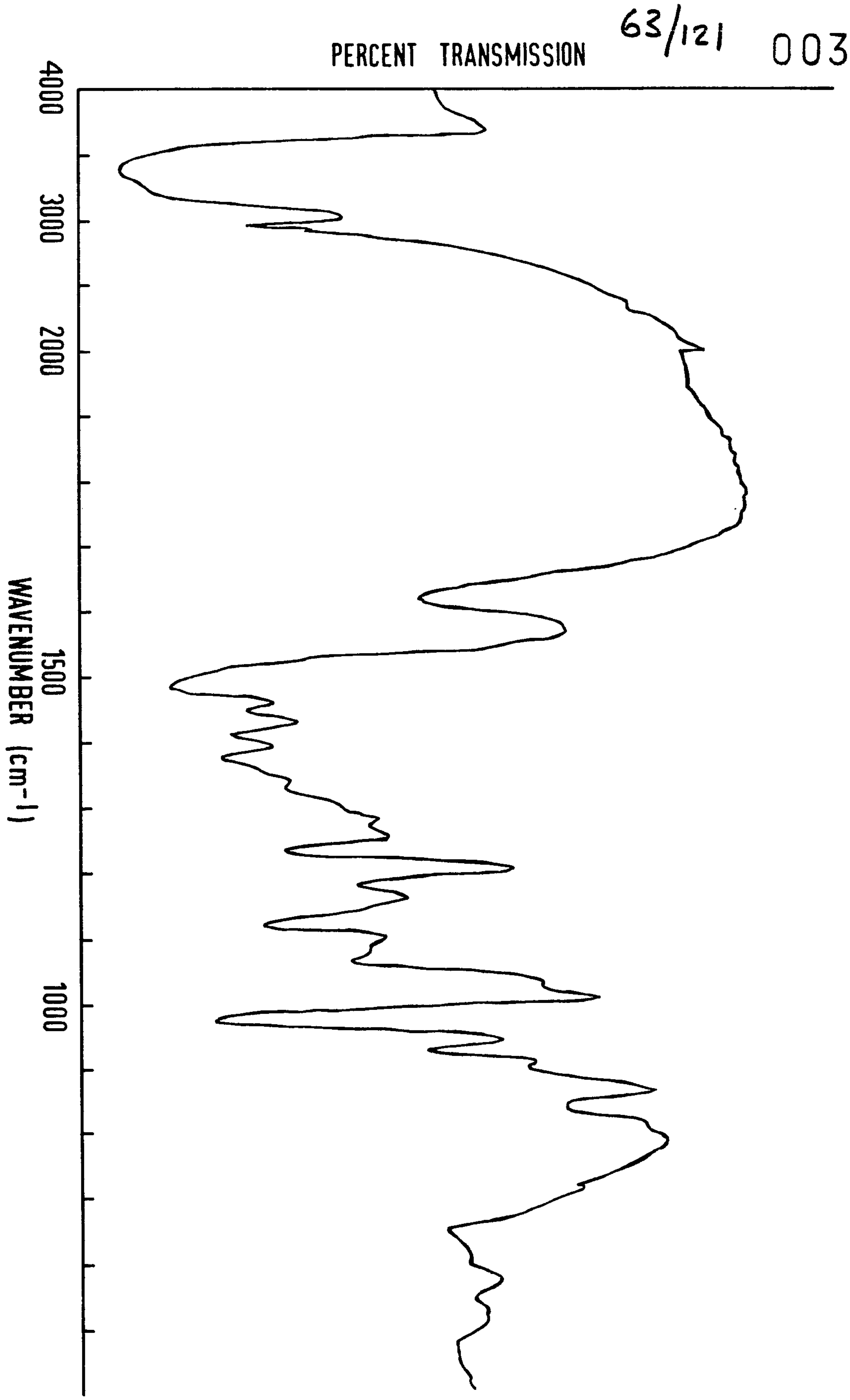
PERCENT TRANSMISSION
4000
3000
2000
1500
1000
WAVENUMBER (cm$^{-1}$)

FIG.63.

FIG.64.

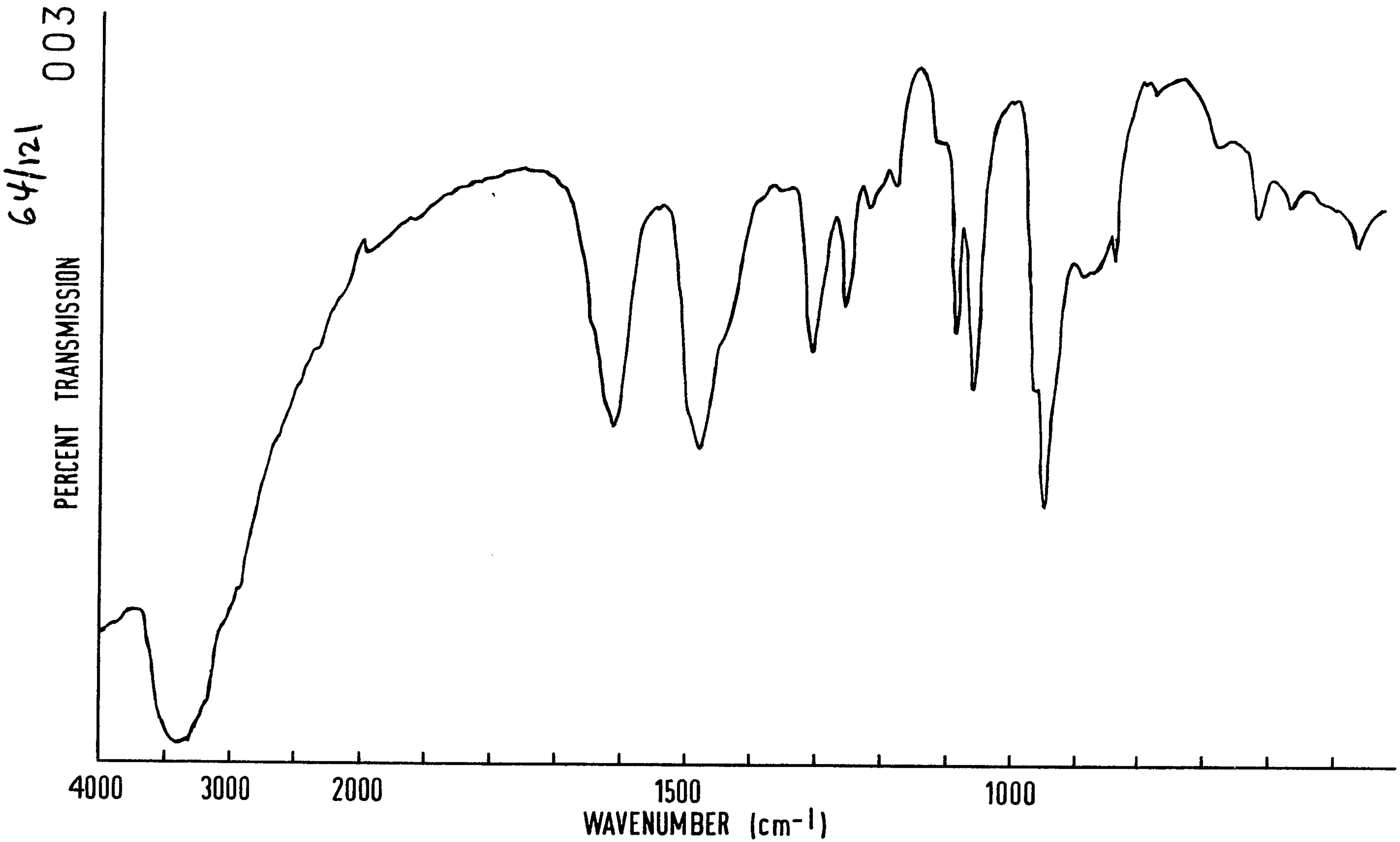
PERCENT TRANSMISSION
4000
3000
2000
1500
1000
WAVENUMBER (cm-1)

FIG.65.

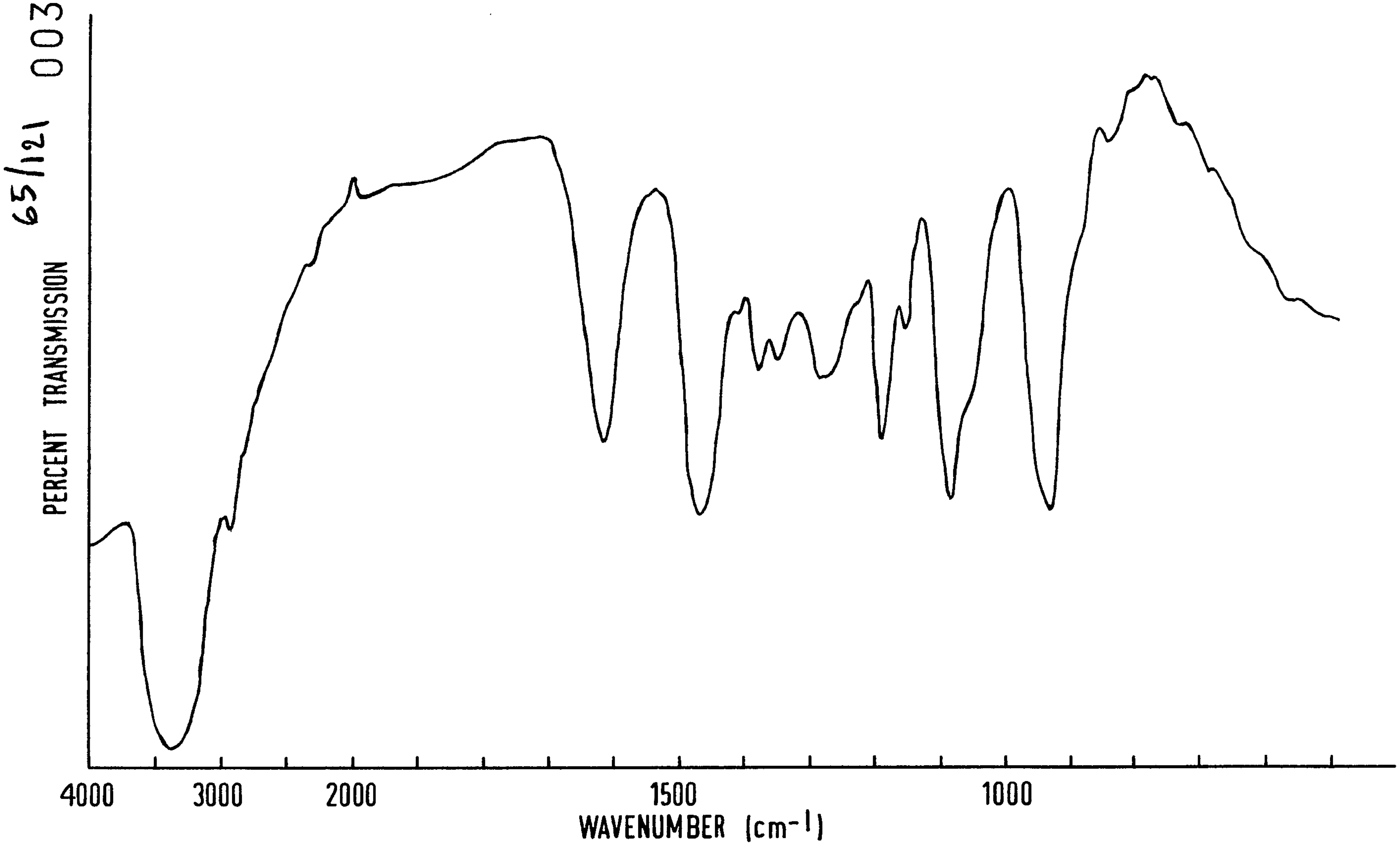
PERCENT TRANSMISSION
4000
3000
2000
1500
1000
WAVENUMBER (cm-1)

66/121 0037861

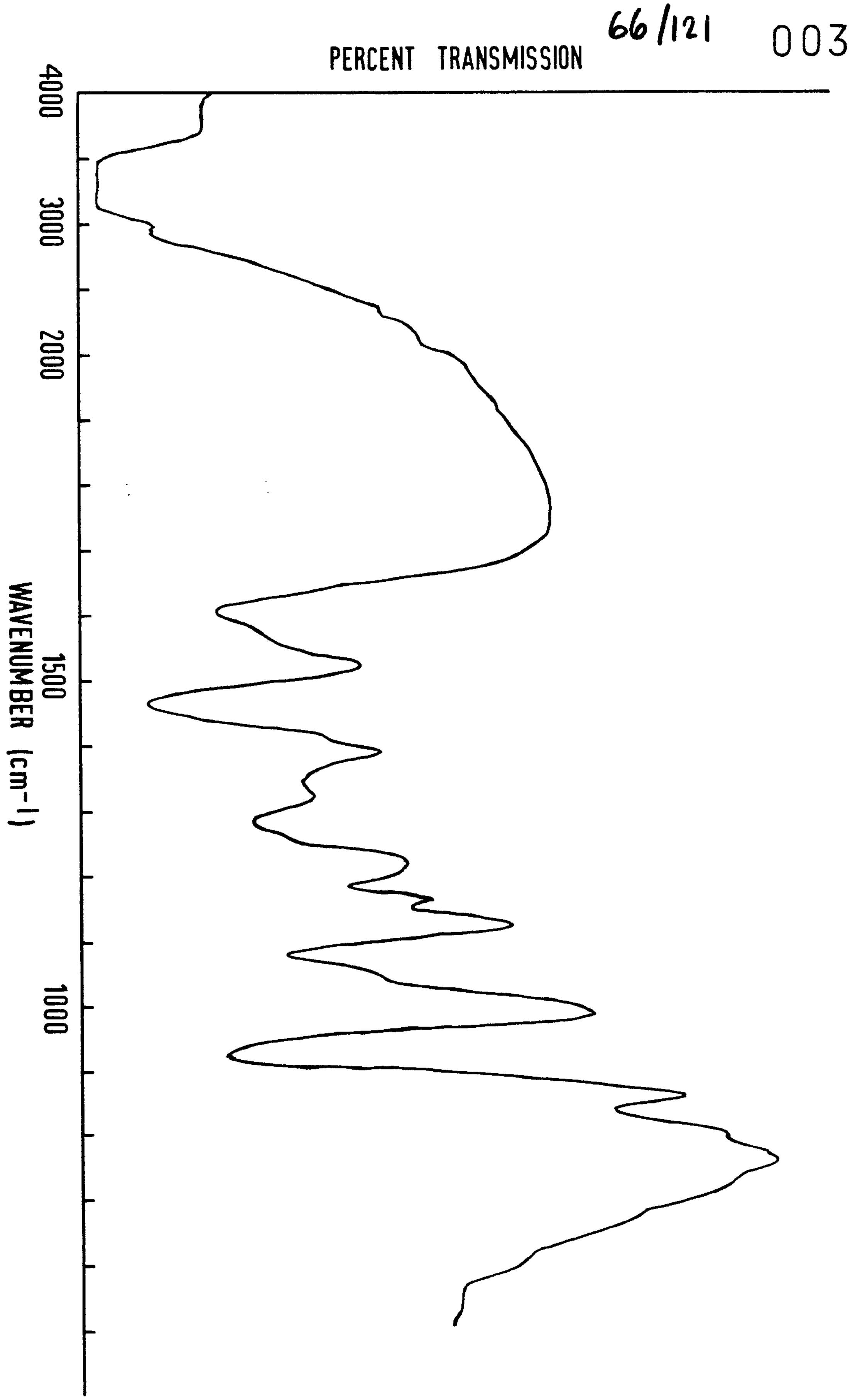


FIG.66.

FIG.67.

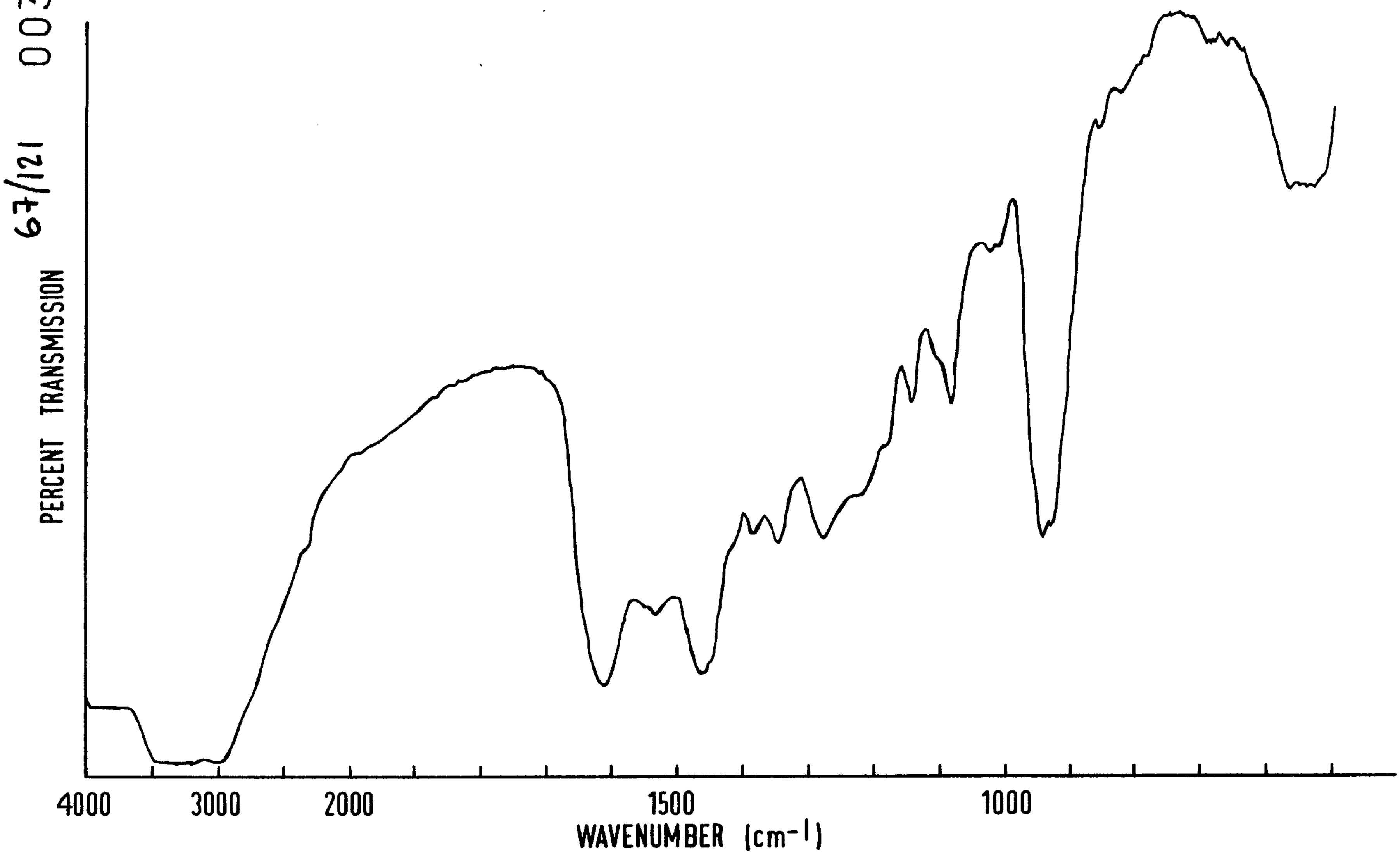
PERCENT TRANSMISSION
4000
3000
2000
1500
1000
WAVENUMBER (cm-1)

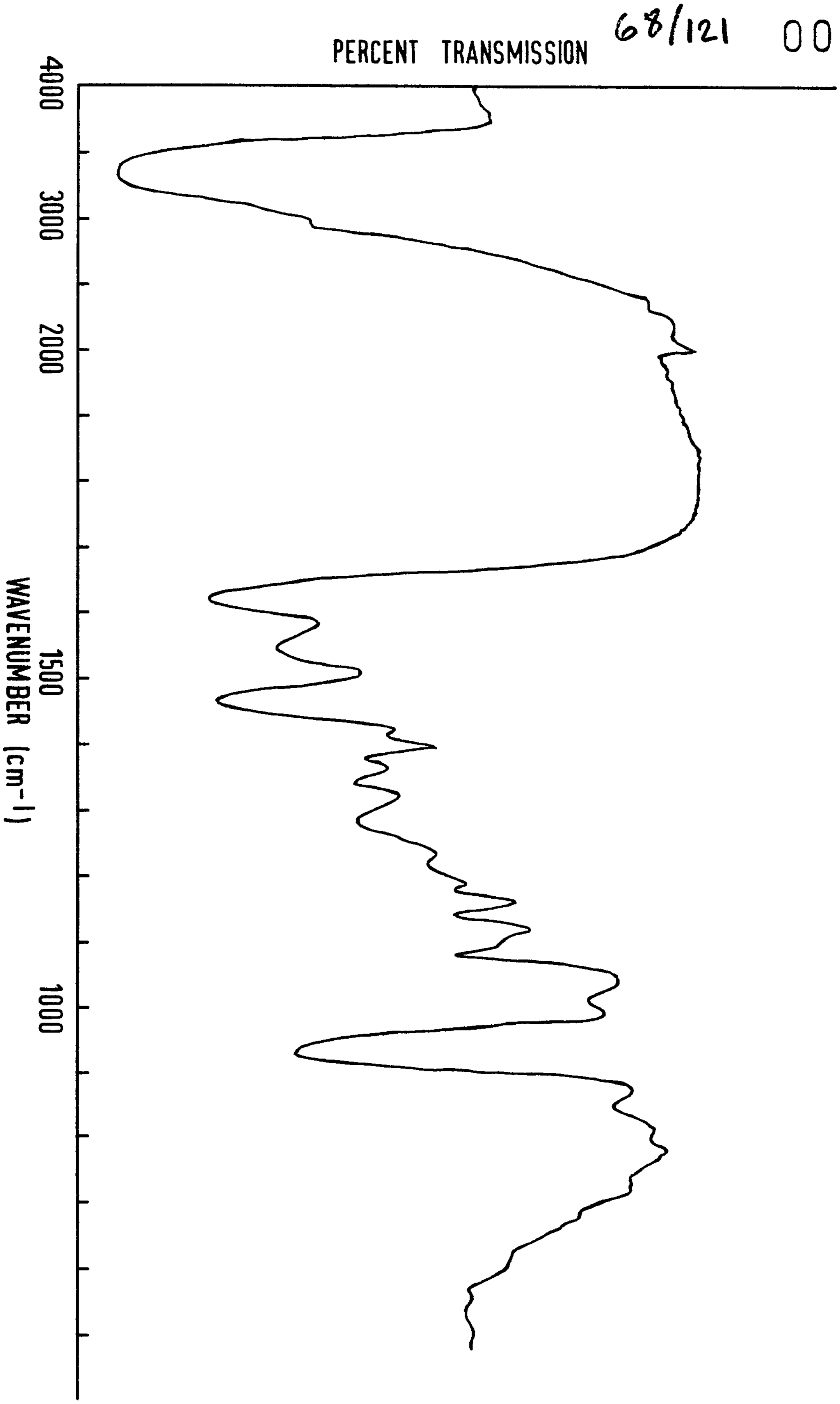
PERCENT TRANSMISSION
4000
3000
2000
1500
1000
WAVENUMBER (cm⁻¹)

FIG.68.

69/121 0037861

PERCENT TRANSMISSION

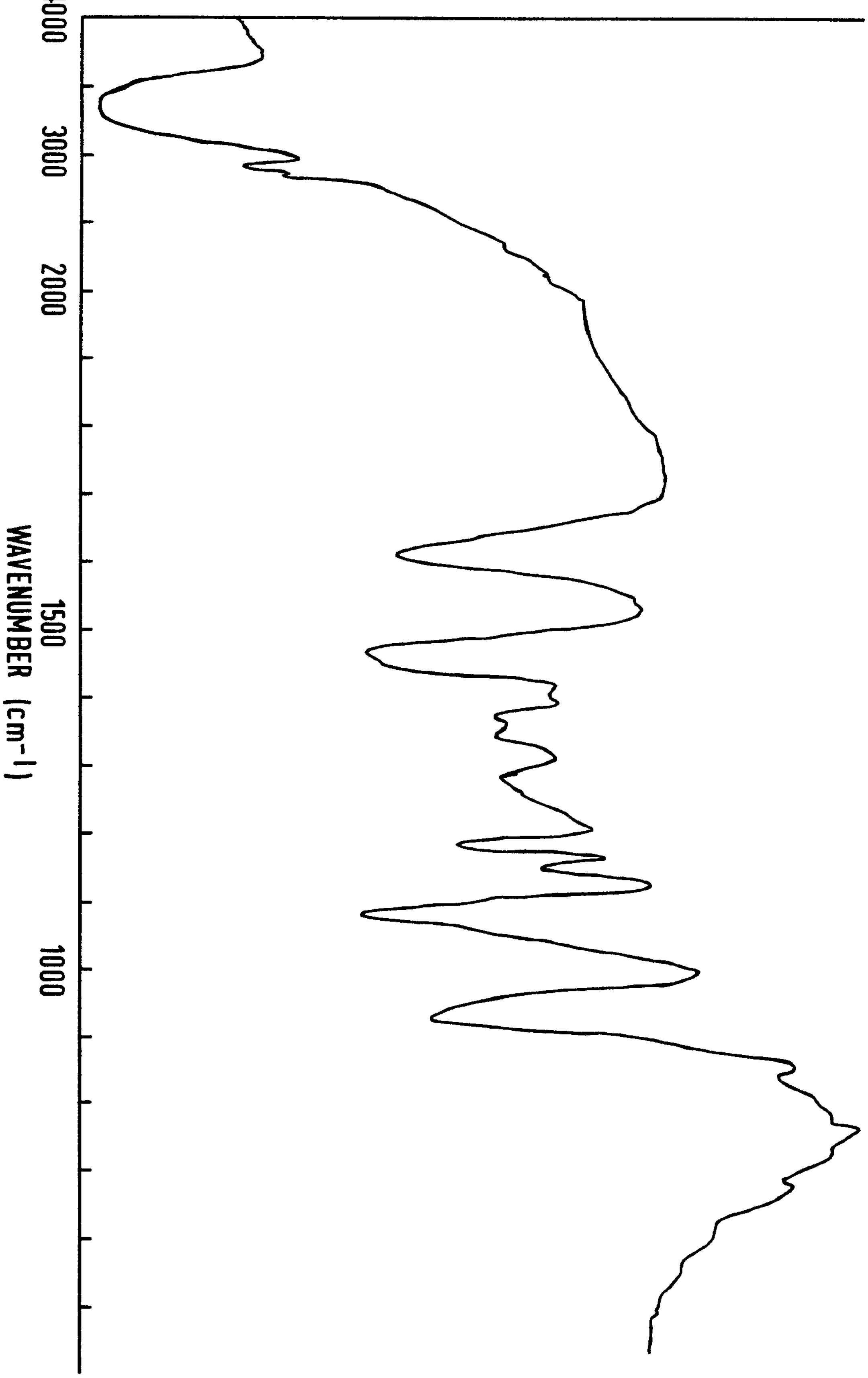


FIG.69.

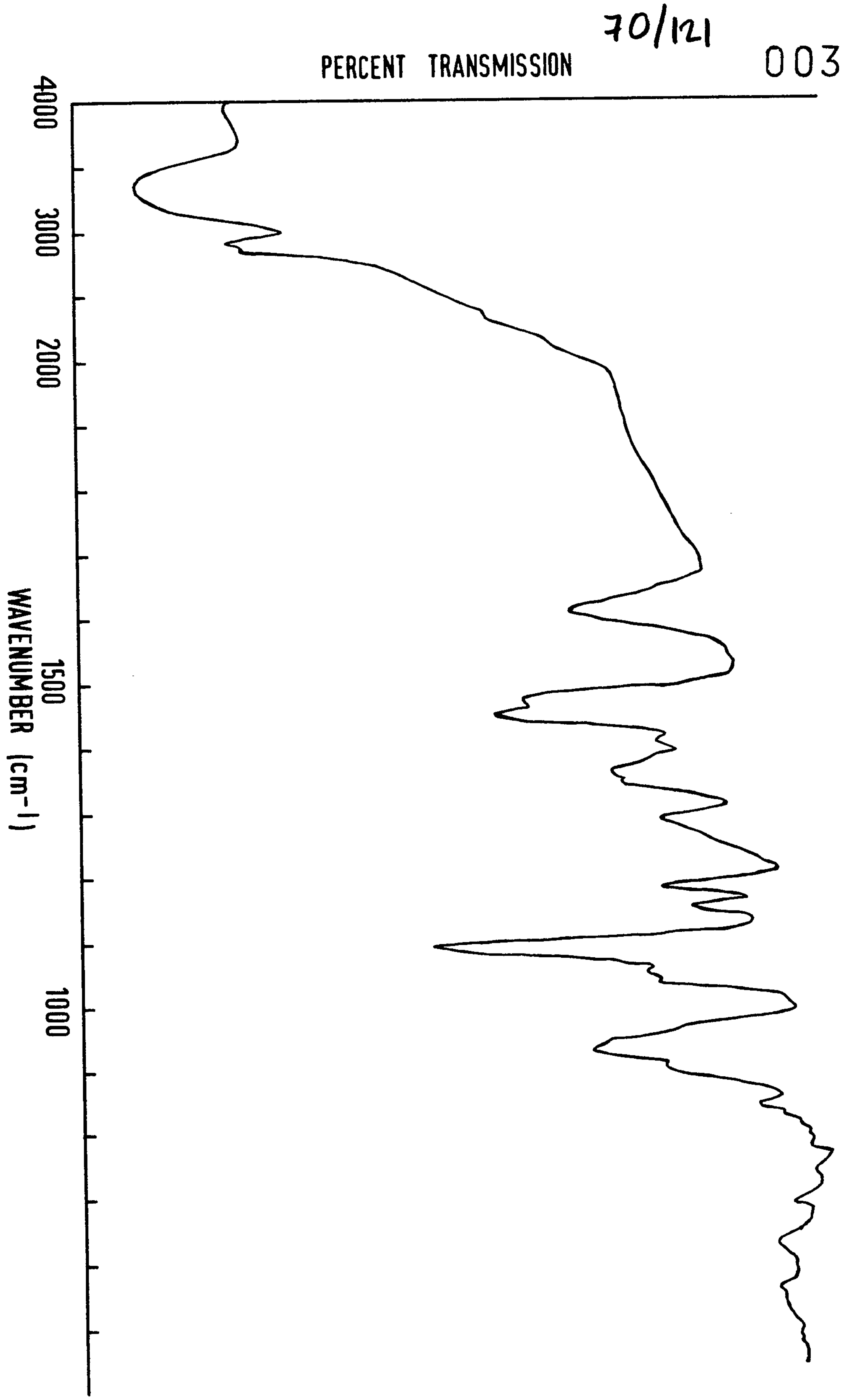
PERCENT TRANSMISSION
4000
3000
2000
1500
1000
WAVENUMBER (cm⁻¹)

FIG.70.

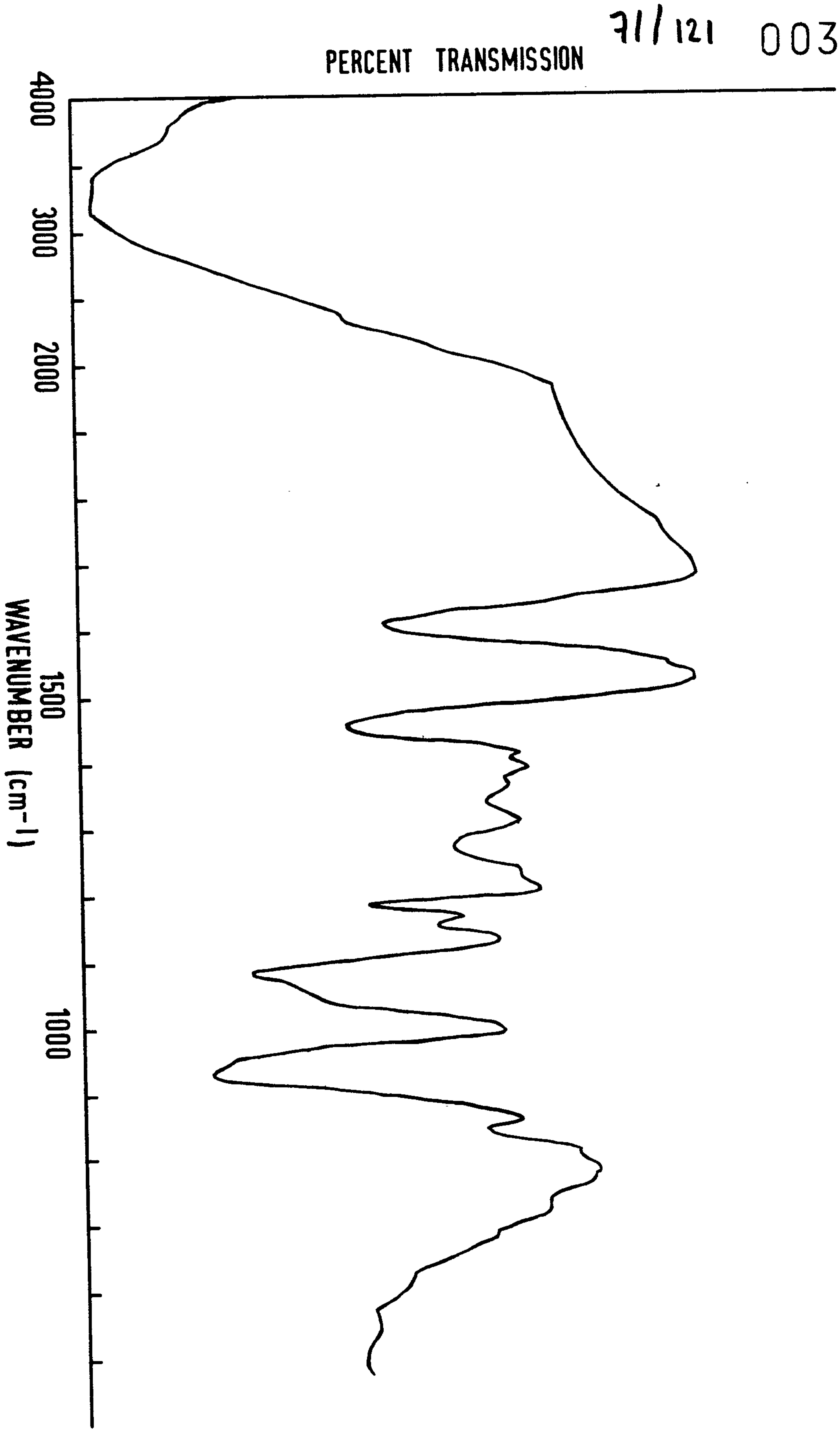
PERCENT TRANSMISSION
4000
3000
2000
1500
1000
WAVENUMBER (cm⁻¹)

FIG.71.

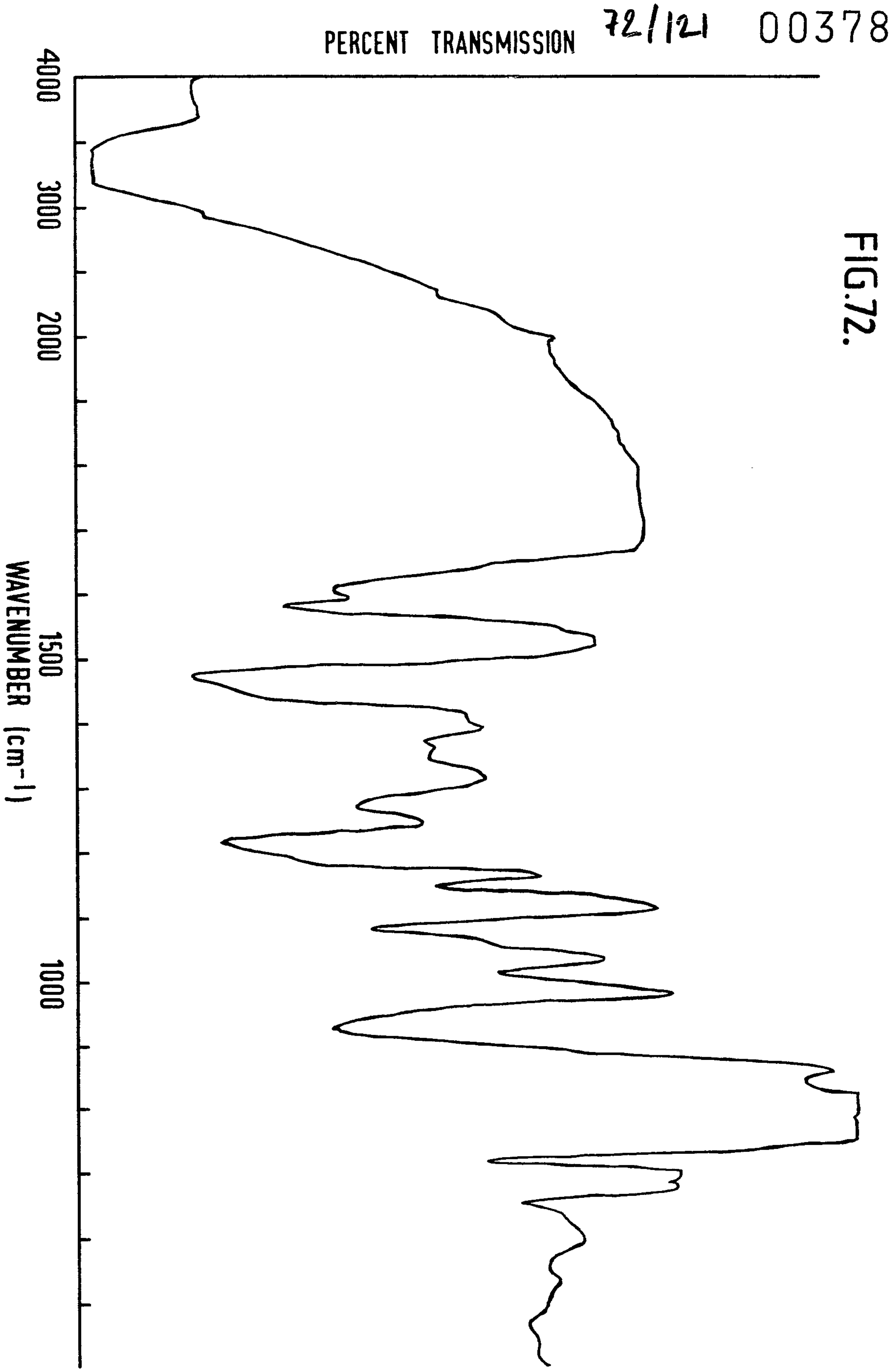
PERCENT TRANSMISSION
4000
3000
2000
1500
1000
WAVENUMBER (cm⁻¹)

FIG.72.

PERCENT TRANSMISSION

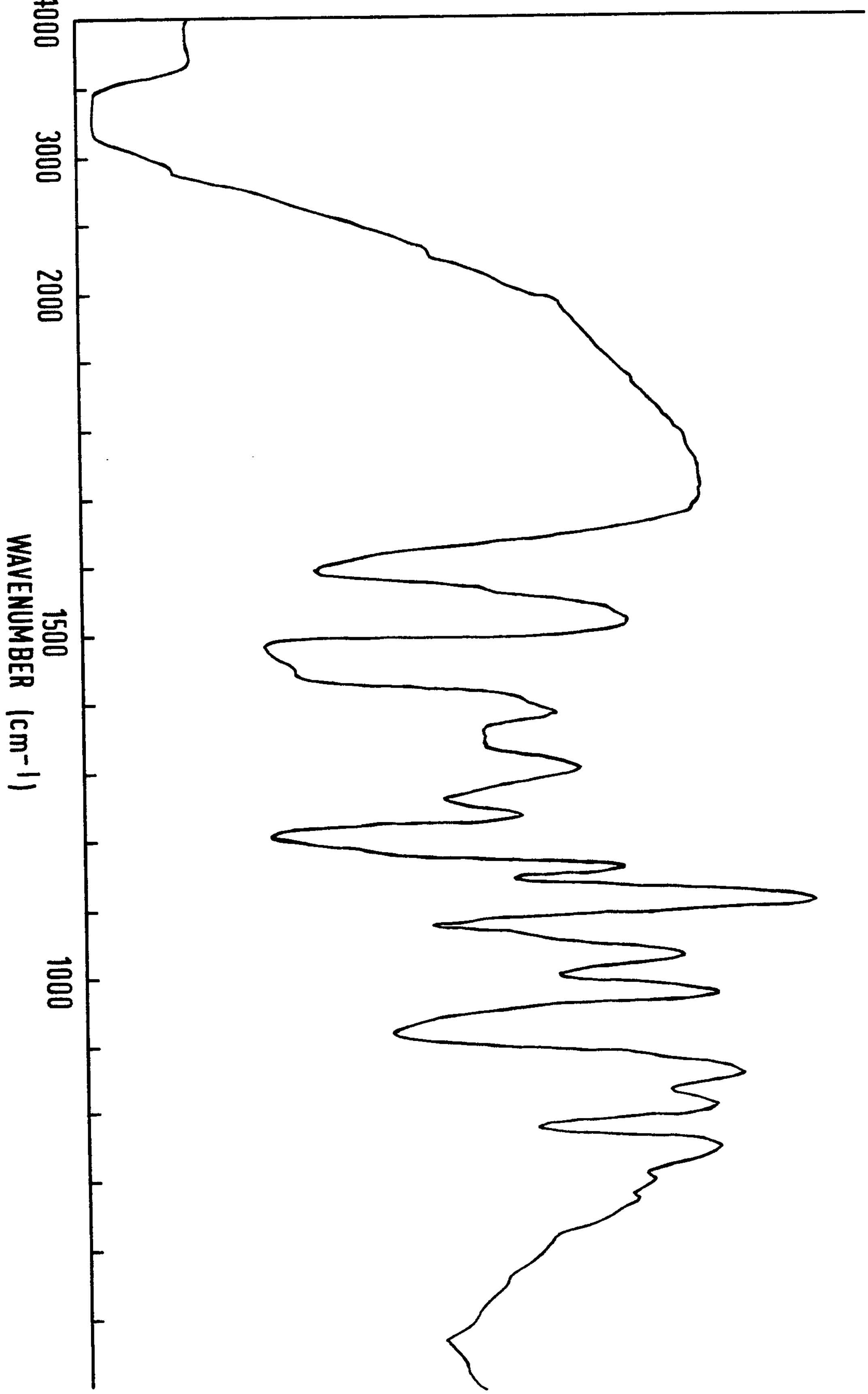


FIG.73.

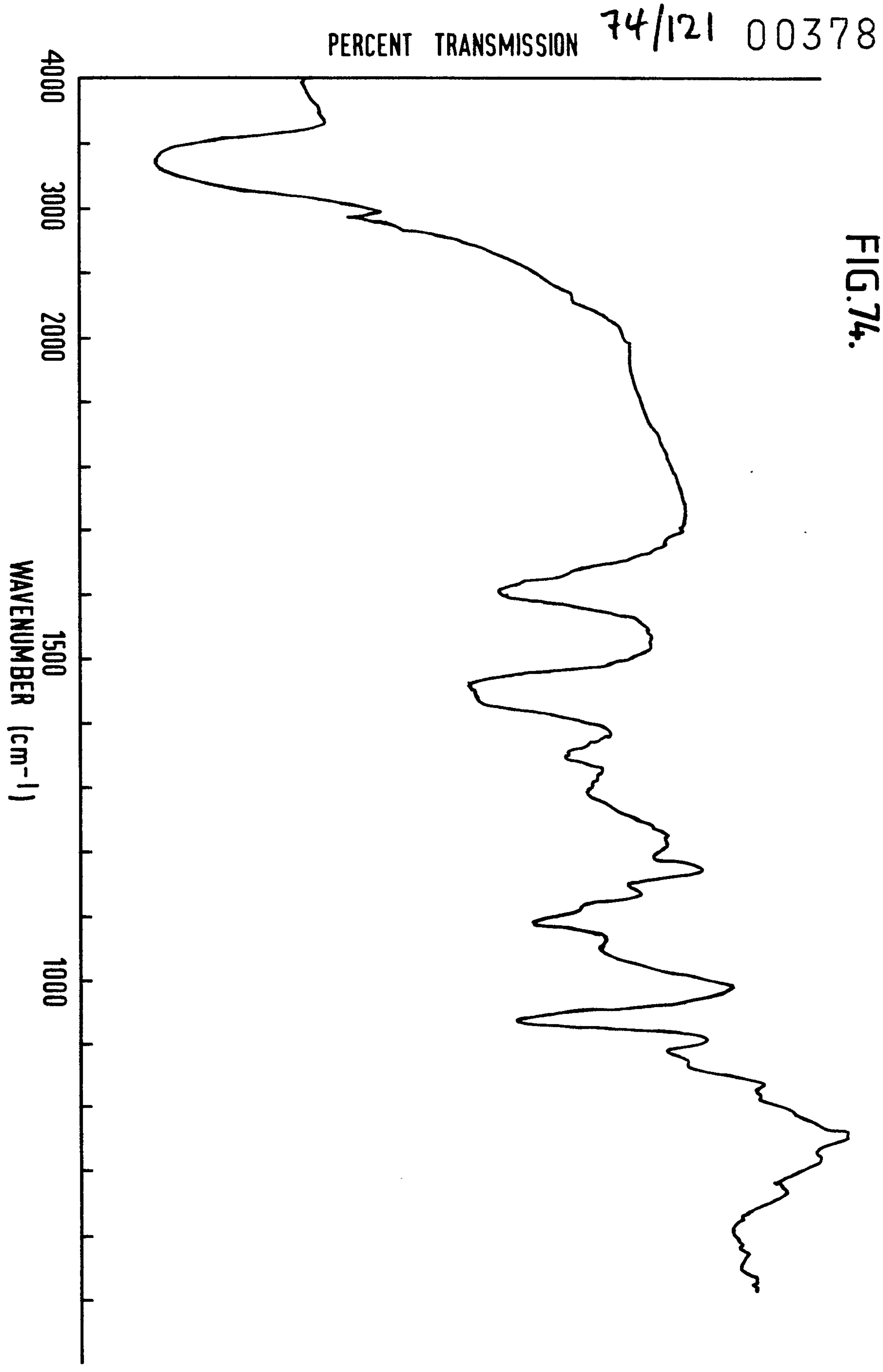
PERCENT TRANSMISSION
4000
3000
2000
1500
1000
WAVENUMBER (cm-1)

FIG.74.

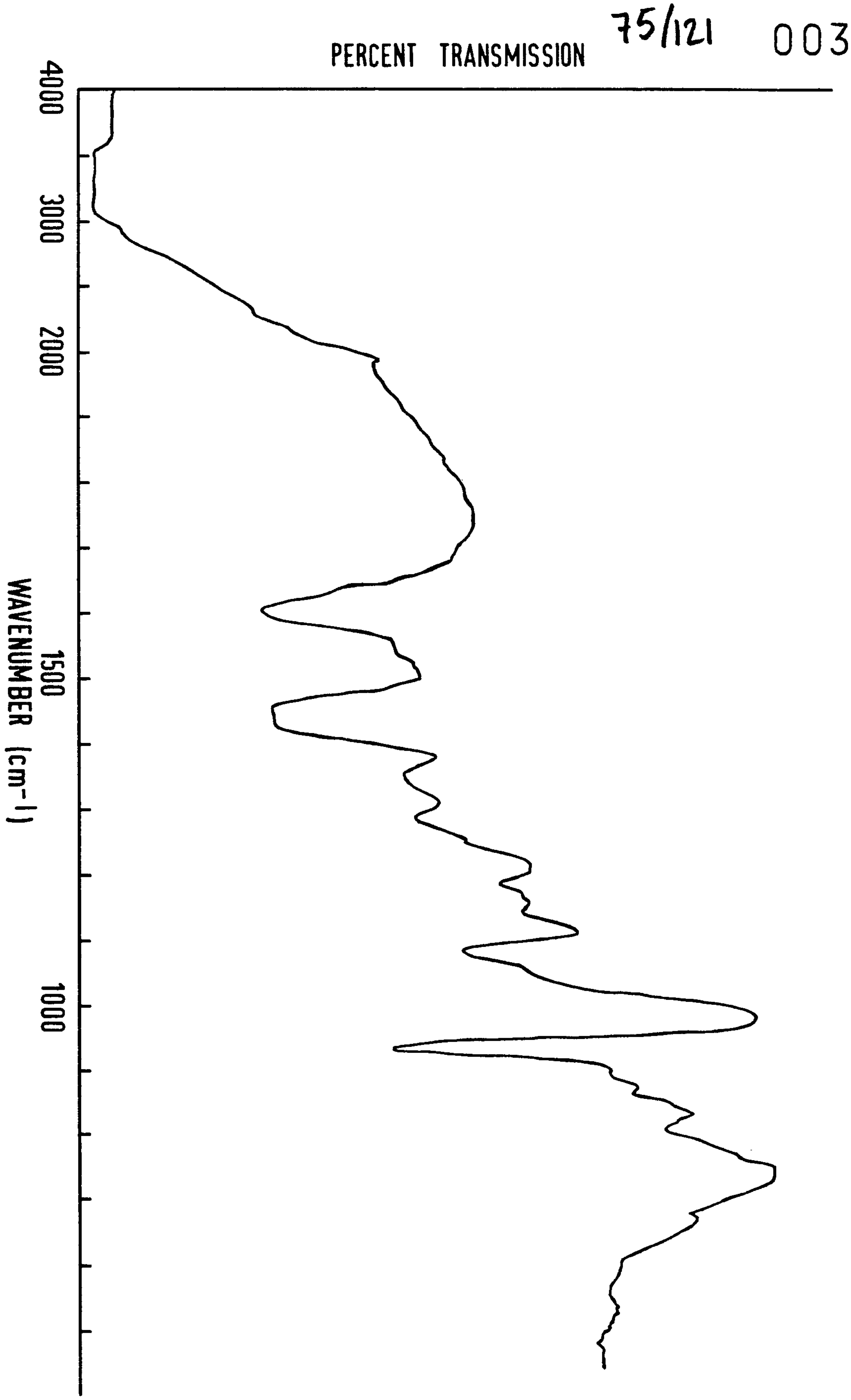
PERCENT TRANSMISSION
4000
3000
2000
1500
1000
WAVENUMBER (cm⁻¹)

FIG.75.

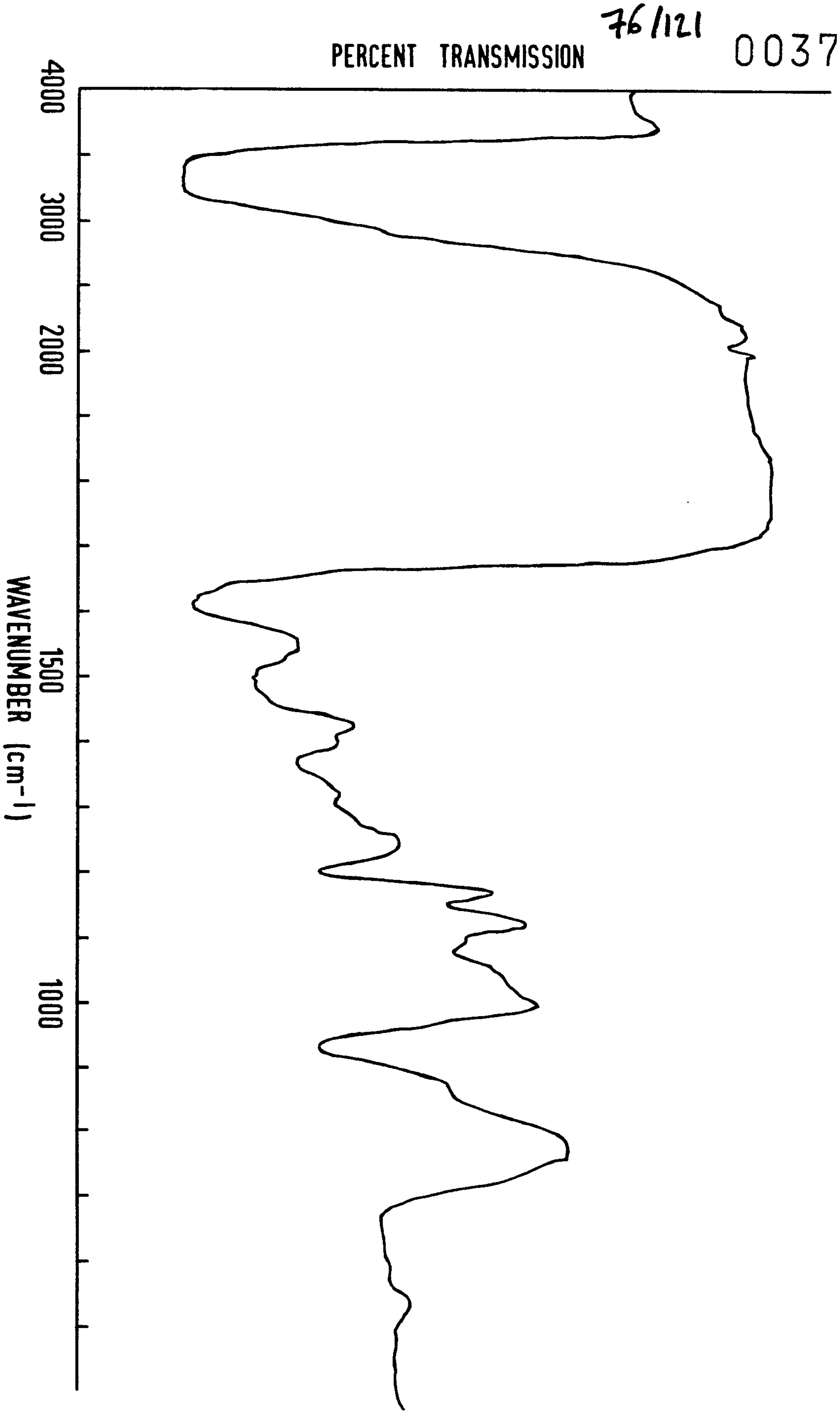
PERCENT TRANSMISSION
4000
3000
2000
1500
1000
WAVENUMBER (cm⁻¹)

FIG.76.

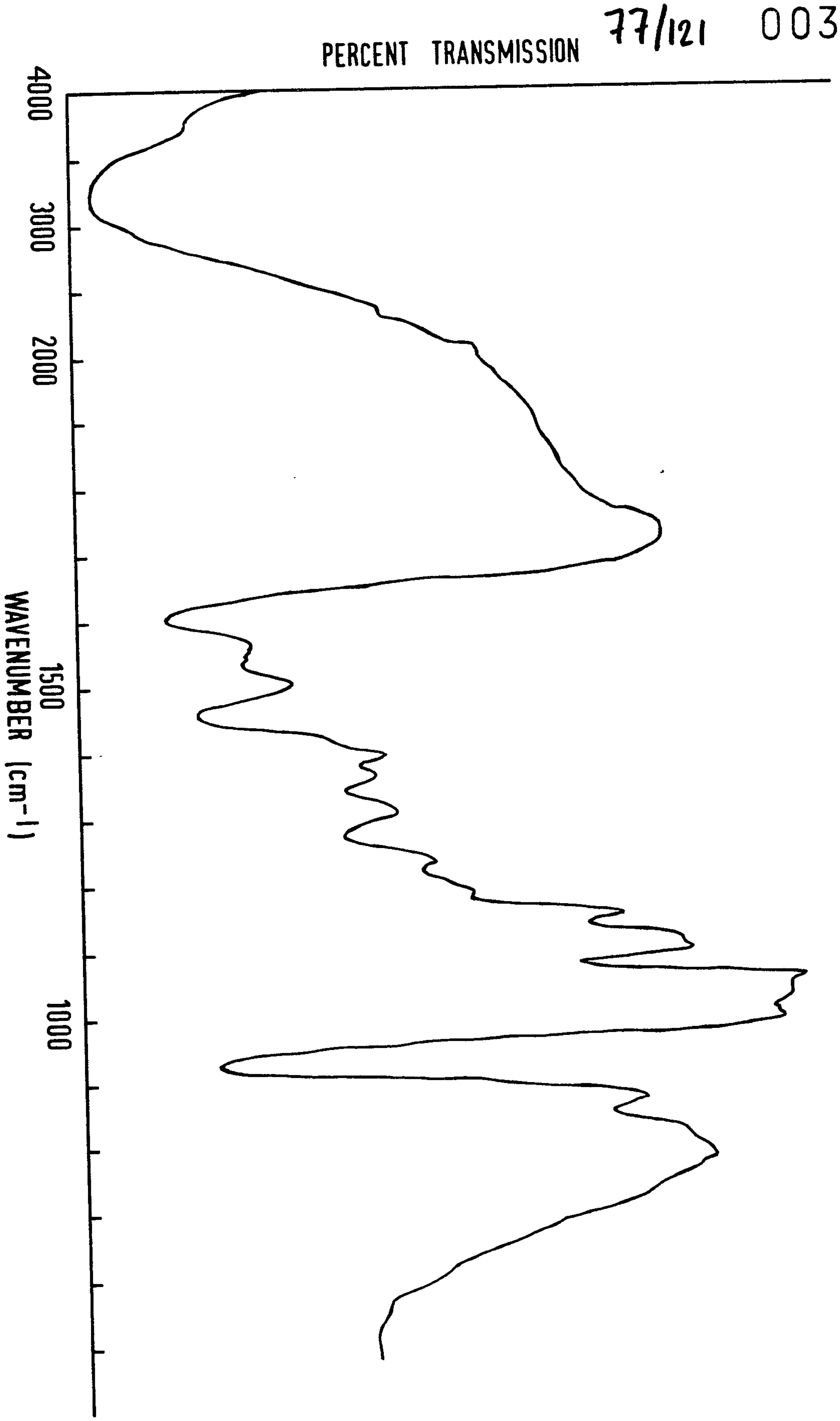
PERCENT TRANSMISSION
4000
3000
2000
1500
1000
WAVENUMBER (cm-1)

FIG.77.

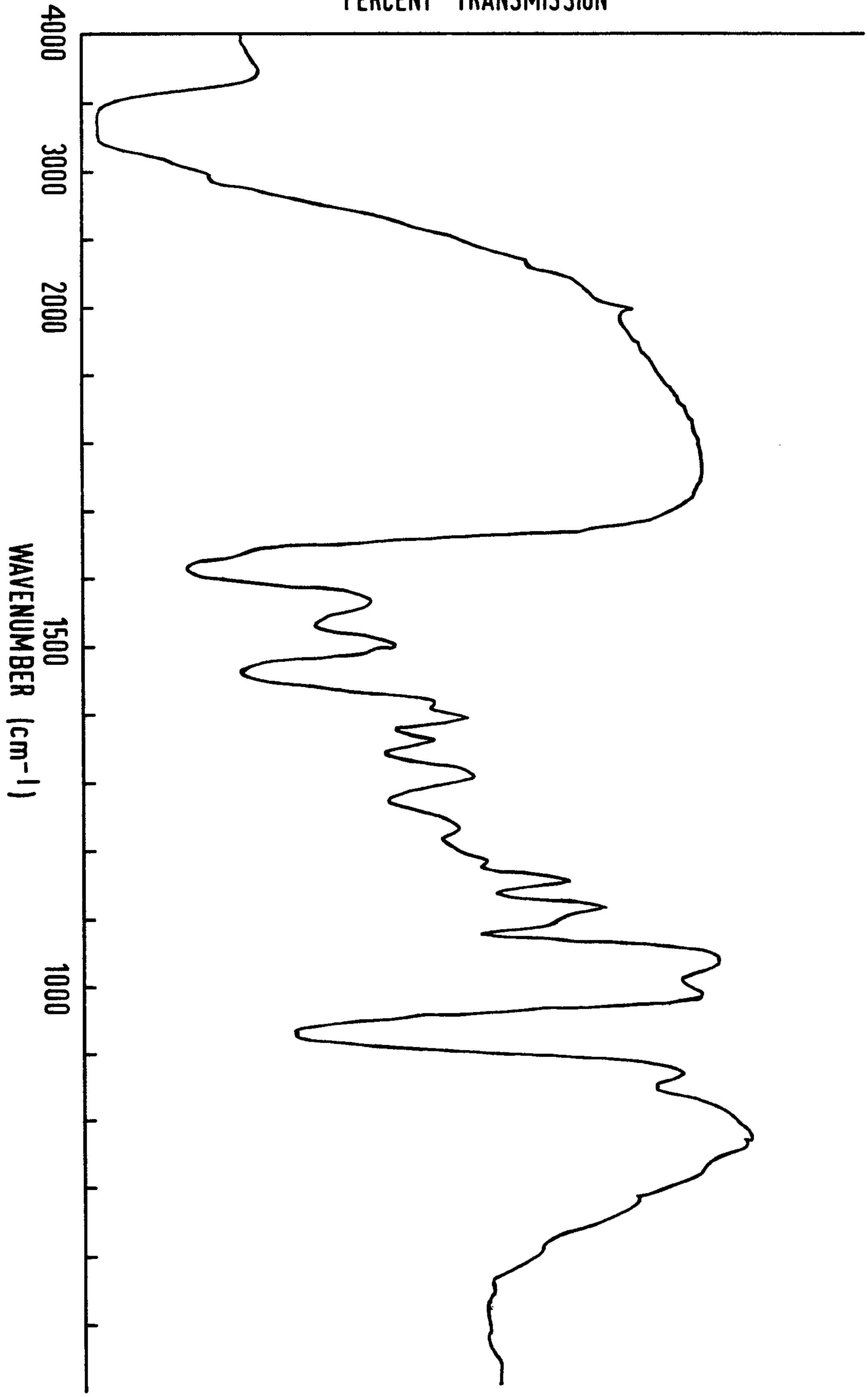
PERCENT TRANSMISSION
4000
3000
2000
1500
1000
WAVENUMBER (cm-1)

FIG.78

FIG.79.

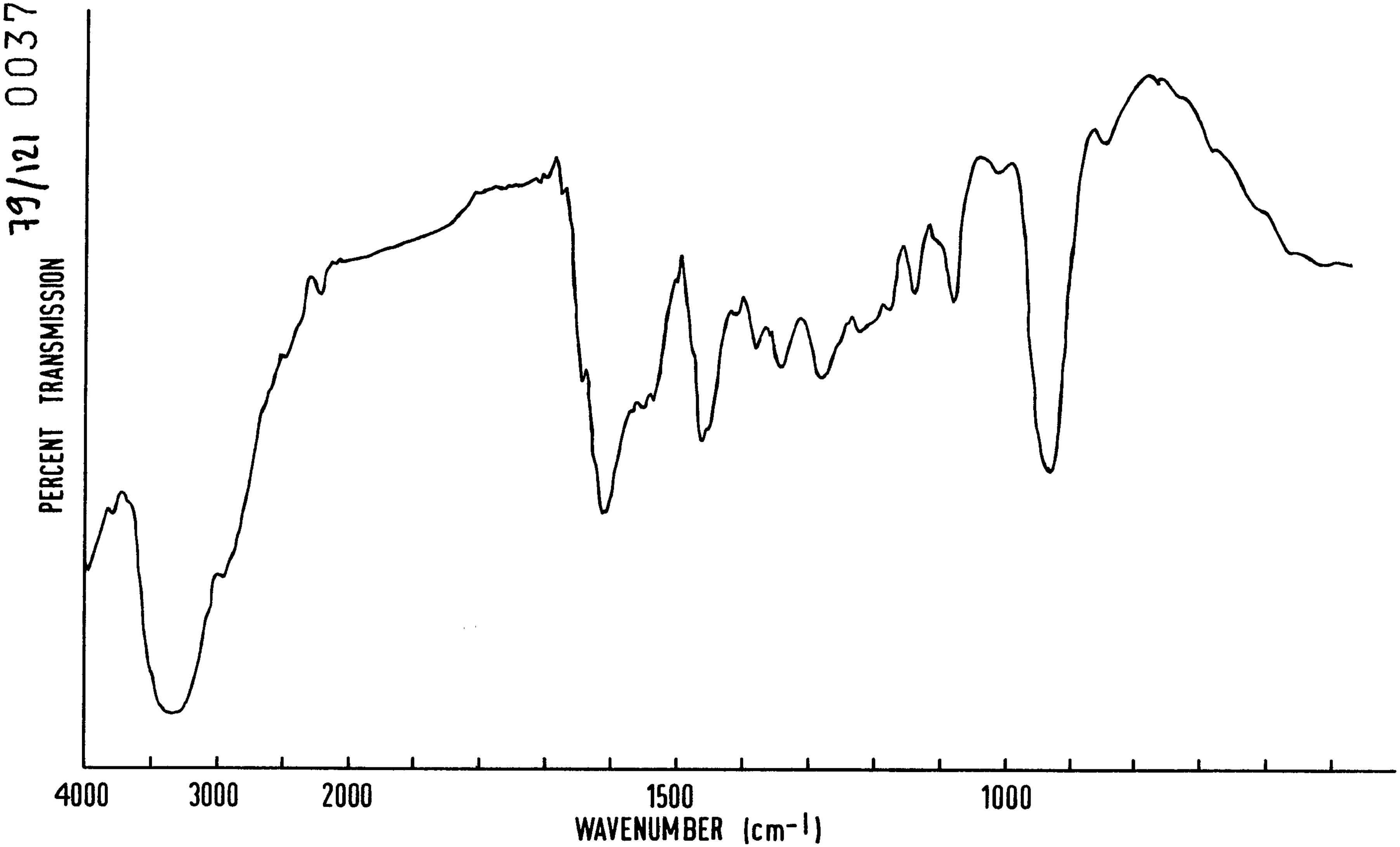
PERCENT TRANSMISSION
4000
3000
2000
1500
1000
WAVENUMBER (cm-1)

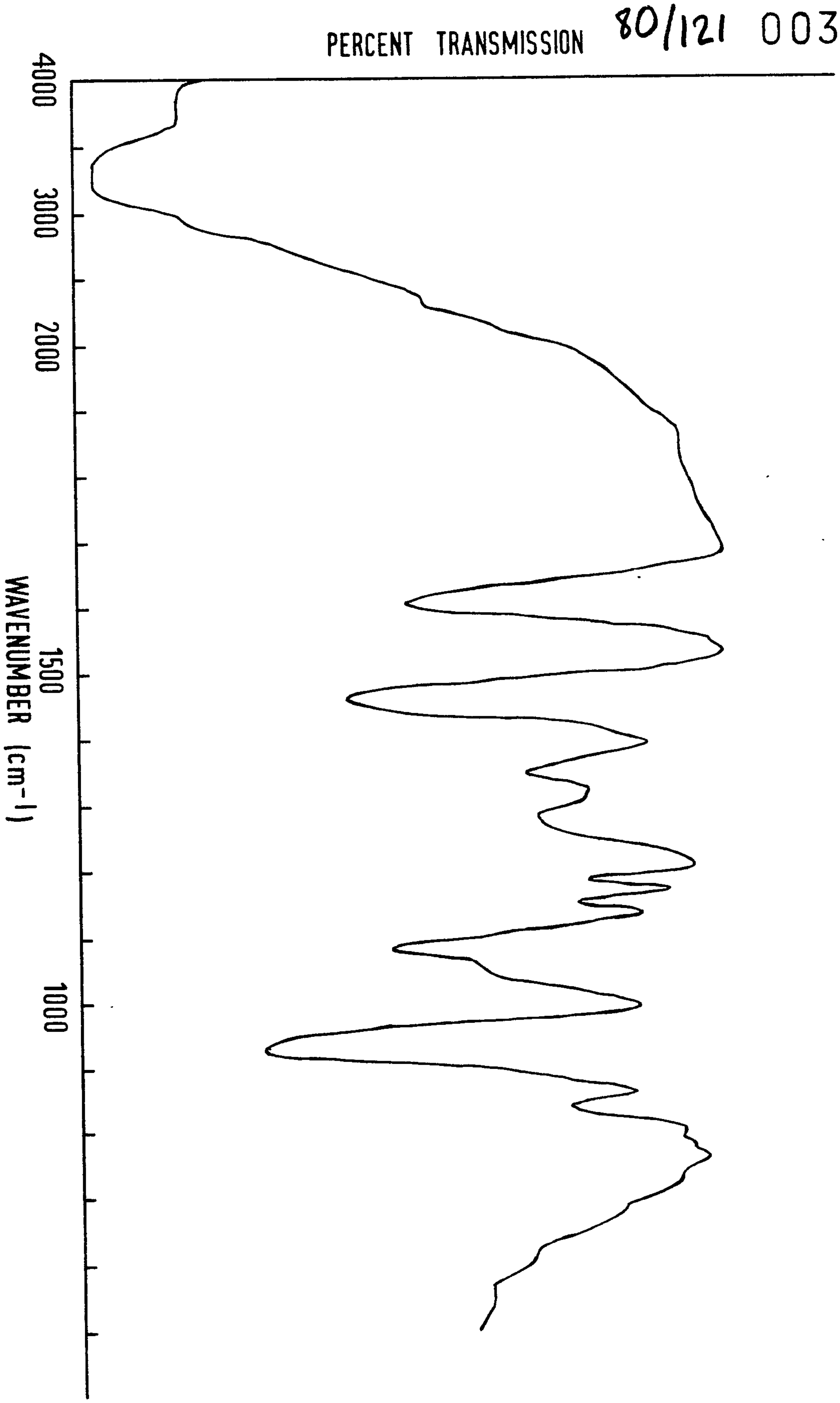
PERCENT TRANSMISSION
4000
3000
2000
1500
1000
WAVENUMBER (cm-1)

FIG.80.

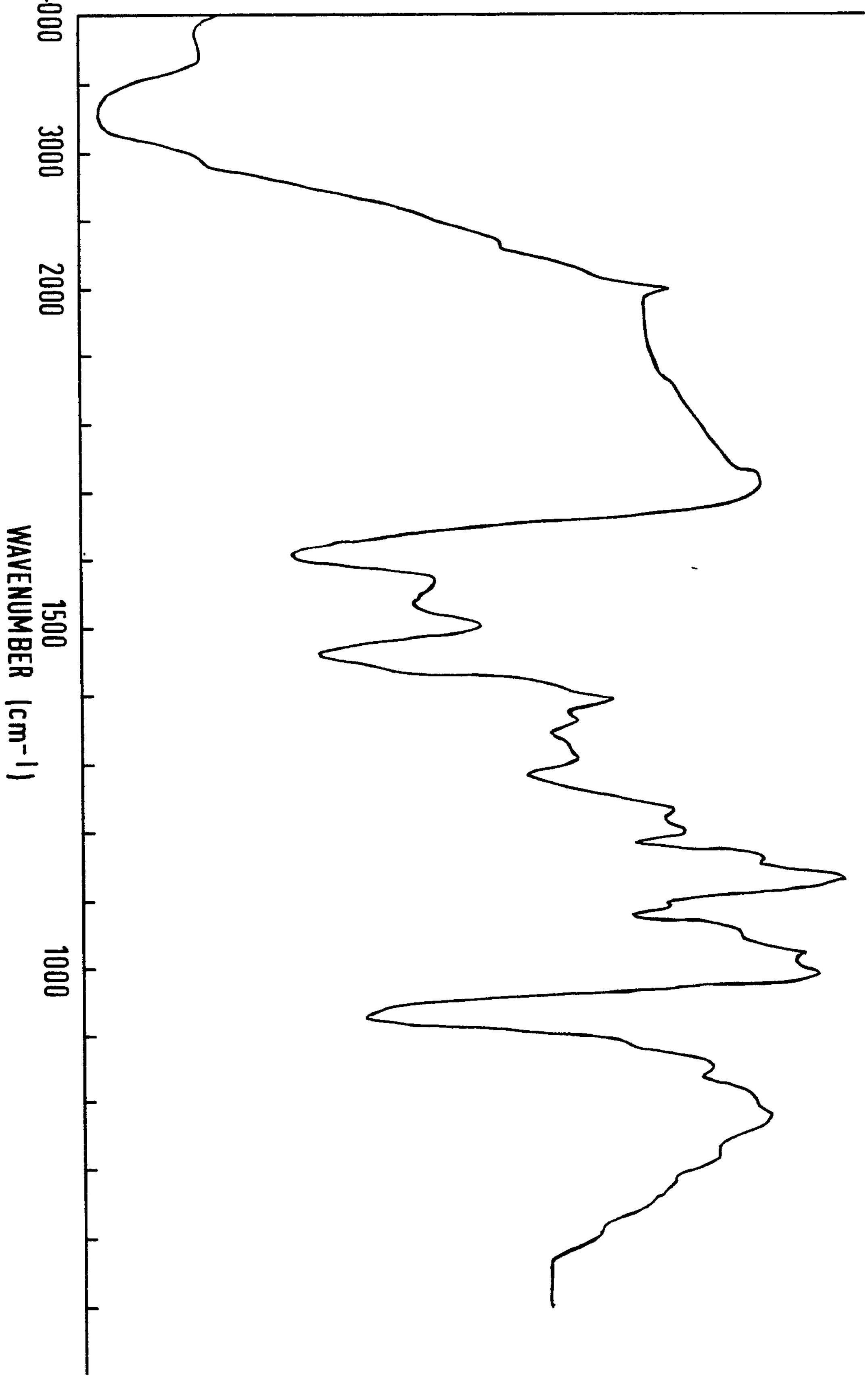
PERCENT TRANSMISSION
4000
3000
2000
1500
1000
WAVENUMBER (cm-1)

FIG.81.

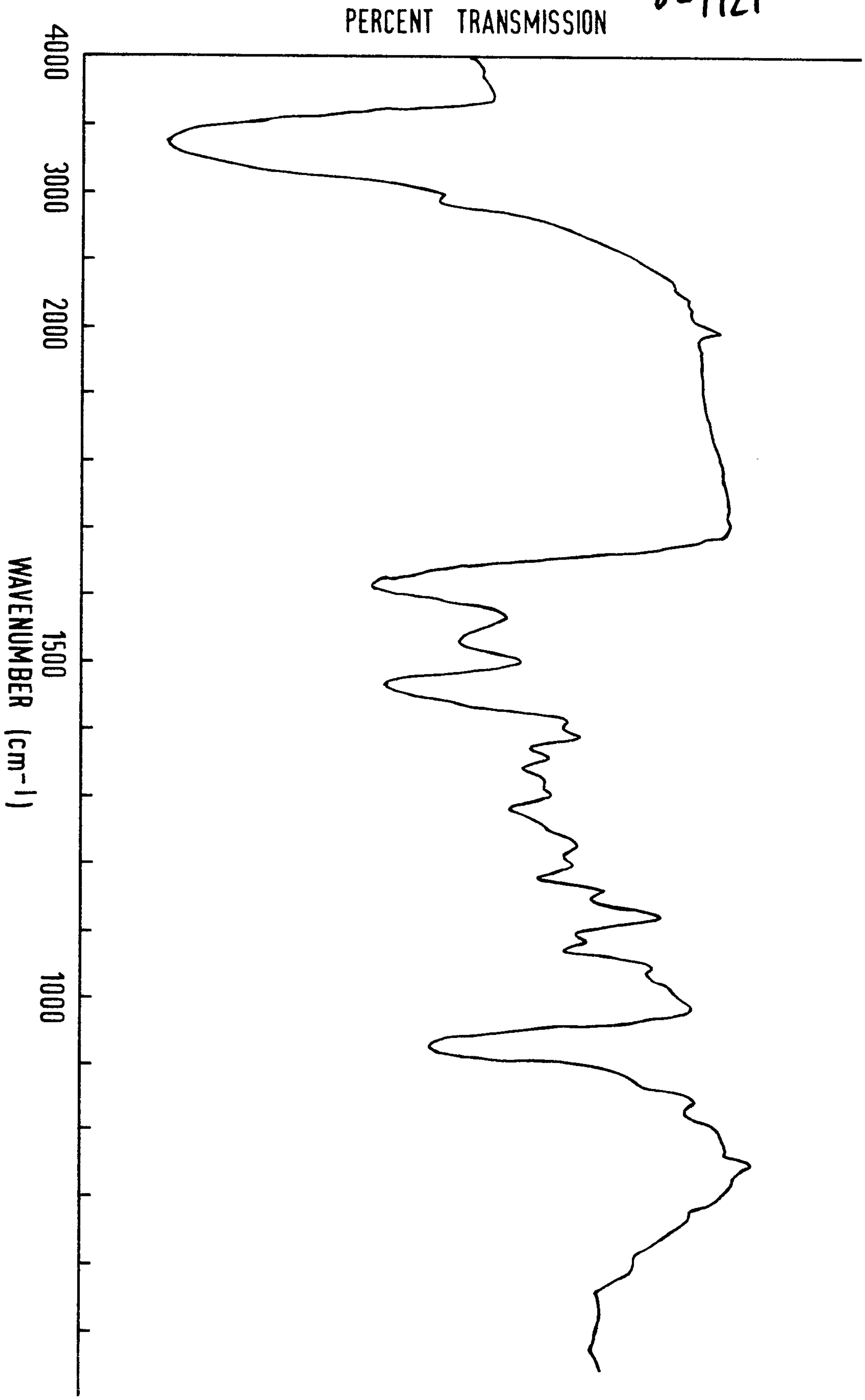
PERCENT TRANSMISSION
4000
3000
2000
1500
1000
WAVENUMBER (cm-1)

FIG.82.

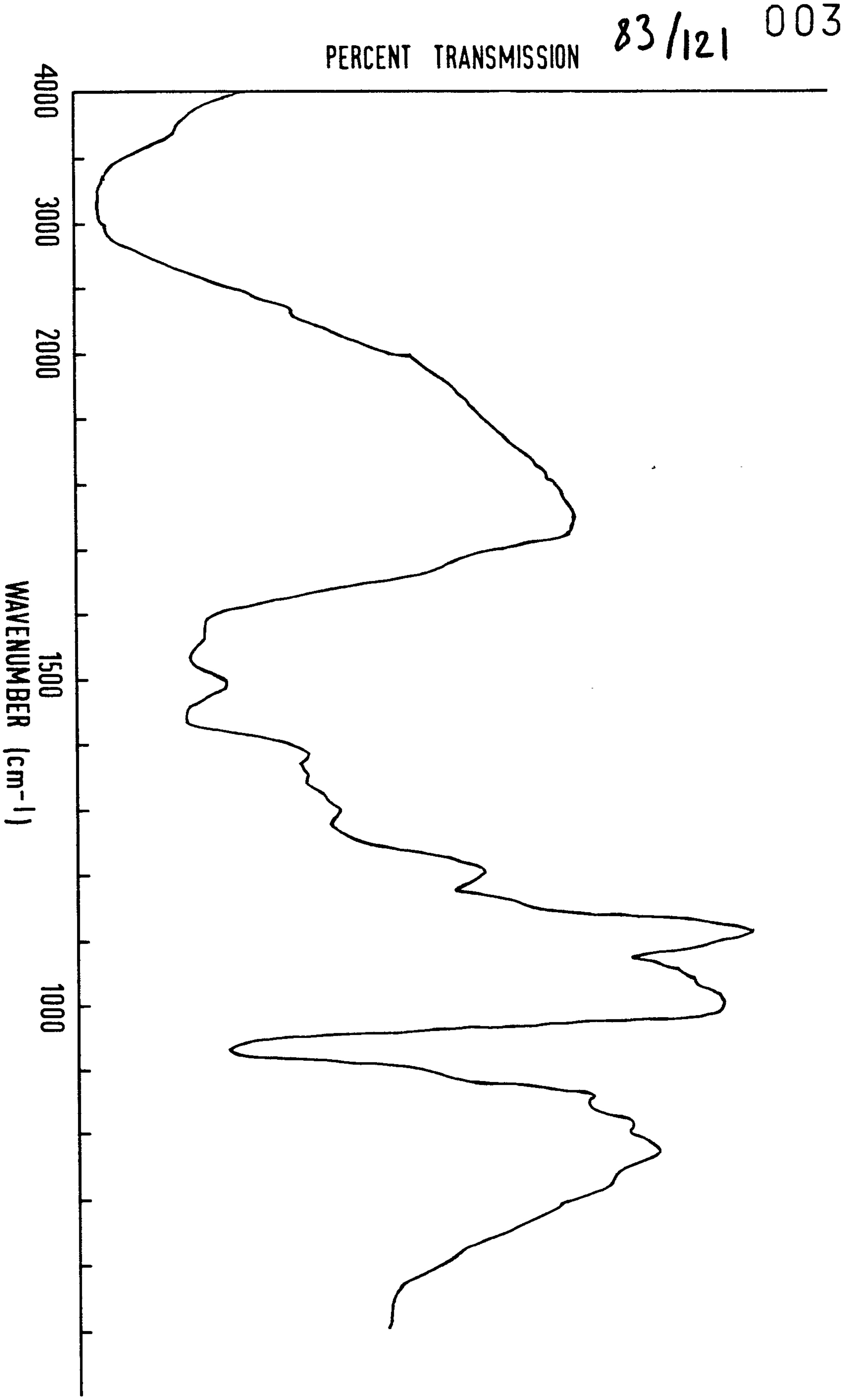
PERCENT TRANSMISSION
4000
3000
2000
1500
1000
WAVENUMBER (cm-1)

FIG.83.

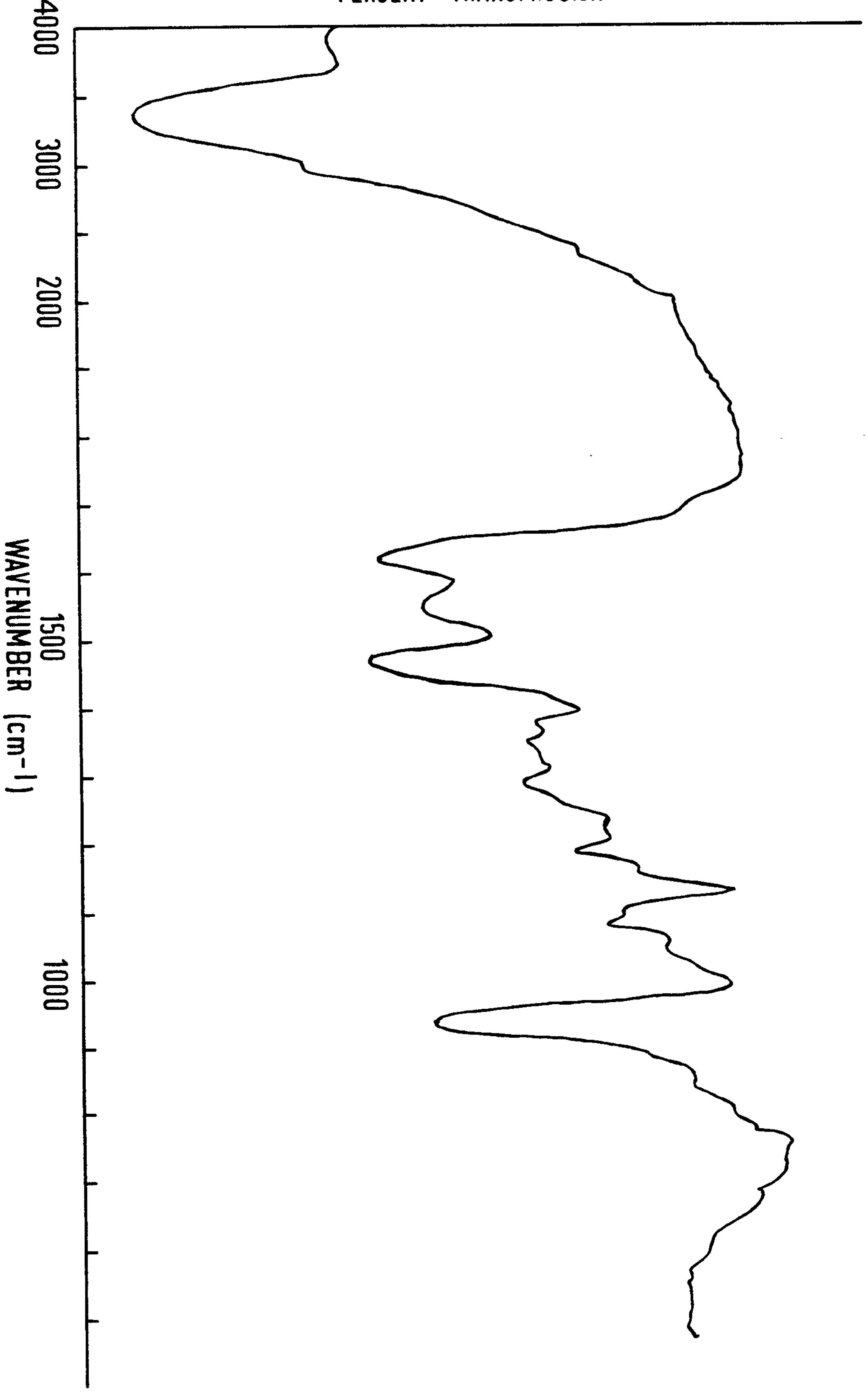
PERCENT TRANSMISSION
4000
3000
2000
1500
1000
WAVENUMBER (cm-1)

FIG.84.

FIG.85.

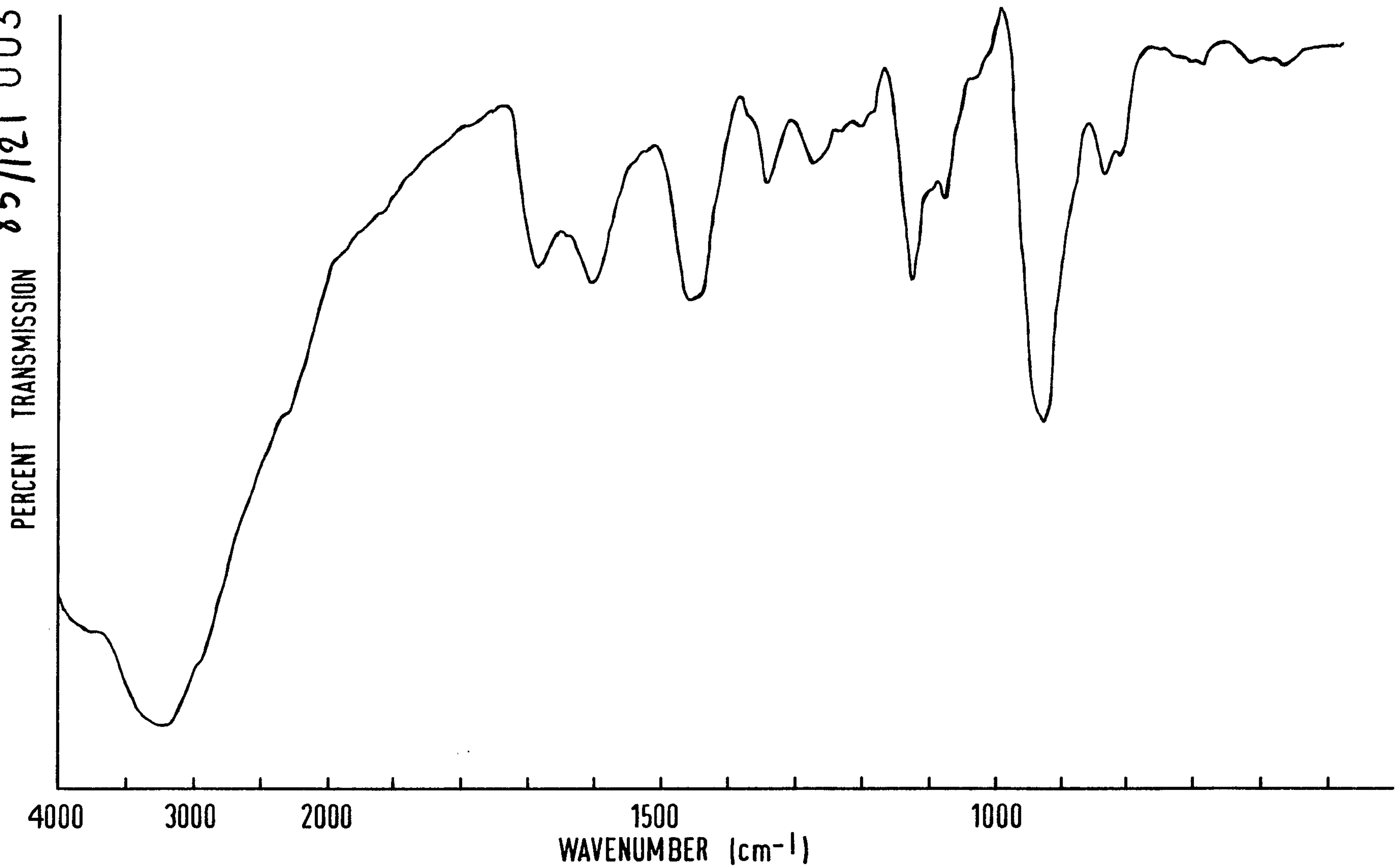
PERCENT TRANSMISSION
4000
3000
2000
1500
1000
WAVENUMBER (cm-1)

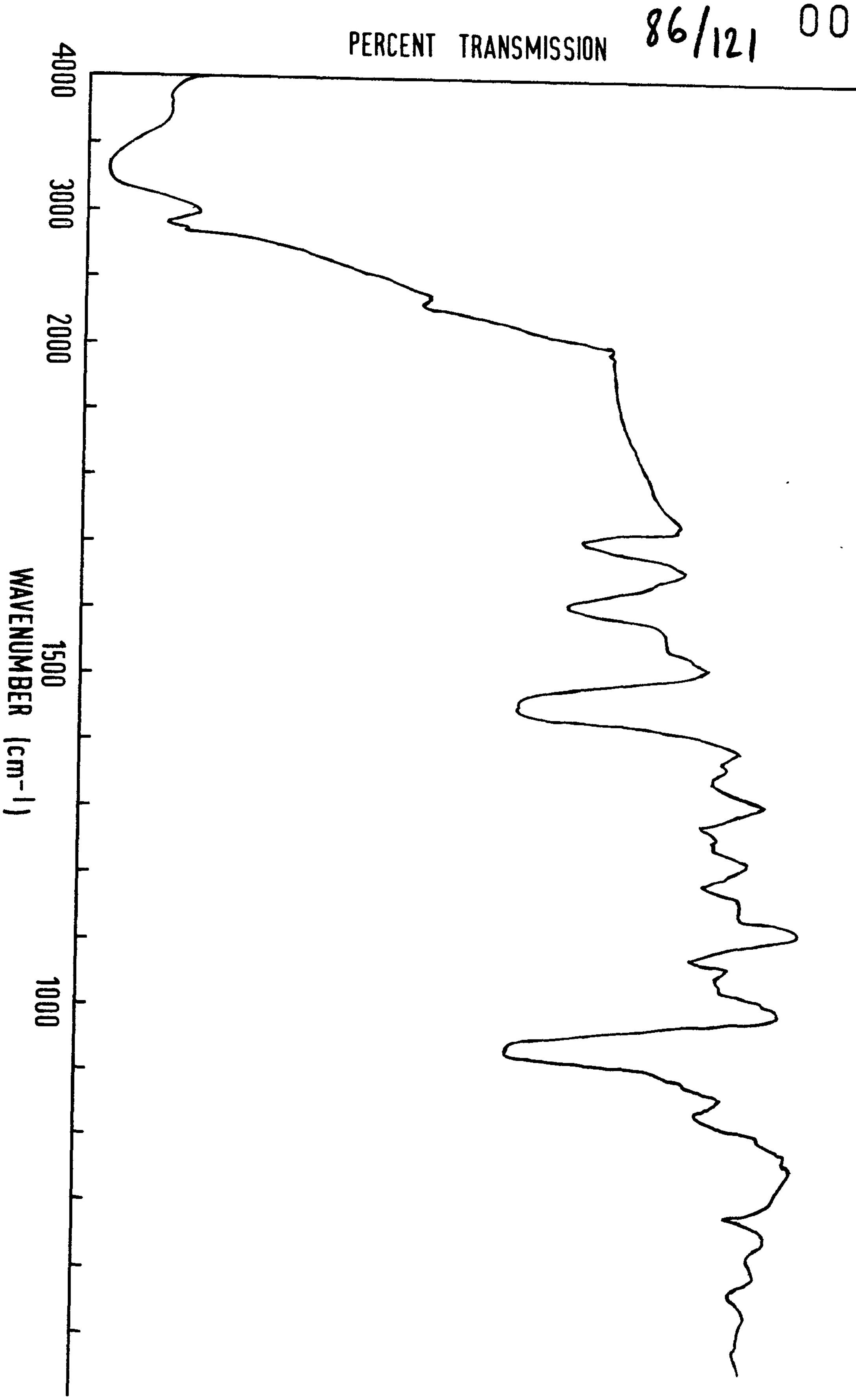
PERCENT TRANSMISSION
4000
3000
2000
1500
1000
WAVENUMBER (cm-1)

FIG.86.

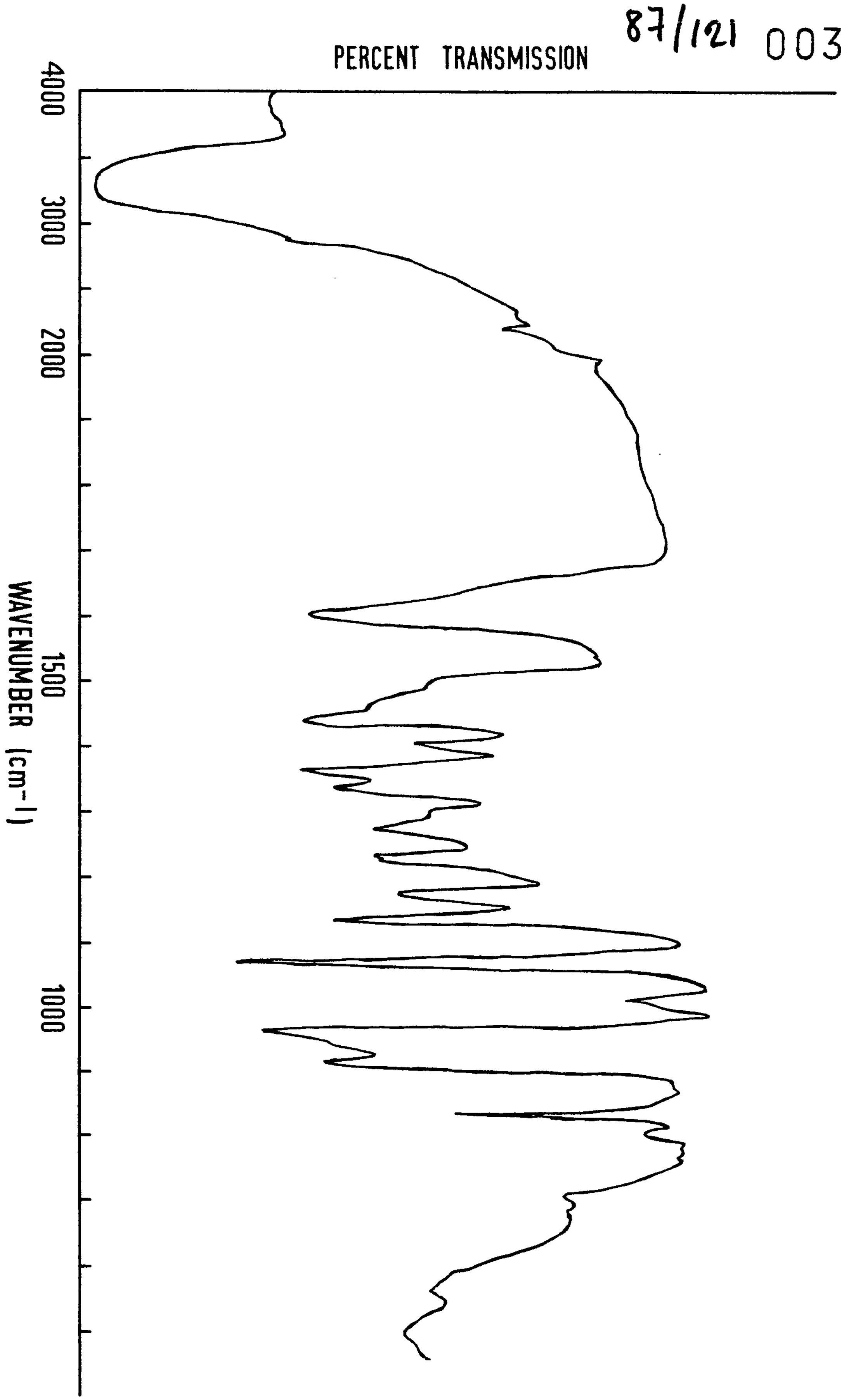
PERCENT TRANSMISSION
4000
3000
2000
1500
1000
WAVENUMBER (cm⁻¹)

FIG.87.

FIG.88.

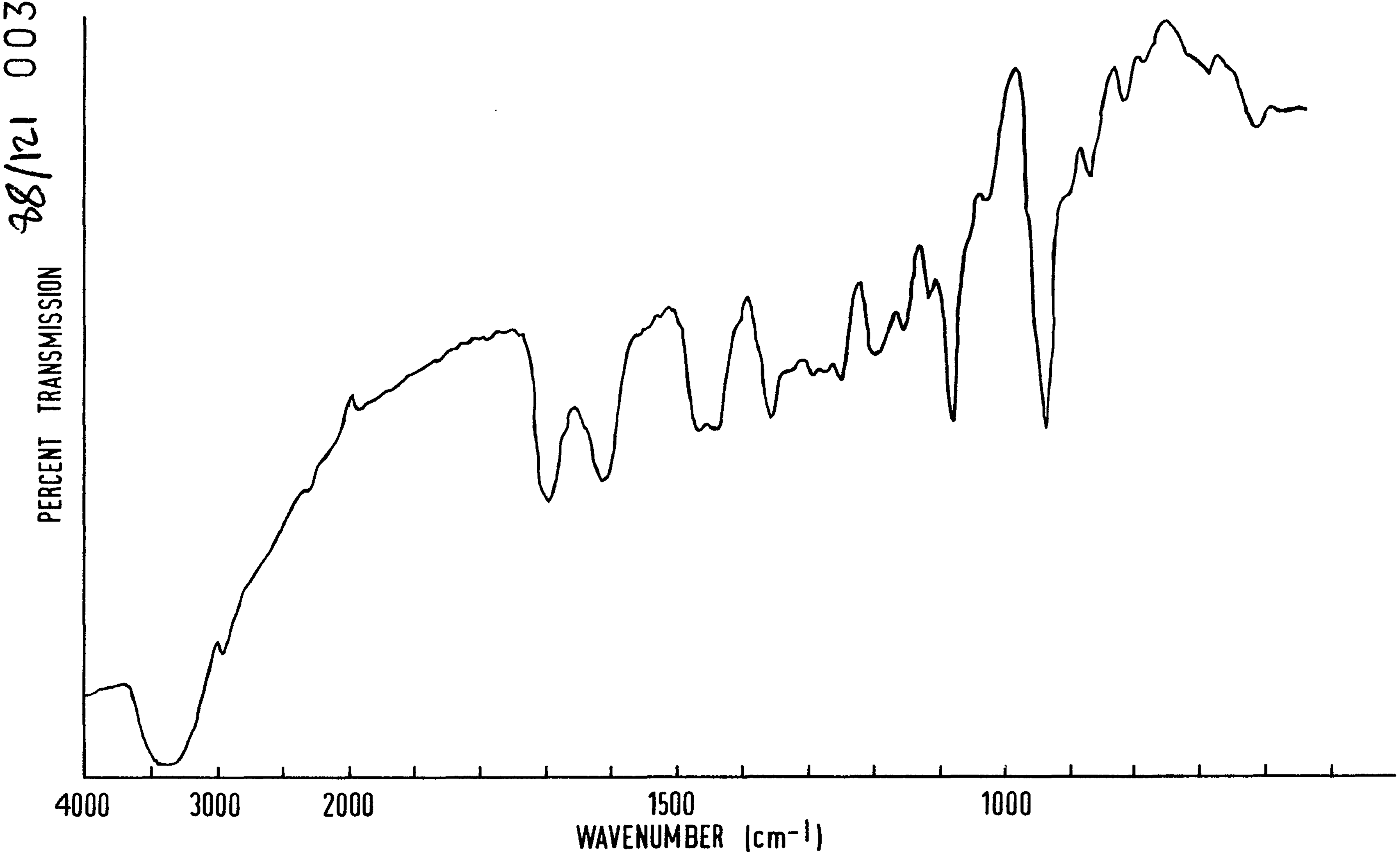
PERCENT TRANSMISSION
4000
3000
2000
1500
1000
WAVENUMBER (cm⁻¹)

FIG.89.

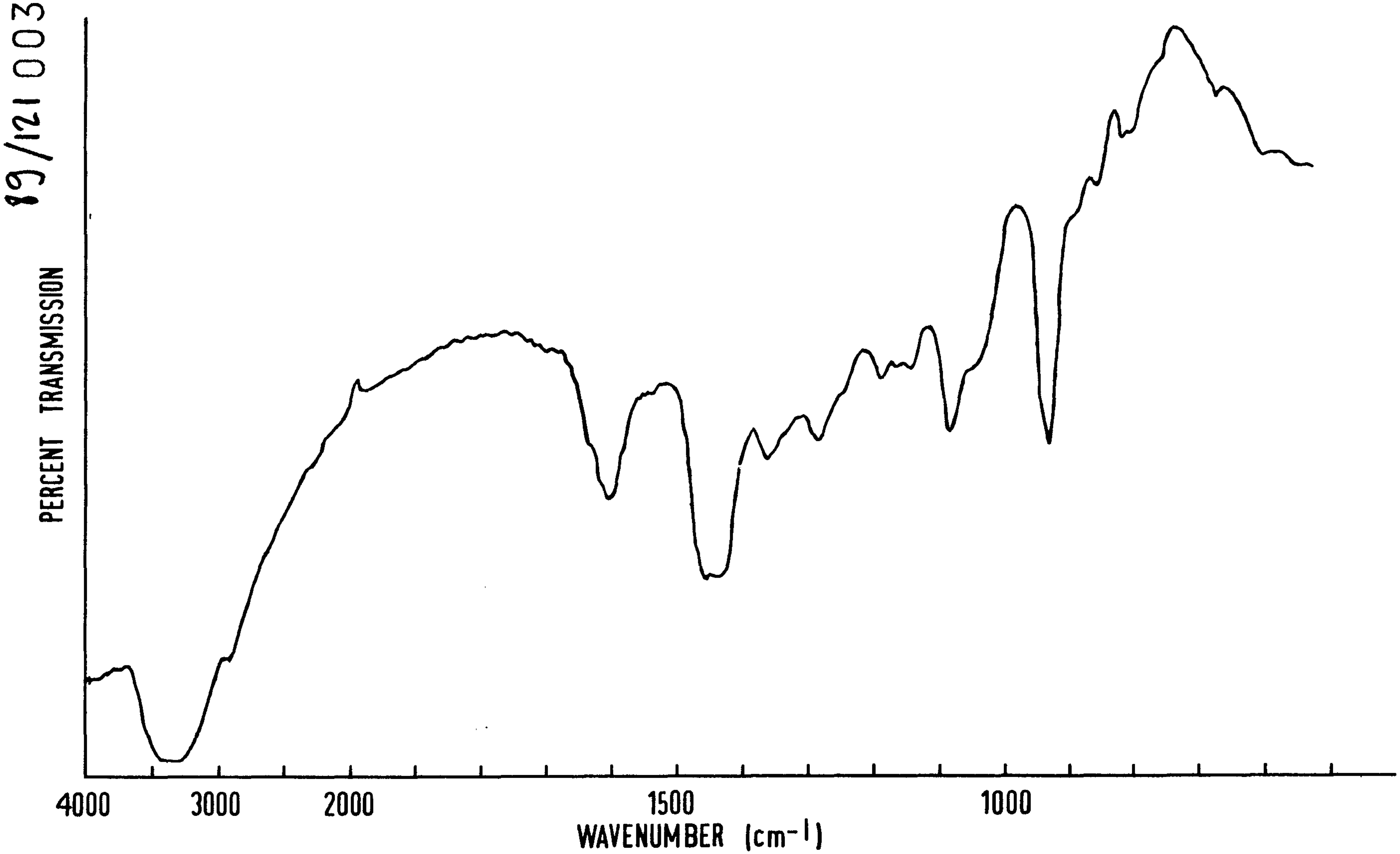
PERCENT TRANSMISSION
4000
3000
2000
1500
1000
WAVENUMBER (cm⁻¹)

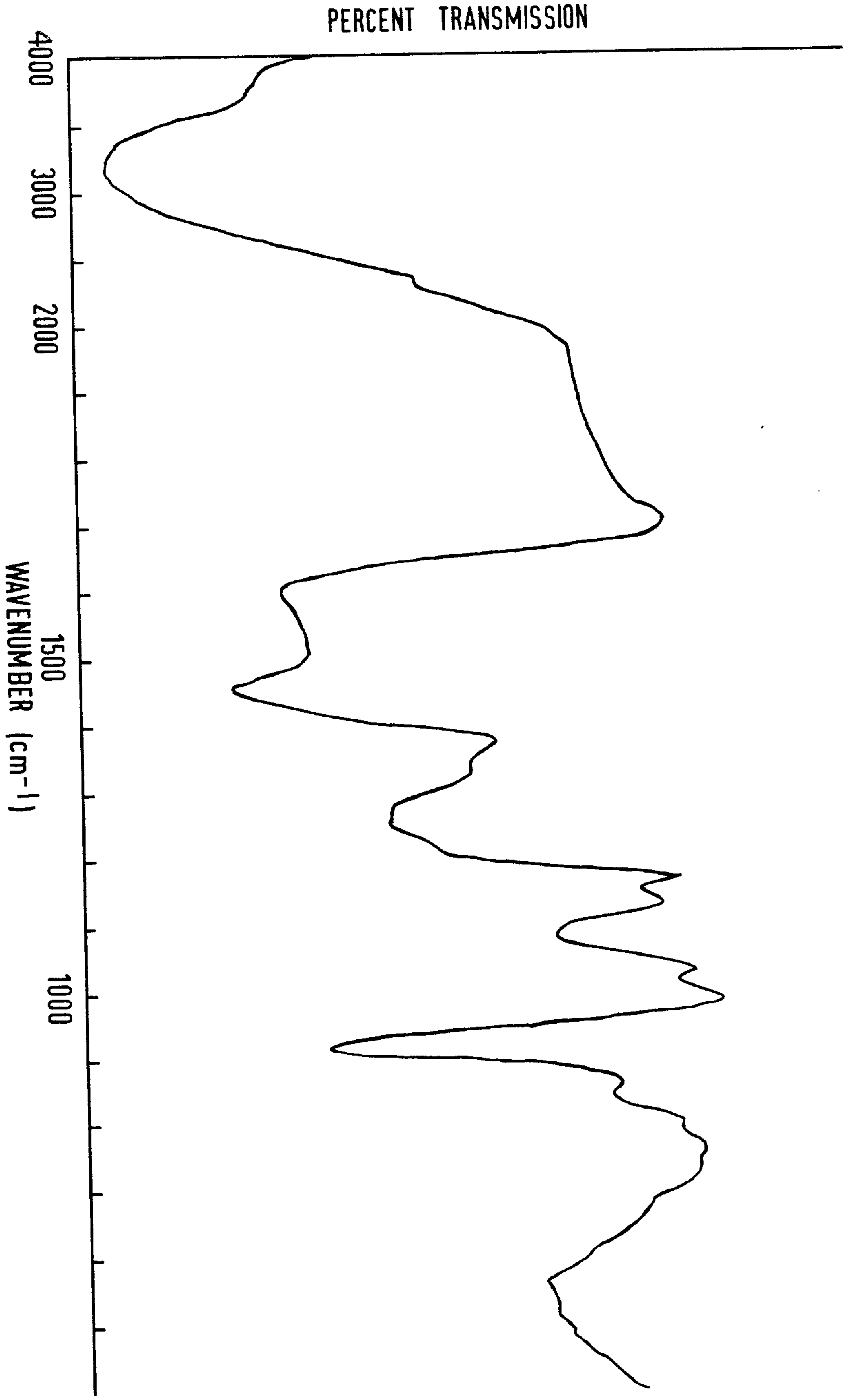
PERCENT TRANSMISSION
4000
3000
2000
1500
1000
WAVENUMBER (cm-1)

FIG.90.

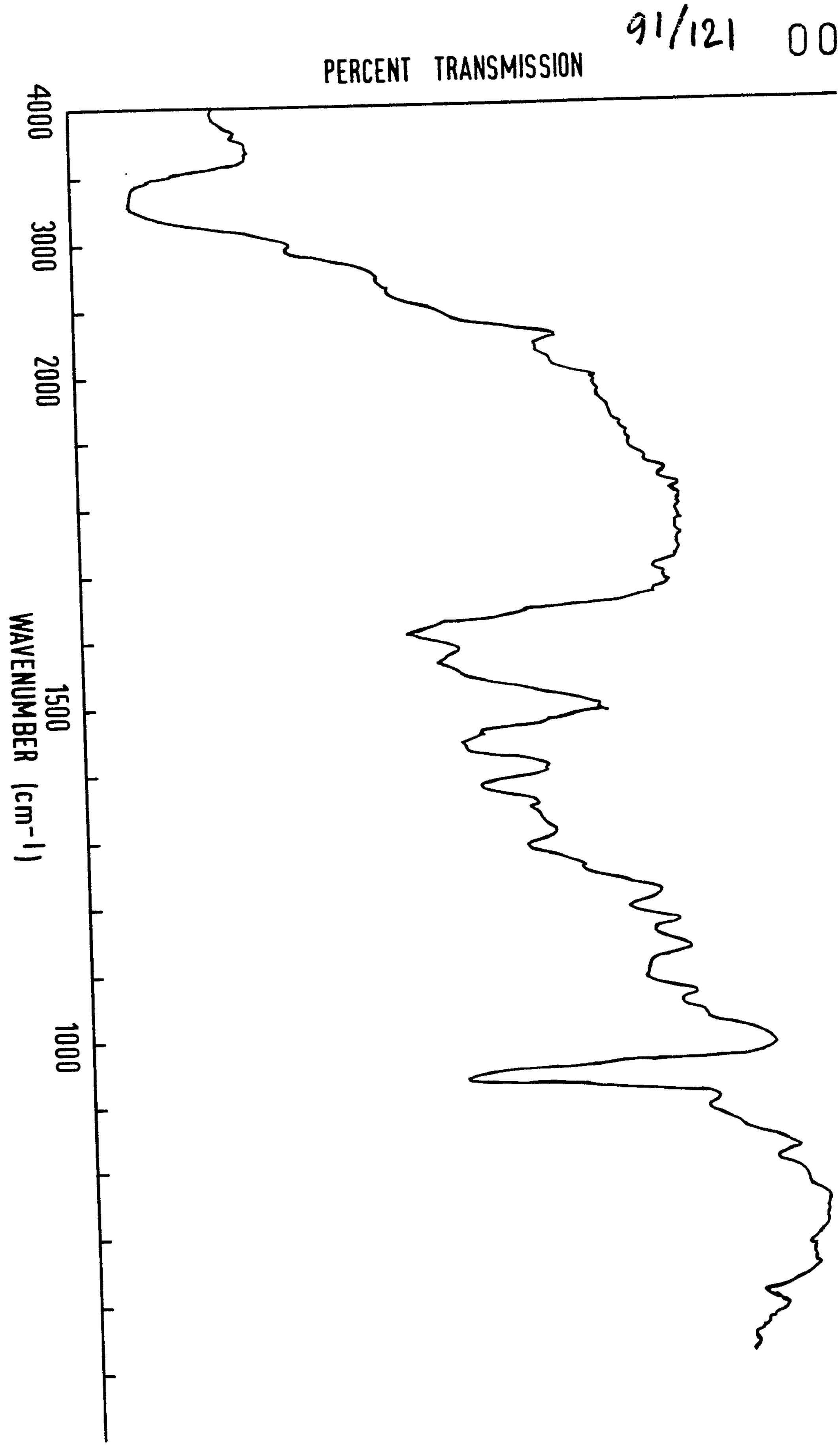
PERCENT TRANSMISSION
4000
3000
2000
1500
1000
WAVENUMBER (cm⁻¹)

FIG.91.

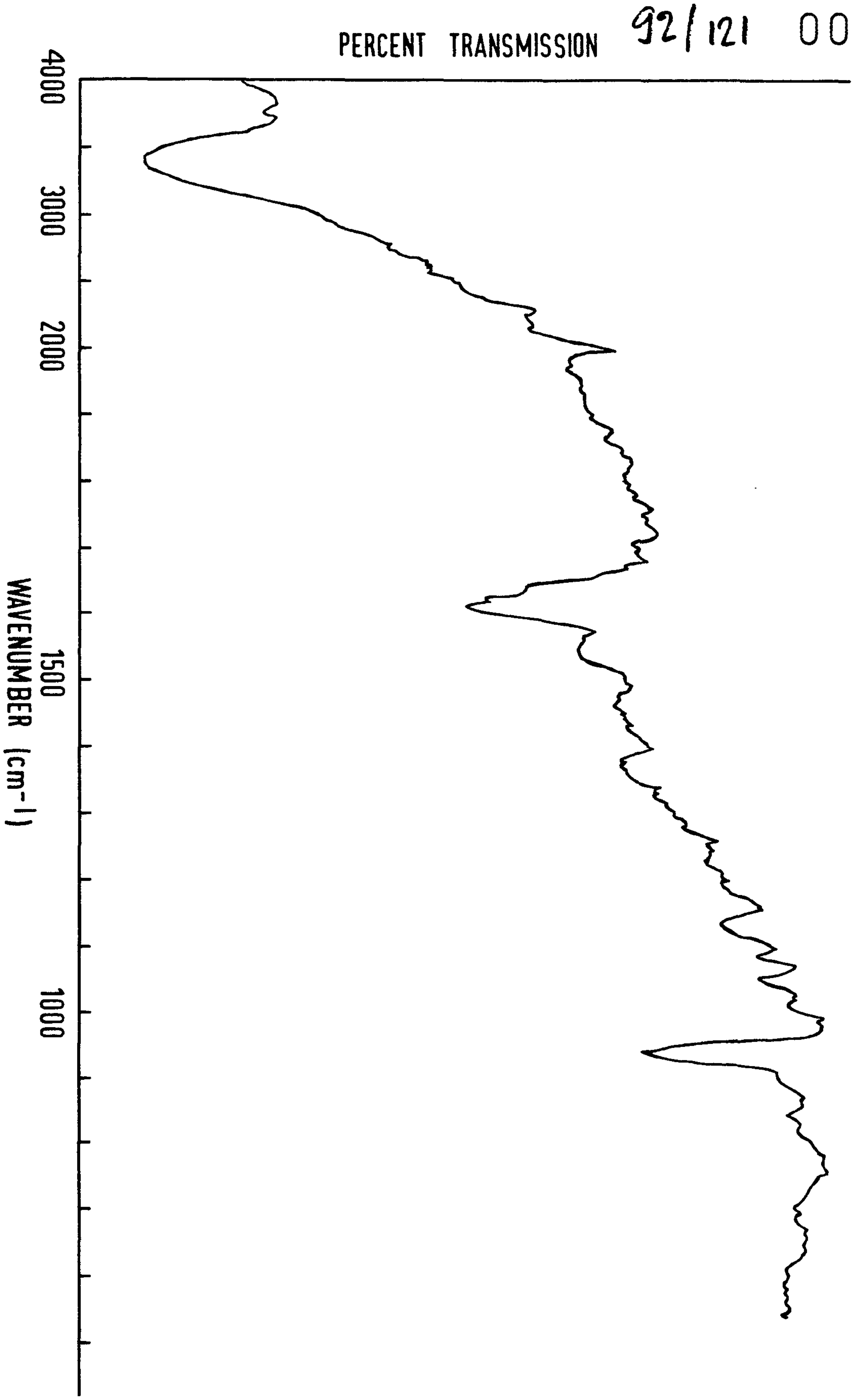
PERCENT TRANSMISSION
4000
3000
2000
1500
1000
WAVENUMBER (cm⁻¹)

FIG.92.

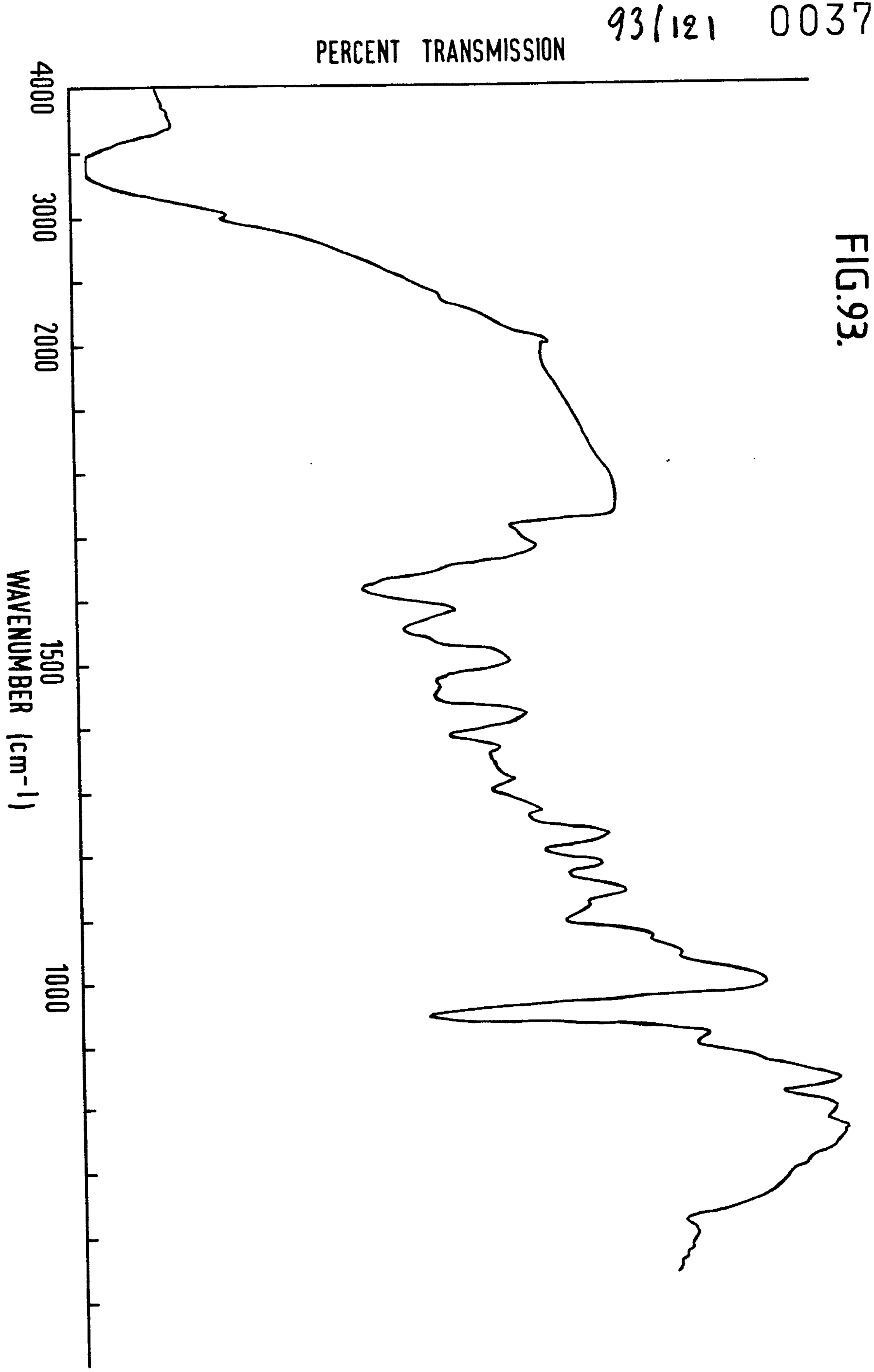
PERCENT TRANSMISSION
4000
3000
2000
1500
1000
WAVENUMBER (cm-1)

FIG.93.

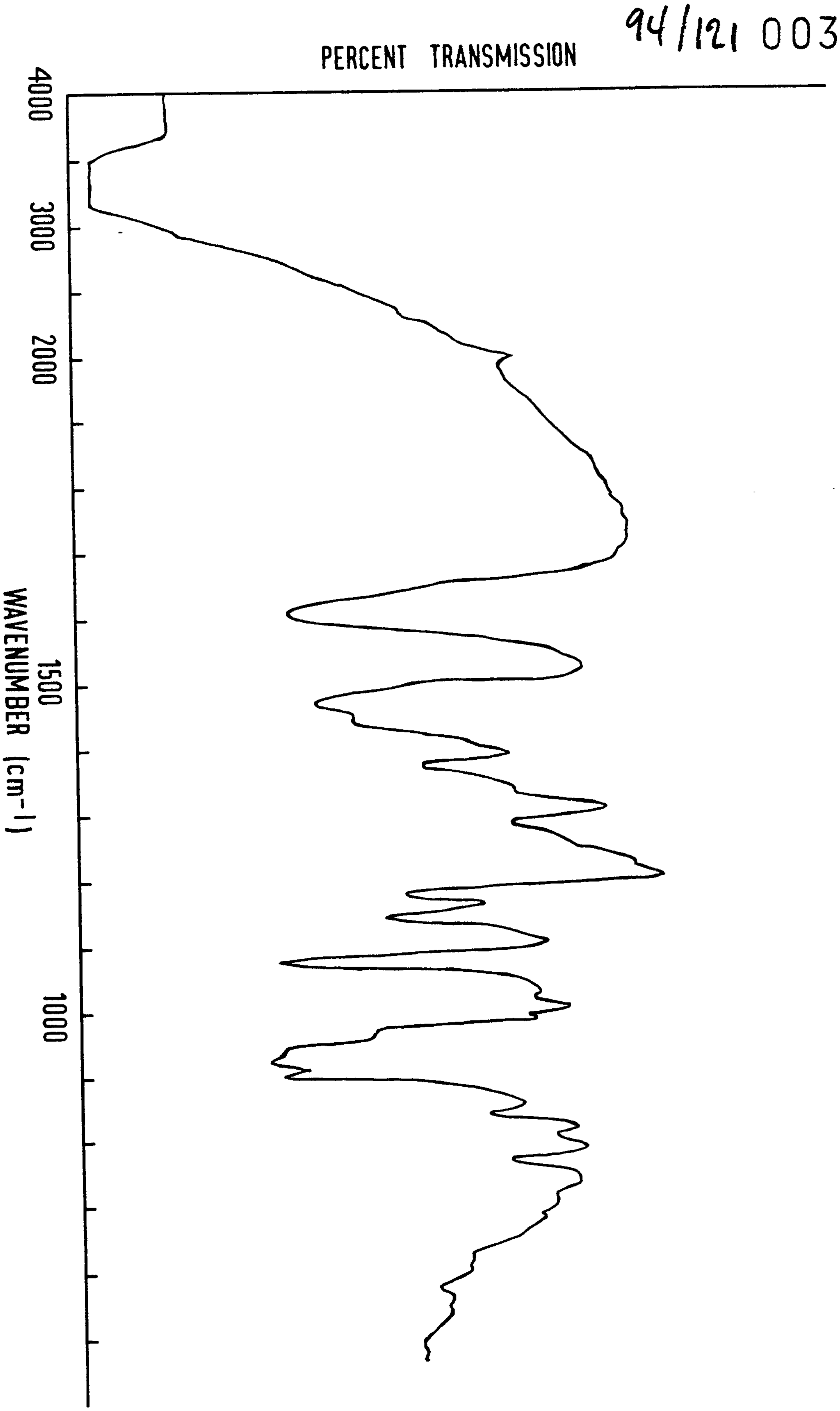
PERCENT TRANSMISSION
4000
3000
2000
1500
1000
WAVENUMBER (cm-1)

FIG.94.

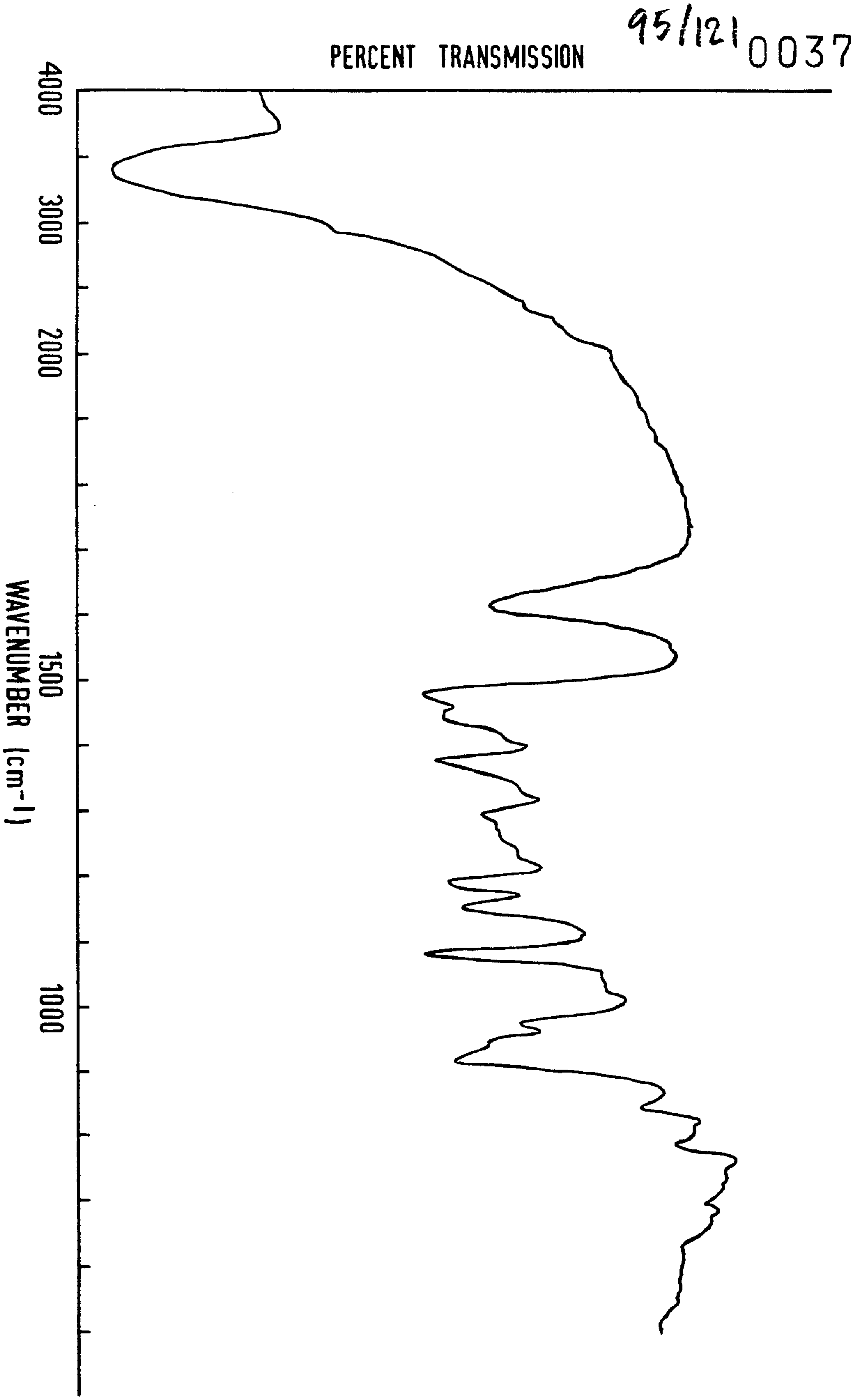
PERCENT TRANSMISSION
4000
3000
2000
1500
1000
WAVENUMBER (cm-1)

FIG.95.

96/121 0037861

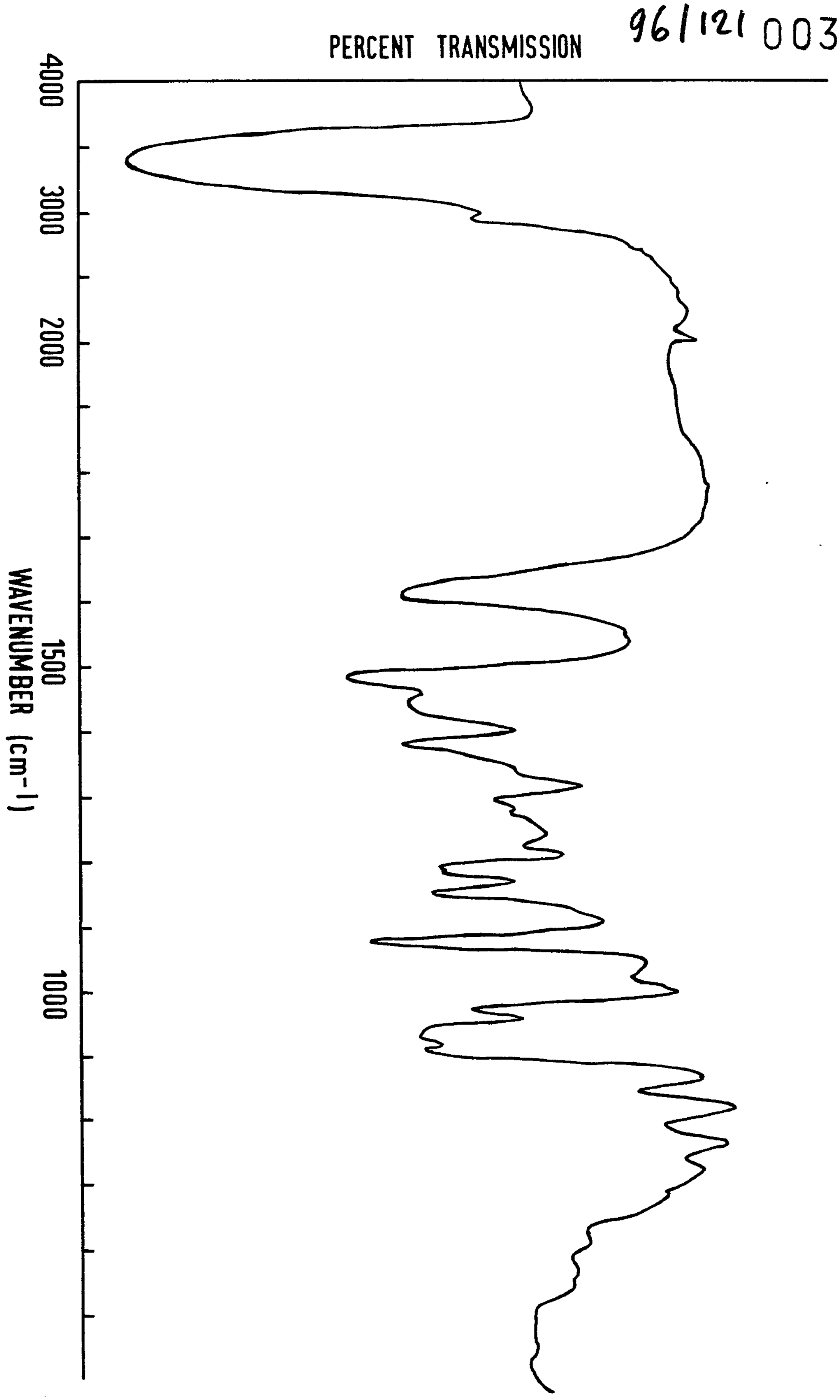


FIG.96.

FIG.97.

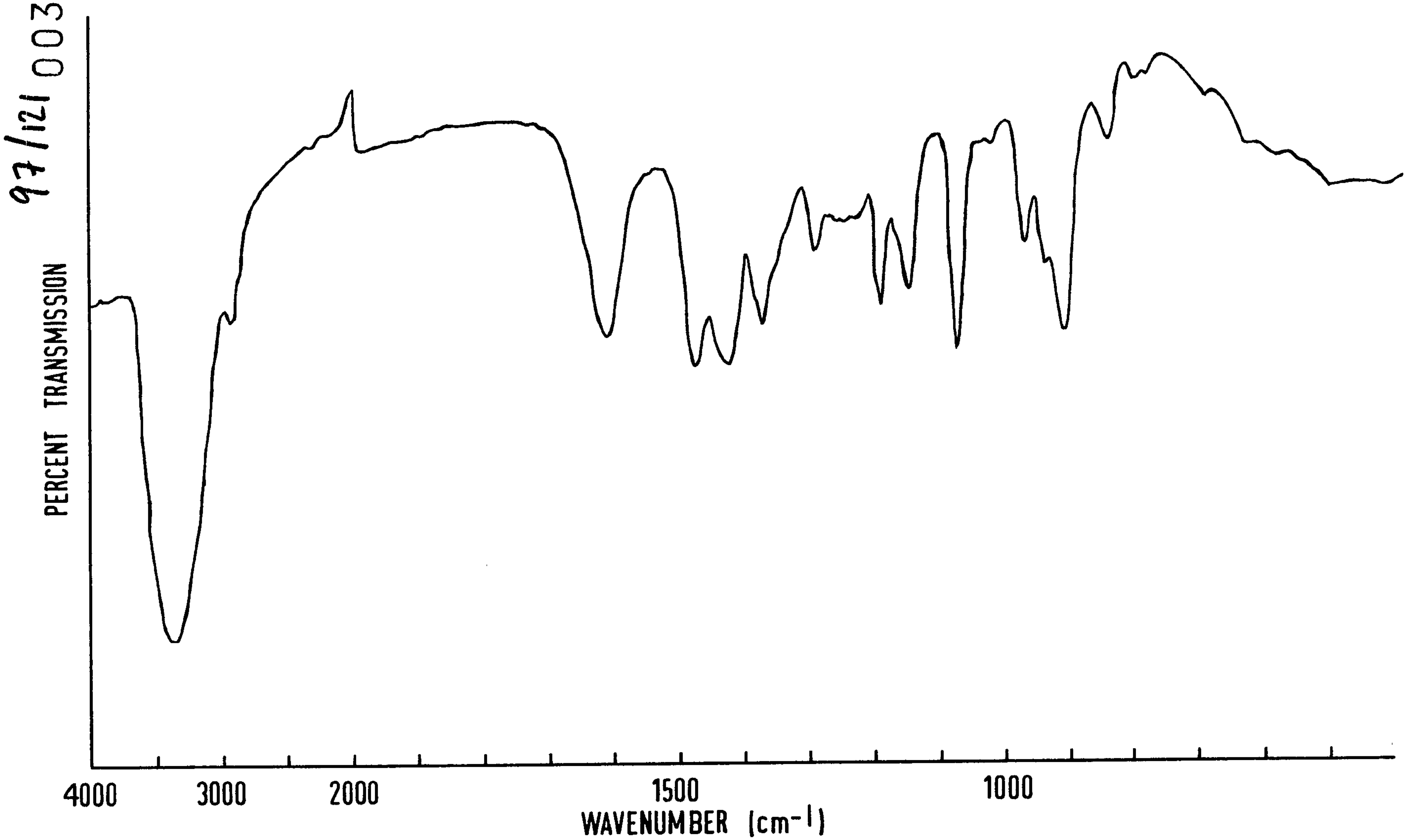
PERCENT TRANSMISSION
4000
3000
2000
1500
1000
WAVENUMBER (cm⁻¹)

98/121 0037861

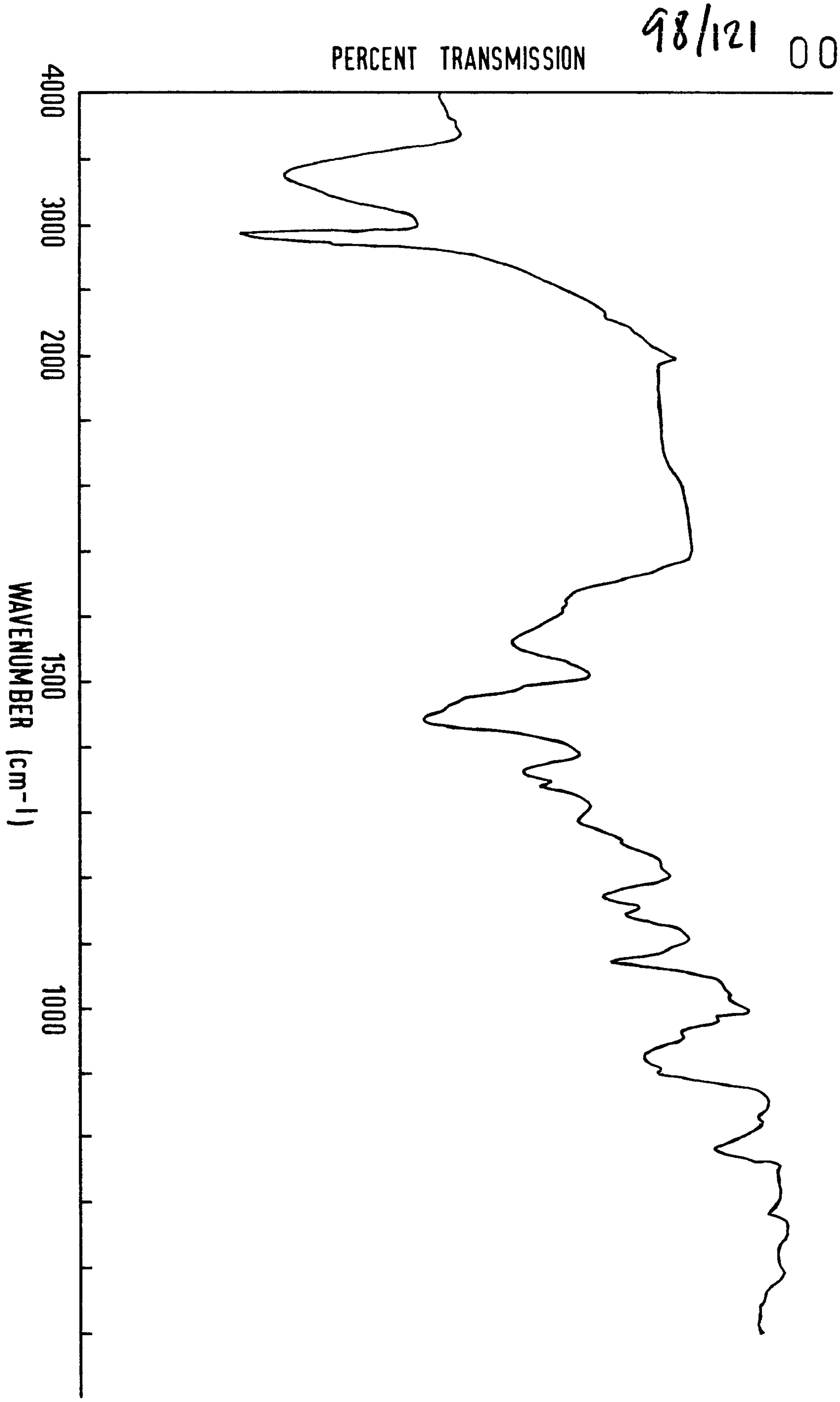


FIG.98.

99/121 0037861

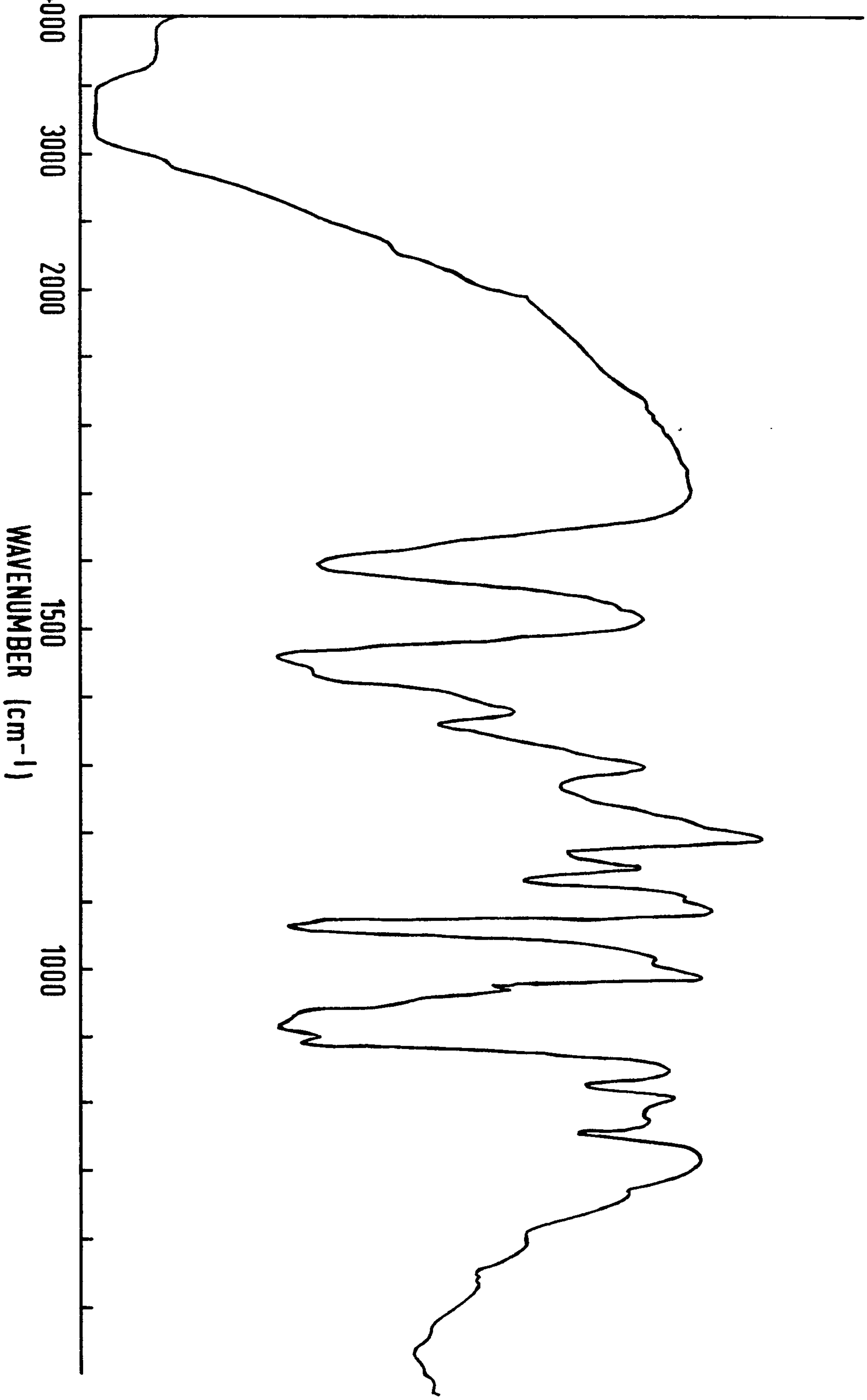


FIG.99.

FIG.100.

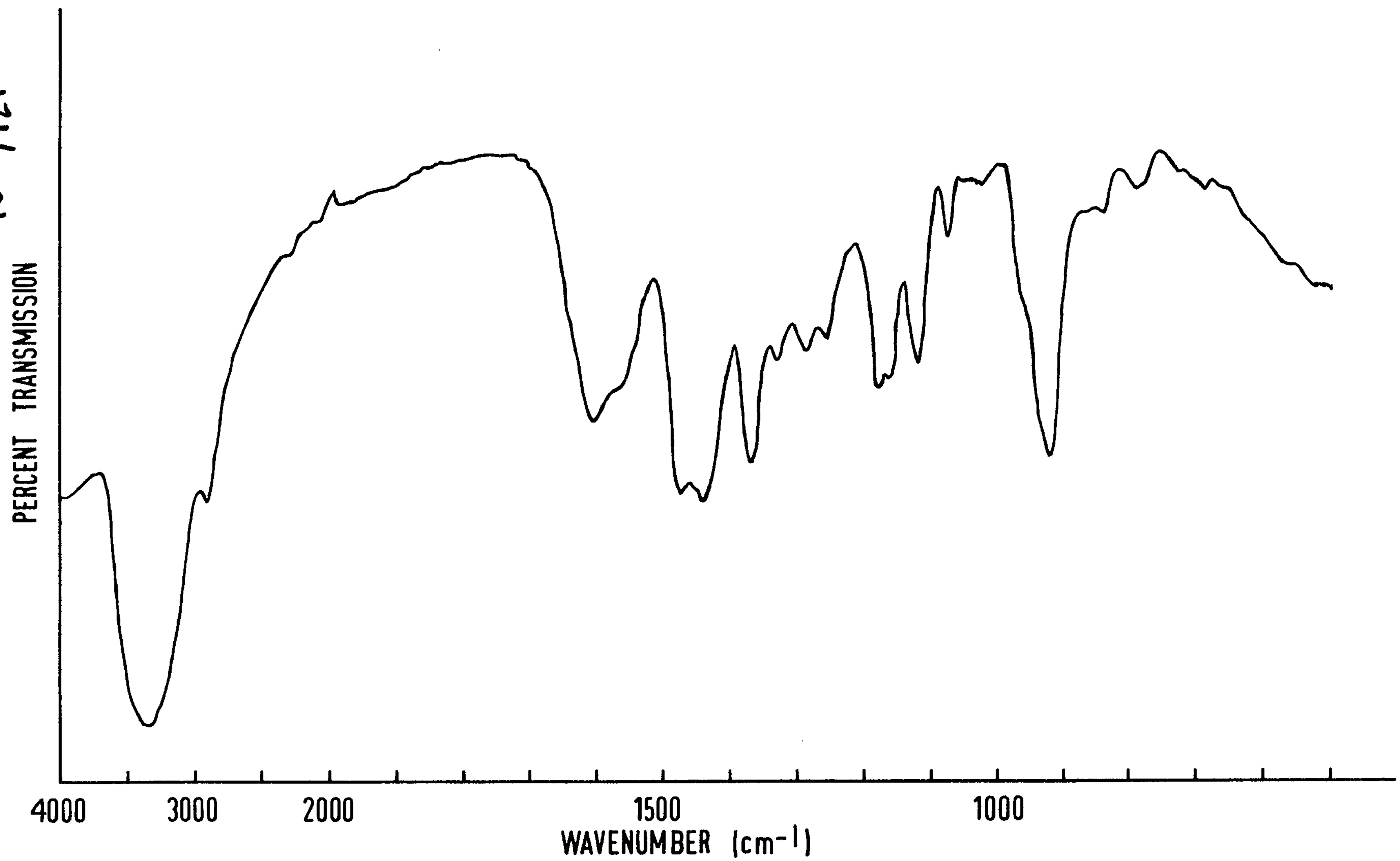
PERCENT TRANSMISSION
4000
3000
2000
1500
1000
WAVENUMBER (cm⁻¹)

FIG.101.

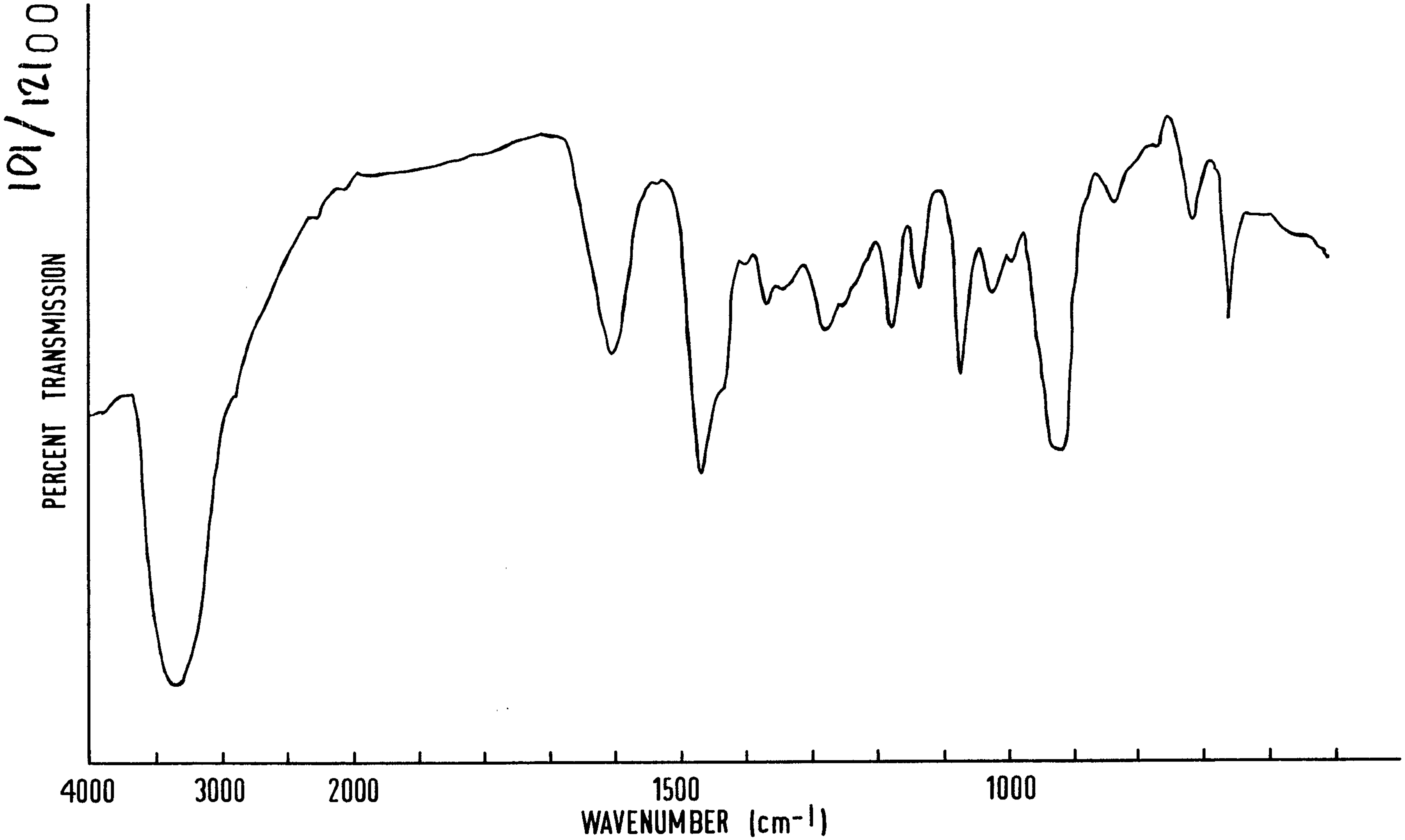
PERCENT TRANSMISSION
4000
3000
2000
1500
1000
WAVENUMBER (cm-1)

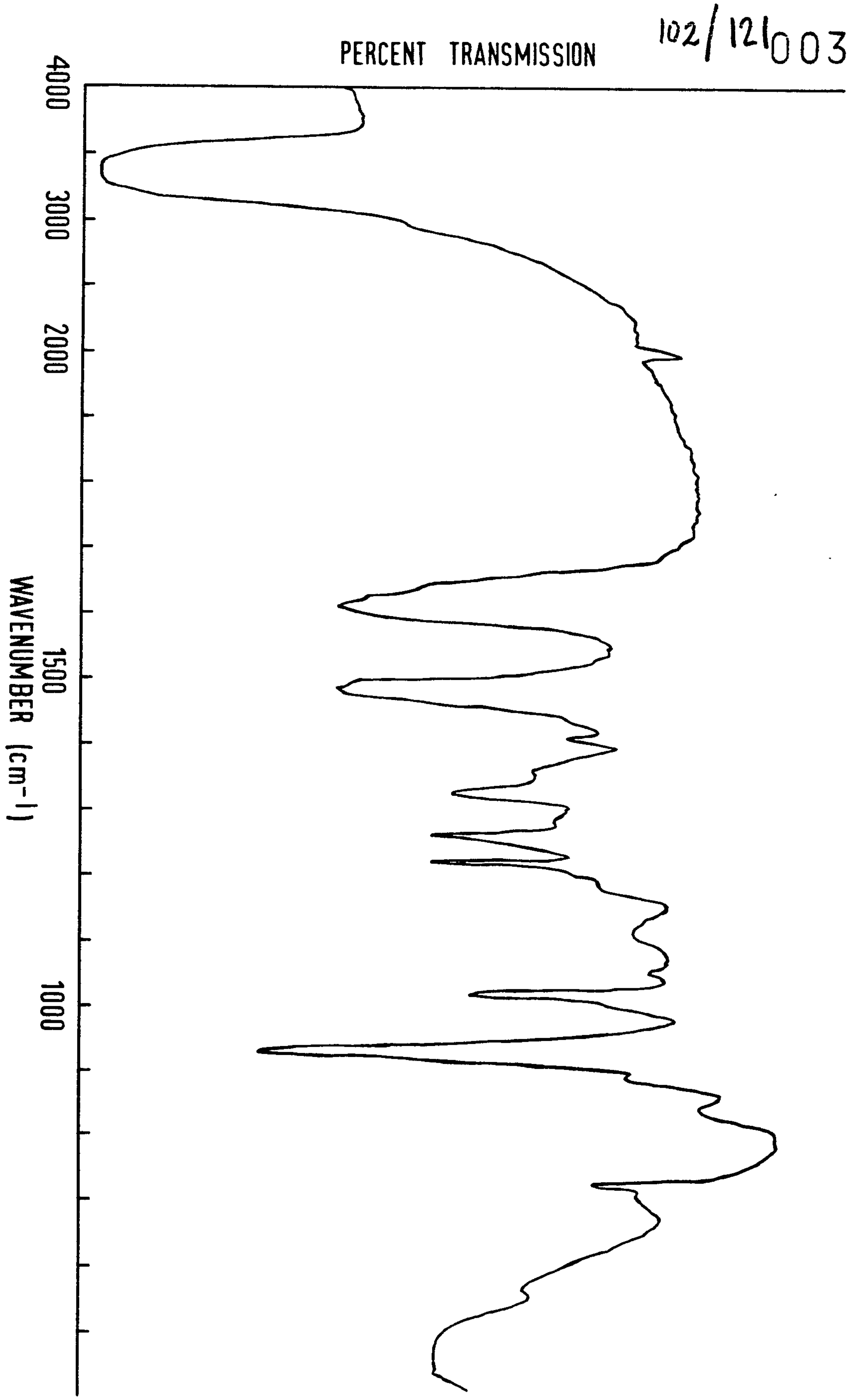
PERCENT TRANSMISSION
4000
3000
2000
1500
1000
WAVENUMBER (cm-1)

FIG.102.

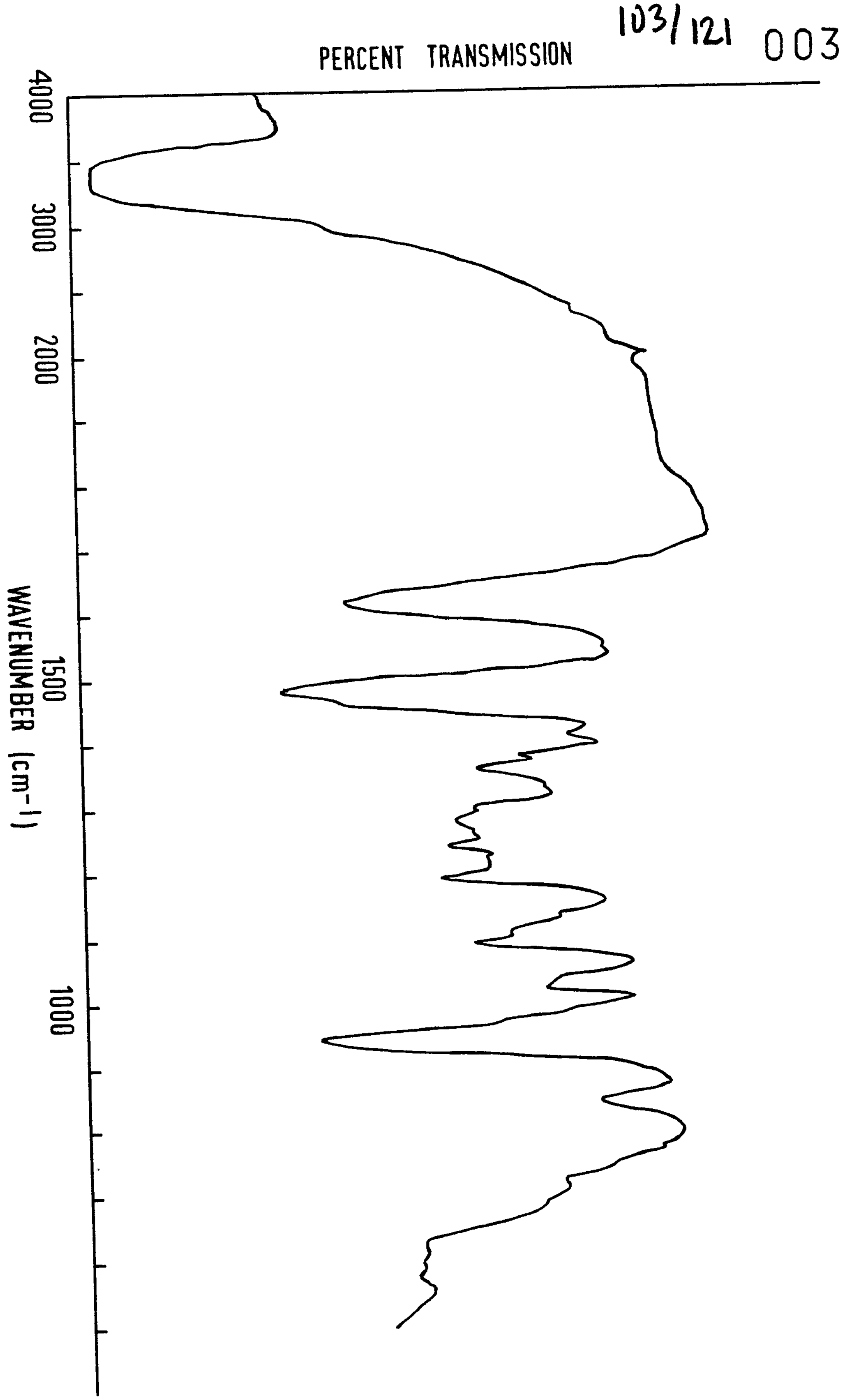
PERCENT TRANSMISSION
4000
3000
2000
1500
1000
WAVENUMBER (cm⁻¹)

FIG.103.

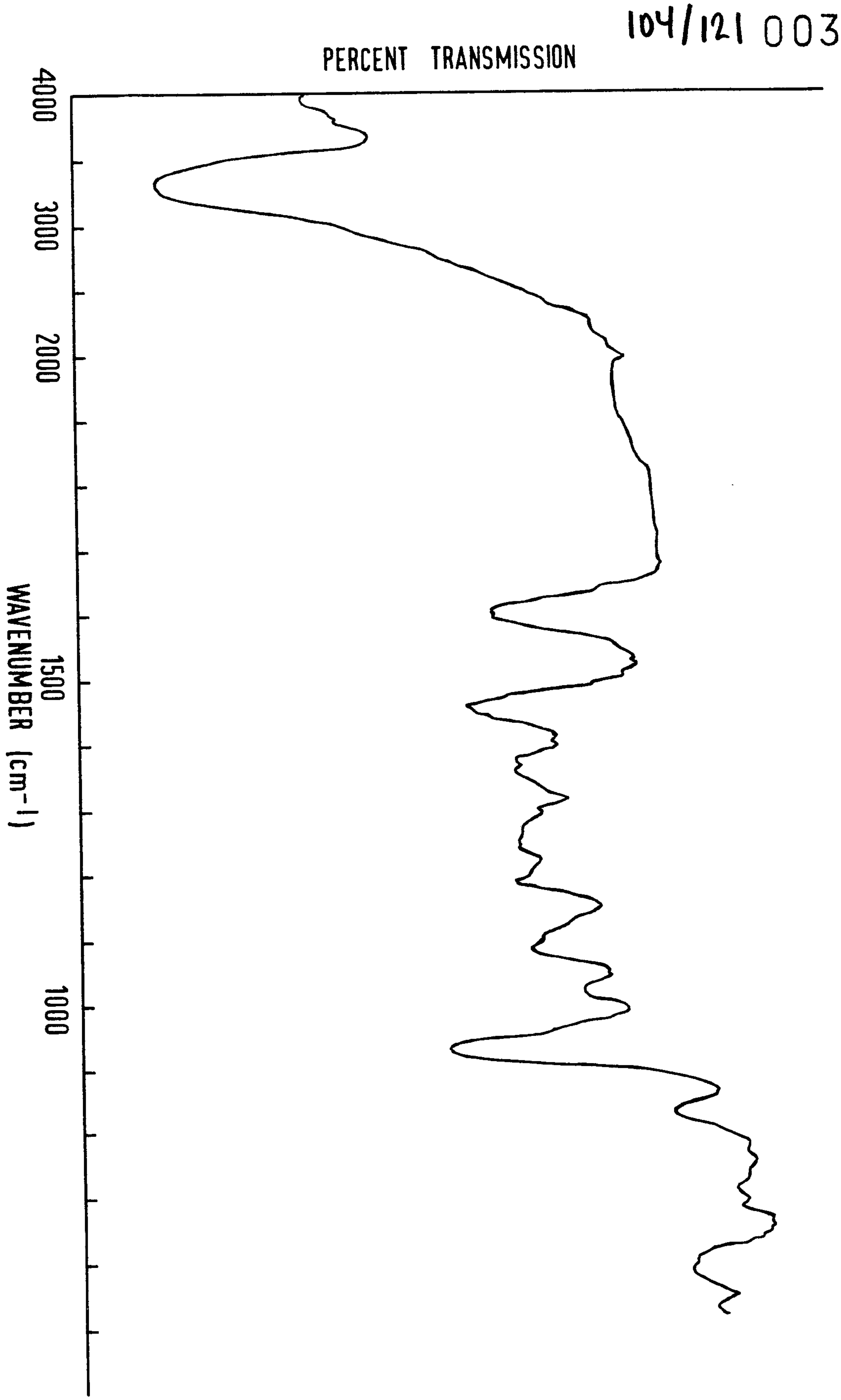
PERCENT TRANSMISSION
4000
3000
2000
1500
1000
WAVENUMBER (cm-1)

FIG.104.

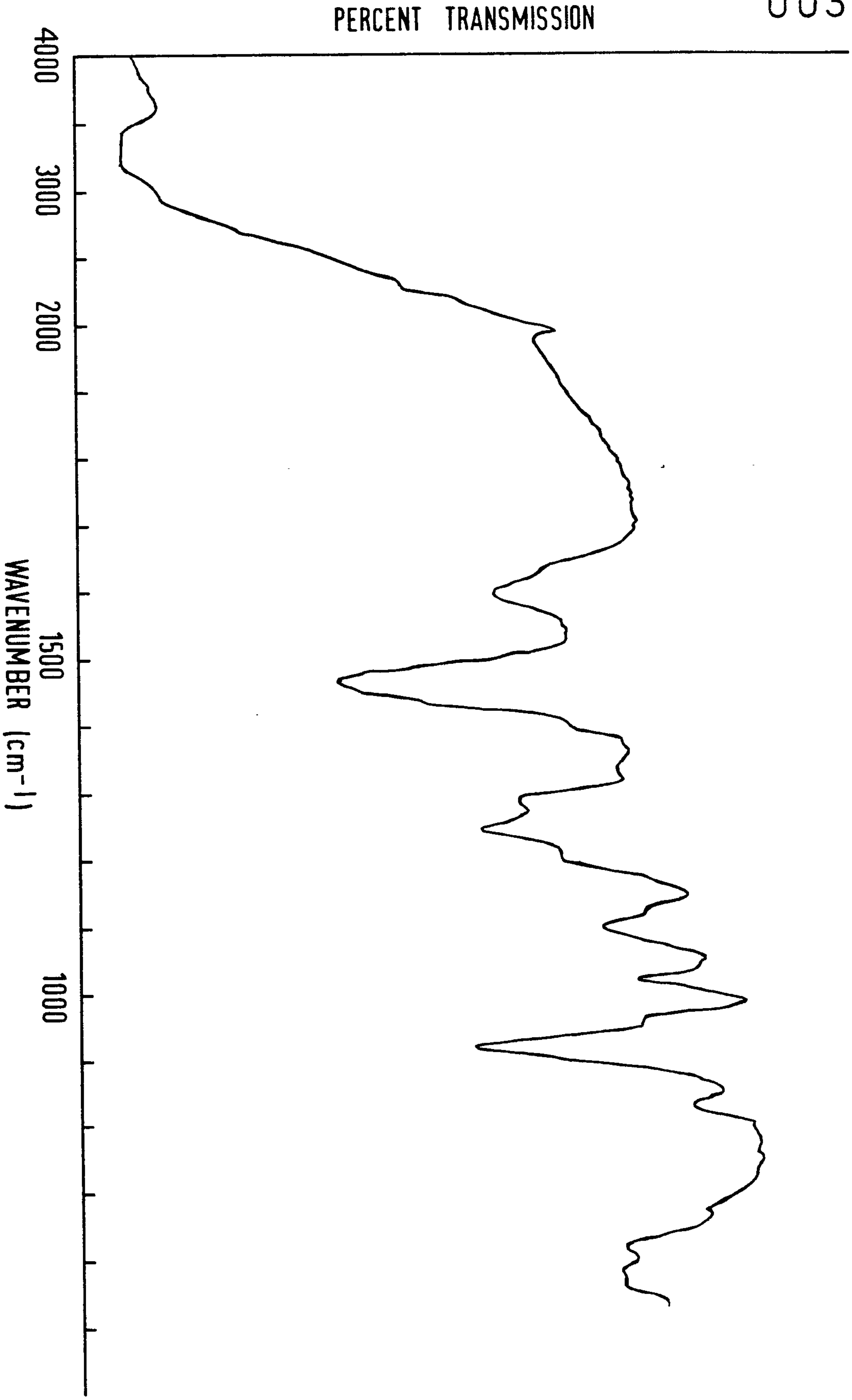
PERCENT TRANSMISSION
4000
3000
2000
1500
1000
WAVENUMBER (cm-1)

FIG.105.

FIG.106.

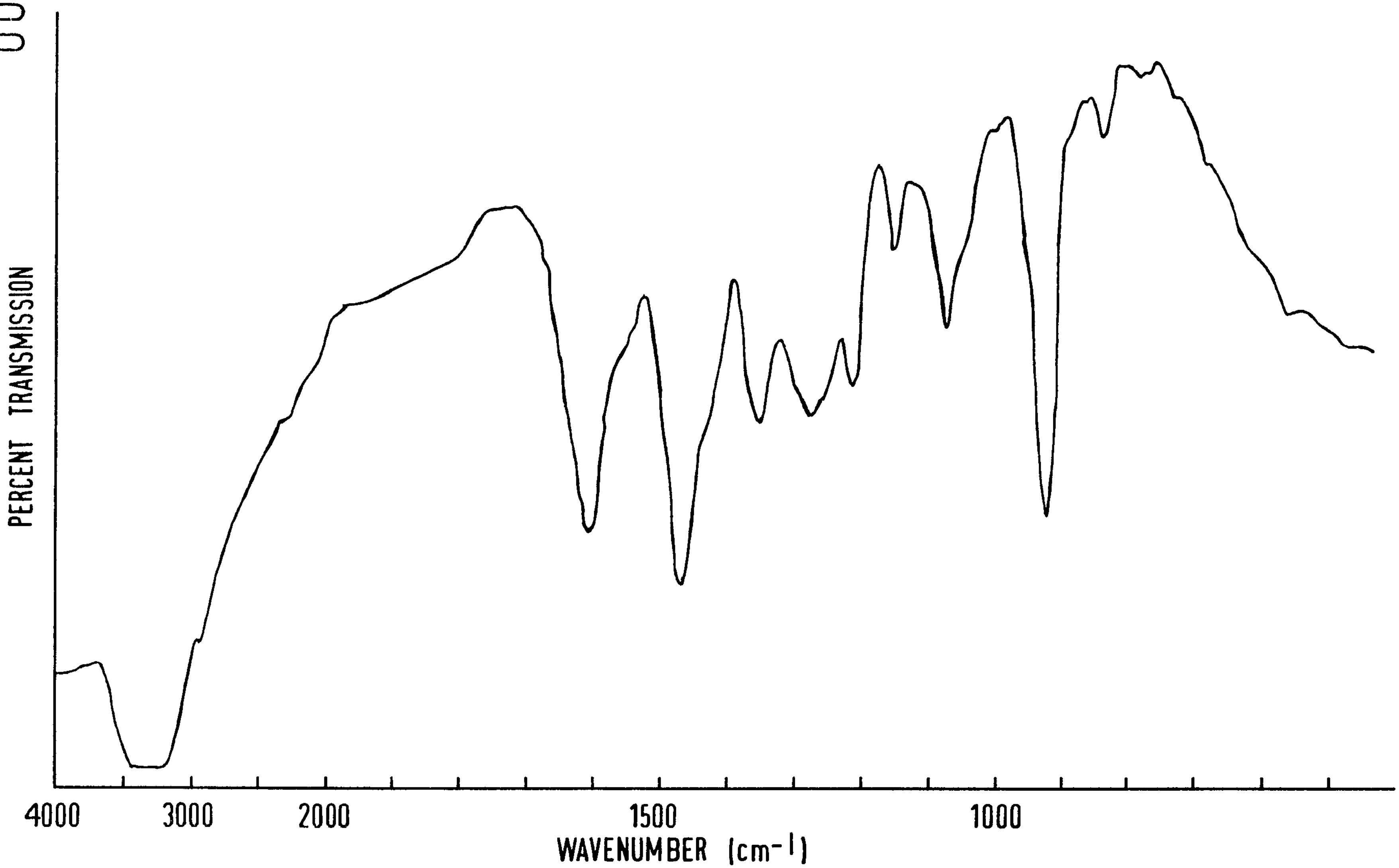
PERCENT TRANSMISSION
4000
3000
2000
1500
1000
WAVENUMBER (cm-1)

107/121

0037861

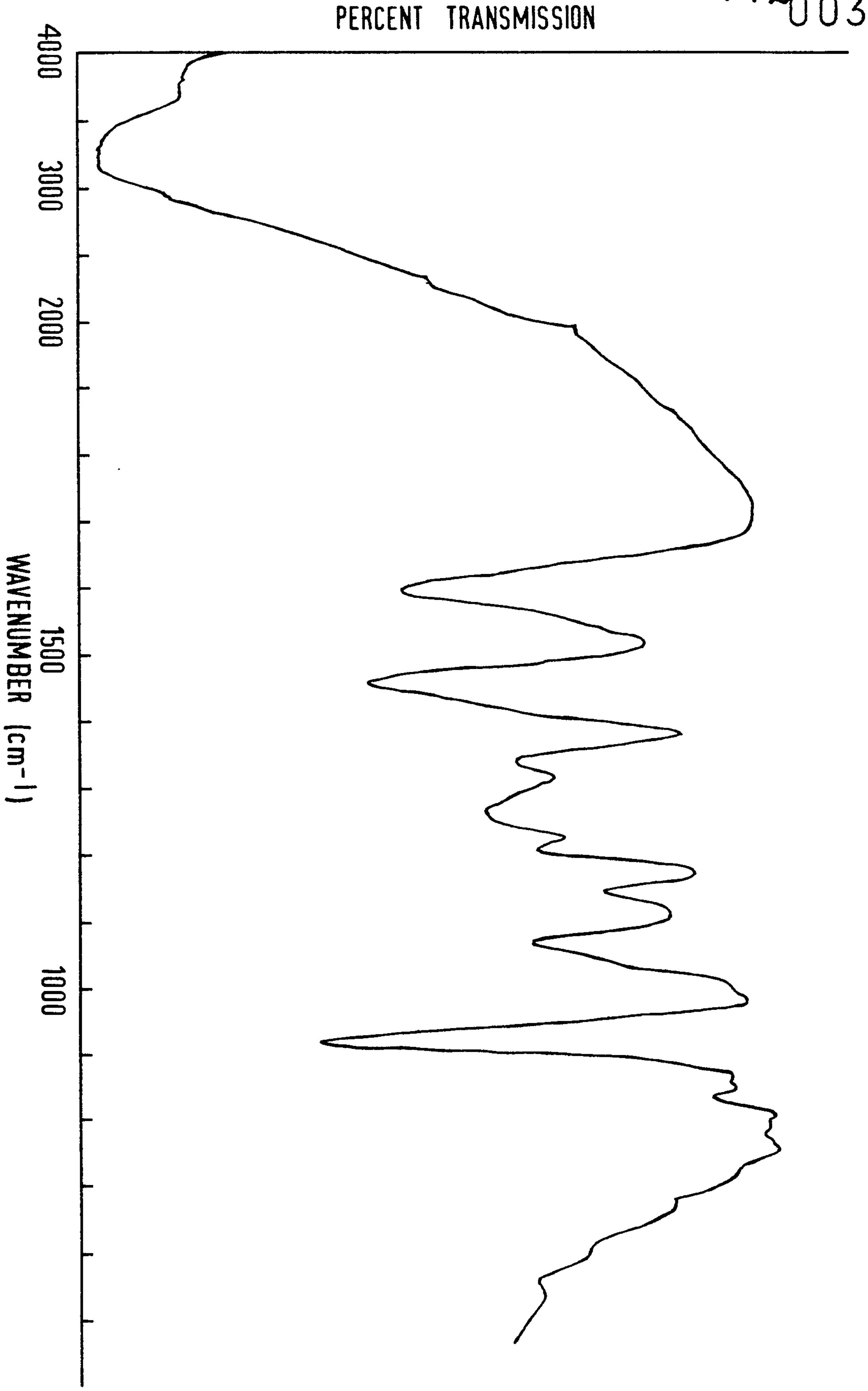


FIG.107.

FIG. 108.

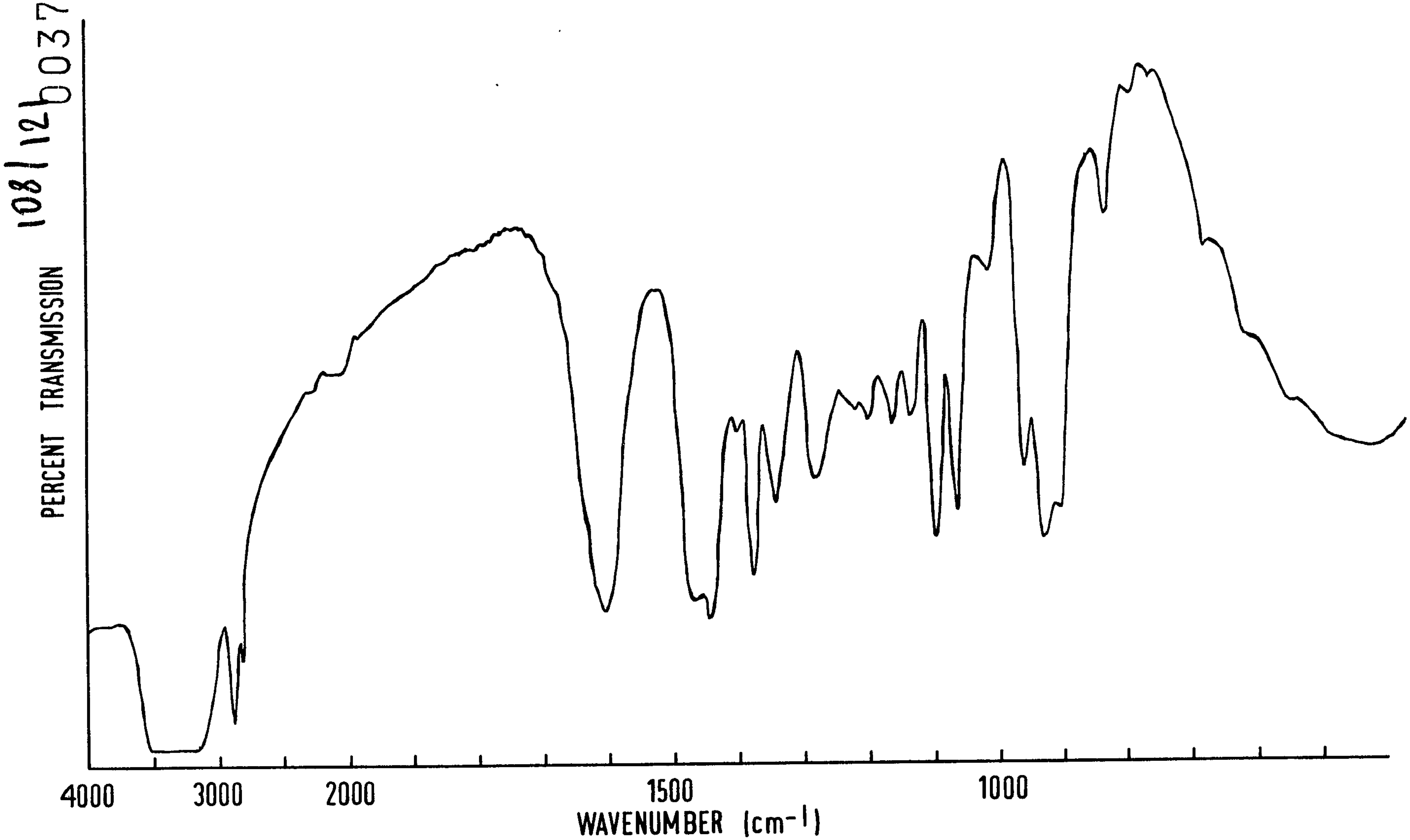
PERCENT TRANSMISSION
4000
3000
2000
1500
1000
WAVENUMBER (cm-1)

0037861

FIG.109.

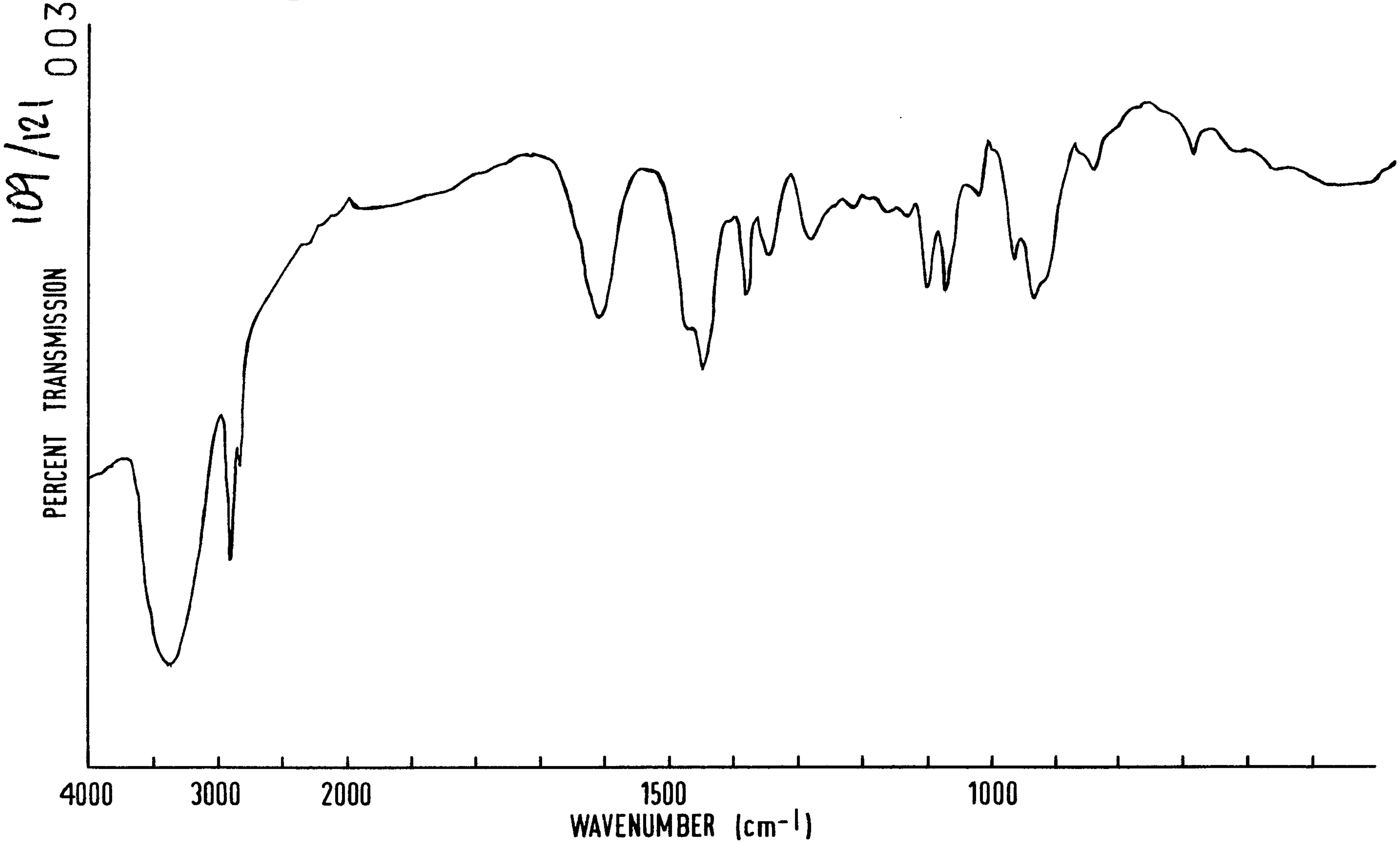

FIG.110

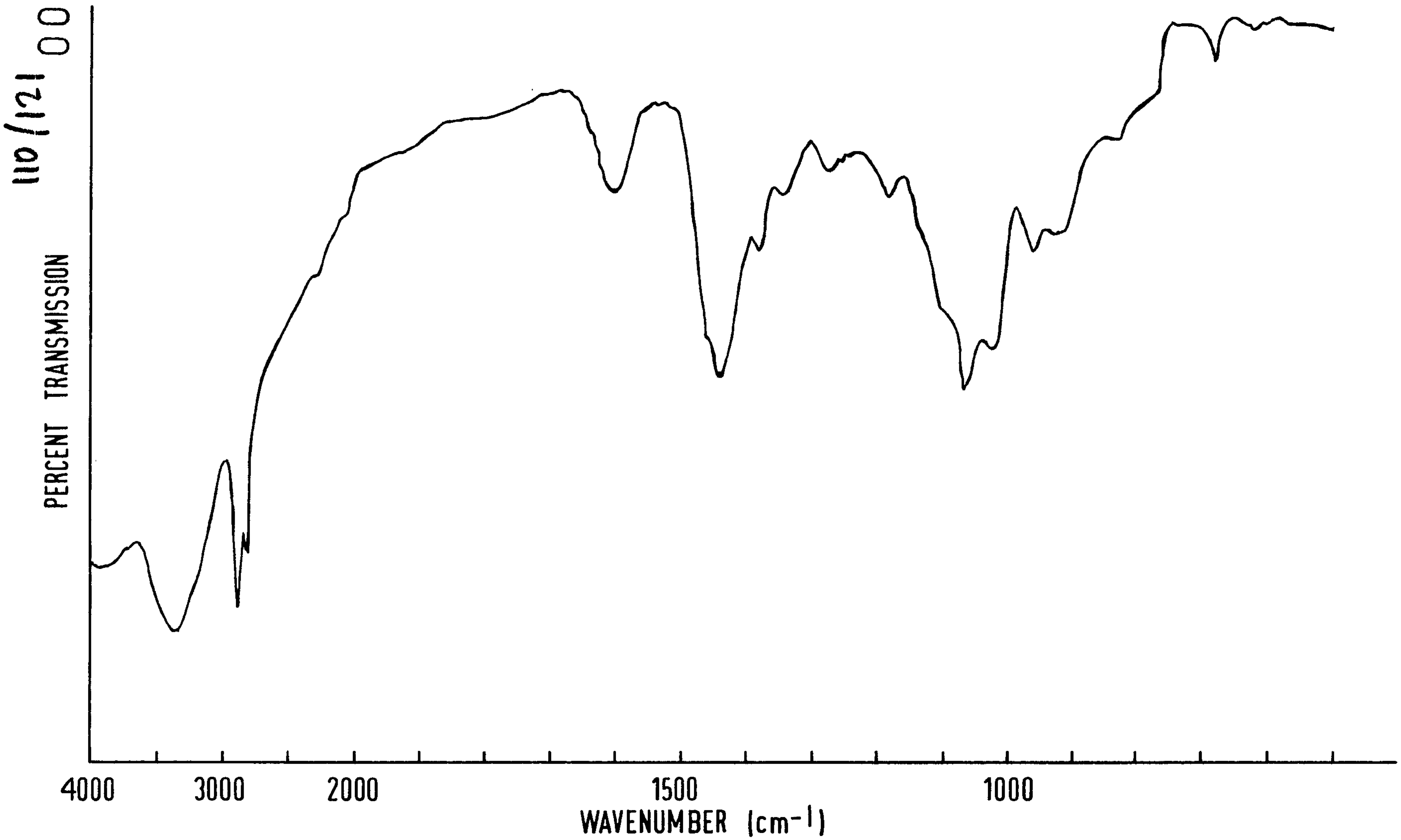
PERCENT TRANSMISSION
4000
3000
2000
1500
1000
WAVENUMBER (cm-1)

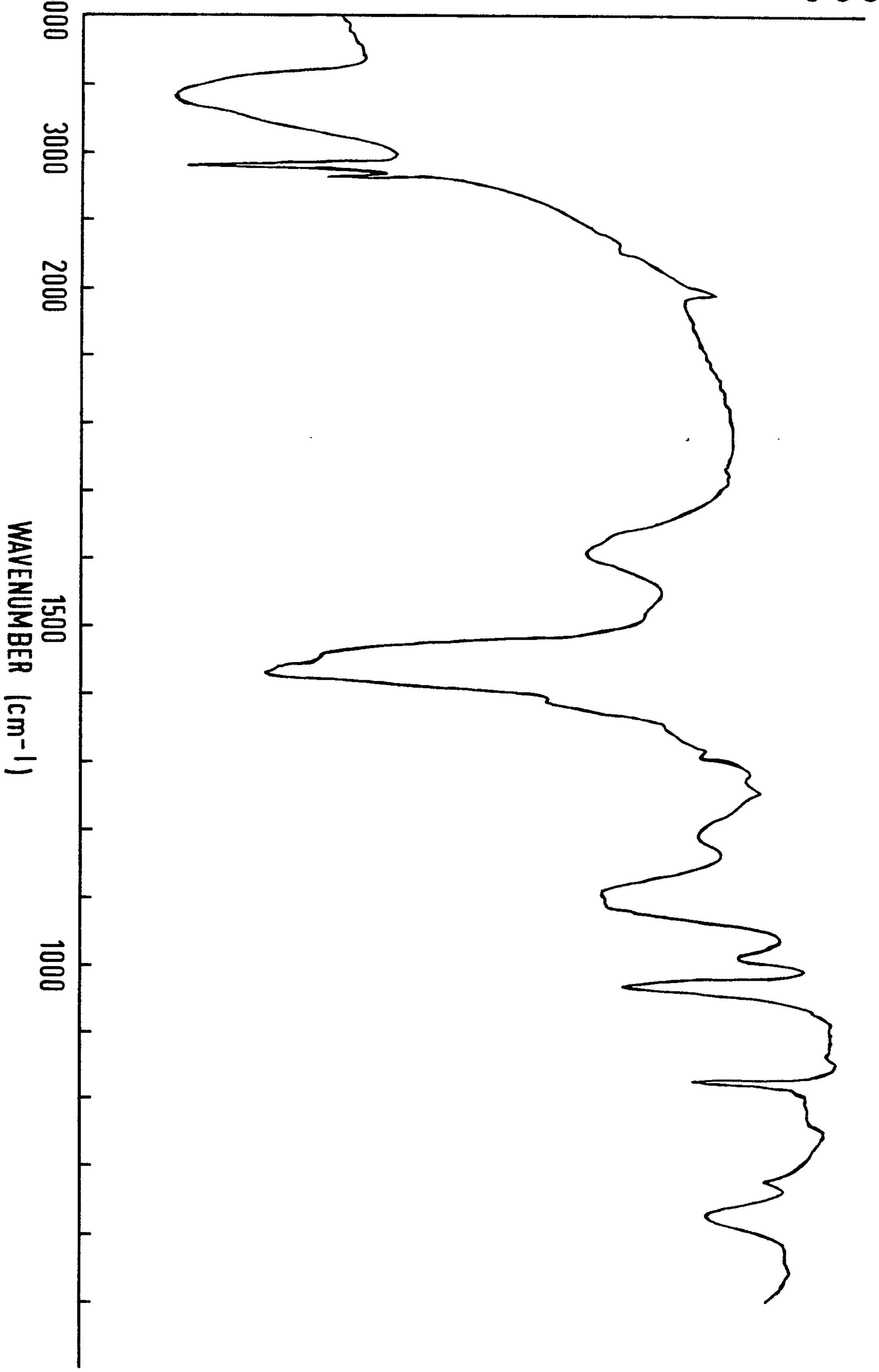


FIG.111.

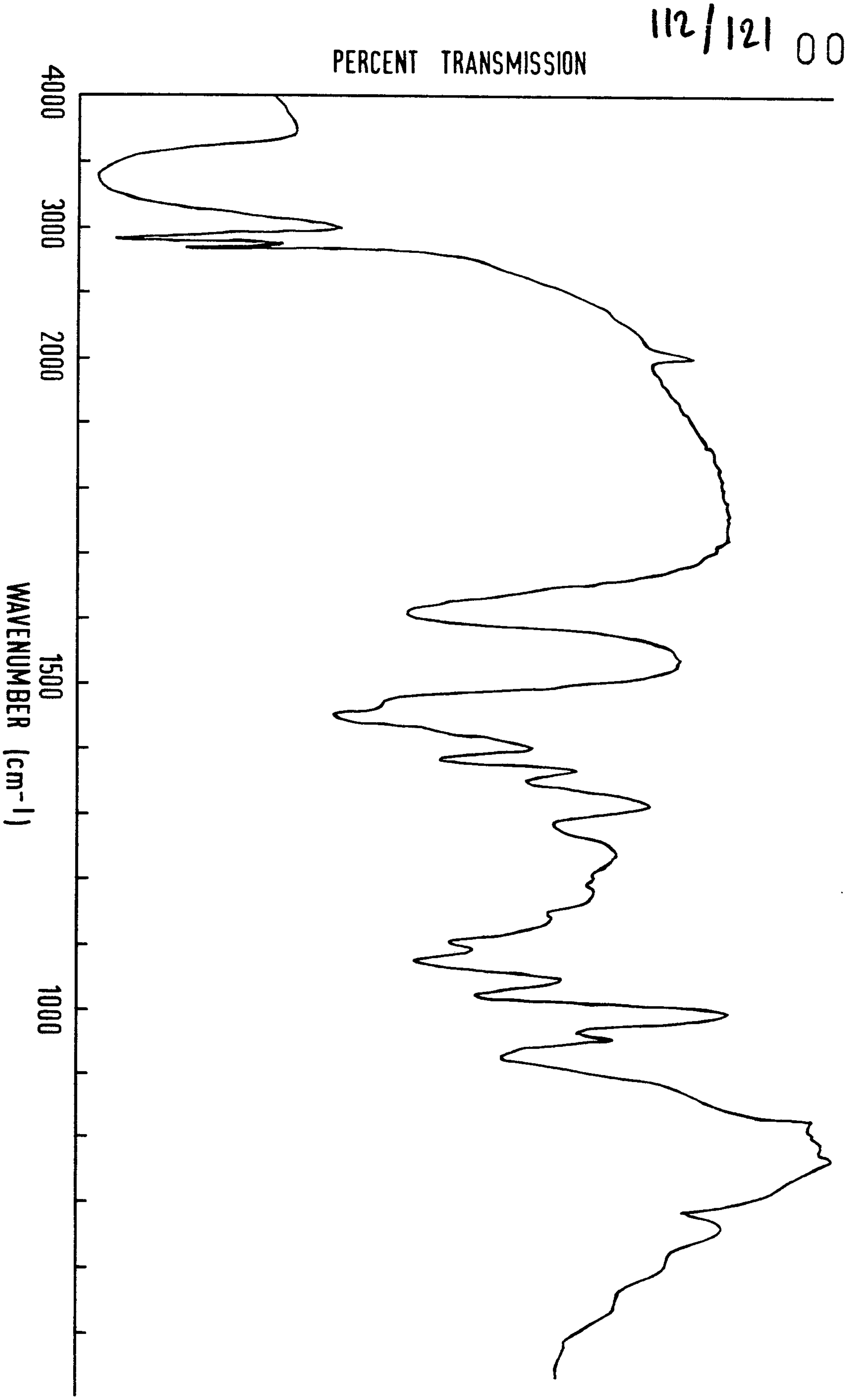
PERCENT TRANSMISSION
4000
3000
2000
1500
1000
WAVENUMBER (cm-1)

FIG.112.

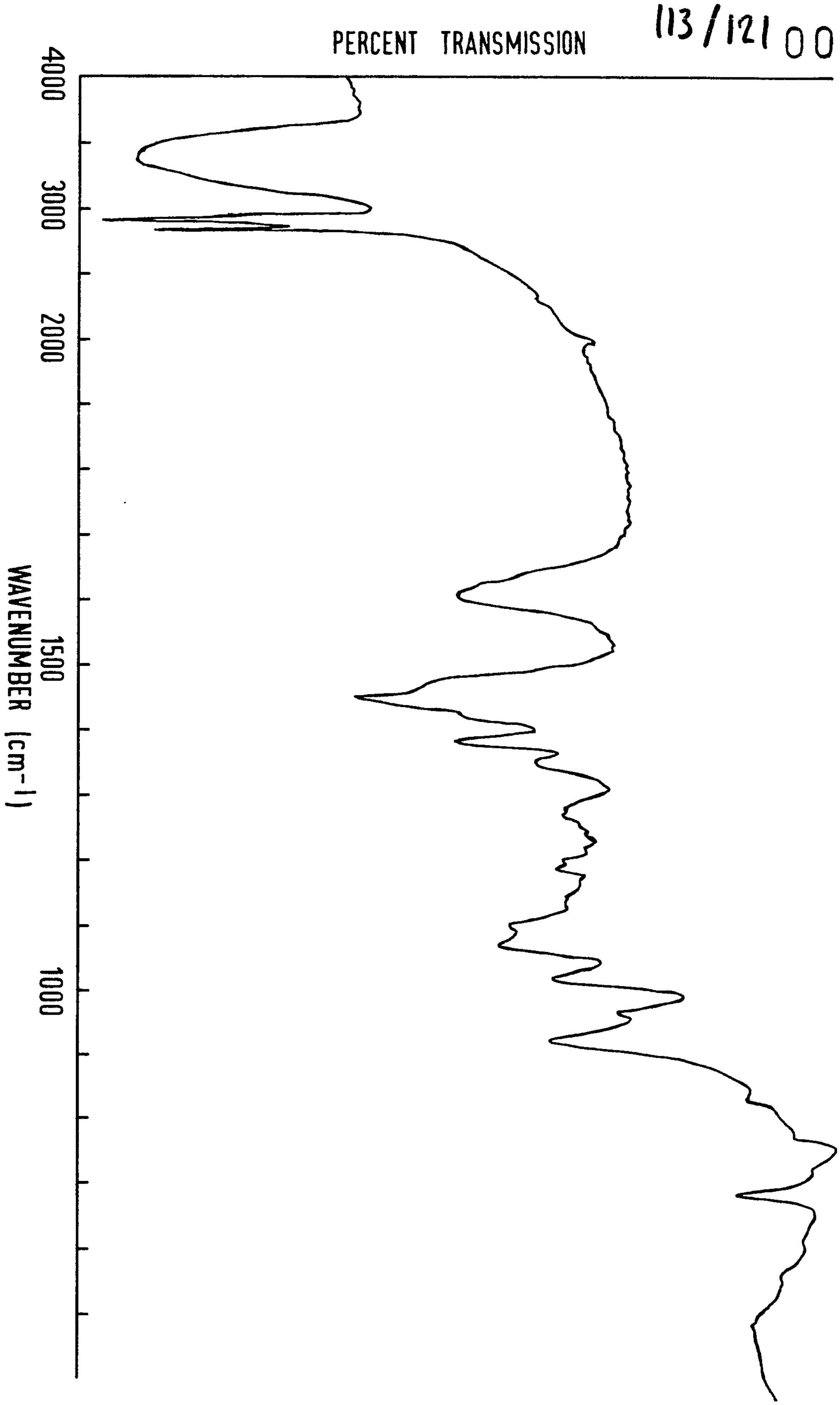
PERCENT TRANSMISSION
4000
3000
2000
1500
1000
WAVENUMBER (cm-1)

FIG.113.

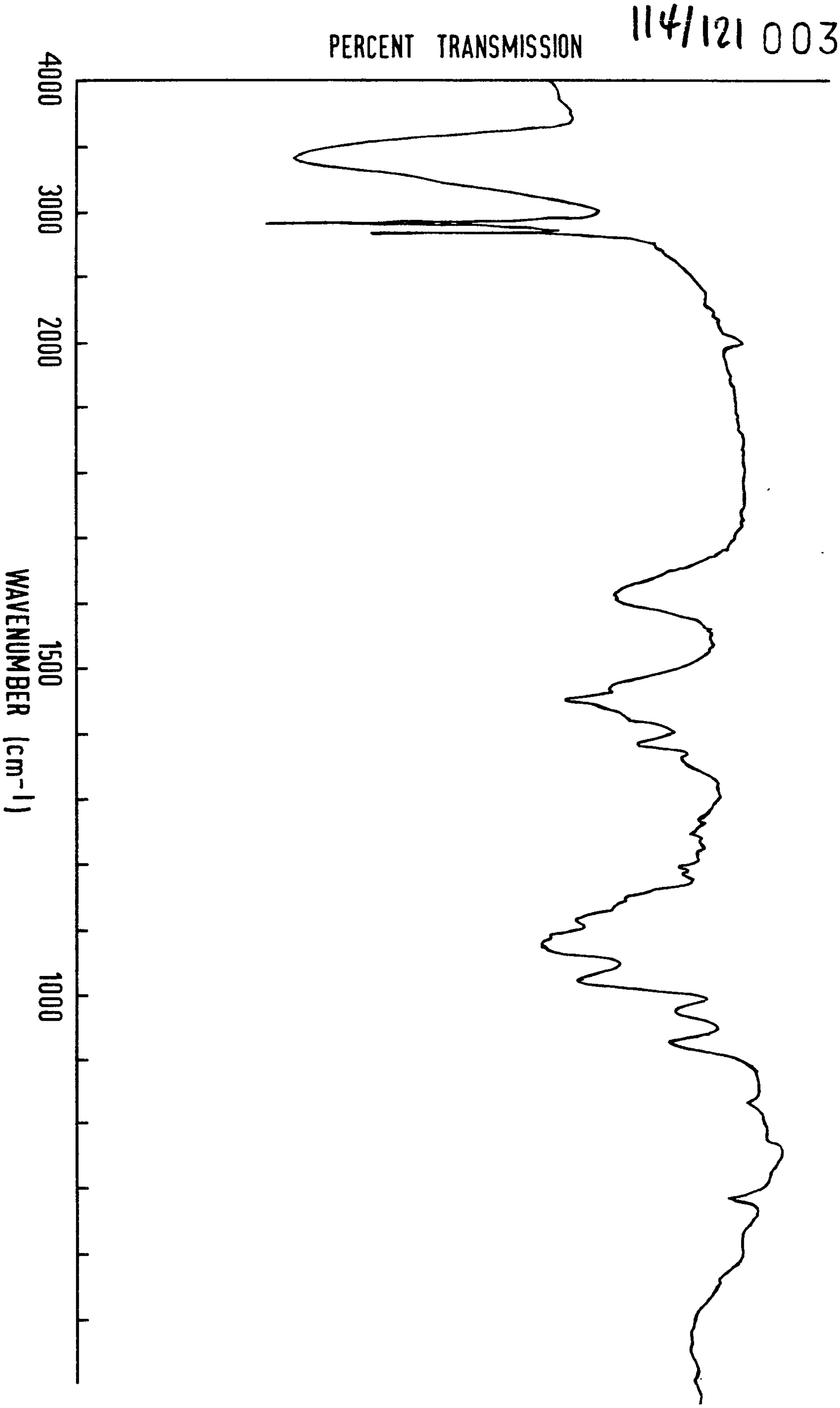
PERCENT TRANSMISSION
4000
3000
2000
1500
1000
WAVENUMBER (cm-1)

FIG.114.

FIG.115.

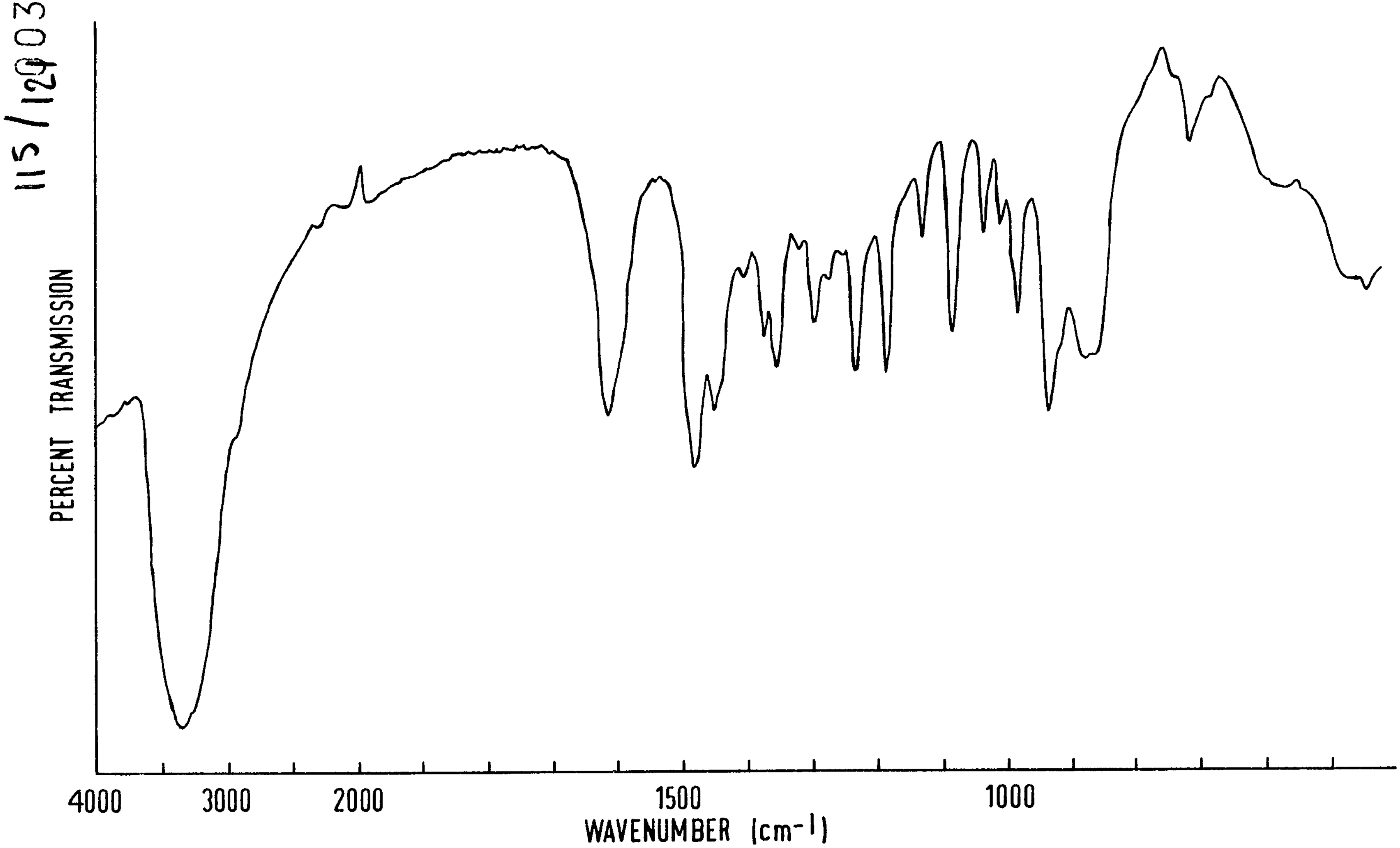
PERCENT TRANSMISSION
4000
3000
2000
1500
1000
WAVENUMBER (cm-1)

FIG.116.

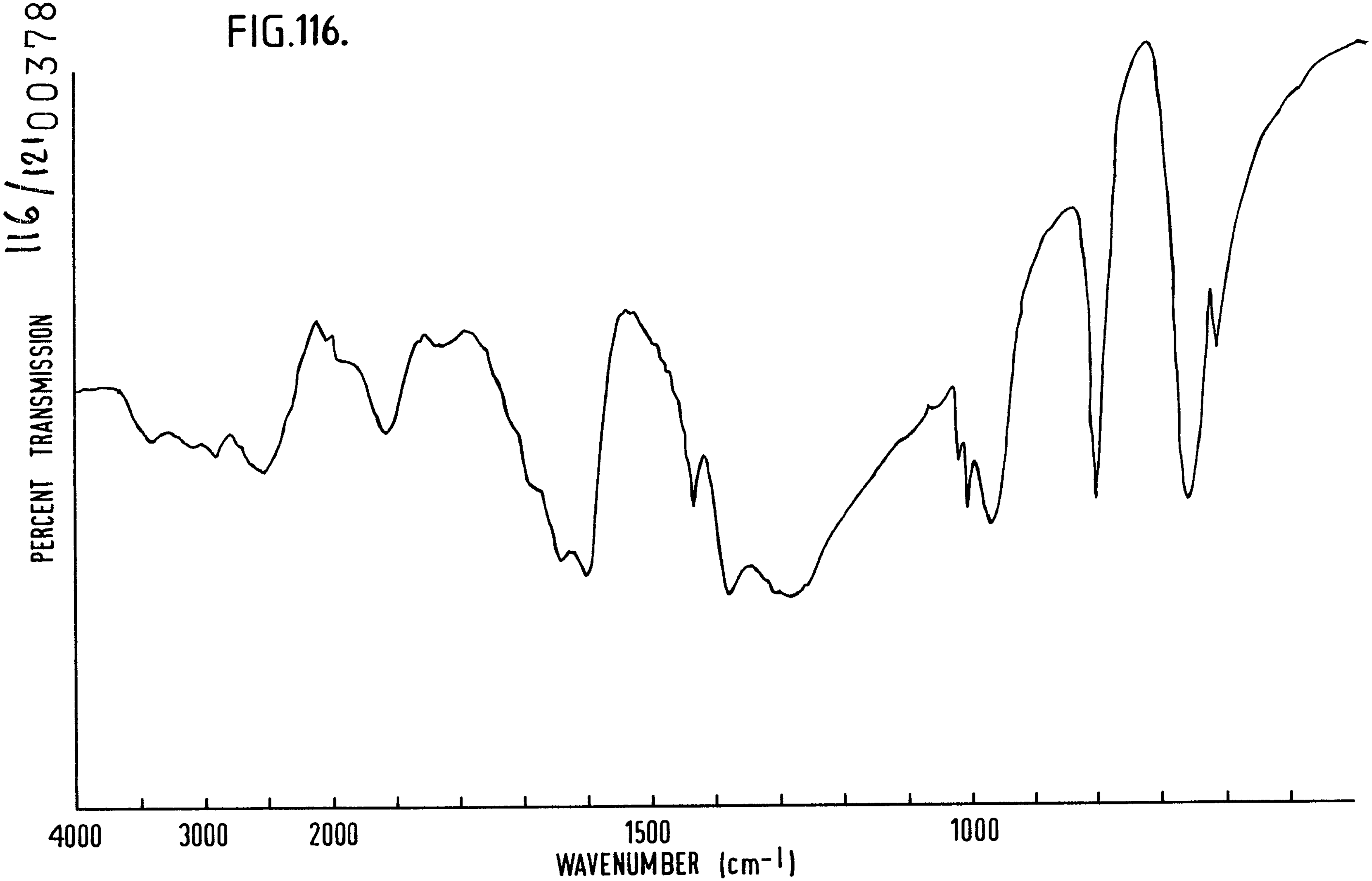
PERCENT TRANSMISSION
4000
3000
2000
1500
1000
WAVENUMBER (cm-1)

FIG.117.

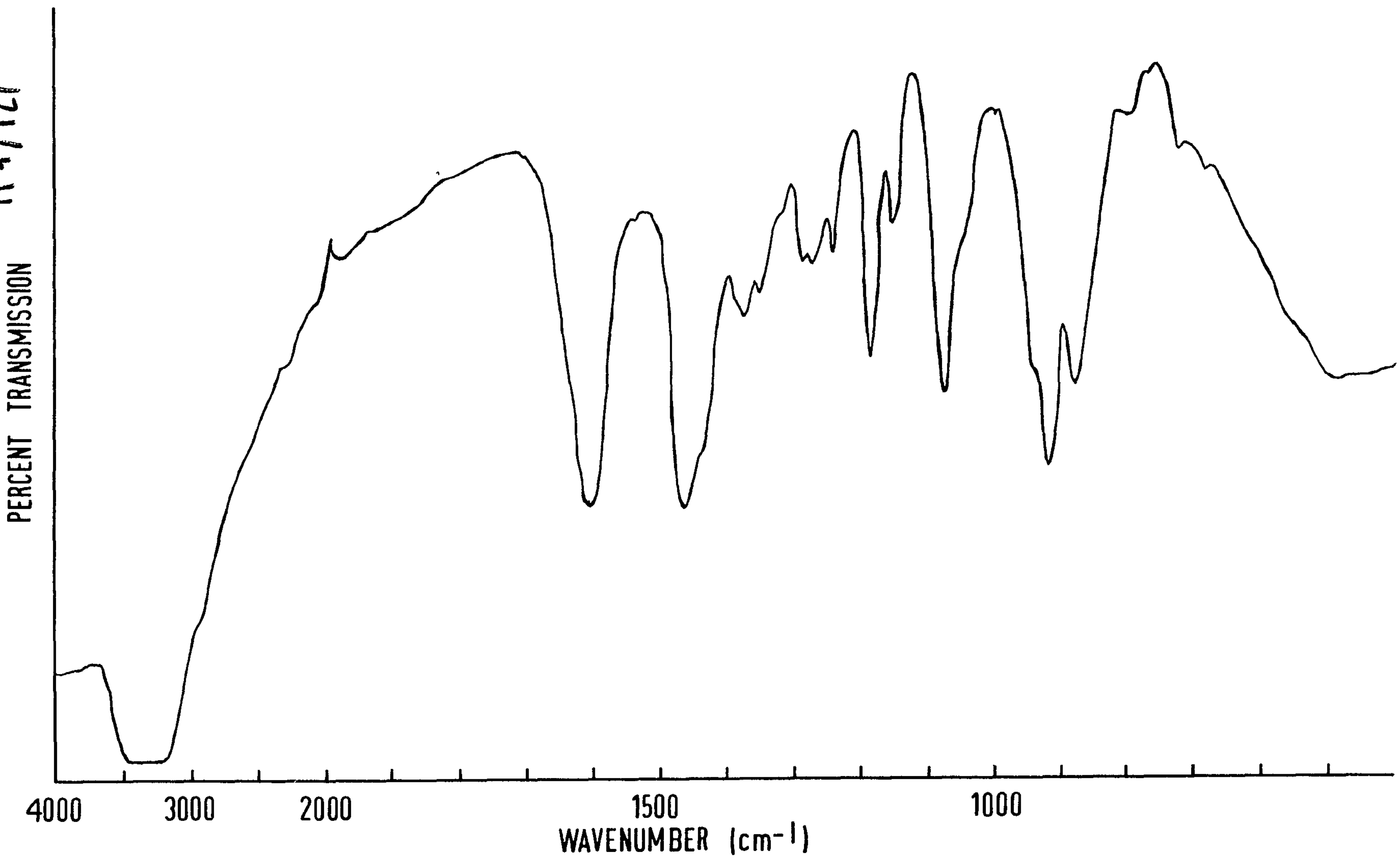
PERCENT TRANSMISSION
4000
3000
2000
1500
1000
WAVENUMBER (cm⁻¹)

FIG.118.

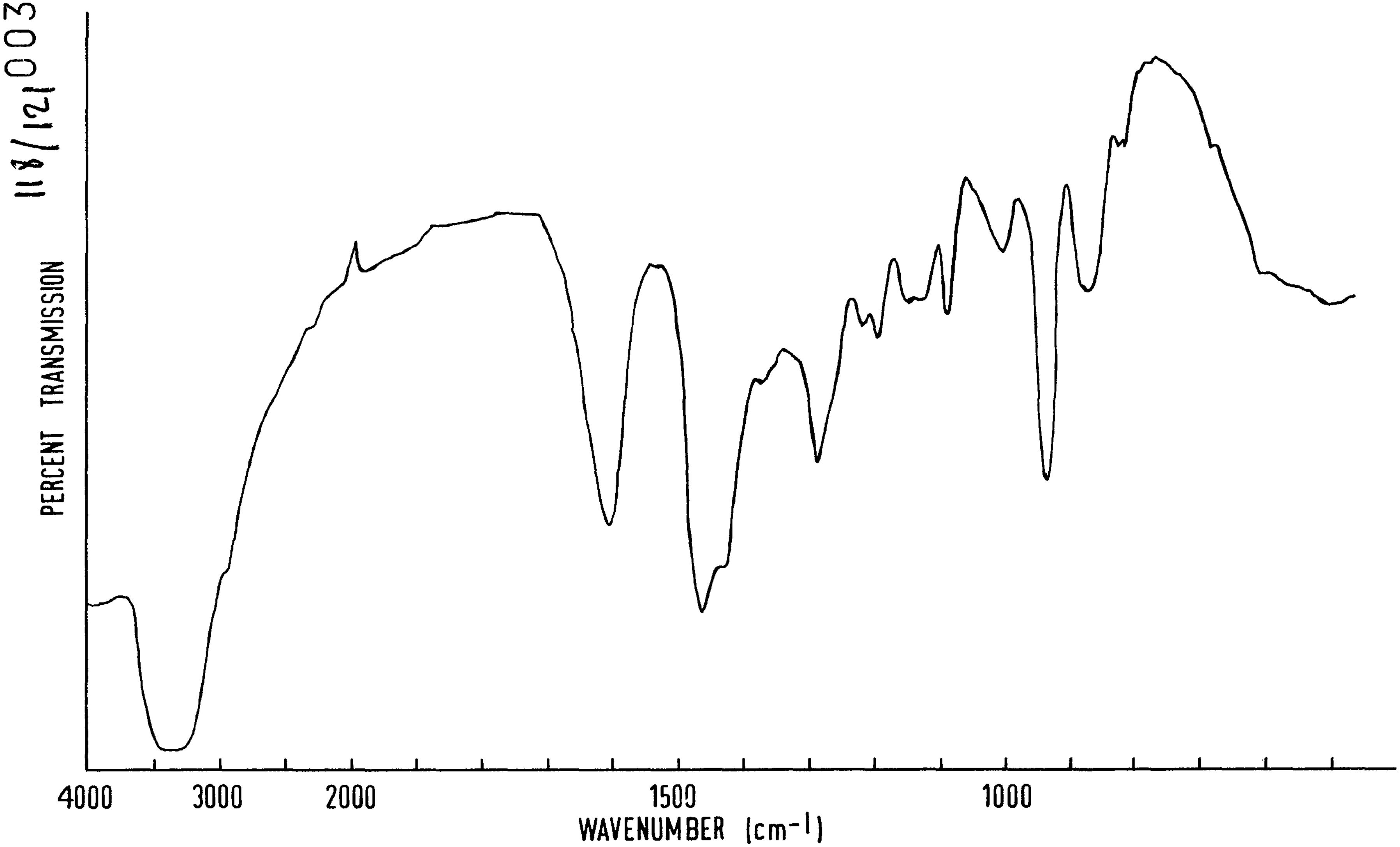
PERCENT TRANSMISSION
4000
3000
2000
1500
1000
WAVENUMBER (cm-1)

FIG.119.

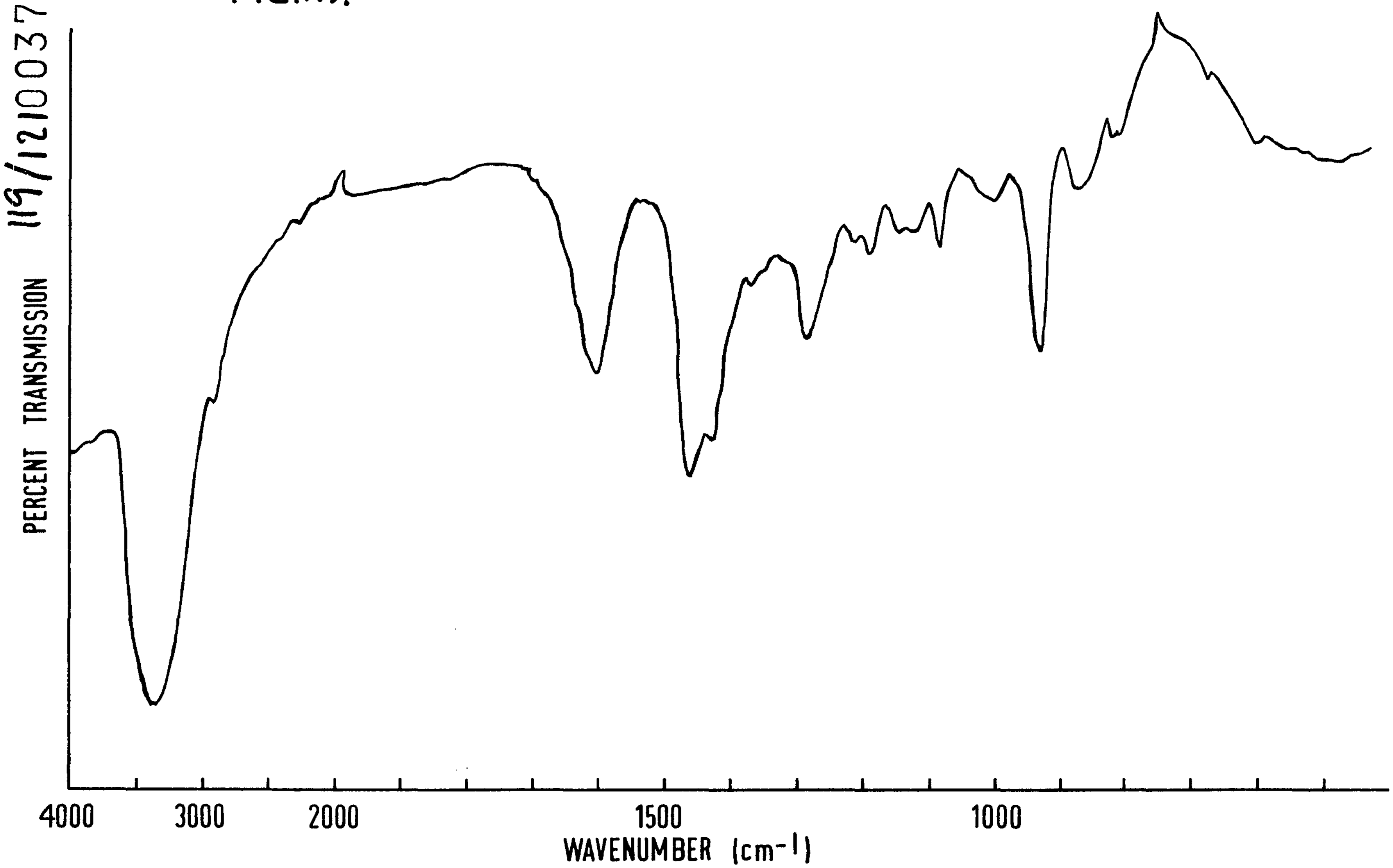
PERCENT TRANSMISSION
4000
3000
2000
1500
1000
WAVENUMBER (cm-1)

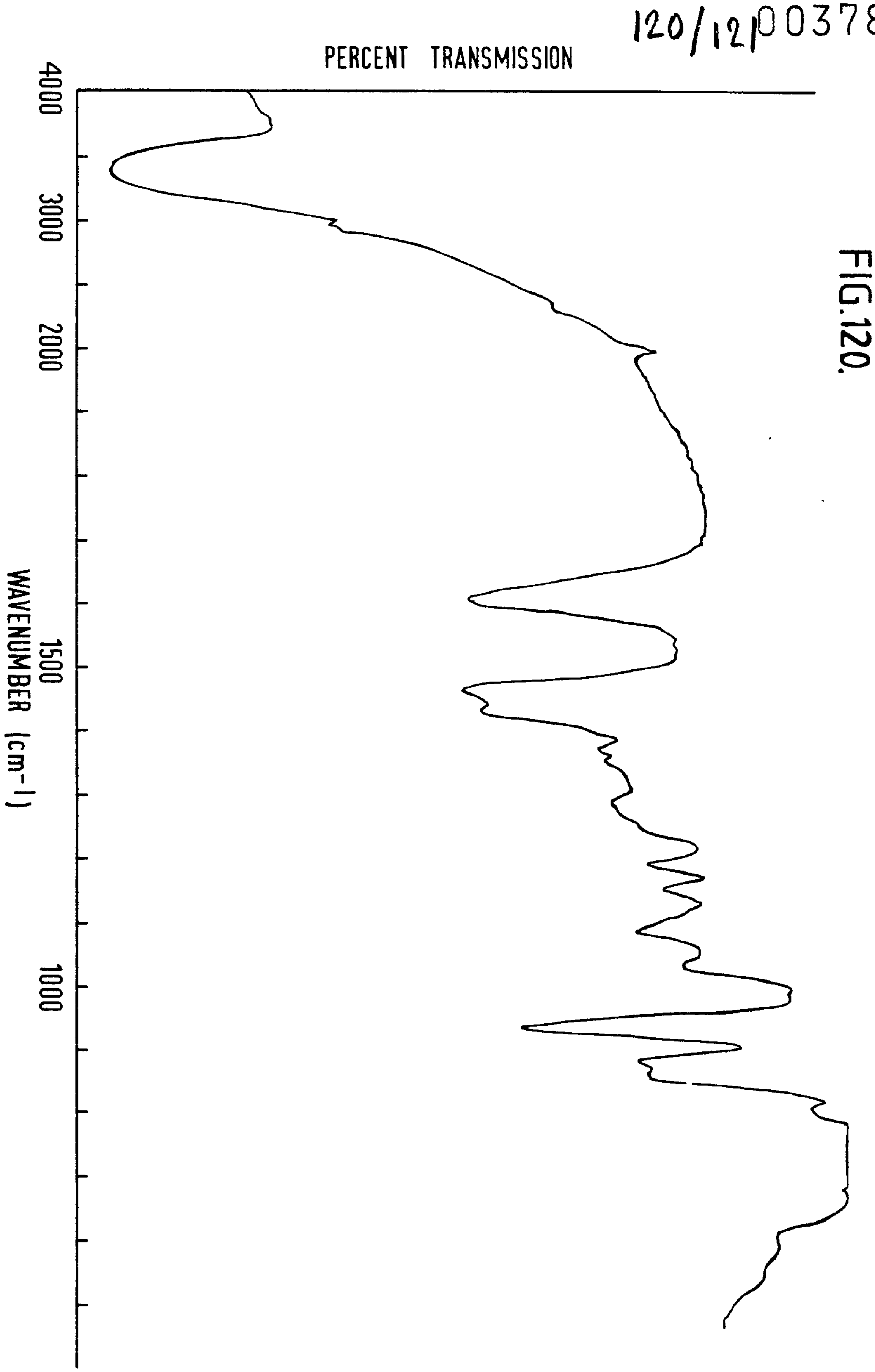
PERCENT TRANSMISSION
4000
3000
2000
1500
1000
WAVENUMBER (cm-1)

FIG.120.

0037861

FIG.121.

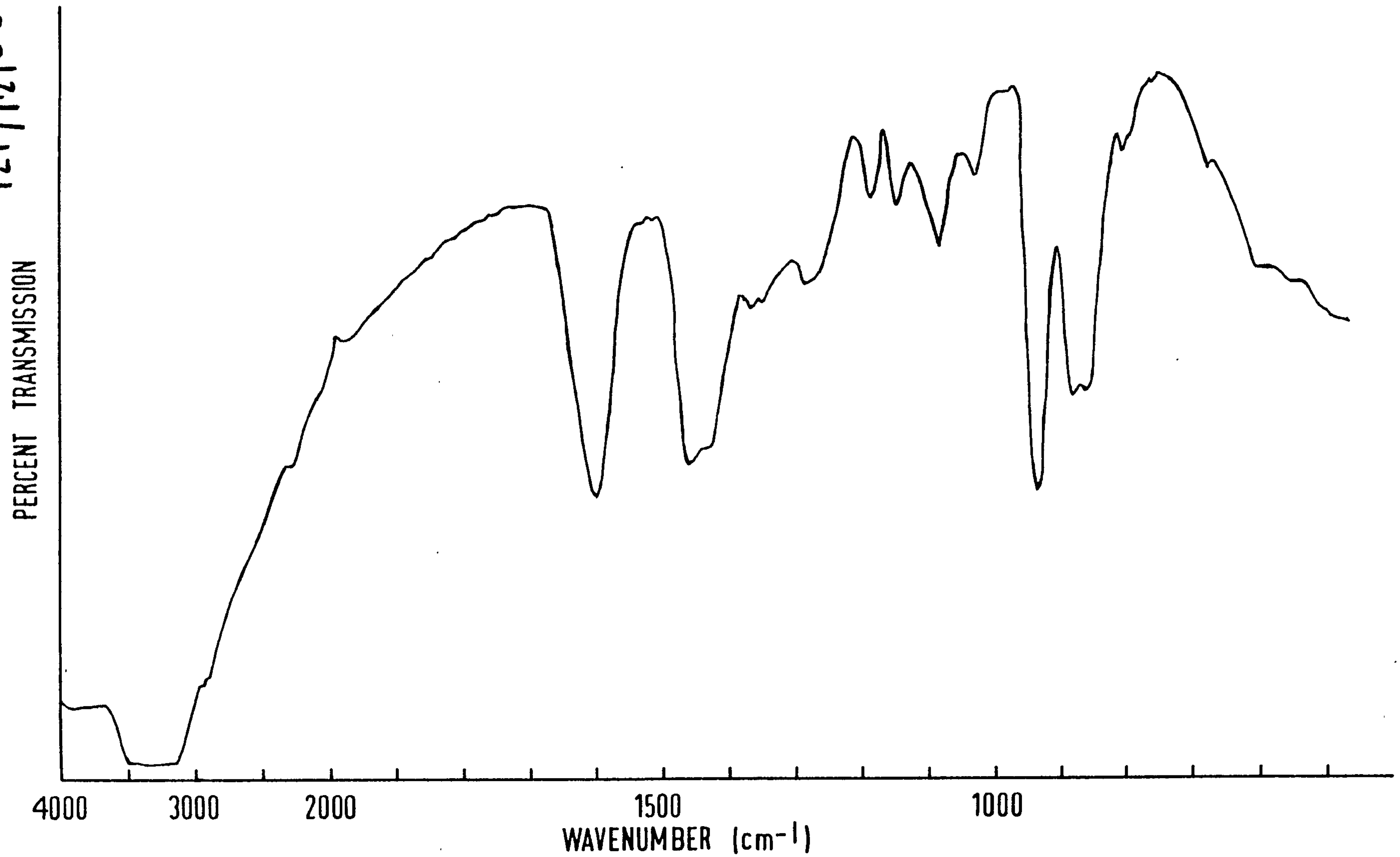

European Patent Office

**EUROPEAN SEARCH REPORT**

0037861

Application number EP 80300906.7

**DOCUMENTS CONSIDERED TO BE RELEVANT**

| Category | Citation of document with indication, where appropriate, of relevant passages | Relevant to claim |
|---|---|---|
| | AT - B - 339 666 (BUCKMAN LABORATORIES)<br>+ Example 6; claim 3 +<br>-- | 1,5,10, 11 |
| | DE - A1 - 2 732 331 (MONTEDISON S.p.A.)<br>+ Claim 7; page 9; page 16, Code-Nr. 5330/2; example 2 +<br>-- | 1-5, 10-12 |
| X | GB - A - 1 180 216 (RECKITT & SONS)<br>+ Examples 4,8 (table 1); example 22 (table 2) +<br>-- | 1,2,5,8 |
| | GB - A - 776 339 (THE DOW CHEMICAL COMP.)<br>+ Totality +<br>-- | 1-6, 10-12 |
| | US - A - 2 520 280 (HARMAN)<br>+ Column 3, line 74 - column 4, line 20 +<br>---- | 1,5,12 |

CLASSIFICATION OF THE APPLICATION (Int. Cl. 3)

C 07 C 155/06
A 01 N 47/14

TECHNICAL FIELDS SEARCHED (Int.Cl. 3)

C 07 C 155/00
A 01 N 47/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 12-09-1980 | DASCHL |